(19)

**Europäisches Patentamt**

**European Patent Office**

**Office européen des brevets**

(11) **EP 4 439 472 A1**

(12) **EUROPEAN PATENT APPLICATION**

(43) Date of publication:
**02.10.2024 Bulletin 2024/40**

(21) Application number: **23211163.3**

(22) Date of filing: **21.11.2023**

(51) International Patent Classification (IPC):
**G06T 15/00** (2011.01)    **G06T 15/06** (2011.01)
**G06T 17/00** (2006.01)

(52) Cooperative Patent Classification (CPC):
**G06T 15/06; G06T 15/005; G06T 17/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2023 US 202318126401**

(71) Applicant: **INTEL Corporation**
**Santa Clara, CA 95054 (US)**

(72) Inventor: **TESSARI, Lorenzo**
**76133 Baden Wuerttemberg (DE)**

(74) Representative: **Goddar, Heinz J.**
**Boehmert & Boehmert**
**Anwaltspartnerschaft mbB**
**Pettenkoferstrasse 22**
**80336 München (DE)**

(54) **APPARATUS AND METHOD FOR DENSITY-AWARE STOCHASTIC SUBSETS FOR IMPROVED IMPORTANCE SAMPLING**

(57)    Apparatus and method for density-aware stochastic subsets for improved importance sampling. For example, one embodiment of an apparatus comprises: a sampling weight generator to determine a plurality of sampling weights associated with a corresponding plurality of input primitives, the sampling weight generator to determine each sampling weight based on a surface area or diagonal of a bounding box of the corresponding input primitive and a plurality of distance values corresponding to distances between the input primitive and a corresponding plurality of neighboring input primitives; a sampler to identify a representative subset of the input primitives based, at least in part, on the plurality of sampling weights; bounding volume hierarchy (BVH) builder hardware logic to construct an approximate BVH based on the representative subset of input primitives; hardware logic to insert input primitives not in the representative subset into leaves of the approximate BVH; and the BVH builder or a different BVH builder to construct a final BVH based on the primitives inserted into the leaves of the approximate BVH.

EP 4 439 472 A1

## Description

## BACKGROUND

### Field of the Invention

This invention relates generally to the field of graphics processors. More particularly, the invention relates to an apparatus and method for density-aware stochastic subsets for improved importance sampling.

### Description of the Related Art

Ray tracing is a technique in which a light transport is simulated through physically-based rendering. Widely used in cinematic rendering, it was considered too resource-intensive for real-time performance until just a few years ago. One of the key operations in ray tracing is processing a visibility query for ray-scene intersections known as "ray traversal" which computes ray-scene intersections by traversing and intersecting nodes in a bounding volume hierarchy (BVH).

Rasterization is a technique in which, screen objects are created from 3D models of objects created from a mesh of triangles. The vertices of each triangle intersect with the vertices of other triangles of different shapes and sizes. Each vertex has a position in space as well as information about color, texture and its normal, which is used to determine the way the surface of an object is facing. A rasterization unit converts the triangles of the 3D models into pixels in a 2D screen space and each pixel can be assigned an initial color value based on the vertex data.

## BRIEF DESCRIPTION OF THE DRAWINGS

A better understanding of the present invention can be obtained from the following detailed description in conjunction with the following drawings, in which:

FIG. 1 is a block diagram of a processing system, according to an embodiment;
FIG. 2A is a block diagram of an embodiment of a processor having one or more processor cores, an integrated memory controller, and an integrated graphics processor;
FIG. 2B is a block diagram of hardware logic of a graphics processor core block, according to some embodiments described herein;
FIG. 2C illustrates a graphics processing unit (GPU) that includes dedicated sets of graphics processing resources arranged into multi-core groups;
FIG. 2D is a block diagram of general-purpose graphics processing unit (GPGPU) that can be configured as a graphics processor and/or compute accelerator, according to embodiments described herein;
FIG. 3A is a block diagram of a graphics processor, which may be a discrete graphics processing unit, or may be a graphics processor integrated with a plurality of processing cores, or other semiconductor devices such as, but not limited to, memory devices or network interfaces.
FIG. 3B illustrates a graphics processor having a tiled architecture, according to embodiments described herein;
FIG. 3C illustrates a compute accelerator, according to embodiments described herein;
FIG. 4 is a block diagram of a graphics processing engine of a graphics processor in accordance with some embodiments.
FIG. 5A illustrates graphics core cluster, according to an embodiment;
FIG. 5B illustrates a vector engine of a graphics core, according to an embodiment;
FIG. 5C illustrates a matrix engine of a graphics core, according to an embodiment;
FIG. 6 illustrates a tile of a multi-tile processor, according to an embodiment;
FIG. 7 is a block diagram illustrating graphics processor instruction formats according to some embodiments;
FIG. 8 is a block diagram of another embodiment of a graphics processor;
FIG. 9A is a block diagram illustrating a graphics processor command format that may be used to program graphics processing pipelines according to some embodiments;
FIG. 9B is a block diagram illustrating a graphics processor command sequence according to an embodiment;
FIG. 10 illustrates an exemplary graphics software architecture for a data processing system according to some embodiments;
FIG. 11A is a block diagram illustrating an IP core development system that may be used to manufacture an integrated circuit to perform operations according to an embodiment;
FIG. 11B illustrates a cross-section side view of an integrated circuit package assembly, according to some embodiments described herein.

**FIG. 11C** illustrates a package assembly that includes multiple units of hardware logic chiplets connected to a substrate;

**FIG. 11D** illustrates a package assembly including interchangeable chiplets, according to an embodiment;

**FIG. 12** is a block diagram illustrating an exemplary system on a chip integrated circuit that may be fabricated using one or more IP cores, according to an embodiment;

**FIG. 13** illustrates an exemplary graphics processor of a system on a chip integrated circuit that may be fabricated using one or more IP cores, according to an embodiment;

**FIG. 14** illustrates an additional exemplary graphics processor of a system on a chip integrated circuit that may be fabricated using one or more IP cores, according to an embodiment;

**FIG. 15** illustrates a processing architecture which includes ray tracing cores and tensor cores;

**FIG. 16** illustrates an example of a distributed ray tracing engine;

**FIGS. 17-18** illustrate compression performed in a ray tracing system;

**FIG. 19** illustrates a method implemented on a ray tracing architectu re;

**FIG. 20** illustrates an exemplary hybrid ray tracing apparatus;

**FIG. 21** illustrates stacks used for ray tracing operations;

**FIG. 22** illustrates additional details for a hybrid ray tracing apparatus;

**FIG. 23** illustrates a bounding volume hierarchy;

**FIG. 24** illustrates a call stack and traversal state storage;

**FIG. 25** illustrates a method for traversal and intersection;

**FIGS. 26A-B** illustrate how multiple dispatch cycles are required to execute certain shaders;

**FIG. 27** illustrates how a single dispatch cycle executes a plurality of shaders;

**FIG. 28** illustrates how a single dispatch cycle executes a plurality of shaders;

**FIG. 29** illustrates an architecture for executing ray tracing instructions;

**FIG. 30** illustrates a method for executing ray tracing instructions within a thread;

**FIG. 31** illustrates one embodiment of an architecture for asynchronous ray tracing;

**FIG. 32A** illustrates one embodiment of a ray traversal circuit;

**FIG. 32B** illustrates processes executed in one embodiment to manage ray storage banks;

**FIG. 33** illustrates one embodiment of priority selection circuitry/logic;

**FIG. 34** illustrates an embodiment of a level of detail selector with an N-bit comparison operation mask;

**FIG. 35** illustrates a ray tracing engine in accordance with one embodiment;

**FIG. 36** illustrate a BVH compressor in accordance with one embodiment;

**FIG. 37A** illustrates one embodiment of a tiled resource;

**FIG. 37B** illustrates a method in accordance with one embodiment of the invention;

**FIG. 38A** illustrates one embodiment of BVH processing logic including an on-demand builder;

**FIG. 38B** illustrates one embodiment of an on-demand builder for an acceleration structure;

**FIG. 38C** illustrates one embodiment of a visible bottom level acceleration structure map;

**FIG. 38D** illustrates different types of instances and traversal decisions;

**FIG. 39** illustrates one embodiment of a material-based cull mask;

**FIG. 40A** illustrates one embodiment of a ray tracing architectu re;

**FIG. 40B** illustrates one embodiment which includes meshlet compression;

**FIG. 41** illustrates a plurality of threads including synchronous threads, diverging spawn threads, regular spawn threads, and converging spawn threads;

**FIG. 42** illustrates one embodiment of a ray tracing architecture with a bindless thread dispatcher;

**FIG. 43** illustrates a ray tracing cluster in accordance with one embodiment;

**FIG. 44-51** illustrate embodiments of using proxy data in a multi-node ray tracing implementation;

**FIG. 52** illustrates a method in accordance with one embodiment of the invention;

**FIG. 53A-B** illustrate an analysis of construction time speed-up relative to a top down builder;

**FIG. 54** illustrates an apparatus and method in accordance with embodiments of the invention;

**FIG. 55** illustrates associations between spatially-ordered primitives, primitive subsets, and leaf nodes in accordance with embodiments of the invention;

**FIG. 56** illustrates an apparatus and method including a sampling weight generator in accordance with embodiments of the invention;

**FIG. 57** illustrates a method for determining primitive weights in accordance with embodiments of the invention;

**FIG. 58** illustrates a method for improving the latency of BVH construction using stochastic selection of a representative sample of primitives; and

**FIG. 59** illustrates a ray tracing engine in accordance with embodiments of the invention.

**DETAILED DESCRIPTION**

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

EXEMPLARY GRAPHICS PROCESSOR ARCHITECTURES AND DATA TYPES

**System Overview**

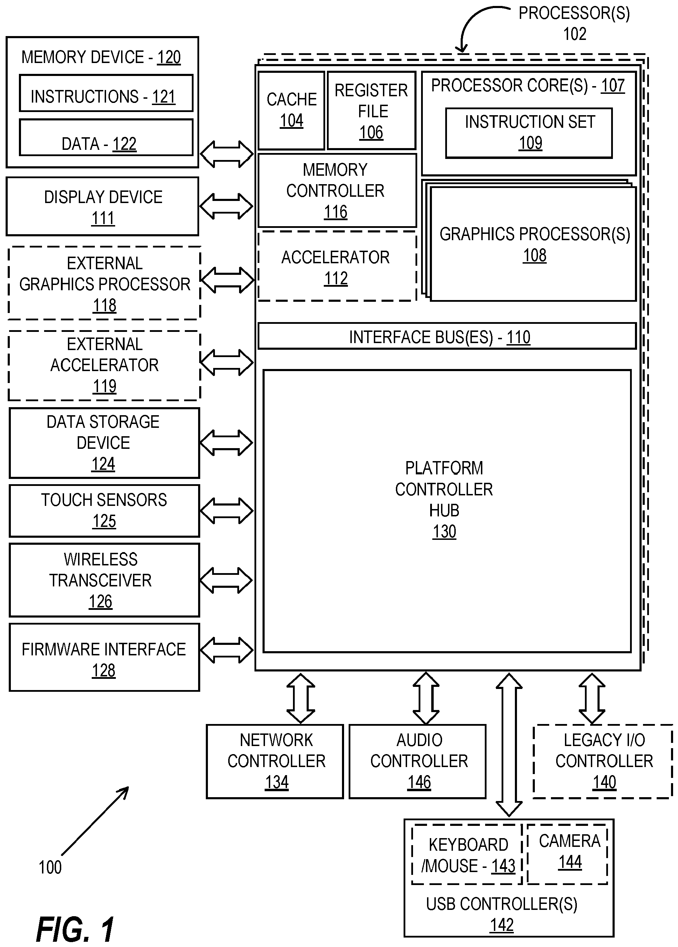

**Fig. 1** is a block diagram of a processing system 100, according to an embodiment. Processing system 100 may be used in a single processor desktop system, a multiprocessor workstation system, or a server system having a large number of processors 102 or processor cores 107. In one embodiment, the processing system 100 is a processing platform incorporated within a system-on-a-chip (SoC) integrated circuit for use in mobile, handheld, or embedded devices such as within Internet-of-things (IoT) devices with wired or wireless connectivity to a local or wide area network.
In one embodiment, processing system 100 can include, couple with, or be integrated within: a server-based gaming platform; a game console, including a game and media console; a mobile gaming console, a handheld game console, or an online game console. In some embodiments the processing system 100 is part of a mobile phone, smart phone, tablet computing device or mobile Internet-connected device such as a laptop with low internal storage capacity. Processing system 100 can also include, couple with, or be integrated within: a wearable device, such as a smart watch wearable device; smart eyewear or clothing enhanced with augmented reality (AR) or virtual reality (VR) features to provide visual, audio or tactile outputs to supplement real world visual, audio or tactile experiences or otherwise provide text, audio, graphics, video, holographic images or video, or tactile feedback; other augmented reality (AR) device; or other virtual reality (VR) device. In some embodiments, the processing system 100 includes or is part of a television or set top box device. In one embodiment, processing system 100 can include, couple with, or be integrated within a self-driving vehicle such as a bus, tractor trailer, car, motor or electric power cycle, plane, or glider (or any combination thereof). The self-driving vehicle may use processing system 100 to process the environment sensed around the vehicle.
In some embodiments, the one or more processors 102 each include one or more processor cores 107 to process instructions which, when executed, perform operations for system or user software. In some embodiments, at least one of the one or more processor cores 107 is configured to process a specific instruction set 109. In some embodiments, instruction set 109 may facilitate Complex Instruction Set Computing (CISC), Reduced Instruction Set Computing (RISC), or computing via a Very Long Instruction Word (VLIW). One or more processor cores 107 may process a different instruction set 109, which may include instructions to facilitate the emulation of other instruction sets. Processor core 107 may also include other processing devices, such as a Digital Signal Processor (DSP).
In some embodiments, the processor 102 includes cache memory 104. Depending on the architecture, the processor 102 can have a single internal cache or multiple levels of internal cache. In some embodiments, the cache memory is shared among various components of the processor 102. In some embodiments, the processor 102 also uses an external cache (e.g., a Level-3 (L3) cache or Last Level Cache (LLC)) (not shown), which may be shared among processor cores 107 using known cache coherency techniques. A register file 106 can be additionally included in processor 102 and may include different types of registers for storing different types of data (e.g., integer registers, floating point registers, status registers, and an instruction pointer register). Some registers may be general-purpose registers, while other registers may be specific to the design of the processor 102.
In some embodiments, one or more processor(s) 102 are coupled with one or more interface bus(es) 110 to transmit communication signals such as address, data, or control signals between processor 102 and other components in the processing system 100. The interface bus 110, in one embodiment, can be a processor bus, such as a version of the Direct Media Interface (DMI) bus. However, processor busses are not limited to the DMI bus, and may include one or more Peripheral Component Interconnect buses (e.g., PCI, PCI express), memory busses, or other types of interface busses. In one embodiment the processor(s) 102 include a memory controller 116 and a platform controller hub 130. The memory controller 116 facilitates communication between a memory device and other components of the processing system 100, while the platform controller hub (PCH) 130 provides connections to I/O devices via a local I/O bus.
The memory device 120 can be a dynamic random-access memory (DRAM) device, a static random-access memory (SRAM) device, flash memory device, phase-change memory device, or some other memory device having suitable performance to serve as process memory. In one embodiment the memory device 120 can operate as system memory for the processing system 100, to store data 122 and instructions 121 for use when the one or more processors 102 executes an application or process. The memory controller 116 also couples with an optional external graphics processor 118, which may communicate with the one or more graphics processors 108 in processors 102 to perform graphics and media operations. In some embodiments, graphics, media, and or compute operations may be assisted by an accelerator 112 which is a coprocessor that can be configured to perform a specialized set of graphics, media, or compute operations. For example, in one embodiment the accelerator 112 is a matrix multiplication accelerator used to optimize machine learning or compute operations. In one embodiment the accelerator 112 is a ray-tracing accelerator that can be used to perform ray-tracing operations in concert with the graphics processor 108. In one embodiment, an external accelerator 119 may be used in place of or in concert with the accelerator 112.

In some embodiments a display device 111 can connect to the processor(s) 102. The display device 111 can be one or more of an internal display device, as in a mobile electronic device or a laptop device or an external display device attached via a display interface (e.g., DisplayPort, etc.). In one embodiment the display device 111 can be a head mounted display (HMD) such as a stereoscopic display device for use in virtual reality (VR) applications or augmented reality (AR) applications.

In some embodiments the platform controller hub 130 enables peripherals to connect to memory device 120 and processor 102 via a high-speed I/O bus. The I/O peripherals include, but are not limited to, an audio controller 146, a network controller 134, a firmware interface 128, a wireless transceiver 126, touch sensors 125, a data storage device 124 (e.g., nonvolatile memory, volatile memory, hard disk drive, flash memory, NAND, 3D NAND, 3D XPoint, etc.). The data storage device 124 can connect via a storage interface (e.g., SATA) or via a peripheral bus, such as a Peripheral Component Interconnect bus (e.g., PCI, PCI express). The touch sensors 125 can include touch screen sensors, pressure sensors, or fingerprint sensors. The wireless transceiver 126 can be a Wi-Fi transceiver, a Bluetooth transceiver, or a mobile network transceiver such as a 3G, 4G, 5G, or Long-Term Evolution (LTE) transceiver. The firmware interface 128 enables communication with system firmware, and can be, for example, a unified extensible firmware interface (UEFI). The network controller 134 can enable a network connection to a wired network. In some embodiments, a high-performance network controller (not shown) couples with the interface bus 110. The audio controller 146, in one embodiment, is a multi-channel high-definition audio controller. In one embodiment the processing system 100 includes an optional legacy I/O controller 140 for coupling legacy (e.g., Personal System 2 (PS/2)) devices to the system. The platform controller hub 130 can also connect to one or more Universal Serial Bus (USB) controllers 142 to connect to input devices, such as keyboard and mouse 143 combinations, a camera 144, or other USB input devices.

It will be appreciated that the processing system 100 shown is exemplary and not limiting, as other types of data processing systems that are differently configured may also be used. For example, an instance of the memory controller 116 and platform controller hub 130 may be integrated into a discrete external graphics processor, such as the external graphics processor 118. In one embodiment the platform controller hub 130 and/or memory controller 116 may be external to the one or more processor(s) 102 and reside in a system chipset that is in communication with the processor(s) 102.

For example, circuit boards ("sleds") can be used on which components such as CPUs, memory, and other components are placed, and are designed for increased thermal performance. In some examples, processing components such as the processors are located on a top side of a sled while near memory, such as DIMMs, are located on a bottom side of the sled. As a result of the enhanced airflow provided by this design, the components may operate at higher frequencies and power levels than in typical systems, thereby increasing performance. Furthermore, the sleds are configured to blindly mate with power and data communication cables in a rack, thereby enhancing their ability to be quickly removed, upgraded, reinstalled, and/or replaced. Similarly, individual components located on the sleds, such as processors, accelerators, memory, and data storage drives, are configured to be easily upgraded due to their increased spacing from each other. In the illustrative embodiment, the components additionally include hardware attestation features to prove their authenticity.

A data center can utilize a single network architecture ("fabric") that supports multiple other network architectures including Ethernet and Omni-Path. The sleds can be coupled to switches via optical fibers, which provide higher bandwidth and lower latency than typical twisted pair cabling (e.g., Category 5, Category 5e, Category 6, etc.). Due to the high bandwidth, low latency interconnections and network architecture, the data center may, in use, pool resources, such as memory, accelerators (e.g., GPUs, graphics accelerators, FPGAs, ASICs, neural network and/or artificial intelligence accelerators, etc.), and data storage drives that are physically disaggregated, and provide them to compute resources (e.g., processors) on an as needed basis, enabling the compute resources to access the pooled resources as if they were local.

A power supply or source can provide voltage and/or current to processing system 100 or any component or system described herein. In one example, the power supply includes an AC to DC (alternating current to direct current) adapter to plug into a wall outlet. Such AC power can be renewable energy (e.g., solar power) power source. In one example, power source includes a DC power source, such as an external AC to DC converter. In one example, power source or power supply includes wireless charging hardware to charge via proximity to a charging field. In one example, power source can include an internal battery, alternating current supply, motion-based power supply, solar power supply, or fuel cell source.

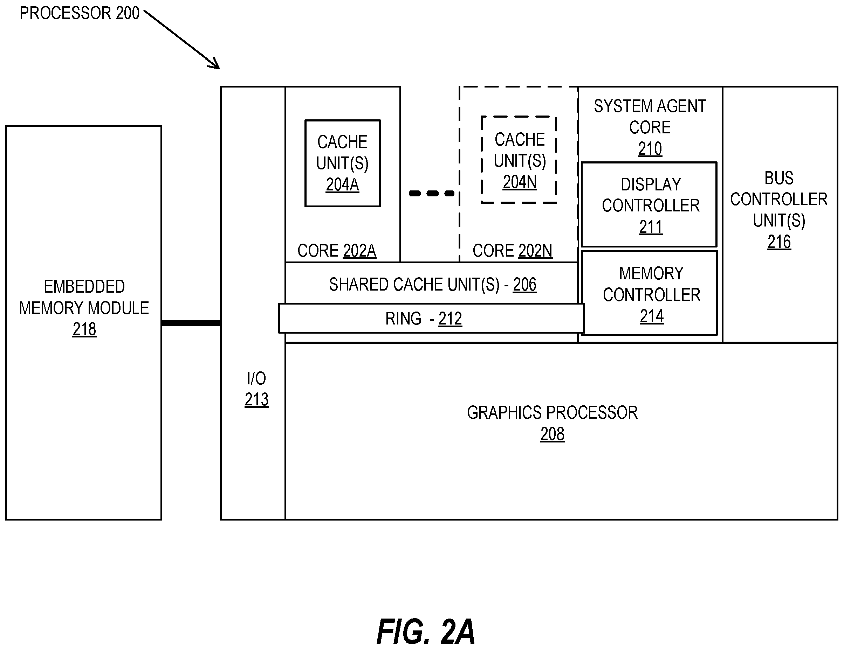

**Figs. 2A-2D** illustrate computing systems and graphics processors provided by embodiments described herein.

The elements of Figs. 2A-2D having the same reference numbers (or names) as the elements of any other figure herein can operate or function in any manner similar to that described elsewhere herein, but are not limited to such.

**Fig. 2A** is a block diagram of an embodiment of a processor 200 having one or more processor cores 202A-202N, an integrated memory controller 214, and an integrated graphics processor 208. Processor 200 can include additional cores up to and including additional core 202N represented by the dashed lined boxes. Each of processor cores 202A-202N includes one or more internal cache units 204A-204N. In some embodiments each processor core also has access to one or more shared cached units 206. The internal cache units 204A-204N and shared cache units 206 represent a cache memory hierarchy within the processor 200. The cache memory hierarchy may include at least one level of instruction and data cache within each processor core and one or more levels of shared mid-level cache, such as a Level 2 (L2), Level 3 (L3), Level 4 (L4), or other levels of cache, where the highest level of cache before external memory is classified as the LLC. In some embodiments, cache coherency logic maintains coherency between the various cache units 206 and 204A-204N.

In some embodiments, processor 200 may also include a set of one or more bus controller units 216 and a system agent core 210. The one or more bus controller units 216 manage a set of peripheral buses, such as one or more PCI or PCI express busses. System agent core 210 provides management functionality for the various processor components. In some embodiments, system agent core 210 includes one or more integrated memory controllers 214 to manage access to various external memory devices (not shown).

In some embodiments, one or more of the processor cores 202A-202N include support for simultaneous multi-threading. In such embodiment, the system agent core 210 includes components for coordinating and operating cores 202A-202N during multi-threaded processing. System agent core 210 may additionally include a power control unit (PCU), which includes logic and components to regulate the power state of processor cores 202A-202N and graphics processor 208.

In some embodiments, processor 200 additionally includes graphics processor 208 to execute graphics processing operations. In some embodiments, the graphics processor 208 couples with the set of shared cache units 206, and the system agent core 210, including the one or more integrated memory controllers 214. In some embodiments, the system agent core 210 also includes a display controller 211 to drive graphics processor output to one or more coupled displays. In some embodiments, display controller 211 may also be a separate module coupled with the graphics processor via at least one interconnect, or may be integrated within the graphics processor 208.

In some embodiments, a ring-based interconnect 212 is used to couple the internal components of the processor 200. However, an alternative interconnect unit may be used, such as a point-to-point interconnect, a switched interconnect, a mesh interconnect, or other techniques, including techniques well known in the art. In some embodiments, graphics processor 208 couples with the ring-based interconnect 212 via an I/O link 213.

The exemplary I/O link 213 represents at least one of multiple varieties of I/O interconnects, including an on package I/O interconnect which facilitates communication between various processor components and a high-performance embedded memory module 218, such as an eDRAM module or a high-bandwidth memory (HBM) module. In some embodiments, each of the processor cores 202A-202N and graphics processor 208 can use the embedded memory module 218 as a shared Last Level Cache.

In some embodiments, processor cores 202A-202N are homogenous cores executing the same instruction set architecture. In another embodiment, processor cores 202A-202N are heterogeneous in terms of instruction set architecture (ISA), where one or more of processor cores 202A-202N execute a first instruction set, while at least one of the other cores executes a subset of the first instruction set or a different instruction set. In one embodiment, processor cores 202A-202N are heterogeneous in terms of microarchitecture, where one or more cores having a relatively higher power consumption couple with one or more power cores having a lower power consumption. In one embodiment, processor cores 202A-202N are heterogeneous in terms of computational capability. Additionally, processor 200 can be implemented on one or more chips or as an SoC integrated circuit having the illustrated components, in addition to other components.

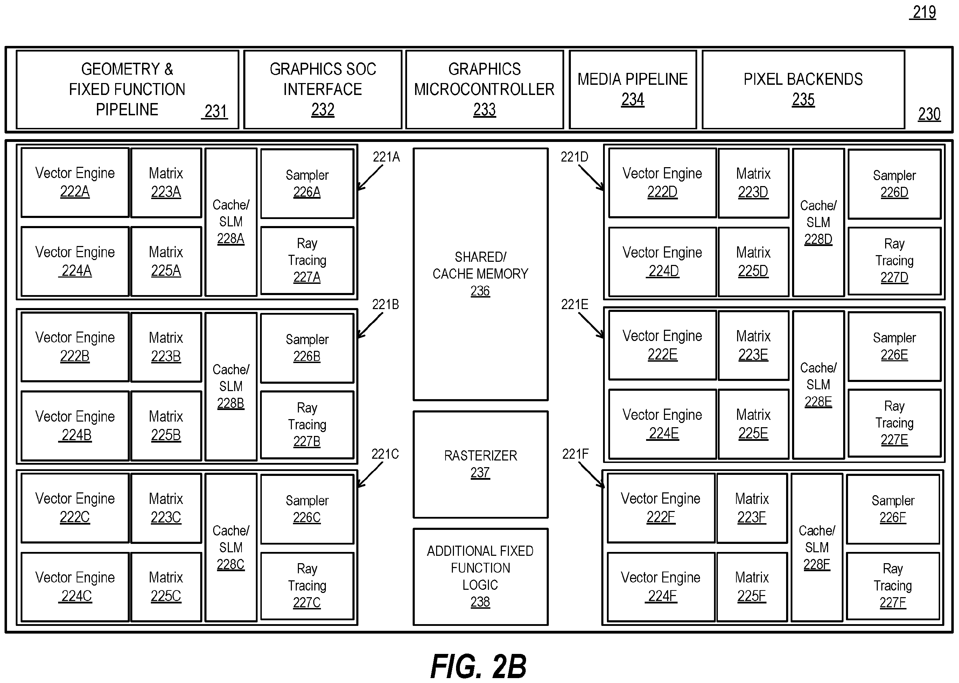

**Fig. 2B** is a block diagram of hardware logic of a graphics processor core block 219, according to some embodiments described herein. In some embodiments, elements of **Fig. 2B** having the same reference numbers (or names) as the elements of any other figure herein may operate or function in a manner similar to that described elsewhere herein. The graphics processor core block 219 is exemplary of one partition of a graphics processor. The graphics processor core block 219 can be included within the integrated graphics processor 208 of Fig. 2A or a discrete graphics processor, parallel processor, and/or compute accelerator. A graphics processor as described herein may include multiple graphics core blocks based on target power and performance envelopes. Each graphics processor core block 219 can include a function block 230 coupled with multiple graphics cores 221A-221F that include modular blocks of fixed function logic and general-purpose programmable logic. The graphics processor core block 219 also includes shared/cache memory 236 that is accessible by all graphics cores 221A-221F, rasterizer logic 237, and additional fixed function logic 238.

In some embodiments, the function block 230 includes a geometry/fixed function pipeline 231 that can be shared by all graphics cores in the graphics processor core block 219. In various embodiments, the geometry/fixed function pipeline 231 includes a 3D geometry pipeline a video front-end unit, a thread spawner and global thread dispatcher, and a unified return buffer manager, which manages unified return buffers. In one embodiment the function block 230 also includes a graphics SoC interface 232, a graphics microcontroller 233, and a media pipeline 234. The graphics SoC interface 232 provides an interface between the graphics processor core block 219 and other core blocks within a graphics processor or compute accelerator SoC. The graphics microcontroller 233 is a programmable sub-processor that is configurable to manage various functions of the graphics processor core block 219, including thread dispatch, scheduling, and pre-emption. The media pipeline 234 includes logic to facilitate the decoding, encoding, pre-processing, and/or post-processing of multimedia data, including image and video data. The media pipeline 234 implement media operations via requests to compute or sampling logic within the graphics cores 221-221F. One or more pixel backends 235 can also be included within the function block 230. The pixel backends 235 include a cache memory to store pixel color values and can perform blend operations and lossless color compression of rendered pixel data.

In one embodiment the graphics SoC interface 232 enables the graphics processor core block 219 to communicate with general-purpose application processor cores (e.g., CPUs) and/or other components within an SoC or a system host CPU that is coupled with the SoC via a peripheral interface. The graphics SoC interface 232 also enables communication with off-chip memory hierarchy elements such as a shared last level cache memory, system RAM, and/or embedded on-chip or on-package DRAM. The SoC interface 232 can also enable communication with fixed function devices within the SoC, such as camera imaging pipelines, and enables the use of and/or implements global memory atomics that may be shared between the graphics processor core block 219 and CPUs within the SoC. The graphics SoC interface 232 can also implement power management controls for the graphics processor core block 219 and enable an interface between a clock domain of the graphics processor core block 219 and other clock domains within the SoC. In one embodiment the graphics SoC interface 232 enables receipt of command buffers from a command streamer and global thread dispatcher that are configured to provide commands and instructions to each of one or more graphics cores within a graphics processor. The commands and instructions can be dispatched to the media pipeline 234 when media operations are to be performed, the geometry and fixed function pipeline 231 when graphics processing operations are to be performed. When compute operations are to be performed, compute dispatch logic can dispatch the commands to the graphics cores 221A-221F, bypassing the geometry and media pipelines.

The graphics microcontroller 233 can be configured to perform various scheduling and management tasks for the graphics processor core block 219. In one embodiment the graphics microcontroller 233 can perform graphics and/or compute workload scheduling on the various vector engines 222A-222F, 224A-224F and matrix engines 223A-223F, 225A-225F within the graphics cores 221A-221F. In this scheduling model, host software executing on a CPU core of an SoC including the graphics processor core block 219 can submit workloads to one of multiple graphics processor doorbells, which invokes a scheduling operation on the appropriate graphics engine. Scheduling operations include determining which workload to run next, submitting a workload to a command streamer, pre-empting existing workloads running on an engine, monitoring progress of a workload, and notifying host software when a workload is complete. In one embodiment the graphics microcontroller 233 can also facilitate low-power or idle states for the graphics processor core block 219, providing the graphics processor core block 219 with the ability to save and restore registers within the graphics processor core block 219 across low-power state transitions independently from the operating system and/or graphics driver software on the system.

The graphics processor core block 219 may have greater than or fewer than the illustrated graphics cores 221A-221F, up to N modular graphics cores. For each set of N graphics cores, the graphics processor core block 219 can also include shared/cache memory 236, which can be configured as shared memory or cache memory, rasterizer logic 237, and additional fixed function logic 238 to accelerate various graphics and compute processing operations.

Within each graphics cores 221A-221F is set of execution resources that may be used to perform graphics, media, and compute operations in response to requests by graphics pipeline, media pipeline, or shader programs. The graphics cores 221A-221F include multiple vector engines 222A-222F, 224A-224F, matrix acceleration units 223A-223F, 225A-225D, cache/shared local memory (SLM), a sampler 226A-226F, and a ray tracing unit 227A-227F.

The vector engines 222A-222F, 224A-224F are general-purpose graphics processing units capable of performing floating-point and integer/fixed-point logic operations in service of a graphics, media, or compute operation, including graphics, media, or compute/GPGPU programs. The vector engines 222A-222F, 224A-224F can operate at variable vector widths using SIMD, SIMT, or SIMT+SIMD execution modes. The matrix acceleration units 223A-223F, 225A-225D include matrix-matrix and matrix-vector acceleration logic that improves performance on matrix operations, particularly low and mixed precision (e.g., INT8, FP16, BF16) matrix operations used for machine learning. In one embodiment, each of the matrix acceleration units 223A-223F, 225A-225D includes one or more systolic arrays of processing elements that can perform concurrent matrix multiply or dot product operations on matrix elements.

The sampler 226A-226F can read media or texture data into memory and can sample data differently based on a configured sampler state and the texture/media format that is being read. Threads executing on the vector engines 222A-222F, 224A-224F or matrix acceleration units 223A-223F, 225A-225D can make use of the cache/SLM 228A-228F within each execution core. The cache/SLM 228A-228F can be configured as cache memory or as a pool of shared memory that is local to each of the respective graphics cores 221A-221F. The ray tracing units 227A-227F within the graphics cores 221A-221F include ray traversal/intersection circuitry for performing ray traversal using bounding volume hierarchies (BVHs) and identifying intersections between rays and primitives enclosed within the BVH volumes. In one embodiment the ray tracing units 227A-227F include circuitry for performing depth testing and culling (e.g., using a depth buffer or similar arrangement). In one implementation, the ray tracing units 227A-227F perform traversal and intersection operations in concert with image denoising, at least a portion of which may be performed using an associated matrix acceleration unit 223A-223F, 225A-225D.

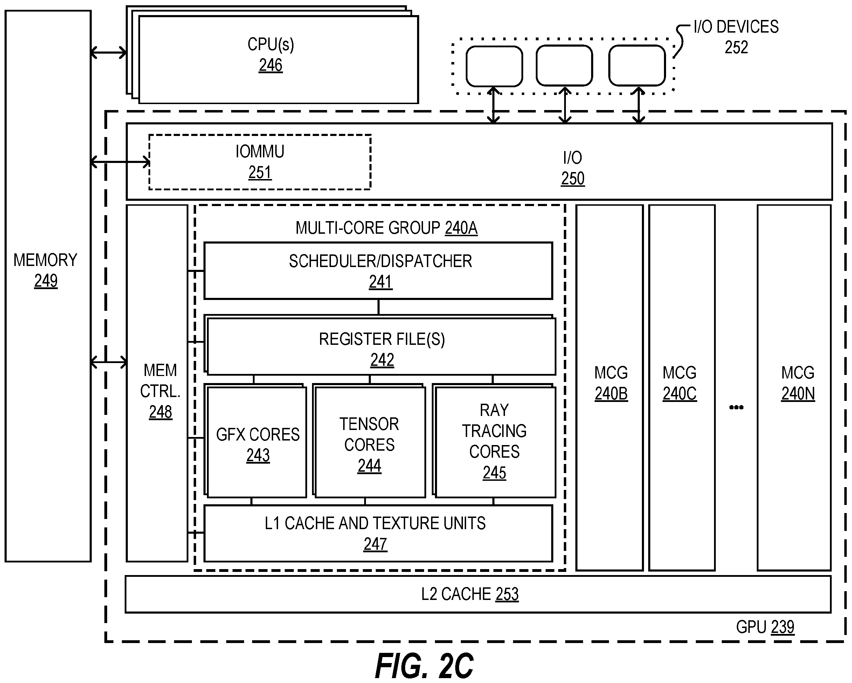

**Fig. 2C** illustrates a graphics processing unit (GPU) 239 that includes dedicated sets of graphics processing resources arranged into multi-core groups 240A-240N. The details of multi-core group 240A are illustrated. Multi-core groups 240B-240N may be equipped with the same or similar sets of graphics processing resources.

As illustrated, a multi-core group 240A may include a set of graphics cores 243, a set of tensor cores 244, and a set of ray tracing cores 245. A scheduler/dispatcher 241 schedules and dispatches the graphics threads for execution on the various cores 243, 244, 245. In one embodiment the tensor cores 244 are sparse tensor cores with hardware to enable multiplication operations having a zero-value input to be bypassed. The graphics cores 243 of the GPU 239 of Fig. 2C differ in hierarchical abstraction level relative to the graphics cores 221A-221F of Fig. 2B, which are analogous to the multi-core groups 240A-240N of Fig. 2C. The graphics cores 243, tensor cores 244, and ray tracing cores 245 of Fig. 2C are analogous to, respectively, the vector engines 222A-222F, 224A-224F, matrix engines 223A-223F, 225A-225F, and ray tracing units 227A-227F of Fig. 2B.

A set of register files 242 can store operand values used by the cores 243, 244, 245 when executing the graphics threads. These may include, for example, integer registers for storing integer values, floating point registers for storing floating point values, vector registers for storing packed data elements (integer and/or floating-point data elements) and tile registers for storing tensor/matrix values. In one embodiment, the tile registers are implemented as combined sets of vector registers.

One or more combined level 1 (L1) caches and shared memory units 247 store graphics data such as texture data, vertex data, pixel data, ray data, bounding volume data, etc., locally within each multi-core group 240A. One or more texture units 247 can also be used to perform texturing operations, such as texture mapping and sampling. A Level 2 (L2) cache 253 shared by all or a subset of the multi-core groups 240A-240N stores graphics data and/or instructions for multiple concurrent graphics threads. As illustrated, the L2 cache 253 may be shared across a plurality of multi-core groups 240A-240N. One or more memory controllers 248 couple the GPU 239 to a memory 249 which may be a system memory (e.g., DRAM) and/or a dedicated graphics memory (e.g., GDDR6 memory).

Input/output (I/O) circuitry 250 couples the GPU 239 to one or more I/O devices 252 such as digital signal processors (DSPs), network controllers, or user input devices. An on-chip interconnect may be used to couple the I/O devices 252 to the GPU 239 and memory 249. One or more I/O memory management units (IOMMUs) 251 of the I/O circuitry 250 couple the I/O devices 252 directly to the memory 249. In one embodiment, the IOMMU 251 manages multiple sets of page tables to map virtual addresses to physical addresses in memory 249. In this embodiment, the I/O devices 252, CPU(s) 246, and GPU 239 may share the same virtual address space.

In one implementation, the IOMMU 251 supports virtualization. In this case, it may manage a first set of page tables to map guest/graphics virtual addresses to guest/graphics physical addresses and a second set of page tables to map the guest/graphics physical addresses to system/host physical addresses (e.g., within memory 249). The base addresses of each of the first and second sets of page tables may be stored in control registers and swapped out on a context switch (e.g., so that the new context is provided with access to the relevant set of page tables). While not illustrated in Fig. 2C, each of the cores 243, 244, 245 and/or multi-core groups 240A-240N may include translation lookaside buffers (TLBs) to cache guest virtual to guest physical translations, guest physical to host physical translations, and guest virtual to host physical translations.

In one embodiment, the CPUs 246, GPU 239, and I/O devices 252 are integrated on a single semiconductor chip and/or chip package. The memory 249 may be integrated on the same chip or may be coupled to the memory controllers 248 via an off-chip interface. In one implementation, the memory 249 comprises GDDR6 memory which shares the same virtual address space as other physical system-level memories, although the underlying principles of the embodiments described herein are not limited to this specific implementation.

In one embodiment, the tensor cores 244 include a plurality of functional units specifically designed to perform matrix operations, which are the fundamental compute operation used to perform deep learning operations. For example, simultaneous matrix multiplication operations may be used for neural network training and inferencing. The tensor cores 244 may perform matrix processing using a variety of operand precisions including single precision floating-point (e.g., 32 bits), half-precision floating point (e.g., 16 bits), integer words (16 bits), bytes (8 bits), and half-bytes (4 bits). In one embodiment, a neural network implementation extracts features of each rendered scene, potentially combining details from multiple frames, to construct a high-quality final image.

In deep learning implementations, parallel matrix multiplication work may be scheduled for execution on the tensor cores 244. The training of neural networks, in particular, requires a significant number of matrix dot product operations. In order to process an inner-product formulation of an N × N × N matrix multiply, the tensor cores 244 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 244 to ensure that the most efficient precision is used for different workloads (e.g., such as inferencing workloads which can tolerate quantization to bytes and half-bytes).

In one embodiment, the ray tracing cores 245 accelerate ray tracing operations for both real-time ray tracing and non-real-time ray tracing implementations. In particular, the ray tracing cores 245 include ray traversal/intersection circuitry for performing ray traversal using bounding volume hierarchies (BVHs) and identifying intersections between rays and primitives enclosed within the BVH volumes. The ray tracing cores 245 may also include circuitry for performing depth testing and culling (e.g., using a Z buffer or similar arrangement). In one implementation, the ray tracing cores 245 perform traversal and intersection operations in concert with the image denoising techniques described herein, at least a portion of which may be executed on the tensor cores 244. For example, in one embodiment, the tensor cores 244 implement a deep learning neural network to perform denoising of frames generated by the ray tracing cores 245. However, the CPU(s) 246, graphics cores 243, and/or ray tracing cores 245 may also implement all or a portion of the denoising and/or deep learning algorithms.

In addition, as described above, a distributed approach to denoising may be employed in which the GPU 239 is in a computing device coupled to other computing devices over a network or high-speed interconnect. In this embodiment, the interconnected computing devices share neural network learning/training data to improve the speed with which the overall system learns to perform denoising for different types of image frames and/or different graphics applications.

In one embodiment, the ray tracing cores 245 process all BVH traversal and ray-primitive intersections, saving the graphics cores 243 from being overloaded with thousands of instructions per ray. In one embodiment, each ray tracing core 245 includes a first set of specialized circuitry for performing bounding box tests (e.g., for traversal operations) and a second set of specialized circuitry for performing the ray-triangle intersection tests (e.g., intersecting rays which have been traversed). Thus, in one embodiment, the multi-core group 240A can simply launch a ray probe, and the ray tracing cores 245 independently perform ray traversal and intersection and return hit data (e.g., a hit, no hit, multiple hits, etc.) to the thread context. The other cores 243, 244 are freed to perform other graphics or compute work while the ray tracing cores 245 perform the traversal and intersection operations.

In one embodiment, each ray tracing core 245 includes a traversal unit to perform BVH testing operations and an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 243 and tensor cores 244) are freed to perform other forms of graphics work.

In one particular embodiment described below, a hybrid rasterization/ray tracing approach is used in which work is distributed between the graphics cores 243 and ray tracing cores 245.

In one embodiment, the ray tracing cores 245 (and/or other cores 243, 244) include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 245, graphics cores 243 and tensor cores 244 is Vulkan 1.1.85. Note, however, that the underlying principles of the embodiments described herein are not limited to any particular ray tracing ISA.

In general, the various cores 245, 244, 243 may support a ray tracing instruction set that includes instructions/functions for ray generation, closest hit, any hit, ray-primitive intersection, per-primitive and hierarchical bounding box construction, miss, visit, and exceptions. More specifically, one embodiment includes ray tracing instructions to perform the following functions:

Ray Generation - Ray generation instructions may be executed for each pixel, sample, or other user-defined work assignment.

Closest Hit - A closest hit instruction may be executed to locate the closest intersection point of a ray with primitives within a scene.

Any Hit - An any hit instruction identifies multiple intersections between a ray and primitives within a scene, potentially to identify a new closest intersection point.

Intersection - An intersection instruction performs a ray-primitive intersection test and outputs a result.

Per-primitive Bounding box Construction - This instruction builds a bounding box around a given primitive or group of primitives (e.g., when building a new BVH or other acceleration data structure).

Miss - Indicates that a ray misses all geometry within a scene, or specified region of a scene.

Visit - Indicates the child volumes a ray will traverse.

Exceptions - Includes various types of exception handlers (e.g., invoked for various error conditions).

In one embodiment the ray tracing cores 245 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 245 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 245 can also be used to perform computations that are not directly analogous to ray tracing. For example, mesh projection, mesh refinement, and volume sampling computations can be accelerated using the ray tracing cores 245. Generic coordinate space calculations, such as nearest neighbor calculations can also be performed. For example, the set of points near a given point can be discovered by defining a bounding box in the coordinate space around the point. BVH and ray probe logic within the ray tracing cores 245 can then be used to determine the set of point intersections within the bounding box. The intersections constitute the origin point and the nearest neighbors to that origin point. Computations that are performed using the ray tracing cores 245 can be performed in parallel with computations performed on the graphics cores 243 and tensor cores 244. A shader compiler can be configured to compile a compute shader or other general-purpose graphics processing program into low level primitives that can be parallelized across the graphics cores 243, tensor cores 244, and ray tracing cores 245.

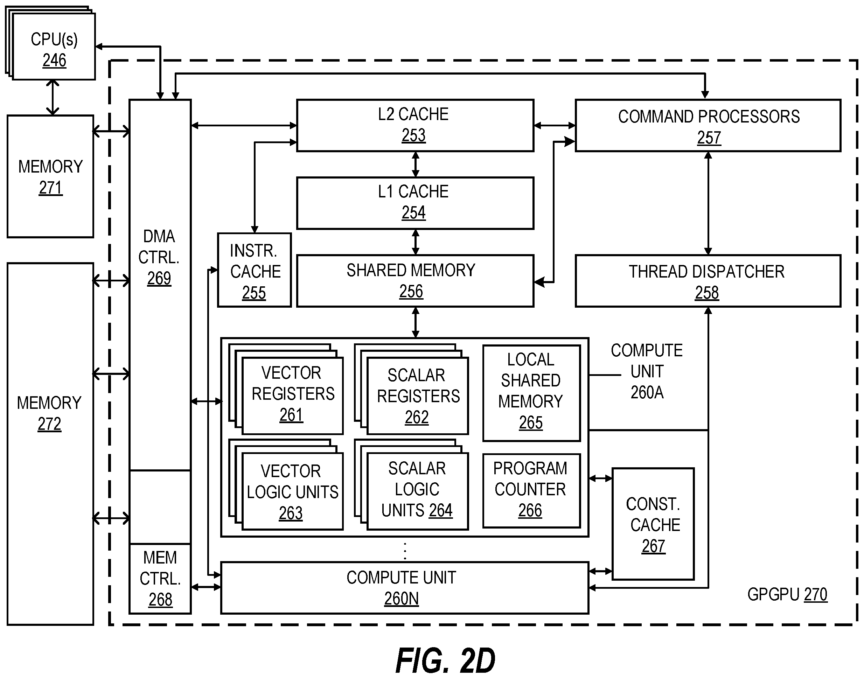

**Fig. 2D** is a block diagram of general-purpose graphics processing unit (GPGPU) 270 that can be configured as a graphics processor and/or compute accelerator, according to embodiments described herein. The GPGPU 270 can interconnect with host processors (e.g., one or more CPU(s) 246) and memory 271, 272 via one or more system and/or memory busses. In one embodiment the memory 271 is system memory that may be shared with the one or more CPU(s) 246, while memory 272 is device memory that is dedicated to the GPGPU 270. In one embodiment, components within the GPGPU 270 and memory 272 may be mapped into memory addresses that are accessible to the one or more CPU(s) 246. Access to memory 271 and 272 may be facilitated via a memory controller 268. In one embodiment the memory controller 268 includes an internal direct memory access (DMA) controller 269 or can include logic to perform operations that would otherwise be performed by a DMA controller.

The GPGPU 270 includes multiple cache memories, including an L2 cache 253, L1 cache 254, an instruction cache 255, and shared memory 256, at least a portion of which may also be partitioned as a cache memory. The GPGPU 270 also includes multiple compute units 260A-260N, which represent a hierarchical abstraction level analogous to the graphics cores 221A-221F of Fig. 2B and the multi-core groups 240A-240N of Fig. 2C. Each compute unit 260A-260N includes a set of vector registers 261, scalar registers 262, vector logic units 263, and scalar logic units 264. The compute units 260A-260N can also include local shared memory 265 and a program counter 266. The compute units 260A-260N can couple with a constant cache 267, which can be used to store constant data, which is data that will not change during the run of kernel or shader program that executes on the GPGPU 270. In one embodiment the constant cache 267 is a scalar data cache and cached data can be fetched directly into the scalar registers 262.

During operation, the one or more CPU(s) 246 can write commands into registers or memory in the GPGPU 270 that has been mapped into an accessible address space. The command processors 257 can read the commands from registers or memory and determine how those commands will be processed within the GPGPU 270. A thread dispatcher 258 can then be used to dispatch threads to the compute units 260A-260N to perform those commands. Each compute unit 260A-260N can execute threads independently of the other compute units. Additionally, each compute unit 260A-260N can be independently configured for conditional computation and can conditionally output the results of computation to memory. The command processors 257 can interrupt the one or more CPU(s) 246 when the submitted commands are complete.

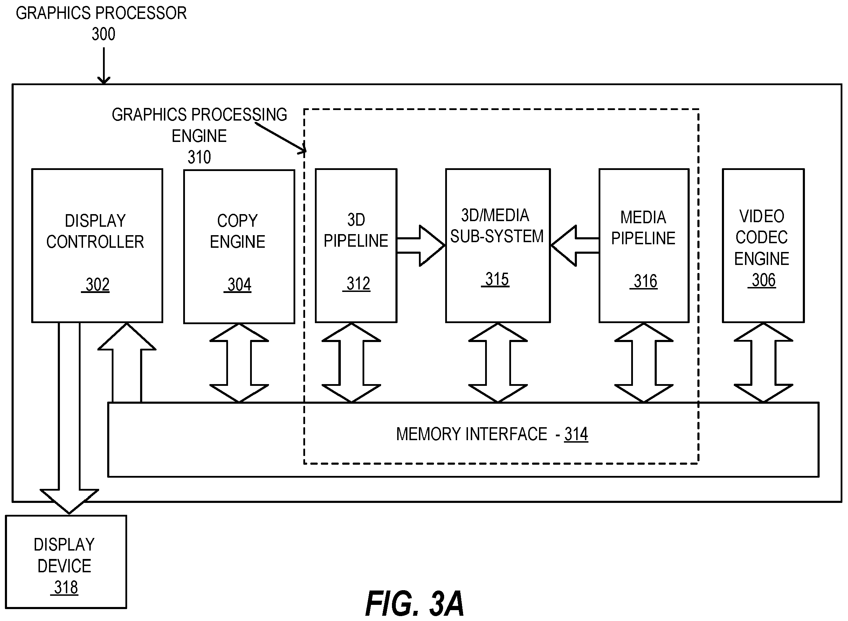

**Figs. 3A-3C** illustrate block diagrams of additional graphics processor and compute accelerator architectures provided by embodiments described herein. The elements of Figs. 3A-3C having the same reference numbers (or names) as the elements of any other figure herein can operate or function in any manner similar to that described elsewhere herein, but are not limited to such.

**Fig. 3A** is a block diagram of a graphics processor 300, which may be a discrete graphics processing unit, or may be a graphics processor integrated with a plurality of processing cores, or other semiconductor devices such as, but not limited to, memory devices or network interfaces. In some embodiments, the graphics processor communicates via a memory mapped I/O interface to registers on the graphics processor and with commands placed into the processor memory. In some embodiments, graphics processor 300 includes a memory interface 314 to access memory. Memory interface 314 can be an interface to local memory, one or more internal caches, one or more shared external caches, and/or to system memory.

In some embodiments, graphics processor 300 also includes a display controller 302 to drive display output data to a display device 318. Display controller 302 includes hardware for one or more overlay planes for the display and composition of multiple layers of video or user interface elements. The display device 318 can be an internal or external display device. In one embodiment the display device 318 is a head mounted display device, such as a virtual reality (VR) display device or an augmented reality (AR) display device. In some embodiments, graphics processor 300 includes a video codec engine 306 to encode, decode, or transcode media to, from, or between one or more media encoding formats, including, but not limited to Moving Picture Experts Group (MPEG) formats such as MPEG-2, Advanced Video Coding (AVC) formats such as H.264/MPEG-4 AVC, H.265/HEVC, Alliance for Open Media (AOMedia) VP8, VP9, as well as the Society of Motion Picture & Television Engineers (SMPTE) 421M/VC-1, and Joint Photographic Experts Group (JPEG) formats such as JPEG, and Motion JPEG (MJPEG) formats.

In some embodiments, graphics processor 300 includes a block image transfer (BLIT) engine to perform two-dimensional (2D) rasterizer operations including, for example, bit-boundary block transfers. However, in one embodiment, 2D graphics operations are performed using one or more components of graphics processing engine (GPE) 310. In some embodiments, GPE 310 is a compute engine for performing graphics operations, including three-dimensional (3D) graphics operations and media operations.

In some embodiments, GPE 310 includes a 3D pipeline 312 for performing 3D operations, such as rendering three-dimensional images and scenes using processing functions that act upon 3D primitive shapes (e.g., rectangle, triangle, etc.). The 3D pipeline 312 includes programmable and fixed function elements that perform various tasks within the element and/or spawn execution threads to a 3D/Media subsystem 315. While 3D pipeline 312 can be used to perform media operations, an embodiment of GPE 310 also includes a media pipeline 316 that is specifically used to perform media operations, such as video post-processing and image enhancement.

In some embodiments, media pipeline 316 includes fixed function or programmable logic units to perform one or more specialized media operations, such as video decode acceleration, video de-interlacing, and video encode acceleration in place of, or on behalf of video codec engine 306. In some embodiments, media pipeline 316 additionally includes a thread spawning unit to spawn threads for execution on 3D/Media subsystem 315. The spawned threads perform computations for the media operations on one or more graphics cores included in 3D/Media subsystem 315.

In some embodiments, 3D/Media subsystem 315 includes logic for executing threads spawned by 3D pipeline 312 and media pipeline 316. In one embodiment, the pipelines send thread execution requests to 3D/Media subsystem 315, which includes thread dispatch logic for arbitrating and dispatching the various requests to available thread execution resources. The execution resources include an array of graphics cores to process the 3D and media threads. In some embodiments, 3D/Media subsystem 315 includes one or more internal caches for thread instructions and data. In some embodiments, the subsystem also includes shared memory, including registers and addressable memory, to share data between threads and to store output data.

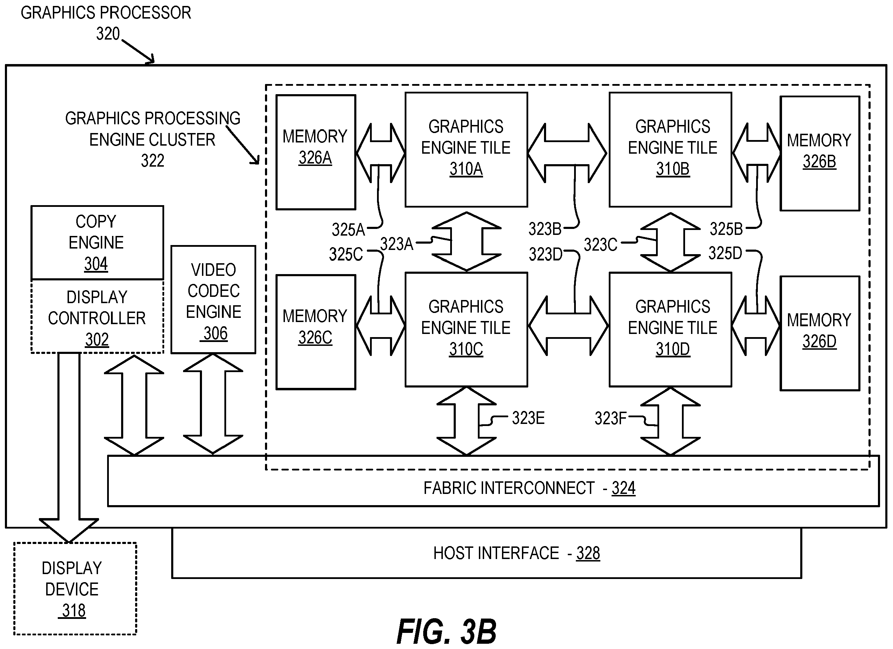

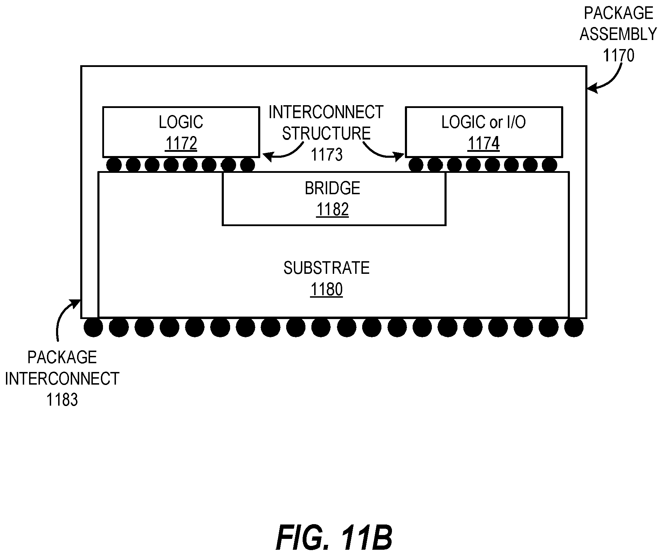

Fig. 3B illustrates a graphics processor 320 having a tiled architecture, according to embodiments described herein. In one embodiment the graphics processor 320 includes a graphics processing engine cluster 322 having multiple instances of the graphics processing engine 310 of Fig. 3A within a graphics engine tile 310A-310D. Each graphics engine tile 310A-310D can be interconnected via a set of tile interconnects 323A-323F. Each graphics engine tile 310A-310D can also be connected to a memory module or memory device 326A-326D via memory interconnects 325A-325D. The memory devices 326A-326D can use any graphics memory technology. For example, the memory devices 326A-326D may be graphics double data rate (GDDR) memory. The memory devices 326A-326D, in one embodiment, are HBM modules that can be on-die with their respective graphics engine tile 310A-310D. In one embodiment the memory devices 326A-326D are stacked memory devices that can be stacked on top of their respective graphics engine tile 310A-310D. In one embodiment, each graphics engine tile 310A-310D and associated memory 326A-326D reside on separate chiplets, which are bonded to a base die or base substrate, as described on further detail in Figs. 11B-11D.

The graphics processor 320 may be configured with a nonuniform memory access (NUMA) system in which memory devices 326A-326D are coupled with associated graphics engine tiles 310A-310D. A given memory device may be accessed by graphics engine tiles other than the tile to which it is directly connected. However, access latency to the memory devices 326A-326D may be lowest when accessing a local tile. In one embodiment, a cache coherent NUMA (ccNUMA) system is enabled that uses the tile interconnects 323A-323F to enable communication between cache controllers within the graphics engine tiles 310A-310D to maintain a consistent memory image when more than one cache stores the same memory location.

The graphics processing engine cluster 322 can connect with an on-chip or on-package fabric interconnect 324. In one embodiment the fabric interconnect 324 includes a network processor, network on a chip (NoC), or another switching processor to enable the fabric interconnect 324 to act as a packet switched fabric interconnect that switches data packets between components of the graphics processor 320. The fabric interconnect 324 can enable communication between graphics engine tiles 310A-310D and components such as the video codec engine 306 and one or more copy engines 304. The copy engines 304 can be used to move data out of, into, and between the memory devices 326A-326D and memory that is external to the graphics processor 320 (e.g., system memory). The fabric interconnect 324 can also couple with one or more of the tile interconnects 323A-323F to facilitate or enhance the interconnection between the graphics engine tiles 310A-310D. The fabric interconnect 324 is also configurable to interconnect multiple instances of the graphics processor 320 (e.g., via the host interface 328), enabling tile-to-tile communication between graphics engine tiles 310A-310D of multiple GPUs. In one embodiment, the graphics engine tiles 310A-310D of multiple GPUs can be presented to a host system as a single logical device.

The graphics processor 320 may optionally include a display controller 302 to enable a connection with the display device 318. The graphics processor may also be configured as a graphics or compute accelerator. In the accelerator configuration, the display controller 302 and display device 318 may be omitted.

The graphics processor 320 can connect to a host system via a host interface 328. The host interface 328 can enable communication between the graphics processor 320, system memory, and/or other system components. The host interface 328 can be, for example a PCI express bus or another type of host system interface. For example, the host interface 328 may be an NVLink or NVSwitch interface. The host interface 328 and fabric interconnect 324 can cooperate to enable multiple instances of the graphics processor 320 to act as single logical device. Cooperation between the host interface 328 and fabric interconnect 324 can also enable the individual graphics engine tiles 310A-310D to be presented to the host system as distinct logical graphics devices.

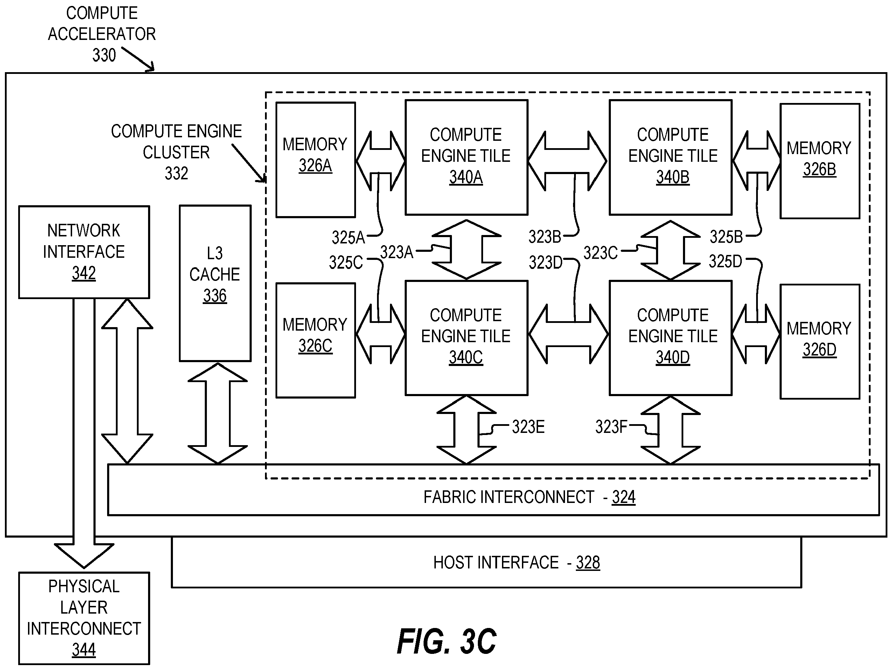

**Fig. 3C** illustrates a compute accelerator 330, according to embodiments described herein. The compute accelerator 330 can include architectural similarities with the graphics processor 320 of Fig. 3B and is optimized for compute acceleration. A compute engine cluster 332 can include a set of compute engine tiles 340A-340D that include execution logic that is optimized for parallel or vector-based general-purpose compute operations. In some embodiments, the compute engine tiles 340A-340D do not include fixed function graphics processing logic, although in one embodiment one or more of the compute engine tiles 340A-340D can include logic to perform media acceleration. The compute engine tiles 340A-340D can connect to memory 326A-326D via memory interconnects 325A-325D. The memory 326A-326D and memory interconnects 325A-325D may be similar technology as in graphics processor 320 or can be different. The compute engine tiles 340A-340D can also be interconnected via a set of tile interconnects 323A-323F and may be connected with and/or interconnected by a fabric interconnect 324. Cross-tile communications can be facilitated via the fabric interconnect 324. The fabric interconnect 324 (e.g., via the host interface 328) can also facilitate communication between compute engine tiles 340A-340D of multiple instances of the compute accelerator 330. In one embodiment the compute accelerator 330 includes a large L3 cache 336 that can be configured as a device-wide cache. The compute accelerator 330 can also connect to a host processor and memory via a host interface 328 in a similar manner as the graphics processor 320 of Fig. 3B.

The compute accelerator 330 can also include an integrated network interface 342. In one embodiment the network interface 342 includes a network processor and controller logic that enables the compute engine cluster 332 to communicate over a physical layer interconnect 344 without requiring data to traverse memory of a host system. In one embodiment, one of the compute engine tiles 340A-340D is replaced by network processor logic and data to be transmitted or received via the physical layer interconnect 344 may be transmitted directly to or from memory 326A-326D. Multiple instances of the compute accelerator 330 may be joined via the physical layer interconnect 344 into a single logical device. Alternatively, the various compute engine tiles 340A-340D may be presented as distinct network accessible compute accelerator devices.

**Graphics Processing Engine**

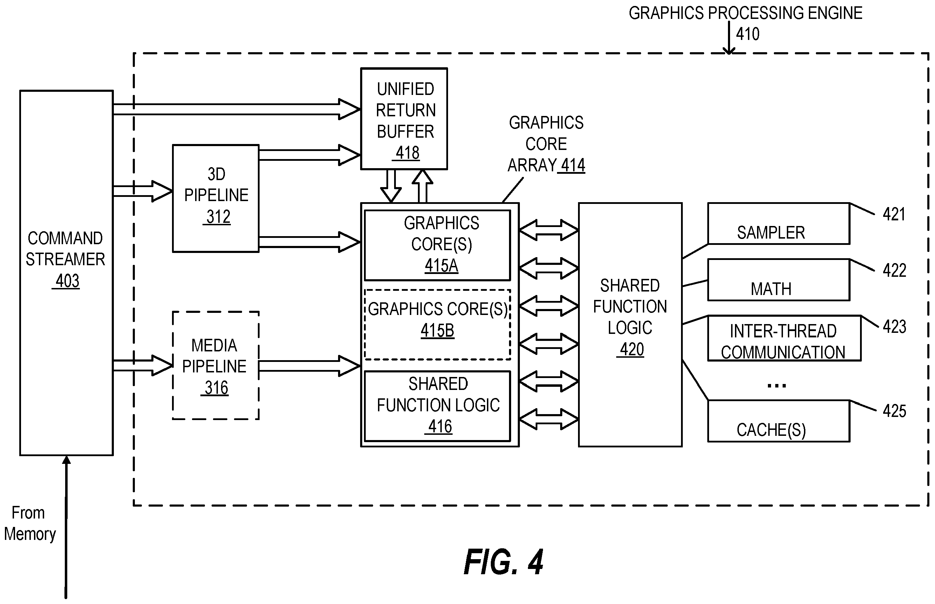

**Fig. 4** is a block diagram of a graphics processing engine 410 of a graphics processor in accordance with some embodiments. In one embodiment, the graphics processing engine (GPE) 410 is a version of the GPE 310 shown in **Fig. 3A** and may also represent a graphics engine tile 310A-310D of Fig. 3B. Elements of **Fig. 4** having the same reference numbers (or names) as the elements of any other figure herein can operate or function in any manner similar to that described elsewhere herein, but are not limited to such. For example, the 3D pipeline 312 and media pipeline 316 of **Fig. 3A** are illustrated. The media pipeline 316 is optional in some embodiments of the GPE 410 and may not be explicitly included within the GPE 410. For example and in at least one embodiment, a separate media and/or image processor is coupled to the GPE 410.

In some embodiments, PE 410 couples with or includes a command streamer 403, which provides a command stream to the 3D pipeline 312 and/or media pipelines 316. Alternatively or additionally, the command streamer 403 may be directly coupled to a unified return buffer 418. The unified return buffer 418 may be communicatively coupled to a graphics core cluster 414. In some embodiments, command streamer 403 is coupled with memory, which can be system memory, or one or more of internal cache memory and shared cache memory. In some embodiments, command streamer 403 receives commands from the memory and sends the commands to 3D pipeline 312 and/or media pipeline 316. The commands are directives fetched from a ring buffer, which stores commands for the 3D pipeline 312 and media pipeline 316. In one embodiment, the ring buffer can additionally include batch command buffers storing batches of multiple commands. The commands for the 3D pipeline 312 can also include references to data stored in memory, such as but not limited to vertex and geometry data for the 3D pipeline 312 and/or image data and memory objects for the media pipeline 316. The 3D pipeline 312 and media pipeline 316 process the commands and data by performing operations via logic within the respective pipelines or by dispatching one or more execution threads to a graphics core cluster 414. In one embodiment the graphics core cluster 414 include one or more blocks of graphics cores (e.g., graphics core block 415A, graphics core block 415B), each block including one or more graphics cores. Each graphics core includes a set of graphics execution resources that includes general-purpose and graphics specific execution logic to perform graphics and compute operations, as well as fixed function texture processing and/or machine learning and artificial intelligence acceleration logic, such as matrix or AI acceleration logic.

In various embodiments the 3D pipeline 312 can include fixed function and programmable logic to process one or more shader programs, such as vertex shaders, geometry shaders, pixel shaders, fragment shaders, compute shaders, or other shader and/or GPGPU programs, by processing the instructions and dispatching execution threads to the graphics core cluster 414. The graphics core cluster 414 provides a unified block of execution resources for use in processing these shader programs. Multipurpose execution logic within the graphics core blocks 415A-415B of the graphics core cluster 414 includes support for various 3D API shader languages and can execute multiple simultaneous execution threads associated with multiple shaders.

In some embodiments, the graphics core cluster 414 includes execution logic to perform media functions, such as video and/or image processing. In one embodiment, the graphics cores include general-purpose logic that is programmable to perform parallel general-purpose computational operations, in addition to graphics processing operations. The general-purpose logic can perform processing operations in parallel or in conjunction with general-purpose logic within the processor core(s) 107 of Fig. 1 or core 202A-202N as in Fig. 2A.

Output data generated by threads executing on the graphics core cluster 414 can output data to memory in a unified return buffer (URB) 418. The URB 418 can store data for multiple threads. In some embodiments the URB 418 may be used to send data between different threads executing on the graphics core cluster 414. In some embodiments the URB 418 may additionally be used for synchronization between threads on the graphics core array and fixed function logic within the shared function logic 420.

In some embodiments, graphics core cluster 414 is scalable, such that the cluster includes a variable number of graphics cores, each having a variable number of graphics cores based on the target power and performance level of GPE 410. In one embodiment the execution resources are dynamically scalable, such that execution resources may be enabled or disabled as needed.

The graphics core cluster 414 couples with shared function logic 420 that includes multiple resources that are shared between the graphics cores in the graphics core array. The shared functions within the shared function logic 420 are hardware logic units that provide specialized supplemental functionality to the graphics core cluster 414. In various embodiments, shared function logic 420 may include, but is not limited to sampler 421, math 422, and inter-thread communication (ITC) 423 logic. Additionally, some embodiments implement one or more cache(s) 425 within the shared function logic 420. The shared function logic 420 can implement the same or similar functionality as the additional fixed function logic 238 of Fig. 2B.

A shared function is implemented at least in a case where the demand for a given specialized function is insufficient for inclusion within the graphics core cluster 414. Instead, a single instantiation of that specialized function is implemented as a stand-alone entity in the shared function logic 420 and shared among the execution resources within the graphics core cluster 414. The precise set of functions that are shared between the graphics core cluster 414 and included within the graphics core cluster 414 varies across embodiments. In some embodiments, specific shared functions within the shared function logic 420 that are used extensively by the graphics core cluster 414 may be included within shared function logic 416 within the graphics core cluster 414. In various embodiments, the shared function logic 416 within the graphics core cluster 414 can include some or all logic within the shared function logic 420. In one embodiment, all logic elements within the shared function logic 420 may be duplicated within the shared function logic 416 of the graphics core cluster 414. In one embodiment the shared function logic 420 is excluded in favor of the shared function logic 416 within the graphics core cluster 414.

## Graphics Processing Resources

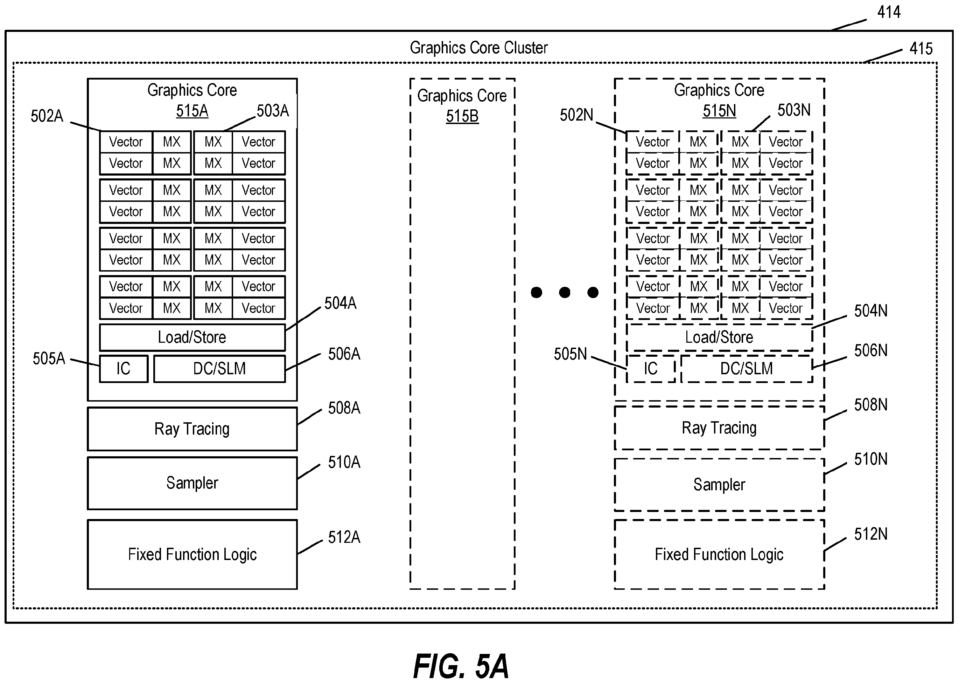

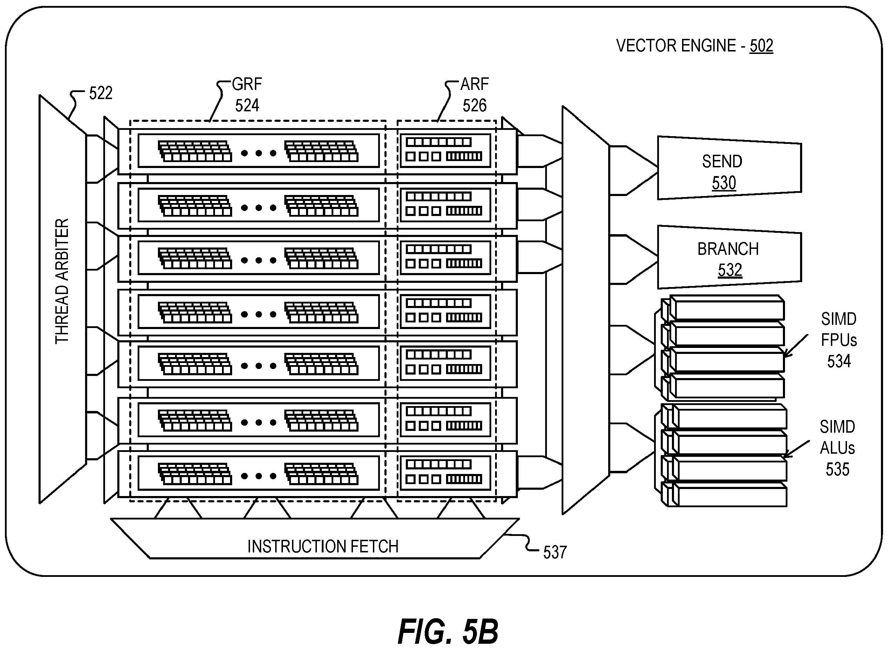

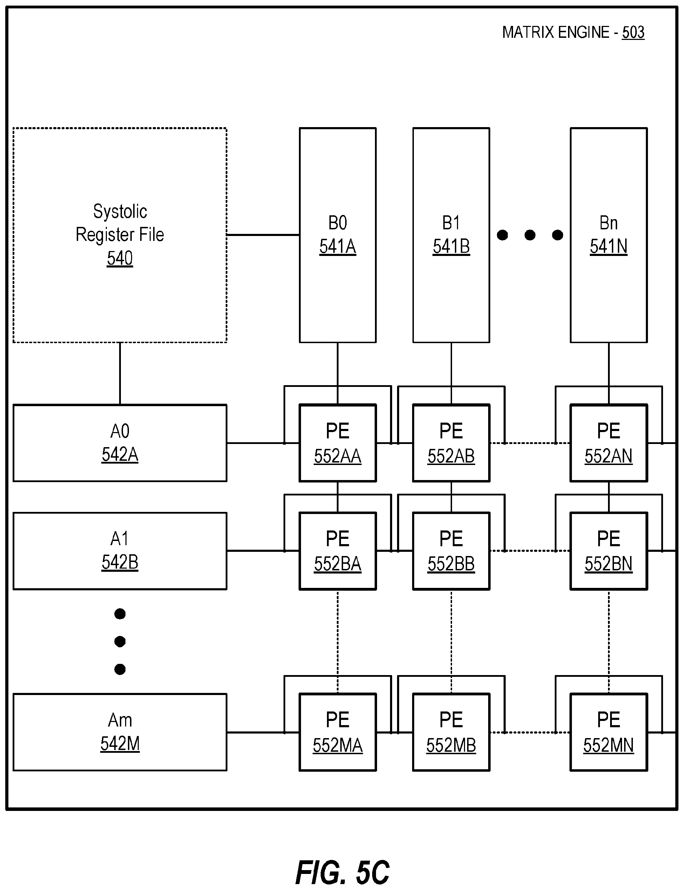

**Fig. 5A-5C** illustrate execution logic including an array of processing elements employed in a graphics processor, according to embodiments described herein. **Fig. 5A** illustrates graphics core cluster, according to an embodiment. **Fig. 5B** illustrates a vector engine of a graphics core, according to an embodiment. **Fig. 5C** illustrates a matrix engine of a graphics core, according to an embodiment. Elements of Fig. 5A-5C having the same reference numbers as the elements of any other figure herein may operate or function in any manner similar to that described elsewhere herein, but are not limited as such. For example, the elements of Fig. 5A-5C can be considered in the context of the graphics processor core block 219 of Fig. 2B, and/or the graphics core blocks 415A-415B of Fig. 4. In one embodiment, the elements of Fig. 5A-5C have similar functionality to equivalent components of the graphics processor 208 of Fig. 2A, the GPU 239 of Fig. 2C or the GPGPU 270 of Fig. 2D.

As shown in Fig. 5A, in one embodiment the graphics core cluster 414 includes a graphics core block 415, which may be graphics core block 415A or graphics core block 415B of Fig. 4. The graphics core block 415 can include any number of graphics cores (e.g., graphics core 515A, graphics core 515B, through graphics core 515N). Multiple instances of the graphics core block 415 may be included. In one embodiment the elements of the graphics cores 515A-515N have similar or equivalent functionality as the elements of the graphics cores 221A-221F of Fig. 2B. In such embodiment, the graphics cores 515A-515N each include circuitry including but not limited to vector engines 502A-502N, matrix engines 503A-503N, memory load/store units 504A-504N, instruction caches 505A-505N, data caches/shared local memory 506A-506N, ray tracing units 508A-508N, samplers 510A-510N. The circuitry of the graphics cores 515A-515N can additionally include fixed function logic 512A-512N. The number of vector engines 502A-502N and matrix engines 503A-503N within the graphics cores 515A-515N of a design can vary based on the workload, performance, and power targets for the design.

With reference to graphics core 515A, the vector engine 502A and matrix engine 503A are configurable to perform parallel compute operations on data in a variety of integer and floating-point data formats based on instructions associated with shader programs. Each vector engine 502A and matrix engine 503A can act as a programmable general-purpose computational unit that is capable of executing multiple simultaneous hardware threads while processing multiple data elements in parallel for each thread. The vector engine 502A and matrix engine 503A support the processing of variable width vectors at various SIMD widths, including but not limited to SIMD8, SIMD16, and SIMD32. Input data elements can be stored as a packed data type in a register and the vector engine 502A and matrix engine 503A can process the various elements based on the data size of the elements. For example, when operating on a 256-bit wide vector, the 256 bits of the vector are stored in a register and the vector is processed as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible. In one embodiment, the vector engine 502A and matrix engine 503A are also configurable for SIMT operation on warps or thread groups of various sizes (e.g., 8, 16, or 32 threads).

Continuing with graphics core 515A, the memory load/store unit 504A services memory access requests that are issued by the vector engine 502A, matrix engine 503A, and/or other components of the graphics core 515A that have access to memory. The memory access request can be processed by the memory load/store unit 504A to load or store the requested data to or from cache or memory into a register file associated with the vector engine 502A and/or matrix engine 503A. The memory load/store unit 504A can also perform prefetching operations. In one embodiment, the memory load/store unit 504A is configured to provide SIMT scatter/gather prefetching or block prefetching for data stored in memory 610, from memory that is local to other tiles via the tile interconnect 608, or from system memory. Prefetching can be performed to a specific L1 cache (e.g., data cache/shared local memory 506A), the L2 cache 604 or the L3 cache 606. In one embodiment, a prefetch to the L3 cache 606 automatically results in the data being stored in the L2 cache 604.

The instruction cache 505A stores instructions to be executed by the graphics core 515A. In one embodiment, the graphics core 515A also includes instruction fetch and prefetch circuitry that fetches or prefetches instructions into the instruction cache 505A. The graphics core 515A also includes instruction decode logic to decode instructions within the instruction cache 505A. The data cache/shared local memory 506A can be configured as a data cache that is managed by a cache controller that implements a cache replacement policy and/or configured as explicitly managed shared memory. The ray tracing unit 508A includes circuitry to accelerate ray tracing operations. The sampler 510A provides texture sampling for 3D operations and media sampling for media operations. The fixed function logic 512A includes fixed function circuitry that is shared between the various instances of the vector engine 502A and matrix engine 503A. Graphics cores 515B-515N can operate in a similar manner as graphics core 515A.

Functionality of the instruction caches 505A-505N, data caches/shared local memory 506A-506N, ray tracing units 508A-508N, samplers 510A-2710N, and fixed function logic 512A-512N corresponds with equivalent functionality in the graphics processor architectures described herein. For example, the instruction caches 505A-505N can operate in a similar manner as instruction cache 255 of Fig. 2D. The data caches/shared local memory 506A-506N, ray tracing units 508A-508N, and samplers 510A-2710N can operate in a similar manner as the cache/SLM 228A-228F, ray tracing units 227A-227F, and samplers 226A-226F of Fig. 2B. The fixed function logic 512A-512N can include elements of the geometry/fixed function pipeline 231 and/or additional fixed function logic 238 of Fig. 2B. In one embodiment, the ray tracing units 508A-508N include circuitry to perform ray tracing acceleration operations performed by the ray tracing cores 245 of Fig. 2C.

As shown in Fig. 5B, in one embodiment the vector engine 502 includes an instruction fetch unit 537, a general register file array (GRF) 524, an architectural register file array (ARF) 526, a thread arbiter 522, a send unit 530, a branch unit 532, a set of SIMD floating point units (FPUs) 534, and in one embodiment a set of integer SIMD ALUs 535. The GRF 524 and ARF 526 includes the set of general register files and architecture register files associated with each hardware thread that may be active in the vector engine 502. In one embodiment, per thread architectural state is maintained in the ARF 526, while data used during thread execution is stored in the GRF 524. The execution state of each thread, including the instruction pointers for each thread, can be held in thread-specific registers in the ARF 526.

In one embodiment the vector engine 502 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per graphics core, where graphics core resources are divided across logic used to execute multiple simultaneous threads. The number of logical threads that may be executed by the vector engine 502 is not limited to the number of hardware threads, and multiple logical threads can be assigned to each hardware thread.

In one embodiment, the vector engine 502 can co-issue multiple instructions, which may each be different instructions. The thread arbiter 522 can dispatch the instructions to one of the send unit 530, branch unit 532, or SIMD FPU(s) 534 for execution. Each execution thread can access 128 general-purpose registers within the GRF 524, where each register can store 32 bytes, accessible as a variable width vector of 32-bit data elements. In one embodiment, each thread has access to 4 Kbytes within the GRF 524, although embodiments are not so limited, and greater or fewer register resources may be provided in other embodiments. In one embodiment the vector engine 502 is partitioned into seven hardware threads that can independently perform computational operations, although the number of threads per vector engine 502 can also vary according to embodiments. For example, in one embodiment up to 16 hardware threads are supported. In an embodiment in which seven threads may access 4 Kbytes, the GRF 524 can store a total of 28 Kbytes. Where 16 threads may access 4Kbytes, the GRF 524 can store a total of 64Kbytes. Flexible addressing modes can permit registers to be addressed together to build effectively wider registers or to represent strided rectangular block data structures.

In one embodiment, memory operations, sampler operations, and other longer-latency system communications are dispatched via "send" instructions that are executed by the message passing send unit 530. In one embodiment, branch instructions are dispatched to a dedicated branch unit 532 to facilitate SIMD divergence and eventual convergence.

In one embodiment the vector engine 502 includes one or more SIMD floating point units (FPU(s)) 534 to perform floating-point operations. In one embodiment, the FPU(s) 534 also support integer computation. In one embodiment the FPU(s) 534 can execute up to M number of 32-bit floating-point (or integer) operations, or execute up to $2M$ 16-bit integer or 16-bit floating-point operations. In one embodiment, at least one of the FPU(s) provides extended math capability to support high-throughput transcendental math functions and double precision 64-bit floating-point. In some embodiments, a set of 8-bit integer SIMD ALUs 535 are also present and may be specifically optimized to perform operations associated with machine learning computations. In one embodiment, the SIMD ALUs are replaced by an additional set of SIMD FPUs 534 that are configurable to perform integer and floating-point operations. In one embodiment, the SIMD FPUs 534 and SIMD ALUs 535 are configurable to execute SIMT programs. In one embodiment, combined SIMD+SIMT operation is supported.

In one embodiment, arrays of multiple instances of the vector engine 502 can be instantiated in a graphics core. For scalability, product architects can choose the exact number of vector engines per graphics core grouping. In one embodiment the vector engine 502 can execute instructions across a plurality of execution channels. In a further embodiment, each thread executed on the vector engine 502 is executed on a different channel.

As shown in Fig. 5C, in one embodiment the matrix engine 503 includes an array of processing elements that are configured to perform tensor operations including vector/matrix and matrix/matrix operations, such as but not limited to matrix multiply and/or dot product operations. The matrix engine 503 is configured with M rows and N columns of processing elements (552AA-552MN) that include multiplier and adder circuits organized in a pipelined fashion. In one embodiment, the processing elements 552AA-552MN make up the physical pipeline stages of an N wide and M deep systolic array that can be used to perform vector/matrix or matrix/matrix operations in a data-parallel manner, including matrix multiply, fused multiply-add, dot product or other general matrix-matrix multiplication (GEMM) operations. In one embodiment the matrix engine 503 supports 16-bit floating point operations, as well as 8-bit, 4-bit, 2-bit, and binary integer operations. The matrix engine 503 can also be configured to accelerate specific machine learning operations. In such embodiments, the matrix engine 503 can be configured with support for the bfloat (brain floating point) 16-bit floating point format or a tensor float 32-bit floating point format (TF32) that have different numbers of mantissa and exponent bits relative to Institute of Electrical and Electronics Engineers (IEEE) 754 formats.

In one embodiment, during each cycle, each stage can add the result of operations performed at that stage to the output of the previous stage. In other embodiments, the pattern of data movement between the processing elements 552AA-552MN after a set of computational cycles can vary based on the instruction or macro-operation being performed. For example, in one embodiment partial sum loopback is enabled and the processing elements may instead add the output of a current cycle with output generated in the previous cycle. In one embodiment, the final stage of the systolic array can be configured with a loopback to the initial stage of the systolic array. In such embodiment, the number of physical pipeline stages may be decoupled from the number of logical pipeline stages that are supported by the matrix engine 503. For example, where the processing elements 552AA-552MN are configured as a systolic array of M physical stages, a loopback from stage M to the initial pipeline stage can enable the processing elements 552AA-552MN to operate as a systolic array of, for example, 2M, 3M, 4M, etc., logical pipeline stages.

In one embodiment, the matrix engine 503 includes memory 541A-541N, 542A-542M to store input data in the form of row and column data for input matrices. Memory 542A-542M is configurable to store row elements (A0-Am) of a first input matrix and memory 541A-541N is configurable to store column elements (B0-Bn) of a second input matrix. The row and column elements are provided as input to the processing elements 552AA-552MN for processing. In one embodiment, row and column elements of the input matrices can be stored in a systolic register file 540 within the matrix engine 503 before those elements are provided to the memory 541A-541N, 542A-542M. In one embodiment, the systolic register file 540 is excluded and the memory 541A-541N, 542A-542M is loaded from registers in an associated vector engine (e.g., GRF 524 of vector engine 502 of Fig. 5B) or other memory of the graphics core that includes the matrix engine 503 (e.g., data cache/shared local memory 506A for matrix engine 503A of Fig. 5A). Results generated by the processing elements 552AA-552MN are then output to an output buffer and/or written to a register file (e.g., systolic register file 540, GRF 524, data cache/shared local memory 506A-506N) for further processing by other functional units of the graphics processor or for output to memory.

In some embodiments, the matrix engine 503 is configured with support for input sparsity, where multiplication operations for sparse regions of input data can be bypassed by skipping multiply operations that have a zero-value operand. In one embodiment, the processing elements 552AA-552MN are configured to skip the performance of certain operations that have zero value input. In one embodiment, sparsity within input matrices can be detected and operations having known zero output values can be bypassed before being submitted to the processing elements 552AA-552MN. The loading of zero value operands into the processing elements can be bypassed and the processing elements 552AA-552MN can be configured to perform multiplications on the non-zero value input elements. The matrix engine 503 can also be configured with support for output sparsity, such that operations with results that are pre-determined to be zero are bypassed. For input sparsity and/or output sparsity, in one embodiment, metadata is provided to the processing elements 552AA-552MN to indicate, for a processing cycle, which processing elements and/or data channels are to be active during that cycle.

In one embodiment, the matrix engine 503 includes hardware to enable operations on sparse data having a compressed representation of a sparse matrix that stores non-zero values and metadata that identifies the positions of the non-zero values within the matrix. Exemplary compressed representations include but are not limited to compressed tensor representations such as compressed sparse row (CSR), compressed sparse column (CSC), compressed sparse fiber (CSF) representations. Support for compressed representations enable operations to be performed on input in a compressed tensor format without requiring the compressed representation to be decompressed or decoded. In such embodiment, operations can be performed only on non-zero input values and the resulting non-zero output values can be mapped into an output matrix. In some embodiments, hardware support is also provided for machine-specific lossless data compression formats that are used when transmitting data within hardware or across system busses. Such data may be retained in a compressed format for sparse input data and the matrix engine 503 can use the compression metadata for the compressed data to enable operations to be performed on only non-zero values, or to enable blocks of zero data input to be bypassed for multiply operations.

In various embodiments, input data can be provided by a programmer in a compressed tensor representation, or a codec can compress input data into the compressed tensor representation or another sparse data encoding. In addition to support for compressed tensor representations, streaming compression of sparse input data can be performed before the data is provided to the processing elements 552AA-552MN. In one embodiment, compression is performed on data written to a cache memory associated with the graphics core cluster 414, with the compression being performed with an encoding that is supported by the matrix engine 503. In one embodiment, the matrix engine 503 includes support for input having structured sparsity in which a pre-determined level or pattern of sparsity is imposed on input data. This data may be compressed to a known compression ratio, with the compressed data being processed by the processing elements 552AA-552MN according to metadata associated with the compressed data.

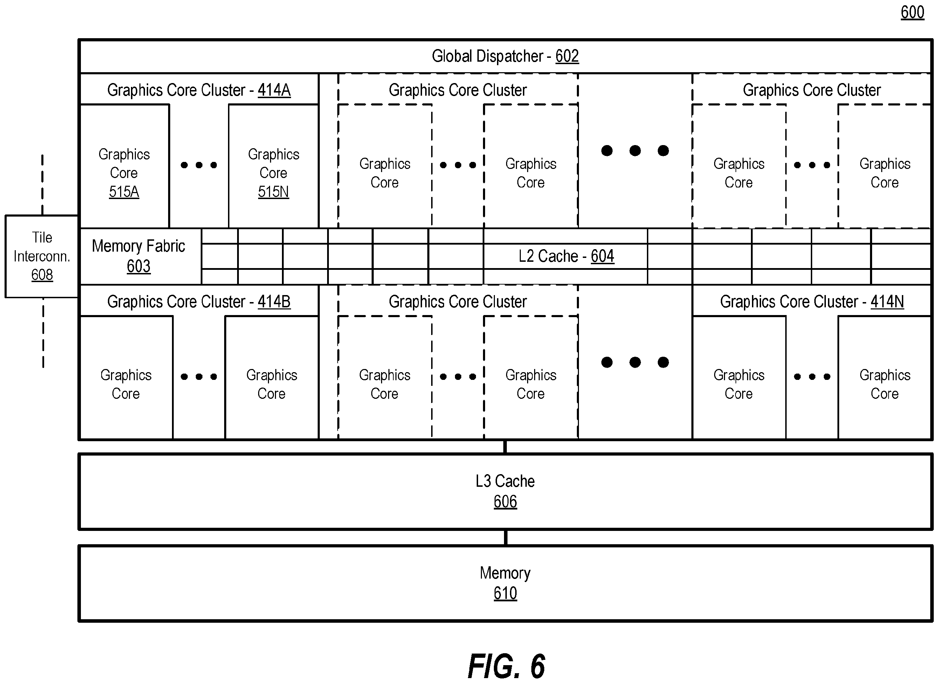

**Fig. 6** illustrates a tile 600 of a multi-tile processor, according to an embodiment. In one embodiment, the tile 600 is representative of one of the graphics engine tiles 310A-310D of Fig. 3B or compute engine tiles 340A-340D of Fig. 3C. The tile 600 of the multi-tile graphics processor includes an array of graphics core clusters (e.g., graphics core cluster 414A, graphics core cluster 414B, through graphics core cluster 414N), with each graphics core cluster having an array of graphics cores 515A-515N. The tile 600 also includes a global dispatcher 602 to dispatch threads to processing resources of the tile 600.

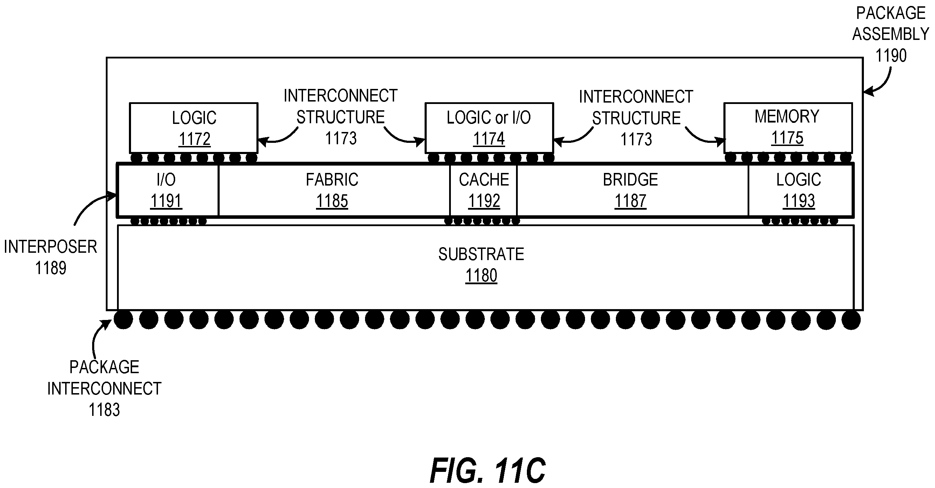

The tile 600 can include or couple with an L3 cache 606 and memory 610. In various embodiments, the L3 cache 606 may be excluded or the tile 600 can include additional levels of cache, such as an L4 cache. In one embodiment, each instance of the tile 600 in the multi-tile graphics processor has an associated memory 610, such as in Fig. 3B and Fig. 3C. In one embodiment, a multi-tile processor can be configured as a multi-chip module in which the L3 cache 606 and/or memory 610 reside on separate chiplets than the graphics core clusters 414A-414N. In this context, a chiplet is an at least partially packaged integrated circuit that includes distinct units of logic that can be assembled with other chiplets into a larger package. For example, the L3 cache 606 can be included in a dedicated cache chiplet or can reside on the same chiplet as the graphics core clusters 414A-414N. In one embodiment, the L3 cache 606 can be included in an active base die or active interposer, as illustrated in Fig. 11C.

A memory fabric 603 enables communication among the graphics core clusters 414A-414N, L3 cache 606, and memory 610. An L2 cache 604 couples with the memory fabric 603 and is configurable to cache transactions performed via the memory fabric 603. A tile interconnect 608 enables communication with other tiles on the graphics processors and may be one of tile interconnects 323A-323F of Fig. 3B and 3C. In embodiments in which the L3 cache 606 is excluded from the tile 600, the L2 cache 604 may be configured as a combined L2/L3 cache. The memory fabric 603 is configurable to route data to the L3 cache 606 or memory controllers associated with the memory 610 based on the presence or absence of the L3 cache 606 in a specific implementation. The L3 cache 606 can be configured as a per-tile cache that is dedicated to processing resources of the tile 600 or may be a partition of a GPU-wide L3 cache.

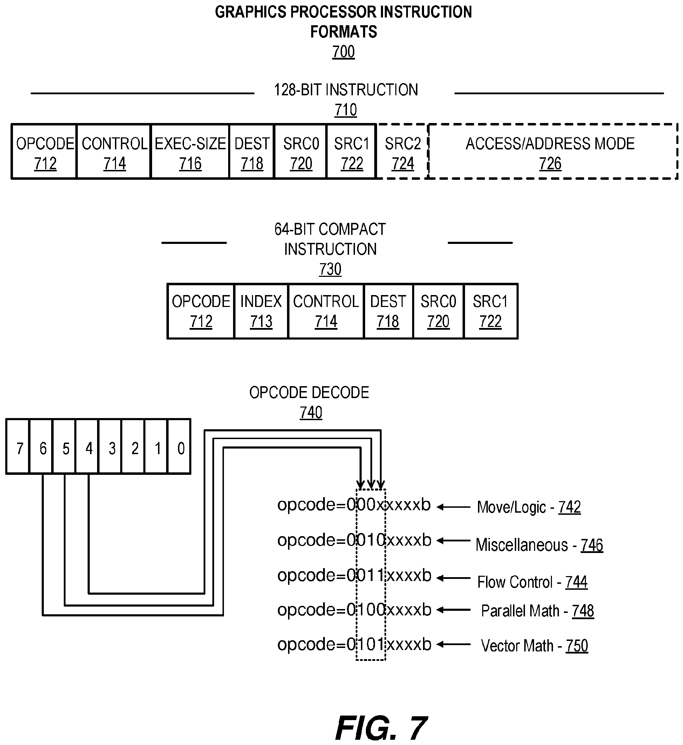

**Fig. 7** is a block diagram illustrating graphics processor instruction formats 700 according to some embodiments. In one or more embodiment, the graphics processor cores support an instruction set having instructions in multiple formats. The solid lined boxes illustrate the components that are generally included in a graphics core instruction, while the dashed lines include components that are optional or that are only included in a sub-set of the instructions. In some embodiments, the graphics processor instruction format 700 described and illustrated are macro-instructions, in that they are instructions supplied to the graphics core, as opposed to micro-operations resulting from instruction decode once the instruction is processed. Thus, a single instruction may cause hardware to perform multiple micro-operations.

In some embodiments, the graphics processor natively supports instructions in a 128-bit instruction format 710. A 64-bit compacted instruction format 730 is available for some instructions based on the selected instruction, instruction options, and number of operands. The native 128-bit instruction format 710 provides access to all instruction options, while some options and operations are restricted in the 64-bit format 730. The native instructions available in the 64-bit format 730 vary by embodiment. In some embodiments, the instruction is compacted in part using a set of index values in an index field 713. The graphics core hardware references a set of compaction tables based on the index values and uses the compaction table outputs to reconstruct a native instruction in the 128-bit instruction format 710. Other sizes and formats of instruction can be used.

For each format, instruction opcode 712 defines the operation that the graphics core is to perform. The graphics cores execute each instruction in parallel across the multiple data elements of each operand. For example, in response to an add instruction the graphics core performs a simultaneous add operation across each color channel representing a texture element or picture element. By default, the graphics core performs each instruction across all data channels of the operands. In some embodiments, instruction control field 714 enables control over certain execution options, such as channels selection (e.g., predication) and data channel order (e.g., swizzle). For instructions in the 128-bit instruction format 710 an exec-size field 716 limits the number of data channels that will be executed in parallel. In some embodiments, exec-size field 716 is not available for use in the 64-bit compact instruction format 730.

Some graphics core instructions have up to three operands including two source operands, src0 720, src1 722, and one destination 718. In some embodiments, the graphics cores support dual destination instructions, where one of the destinations is implied. Data manipulation instructions can have a third source operand (e.g., SRC2 724), where the instruction opcode 712 determines the number of source operands. An instruction's last source operand can be an immediate (e.g., hard-coded) value passed with the instruction.

In some embodiments, the 128-bit instruction format 710 includes an access/address mode field 726 specifying, for example, whether direct register addressing mode or indirect register addressing mode is used. When direct register addressing mode is used, the register address of one or more operands is directly provided by bits in the instruction.

In some embodiments, the 128-bit instruction format 710 includes an access/address mode field 726, which specifies an address mode and/or an access mode for the instruction. In one embodiment the access mode is used to define a data access alignment for the instruction. Some embodiments support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In one embodiment, the address mode portion of the access/address mode field 726 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some embodiments instructions are grouped based on opcode 712 bit-fields to simplify Opcode decode 740. For an 8-bit opcode, bits 4, 5, and 6 allow the graphics core to determine the type of opcode. The precise opcode

17

grouping shown is merely an example. In some embodiments, a move and logic opcode group 742 includes data movement and logic instructions (e.g., move (mov), compare (cmp)). In some embodiments, move and logic group 742 shares the five most significant bits (MSB), where move (mov) instructions are in the form of 0000xxxxb and logic instructions are in the form of 0001xxxxb. A flow control instruction group 744 (e.g., call, jump (jmp)) includes instructions in the form of 0010xxxxb (e.g., 0x20). A miscellaneous instruction group 746 includes a mix of instructions, including synchronization instructions (e.g., wait, send) in the form of 0011xxxxb (e.g., 0x30). A parallel math instruction group 748 includes component-wise arithmetic instructions (e.g., add, multiply (mul)) in the form of 0100xxxxb (e.g., 0x40). The parallel math instruction group 748 performs the arithmetic operations in parallel across data channels. The vector math group 750 includes arithmetic instructions (e.g., dp4) in the form of 0101xxxxb (e.g., 0x50). The vector math group performs arithmetic such as dot product calculations on vector operands. The illustrated opcode decode 740, in one embodiment, can be used to determine which portion of a graphics core will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

## Graphics Pipeline

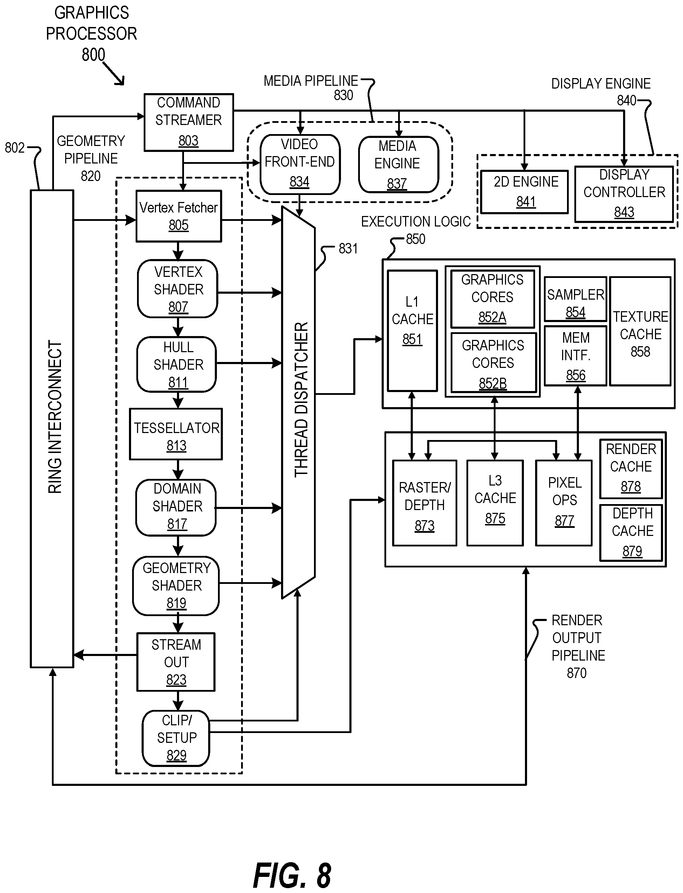

**Fig. 8** is a block diagram of another embodiment of a graphics processor 800. Elements of **Fig. 8** having the same reference numbers (or names) as the elements of any other figure herein can operate or function in any manner similar to that described elsewhere herein, but are not limited to such.

In some embodiments, graphics processor 800 includes a geometry pipeline 820, a media pipeline 830, a display engine 840, thread execution logic 850, and a render output pipeline 870. In some embodiments, graphics processor 800 is a graphics processor within a multi-core processing system that includes one or more general-purpose processing cores. The graphics processor is controlled by register writes to one or more control registers (not shown) or via commands issued to graphics processor 800 via a ring interconnect 802. In some embodiments, ring interconnect 802 couples graphics processor 800 to other processing components, such as other graphics processors or general-purpose processors. Commands from ring interconnect 802 are interpreted by a command streamer 803, which supplies instructions to individual components of the geometry pipeline 820 or the media pipeline 830.

In some embodiments, command streamer 803 directs the operation of a vertex fetcher 805 that reads vertex data from memory and executes vertex-processing commands provided by command streamer 803. In some embodiments, vertex fetcher 805 provides vertex data to a vertex shader 807, which performs coordinate space transformation and lighting operations to each vertex. In some embodiments, vertex fetcher 805 and vertex shader 807 execute vertex-processing instructions by dispatching execution threads to graphics cores 852A-852B via a thread dispatcher 831.

In some embodiments, graphics cores 852A-852B are an array of vector processors having an instruction set for performing graphics and media operations. In some embodiments, graphics cores 852A-852B have an attached L1 cache 851 that is specific for each array or shared between the arrays. The cache can be configured as a data cache, an instruction cache, or a single cache that is partitioned to contain data and instructions in different partitions.

In some embodiments, geometry pipeline 820 includes tessellation components to perform hardware-accelerated tessellation of 3D objects. In some embodiments, a programmable hull shader 811 configures the tessellation operations. A programmable domain shader 817 provides back-end evaluation of tessellation output. A tessellator 813 operates at the direction of hull shader 811 and contains special purpose logic to generate a set of detailed geometric objects based on a coarse geometric model that is provided as input to geometry pipeline 820. In some embodiments, if tessellation is not used, tessellation components (e.g., hull shader 811, tessellator 813, and domain shader 817) can be bypassed. The tessellation components can operate based on data received from the vertex shader 807.

In some embodiments, complete geometric objects can be processed by a geometry shader 819 via one or more threads dispatched to graphics cores 852A-852B or can proceed directly to the clipper 829. In some embodiments, the geometry shader operates on entire geometric objects, rather than vertices or patches of vertices as in previous stages of the graphics pipeline. If the tessellation is disabled the geometry shader 819 receives input from the vertex shader 807. In some embodiments, geometry shader 819 is programmable by a geometry shader program to perform geometry tessellation if the tessellation units are disabled.

Before rasterization, a clipper 829 processes vertex data. The clipper 829 may be a fixed function clipper or a programmable clipper having clipping and geometry shader functions. In some embodiments, a rasterizer and depth test component 873 in the render output pipeline 870 dispatches pixel shaders to convert the geometric objects into per pixel representations. In some embodiments, pixel shader logic is included in thread execution logic 850. In some embodiments, an application can bypass the rasterizer and depth test component 873 and access un-rasterized vertex data via a stream out unit 823.

The graphics processor 800 has an interconnect bus, interconnect fabric, or some other interconnect mechanism that allows data and message passing amongst the major components of the processor. In some embodiments, graphics cores 852A-852B and associated logic units (e.g., L1 cache 851, sampler 854, texture cache 858, etc.) interconnect via a data port 856 to perform memory access and communicate with render output pipeline components of the processor. In some embodiments, sampler 854, caches 851, 858 and graphics cores 852A-852B each have separate memory access paths. In one embodiment the texture cache 858 can also be configured as a sampler cache.

In some embodiments, render output pipeline 870 contains a rasterizer and depth test component 873 that converts vertex-based objects into an associated pixel-based representation. In some embodiments, the rasterizer logic includes a windower/masker unit to perform fixed function triangle and line rasterization. An associated render cache 878 and depth cache 879 are also available in some embodiments. A pixel operations component 877 performs pixel-based operations on the data, though in some instances, pixel operations associated with 2D operations (e.g., bit block image transfers with blending) are performed by the 2D engine 841, or substituted at display time by the display controller 843 using overlay display planes. In some embodiments, a shared L3 cache 875 is available to all graphics components, allowing the sharing of data without the use of main system memory.

In some embodiments, media pipeline 830 includes a media engine 837 and a video front-end 834. In some embodiments, video front-end 834 receives pipeline commands from the command streamer 803. In some embodiments, media pipeline 830 includes a separate command streamer. In some embodiments, video front-end 834 processes media commands before sending the command to the media engine 837. In some embodiments, media engine 837 includes thread spawning functionality to spawn threads for dispatch to thread execution logic 850 via thread dispatcher 831.

In some embodiments, graphics processor 800 includes a display engine 840. In some embodiments, display engine 840 is external to processor 800 and couples with the graphics processor via the ring interconnect 802, or some other interconnect bus or fabric. In some embodiments, display engine 840 includes a 2D engine 841 and a display controller 843. In some embodiments, display engine 840 contains special purpose logic capable of operating independently of the 3D pipeline. In some embodiments, display controller 843 couples with a display device (not shown), which may be a system integrated display device, as in a laptop computer, or an external display device attached via a display device connector.

In some embodiments, the geometry pipeline 820 and media pipeline 830 are configurable to perform operations based on multiple graphics and media programming interfaces and are not specific to any one application programming interface (API). In some embodiments, driver software for the graphics processor translates API calls that are specific to a particular graphics or media library into commands that can be processed by the graphics processor. In some embodiments, support is provided for the Open Graphics Library (OpenGL), Open Computing Language (OpenCL), and/or Vulkan graphics and compute API, all from the Khronos Group. In some embodiments, support may also be provided for the Direct3D library from the Microsoft Corporation. In some embodiments, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

**Graphics Pipeline Programming**

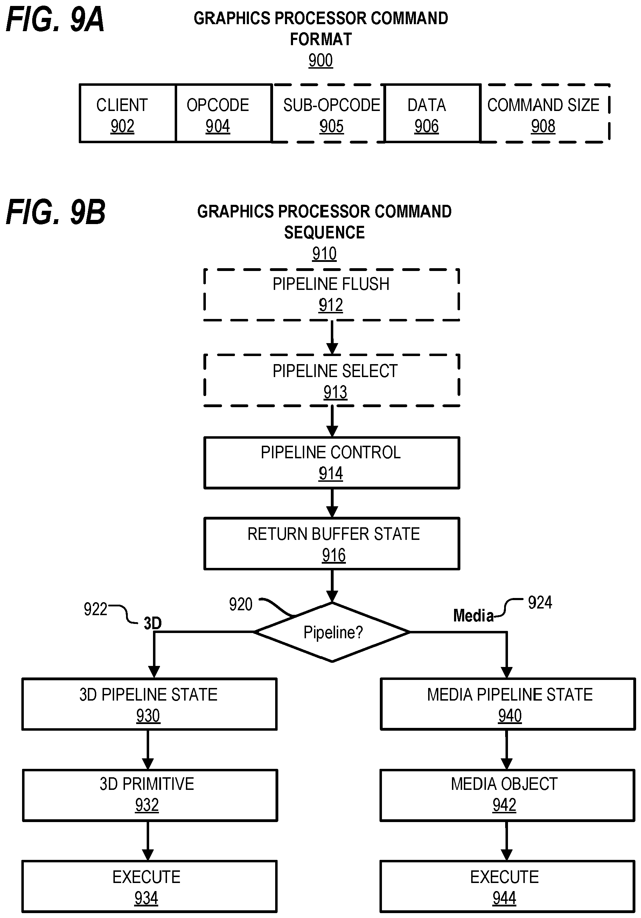

**Fig. 9A** is a block diagram illustrating a graphics processor command format 900 that may be used to program graphics processing pipelines according to some embodiments. **Fig. 9B** is a block diagram illustrating a graphics processor command sequence 910 according to an embodiment. The solid lined boxes in **Fig. 9A** illustrate the components that are generally included in a graphics command while the dashed lines include components that are optional or that are only included in a sub-set of the graphics commands. The exemplary graphics processor command format 900 of **Fig. 9A** includes data fields to identify a client 902, a command operation code (opcode) 904, and a data field 906 for the command. A sub-opcode 905 and a command size 908 are also included in some commands.

In some embodiments, client 902 specifies the client unit of the graphics device that processes the command data. In some embodiments, a graphics processor command parser examines the client field of each command to condition the further processing of the command and route the command data to the appropriate client unit. In some embodiments, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 904 and, if present, sub-opcode 905 to determine the operation to perform. The client unit performs the command using information in data field 906. For some commands an explicit command size 908 is expected to specify the size of the command. In some embodiments, the command parser automatically determines the size of at least some of the commands based on the command opcode. In some embodiments commands are aligned via multiples of a double word. Other command formats can be used.

The flow diagram in **Fig. 9B** illustrates an exemplary graphics processor command sequence 910. In some embodiments, software or firmware of a data processing system that features an embodiment of a graphics processor uses a version of the command sequence shown to set up, execute, and terminate a set of graphics operations. A sample command sequence is shown and described for purposes of example only as embodiments are not limited to these specific commands or to this command sequence. Moreover, the commands may be issued as batch of commands in a command sequence, such that the graphics processor will process the sequence of commands in at least partially concurrence.

In some embodiments, the graphics processor command sequence 910 may begin with a pipeline flush command 912 to cause any active graphics pipeline to complete the currently pending commands for the pipeline. In some embodiments, the 3D pipeline 922 and the media pipeline 924 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some embodiments, pipeline flush command 912 can be used for pipeline synchronization or before placing the graphics processor into a low power state.

In some embodiments, a pipeline select command 913 is used when a command sequence requires the graphics processor to explicitly switch between pipelines. In some embodiments, a pipeline select command 913 is required only once within an execution context before issuing pipeline commands unless the context is to issue commands for both pipelines. In some embodiments, a pipeline flush command 912 is required immediately before a pipeline switch via the pipeline select command 913.

In some embodiments, a pipeline control command 914 configures a graphics pipeline for operation and is used to program the 3D pipeline 922 and the media pipeline 924. In some embodiments, pipeline control command 914 configures the pipeline state for the active pipeline. In one embodiment, the pipeline control command 914 is used for pipeline synchronization and to clear data from one or more cache memories within the active pipeline before processing a batch of commands.

In some embodiments, commands related to the return buffer state 916 are used to configure a set of return buffers for the respective pipelines to write data. Some pipeline operations require the allocation, selection, or configuration of one or more return buffers into which the operations write intermediate data during processing. In some embodiments, the graphics processor also uses one or more return buffers to store output data and to perform cross thread communication. In some embodiments, the return buffer state 916 includes selecting the size and number of return buffers to use for a set of pipeline operations.

The remaining commands in the command sequence differ based on the active pipeline for operations. Based on a pipeline determination 920, the command sequence is tailored to the 3D pipeline 922 beginning with the 3D pipeline state 930 or the media pipeline 924 beginning at the media pipeline state 940.

The commands to configure the 3D pipeline state 930 include 3D state setting commands for vertex buffer state, vertex element state, constant color state, depth buffer state, and other state variables that are to be configured before 3D primitive commands are processed. The values of these commands are determined at least in part based on the particular 3D API in use. In some embodiments, 3D pipeline state 930 commands are also able to selectively disable or bypass certain pipeline elements if those elements will not be used.

In some embodiments, 3D primitive 932 command is used to submit 3D primitives to be processed by the 3D pipeline. Commands and associated parameters that are passed to the graphics processor via the 3D primitive 932 command are forwarded to the vertex fetch function in the graphics pipeline. The vertex fetch function uses the 3D primitive 932 command data to generate vertex data structures. The vertex data structures are stored in one or more return buffers. In some embodiments, 3D primitive 932 command is used to perform vertex operations on 3D primitives via vertex shaders. To process vertex shaders, 3D pipeline 922 dispatches shader programs to the graphics cores.

In some embodiments, 3D pipeline 922 is triggered via an execute 934 command or event. In some embodiments, a register write triggers command execution. In some embodiments execution is triggered via a 'go' or 'kick' command in the command sequence. In one embodiment, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back-end operations may also be included for those operations.

In some embodiments, the graphics processor command sequence 910 follows the media pipeline 924 path when performing media operations. In general, the specific use and manner of programming for the media pipeline 924 depends on the media or compute operations to be performed. Specific media decode operations may be offloaded to the media pipeline during media decode. In some embodiments, the media pipeline can also be bypassed and media decode can be performed in whole or in part using resources provided by one or more general-purpose processing cores. In one embodiment, the media pipeline also includes elements for general-purpose graphics processor unit (GPGPU) operations, where the graphics processor is used to perform SIMD vector operations using computational shader programs that are not explicitly related to the rendering of graphics primitives.

In some embodiments, media pipeline 924 is configured in a similar manner as the 3D pipeline 922. A set of commands to configure the media pipeline state 940 are dispatched or placed into a command queue before the media object commands 942. In some embodiments, commands for the media pipeline state 940 include data to configure the media pipeline elements that will be used to process the media objects. This includes data to configure the video decode and video encode logic within the media pipeline, such as encode or decode format. In some embodiments, commands for the media pipeline state 940 also support the use of one or more pointers to "indirect" state elements that contain a batch of state settings.

In some embodiments, media object commands 942 supply pointers to media objects for processing by the media pipeline. The media objects include memory buffers containing video data to be processed. In some embodiments, all media pipeline states must be valid before issuing a media object command 942. Once the pipeline state is configured and media object commands 942 are queued, the media pipeline 924 is triggered via an execute command 944 or an equivalent execute event (e.g., register write). Output from media pipeline 924 may then be post processed by operations provided by the 3D pipeline 922 or the media pipeline 924. In some embodiments, GPGPU operations are configured and executed in a similar manner as media operations.

## Graphics Software Architecture

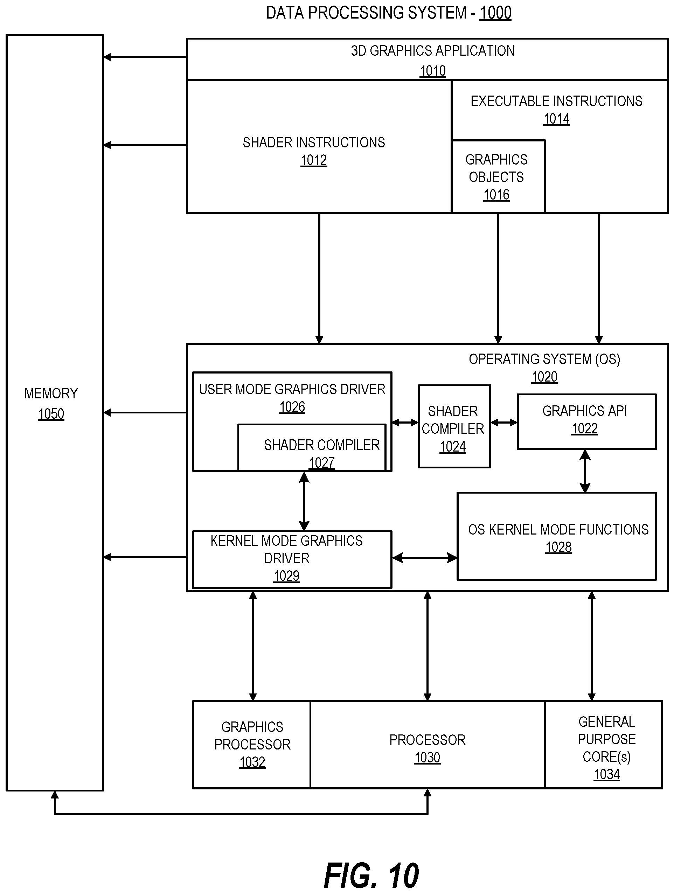

**Fig. 10** illustrates an exemplary graphics software architecture for a data processing system 1000 according to some embodiments. In some embodiments, software architecture includes a 3D graphics application 1010, an operating system 1020, and at least one processor 1030. In some embodiments, processor 1030 includes a graphics processor 1032 and one or more general-purpose processor core(s) 1034. The graphics application 1010 and operating system 1020 each execute in the system memory 1050 of the data processing system.

In some embodiments, 3D graphics application 1010 contains one or more shader programs including shader instructions 1012. The shader language instructions may be in a high-level shader language, such as the High-Level Shader Language (HLSL) of Direct3D, the OpenGL Shader Language (GLSL), and so forth. The application also includes executable instructions 1014 in a machine language suitable for execution by the general-purpose processor core 1034. The application also includes graphics objects 1016 defined by vertex data.

In some embodiments, operating system 1020 is a Microsoft® Windows® operating system from the Microsoft Corporation, a proprietary UNIX-like operating system, or an open source UNIX-like operating system using a variant of the Linux kernel. The operating system 1020 can support a graphics API 1022 such as the Direct3D API, the OpenGL API, or the Vulkan API. When the Direct3D API is in use, the operating system 1020 uses a front-end shader compiler 1024 to compile any shader instructions 1012 in HLSL into a lower-level shader language. The compilation may be a just-in-time (JIT) compilation or the application can perform shader precompilation. In some embodiments, high-level shaders are compiled into low-level shaders during the compilation of the 3D graphics application 1010. In some embodiments, the shader instructions 1012 are provided in an intermediate form, such as a version of the Standard Portable Intermediate Representation (SPIR) used by the Vulkan API.

In some embodiments, user mode graphics driver 1026 contains a back-end shader compiler 1027 to convert the shader instructions 1012 into a hardware specific representation. When the OpenGL API is in use, shader instructions 1012 in the GLSL high-level language are passed to a user mode graphics driver 1026 for compilation. In some embodiments, user mode graphics driver 1026 uses operating system kernel mode functions 1028 to communicate with a kernel mode graphics driver 1029. In some embodiments, kernel mode graphics driver 1029 communicates with graphics processor 1032 to dispatch commands and instructions.

## IP Core Implementations

One or more aspects of at least one embodiment may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the embodiments described herein.

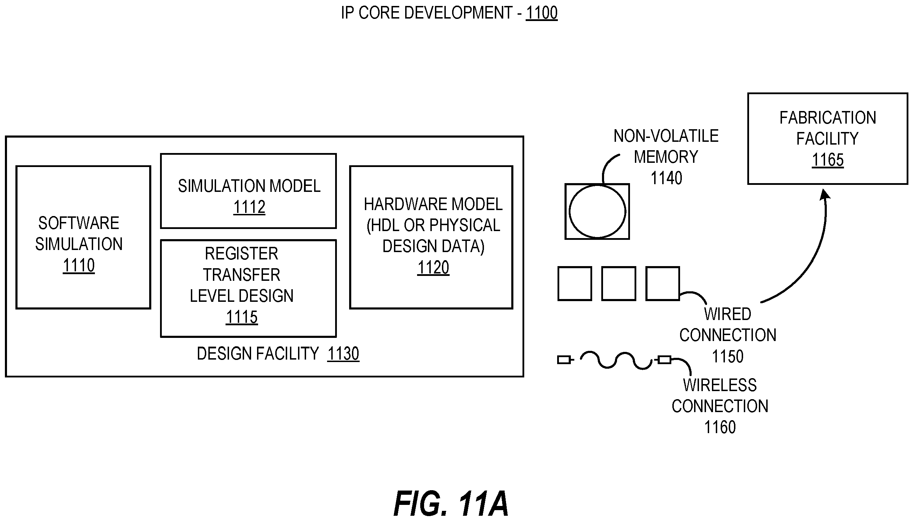

**Fig. 11A** is a block diagram illustrating an IP core development system 1100 that may be used to manufacture an integrated circuit to perform operations according to an embodiment. The IP core development system 1100 may be used to generate modular, re-usable designs that can be incorporated into a larger design or used to construct an entire integrated circuit (e.g., an SOC integrated circuit). A design facility 1130 can generate a software simulation 1110 of an IP core design in a high-level programming language (e.g., C/C++). The software simulation 1110 can be used to design, test, and verify the behavior of the IP core using a simulation model 1112. The simulation model 1112 may include functional, behavioral, and/or timing simulations. A register transfer level (RTL) design 1115 can then be created or synthesized from the simulation model 1112. The RTL design 1115 is an abstraction of the behavior of the integrated circuit that models the flow of digital signals between hardware registers, including the associated logic performed using the modeled digital signals. In addition to an RTL design 1115, lower-level designs at the logic level or transistor level may also be created, designed, or synthesized. Thus, the particular details of the initial design and simulation may vary.

The RTL design 1115 or equivalent may be further synthesized by the design facility into a hardware model 1120, which may be in a hardware description language (HDL), or some other representation of physical design data. The HDL may be further simulated or tested to verify the IP core design. The IP core design can be stored for delivery to a 3rd party fabrication facility 1165 using non-volatile memory 1140 (e.g., hard disk, flash memory, or any non-volatile storage medium). Alternatively, the IP core design may be transmitted (e.g., via the Internet) over a wired connection 1150 or wireless connection 1160. The fabrication facility 1165 may then fabricate an integrated circuit that is based at least in part on the IP core design. The fabricated integrated circuit can be configured to perform operations in accordance with at least one embodiment described herein.

**Fig. 11B** illustrates a cross-section side view of an integrated circuit package assembly 1170, according to some embodiments described herein. The integrated circuit package assembly 1170 illustrates an implementation of one or more processor or accelerator devices as described herein. The package assembly 1170 includes multiple units of hardware logic 1172, 1174 connected to a substrate 1180. The logic 1172, 1174 may be implemented at least partly in configurable logic or fixed-functionality logic hardware, and can include one or more portions of any of the processor core(s), graphics processor(s), or other accelerator devices described herein. Each unit of logic 1172, 1174 can be implemented within a semiconductor die and coupled with the substrate 1180 via an interconnect structure 1173. The interconnect structure 1173 may be configured to route electrical signals between the logic 1172, 1174 and the substrate 1180, and can include interconnects such as, but not limited to bumps or pillars. In some embodiments, the interconnect structure 1173 may be configured to route electrical signals such as, for example, input/output (I/O) signals and/or power or ground signals associated with the operation of the logic 1172, 1174. In some embodiments, the substrate 1180 is an epoxy-based laminate substrate. The substrate 1180 may include other suitable types of substrates in other embodiments. The package assembly 1170 can be connected to other electrical devices via a package interconnect 1183. The package interconnect 1183 may be coupled to a surface of the substrate 1180 to route electrical signals to other electrical devices, such as a motherboard, other chipset, or multi-chip module.

In some embodiments, the units of logic 1172, 1174 are electrically coupled with a bridge 1182 that is configured to route electrical signals between the logic 1172, 1174. The bridge 1182 may be a dense interconnect structure that provides a route for electrical signals. The bridge 1182 may include a bridge substrate composed of glass or a suitable semiconductor material. Electrical routing features can be formed on the bridge substrate to provide a chip-to-chip connection between the logic 1172, 1174.

Although two units of logic 1172, 1174 and a bridge 1182 are illustrated, embodiments described herein may include more or fewer logic units on one or more dies. The one or more dies may be connected by zero or more bridges, as the bridge 1182 may be excluded when the logic is included on a single die. Alternatively, multiple dies or units of logic can be connected by one or more bridges. Additionally, multiple logic units, dies, and bridges can be connected together in other possible configurations, including three-dimensional configurations.

**Fig. 11C** illustrates a package assembly 1190 that includes multiple units of hardware logic chiplets connected to a substrate 1180. A graphics processing unit, parallel processor, and/or compute accelerator as described herein can be composed from diverse silicon chiplets that are separately manufactured. A diverse set of chiplets with different IP core logic can be assembled into a single device. Additionally, the chiplets can be integrated into a base die or base chiplet using active interposer technology. The concepts described herein enable the interconnection and communication between the different forms of IP within the GPU. IP cores can be manufactured using different process technologies and composed during manufacturing, which avoids the complexity of converging multiple IPs, especially on a large SoC with several flavors IPs, to the same manufacturing process. Enabling the use of multiple process technologies improves the time to market and provides a cost-effective way to create multiple product SKUs. Additionally, the disaggregated IPs are more amenable to being power gated independently, components that are not in use on a given workload can be powered off, reducing overall power consumption.

In various embodiments a package assembly 1190 can include components and chiplets that are interconnected by a fabric 1185 and/or one or more bridges 1187. The chiplets within the package assembly 1190 may have a 2.5D arrangement using Chip-on-Wafer-on-Substrate stacking in which multiple dies are stacked side-by-side on a silicon interposer 1189 that couples the chiplets with the substrate 1180. The substrate 1180 includes electrical connections to the package interconnect 1183. In one embodiment the silicon interposer 1189 is a passive interposer that includes through-silicon vias (TSVs) to electrically couple chiplets within the package assembly 1190 to the substrate 1180. In one embodiment, silicon interposer 1189 is an active interposer that includes embedded logic in addition to TSVs. In such embodiment, the chiplets within the package assembly 1190 are arranged using 3D face to face die stacking on top of the active interposer 1189. The active interposer 1189 can include hardware logic for I/O 1191, cache memory 1192, and other hardware logic 1193, in addition to interconnect fabric 1185 and a silicon bridge 1187. The fabric 1185 enables communication between the various logic chiplets 1172, 1174 and the logic 1191, 1193 within the active interposer 1189. The fabric 1185 may be an NoC interconnect or another form of packet switched fabric that switches data packets between components of the package assembly. For complex assemblies, the fabric 1185 may be a dedicated chiplet enables communication between the various hardware logic of the package assembly 1190.

Bridge structures 1187 within the active interposer 1189 may be used to facilitate a point-to-point interconnect between, for example, logic or I/O chiplets 1174 and memory chiplets 1175. In some implementations, bridge structures 1187 may also be embedded within the substrate 1180. The hardware logic chiplets can include special purpose hardware logic chiplets 1172, logic or I/O chiplets 1174, and/or memory chiplets 1175. The hardware logic chiplets 1172 and logic or I/O chiplets 1174 may be implemented at least partly in configurable logic or fixed-functionality logic hardware and can include one or more portions of any of the processor core(s), graphics processor(s), parallel processors, or other accelerator devices described herein. The memory chiplets 1175 can be DRAM (e.g., GDDR, HBM) memory or cache (SRAM) memory. Cache memory 1192 within the active interposer 1189 (or substrate 1180) can act as a global cache for the package assembly 1190, part of a distributed global cache, or as a dedicated cache for the fabric 1185.

Each chiplet can be fabricated as separate semiconductor die and coupled with a base die that is embedded within or coupled with the substrate 1180. The coupling with the substrate 1180 can be performed via an interconnect structure 1173. The interconnect structure 1173 may be configured to route electrical signals between the various chiplets and logic within the substrate 1180. The interconnect structure 1173 can include interconnects such as, but not limited to bumps or pillars. In some embodiments, the interconnect structure 1173 may be configured to route electrical signals such as, for example, input/output (I/O) signals and/or power or ground signals associated with the operation of the logic, I/O, and memory chiplets. In one embodiment, an additional interconnect structure couples the active interposer 1189 with the substrate 1180.

In some embodiments, the substrate 1180 is an epoxy-based laminate substrate. The substrate 1180 may include other suitable types of substrates in other embodiments. The package assembly 1190 can be connected to other electrical devices via a package interconnect 1183. The package interconnect 1183 may be coupled to a surface of the substrate 1180 to route electrical signals to other electrical devices, such as a motherboard, other chipset, or multi-chip module.

In some embodiments, a logic or I/O chiplet 1174 and a memory chiplet 1175 can be electrically coupled via a bridge 1187 that is configured to route electrical signals between the logic or I/O chiplet 1174 and a memory chiplet 1175. The bridge 1187 may be a dense interconnect structure that provides a route for electrical signals. The bridge 1187 may include a bridge substrate composed of glass or a suitable semiconductor material. Electrical routing features can be formed on the bridge substrate to provide a chip-to-chip connection between the logic or I/O chiplet 1174 and a memory chiplet 1175. The bridge 1187 may also be referred to as a silicon bridge or an interconnect bridge. For example, the bridge 1187, in some embodiments, is an Embedded Multi-die Interconnect Bridge (EMIB). In some embodiments, the bridge 1187 may simply be a direct connection from one chiplet to another chiplet.

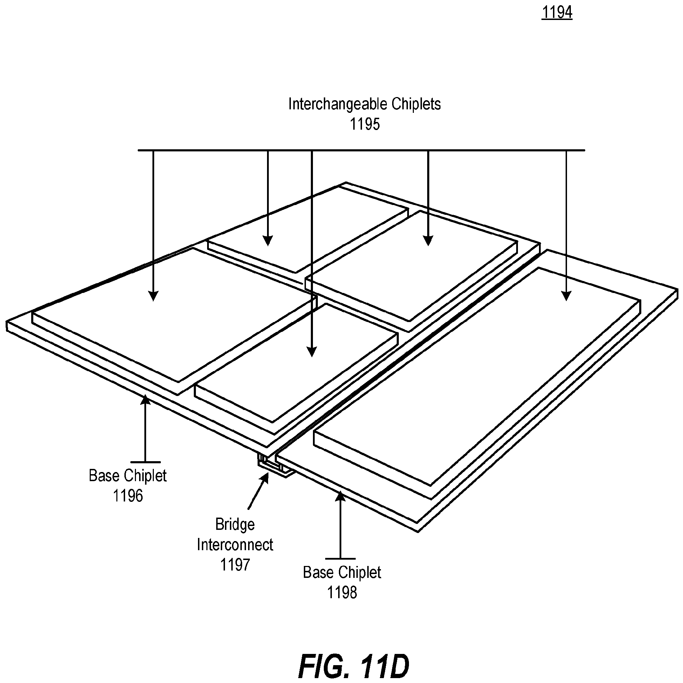

**Fig. 11D** illustrates a package assembly 1194 including interchangeable chiplets 1195, according to an embodiment. The interchangeable chiplets 1195 can be assembled into standardized slots on one or more base chiplets 1196, 1198. The base chiplets 1196, 1198 can be coupled via a bridge interconnect 1197, which can be similar to the other bridge interconnects described herein and may be, for example, an EMIB. Memory chiplets can also be connected to logic or I/O chiplets via a bridge interconnect. I/O and logic chiplets can communicate via an interconnect fabric. The base chiplets can each support one or more slots in a standardized format for one of logic or I/O or memory/cache.

In one embodiment, SRAM and power delivery circuits can be fabricated into one or more of the base chiplets 1196, 1198, which can be fabricated using a different process technology relative to the interchangeable chiplets 1195 that are stacked on top of the base chiplets. For example, the base chiplets 1196, 1198 can be fabricated using a larger process technology, while the interchangeable chiplets can be manufactured using a smaller process technology. One or more of the interchangeable chiplets 1195 may be memory (e.g., DRAM) chiplets. Different memory densities can be selected for the package assembly 1194 based on the power, and/or performance targeted for the product that uses the package assembly 1194. Additionally, logic chiplets with a different number of type of functional units can be selected at time of assembly based on the power, and/or performance targeted for the product. Additionally, chiplets containing IP logic cores of differing types can be inserted into the interchangeable chiplet slots, enabling hybrid processor designs that can mix and match different technology IP blocks.

## Exemplary System on a Chip Integrated Circuit

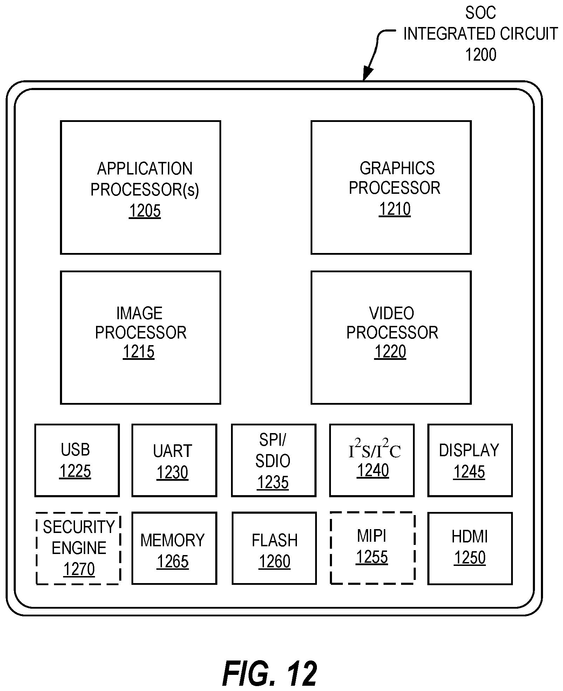

**Figs. 12-14** illustrate exemplary integrated circuits and associated graphics processors that may be fabricated using one or more IP cores, according to various embodiments described herein. In addition to what is illustrated, other logic and circuits may be included, including additional graphics processors/cores, peripheral interface controllers, or general-purpose processor cores.

**Fig. 12** is a block diagram illustrating an exemplary system on a chip integrated circuit 1200 that may be fabricated using one or more IP cores, according to an embodiment. Exemplary integrated circuit 1200 includes one or more application processor(s) 1205 (e.g., CPUs), at least one graphics processor 1210, and may additionally include an image processor 1215 and/or a video processor 1220, any of which may be a modular IP core from the same or multiple different design facilities. Integrated circuit 1200 includes peripheral or bus logic including a USB controller 1225, UART controller 1230, an SPI/SDIO controller 1235, and an I2S/I2C controller 1240. Additionally, the integrated circuit can include a display device 1245 coupled to one or more of a high-definition multimedia interface (HDMI) controller 1250 and a mobile industry processor interface (MIPI) display interface 1255. Storage may be provided by a flash memory subsystem 1260 including flash memory and a flash memory controller. Memory interface may be provided via a memory controller 1265 for access to SDRAM or SRAM memory devices. Some integrated circuits additionally include an embedded security engine 1270.

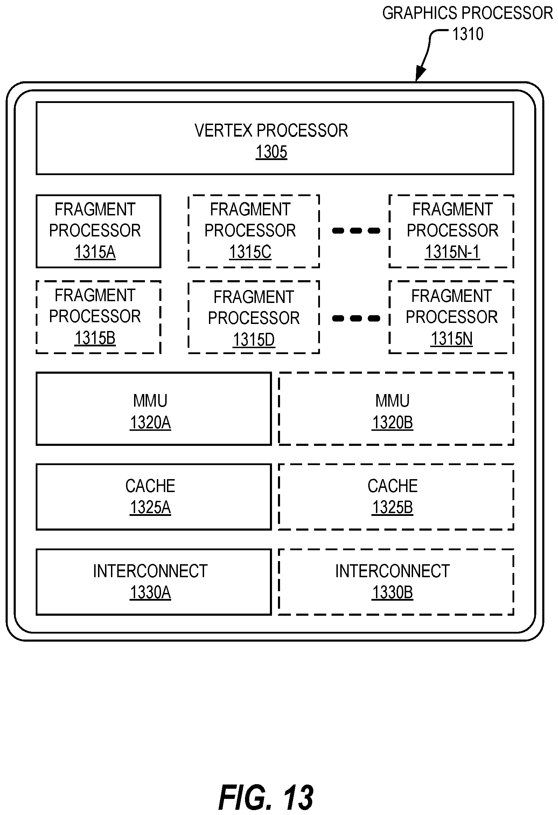

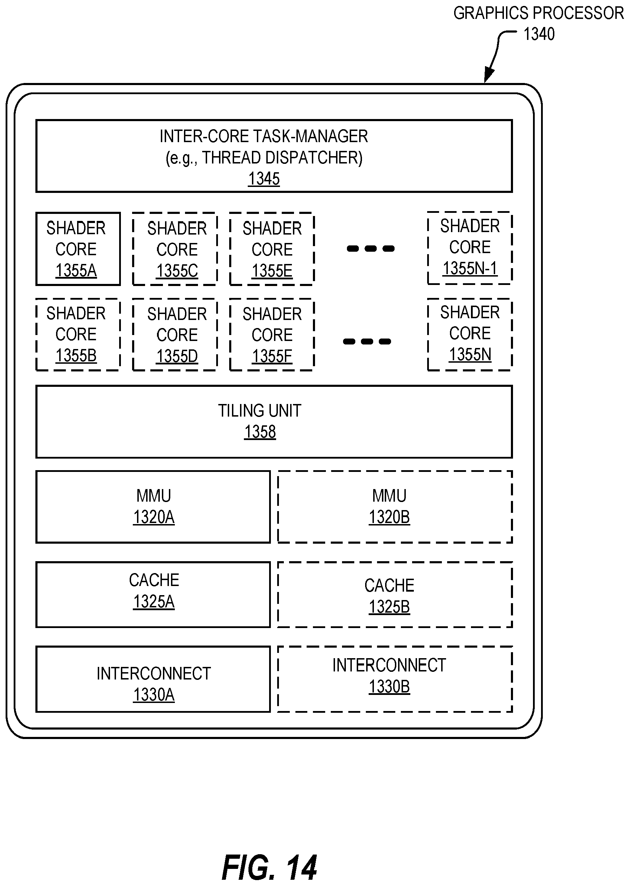

**Figs. 13-14** are block diagrams illustrating exemplary graphics processors for use within an SoC, according to embodiments described herein. **Fig. 13** illustrates an exemplary graphics processor 1310 of a system on a chip integrated circuit that may be fabricated using one or more IP cores, according to an embodiment. **Fig. 14** illustrates an additional exemplary graphics processor 1340 of a system on a chip integrated circuit that may be fabricated using one or more IP cores, according to an embodiment. Graphics processor 1310 of Fig. 13A is an example of a low power graphics processor core. Graphics processor 1340 of Fig. 13B is an example of a higher performance graphics processor core. Each of graphics processor 1310 and graphics processor 1340 can be variants of the graphics processor 1210 of **Fig. 12.**

As shown in **Fig. 13,** graphics processor 1310 includes a vertex processor 1305 and one or more fragment processor(s) 1315A-1315N (e.g., 1315A, 1315B, 1315C, 1315D, through 1315N-1, and 1315N). Graphics processor 1310 can execute different shader programs via separate logic, such that the vertex processor 1305 is optimized to execute operations for vertex shader programs, while the one or more fragment processor(s) 1315A-1315N execute fragment (e.g., pixel) shading operations for fragment or pixel shader programs. The vertex processor 1305 performs the vertex processing stage of the 3D graphics pipeline and generates primitives and vertex data. The fragment processor(s) 1315A-1315N use the primitive and vertex data generated by the vertex processor 1305 to produce a framebuffer that is displayed on a display device. In one embodiment, the fragment processor(s) 1315A-1315N are optimized to execute fragment shader programs as provided for in the OpenGL API, which may be used to perform similar operations as a pixel shader program as provided for in the Direct 3D API.

Graphics processor 1310 additionally includes one or more memory management units (MMUs) 1320A-1320B, cache(s) 1325A-1325B, and circuit interconnect(s) 1330A-1330B. The one or more MMU(s) 1320A-1320B provide for virtual to physical address mapping for the graphics processor 1310, including for the vertex processor 1305 and/or fragment processor(s) 1315A-1315N, which may reference vertex or image/texture data stored in memory, in addition to vertex or image/texture data stored in the one or more cache(s) 1325A-1325B. In one embodiment the one or more MMU(s) 1320A-1320B may be synchronized with other MMUs within the system, including one or more MMUs associated with the one or more application processor(s) 1205, image processor 1215, and/or video processor 1220 of **Fig. 12,** such that each processor 1205-1220 can participate in a shared or unified virtual memory system. The one or more circuit interconnect(s) 1330A-1330B enable graphics processor 1310 to interface with other IP cores within the SoC, either via an internal bus of the SoC or via a direct connection, according to embodiments.

As shown **Fig. 14,** graphics processor 1340 includes the one or more MMU(s) 1320A-1320B, cache(s) 1325A-1325B, and circuit interconnect(s) 1330A-1330B of the graphics processor 1310 of **Fig. 13.** Graphics processor 1340 includes one or more shader core(s) 1355A-1355N (e.g., 1355A, 1355B, 1355C, 1355D, 1355E, 1355F, through 1355N-1, and 1355N), which provides for a unified shader core architecture in which a single core or type or core can execute all types of programmable shader code, including shader program code to implement vertex shaders, fragment shaders, and/or compute shaders. The unified shader core architecture is also configurable to execute direct compiled high-level GPGPU programs (e.g., CUDA). The exact number of shader cores present can vary among embodiments and implementations. Additionally, graphics processor 1340 includes an inter-core task manager 1345, which acts as a thread dispatcher to dispatch execution threads to one or more shader cores 1355A-1355N and a tiling unit 1358 to accelerate tiling operations for tile-based rendering, in which rendering operations for a scene are subdivided in image space, for example to exploit local spatial coherence within a scene or to optimize use of internal caches.

RAY TRACING WITH MACHINE LEARNING

As mentioned above, ray tracing is a graphics processing technique in which a light transport is simulated through physically-based rendering. One of the key operations in ray tracing is processing a visibility query which requires traversal and intersection testing of nodes in a bounding volume hierarchy (BVH).

Ray- and path-tracing based techniques compute images by tracing rays and paths through each pixel, and using random sampling to compute advanced effects such as shadows, glossiness, indirect illumination, etc. Using only a few samples is fast but produces noisy images while using many samples produces high quality images, but is cost prohibitive.

Machine learning includes any circuitry, program code, or combination thereof capable of progressively improving performance of a specified task or rendering progressively more accurate predictions or decisions. Some machine learning engines can perform these tasks or render these predictions/decisions without being explicitly programmed to perform the tasks or render the predictions/decisions. A variety of machine learning techniques exist including (but not limited to) supervised and semisupervised learning, unsupervised learning, and reinforcement learning.

In the last several years, a breakthrough solution to ray-/path-tracing for real-time use has come in the form of "denoising" - the process of using image processing techniques to produce high quality, filtered/denoised images from noisy, low-sample count inputs. The most effective denoising techniques rely on machine learning techniques where a machine-learning engine learns what a noisy image would likely look like if it had been computed with more samples. In one particular implementation, the machine learning is performed by a convolutional neural network (CNN); however, the underlying principles of the invention are not limited to a CNN implementation. In such an implementation, training data is produced with low-sample count inputs and ground-truth. The CNN is trained to predict the converged pixel from a neighborhood of noisy pixel inputs around the pixel in question.

Though not perfect, this AI-based denoising technique has proven surprisingly effective. The caveat, however, is that good training data is required, since the network may otherwise predict the wrong results. For example, if an animated movie studio trained a denoising CNN on past movies with scenes on land and then attempted to use the trained CNN to denoise frames from a new movie set on water, the denoising operation will perform sub-optimally.

To address this problem, learning data can be dynamically gathered, while rendering, and a machine learning engine, such as a CNN, may be continuously trained based on the data on which it is currently being run, thus continuously improving the machine learning engine for the task at hand. Therefore, a training phase may still performed prior to runtime, but continued to adjust the machine learning weights as needed during runtime. Therby, the high cost of computing the reference data required for the training is avoided by restricting the generation of learning data to a subregion of the image every frame or every N frames. In particular, the noisy inputs of a frame are generated for denoising the full frame with the current network. In addition, a small region of reference pixels are generated and used for continuous training, as described below.

While a CNN implementation is described herein, any form of machine learning engine may be used including, but not limited to systems which perform supervised learning (e.g., building a mathematical model of a set of data that contains both the inputs and the desired outputs), unsupervised learning (e.g., which evaluate the input data for certain types of structure), and/or a combination of supervised and unsupervised learning.

Existing de-noising implementations operate in a training phase and a runtime phase. During the training phase, a network topology is defined which receives a region of NxN pixels with various per-pixel data channels such as pixel color, depth, normal, normal deviation, primitive IDs, and albedo and generates a final pixel color. A set of "representative" training data is generated using one frame's worth of low-sample count inputs, and referencing the "desired" pixel colors computed with a very high sample count. The network is trained towards these inputs, generating a set of "ideal" weights for the network. In these implementations, the reference data is used to train the network's weights to most closely match the network's output to the desired result.

At runtime, the given, pre-computed ideal network weights are loaded and the network is initialized. For each frame, a low-sample count image of denoising inputs (i.e., the same as used for training) is generated. For each pixel, the given neighborhood of pixels' inputs is run through the network to predict the "denoised" pixel color, generating a denoised frame.

RAY TRACING ARCHITECTURE

In one implementation, the graphics processor includes circuitry and/or program code for performing real-time ray tracing. A dedicated set of ray tracing cores may be included in the graphics processor to perform the various ray tracing operations described herein, including ray traversal and/or ray intersection operations. In addition to the ray tracing cores, multiple sets of graphics processing cores for performing programmable shading operations and multiple sets of tensor cores for performing matrix operations on tensor data may also be included.

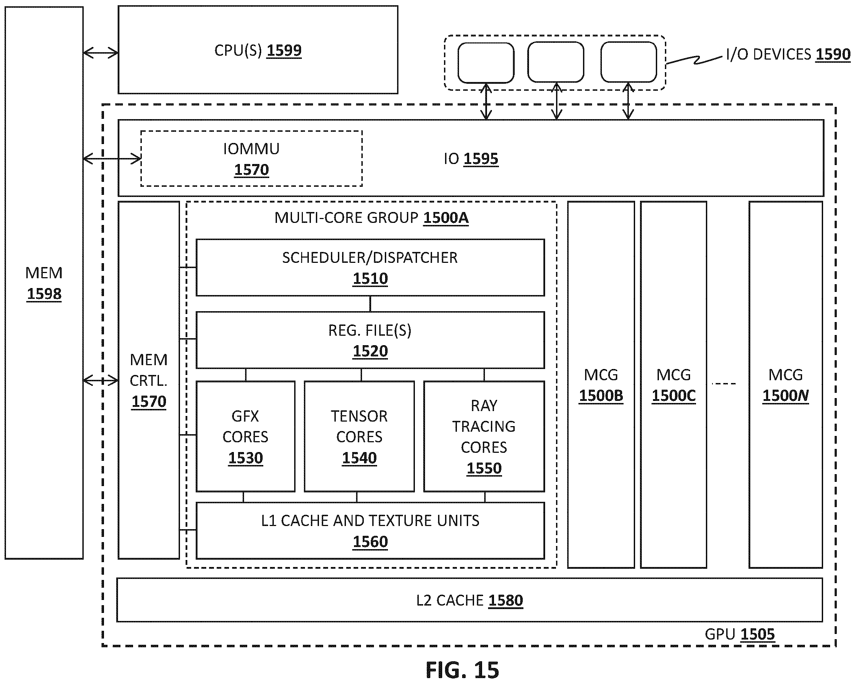

**Figure 15** illustrates an exemplary portion of one such graphics processing unit (GPU) 1505 which includes dedicated sets of graphics processing resources arranged into multi-core groups 1500A-N. The graphics processing unit (GPU) 1505 may be a variant of the graphics processor 300, the GPGPU 1340 and/or any other graphics processor described herein. Therefore, the disclosure of any features for graphics processors also discloses a corresponding combination with the GPU 1505, but is not limited to such. Moreover, the elements of Figure 15 having the same or similar names as the elements of any other figure herein describe the same elements as in the other figures, can operate or function in a manner similar to that, can comprise the same components, and can be linked to other entities, as those described elsewhere herein, but are not limited to such. While the details of only a single multi-core group 1500A are provided, it will be appreciated that the other multi-core groups 1500B-N may be equipped with the same or similar sets of graphics processing resources.

As illustrated, a multi-core group 1500A may include a set of graphics cores 1530, a set of tensor cores 1540, and a set of ray tracing cores 1550. A scheduler/dispatcher 1510 schedules and dispatches the graphics threads for execution on the various cores 1530, 1540, 1550. A set of register files 1520 store operand values used by the cores 1530, 1540, 1550 when executing the graphics threads. These may include, for example, integer registers for storing integer values, floating point registers for storing floating point values, vector registers for storing packed data elements (integer and/or floating point data elements) and tile registers for storing tensor/matrix values. The tile registers may be implemented as combined sets of vector registers.

One or more Level 1 (L1) caches and texture units 1560 store graphics data such as texture data, vertex data, pixel data, ray data, bounding volume data, etc, locally within each multi-core group 1500A. A Level 2 (L2) cache 1580 shared by all or a subset of the multi-core groups 1500A-N stores graphics data and/or instructions for multiple concurrent graphics threads. As illustrated, the L2 cache 1580 may be shared across a plurality of multi-core groups 1500A-N. One or more memory controllers 1570 couple the GPU 1505 to a memory 1598 which may be a system memory (e.g., DRAM) and/or a local graphics memory (e.g., GDDR6 memory).

Input/output (IO) circuitry 1595 couples the GPU 1505 to one or more IO devices 1595 such as digital signal processors (DSPs), network controllers, or user input devices. An on-chip interconnect may be used to couple the I/O devices 1590 to the GPU 1505 and memory 1598. One or more IO memory management units (IOMMUs) 1570 of the IO circuitry 1595 couple the IO devices 1590 directly to the system memory 1598. The IOMMU 1570 may manage multiple sets of page tables to map virtual addresses to physical addresses in system memory 1598. Additionally, the IO devices 1590, CPU(s) 1599, and GPU(s) 1505 may share the same virtual address space.

The IOMMU 1570 may also support virtualization. In this case, it may manage a first set of page tables to map guest/graphics virtual addresses to guest/graphics physical addresses and a second set of page tables to map the guest/graphics physical addresses to system/host physical addresses (e.g., within system memory 1598). The base addresses of each of the first and second sets of page tables may be stored in control registers and swapped out on a context switch (e.g., so that the new context is provided with access to the relevant set of page tables). While not illustrated in Figure 15, each of the cores 1530, 1540, 1550 and/or multi-core groups 1500A-N may include translation lookaside buffers (TLBs) to cache guest virtual to guest physical translations, guest physical to host physical translations, and guest virtual to host physical translations.

The CPUs 1599, GPUs 1505, and IO devices 1590 can be integrated on a single semiconductor chip and/or chip package. The illustrated memory 1598 may be integrated on the same chip or may be coupled to the memory controllers 1570 via an off-chip interface. In one implementation, the memory 1598 comprises GDDR6 memory which shares the same virtual address space as other physical system-level memories, although the underlying principles of the invention are not limited to this specific implementation.

The tensor cores 1540 may include a plurality of execution units specifically designed to perform matrix operations, which are the fundamental compute operation used to perform deep learning operations. For example, simultaneous matrix multiplication operations may be used for neural network training and inferencing. The tensor cores 1540 may perform matrix processing using a variety of operand precisions including single precision floating-point (e.g., 32 bits), half-precision floating point (e.g., 16 bits), integer words (16 bits), bytes (8 bits), and half-bytes (4 bits). A neural network implementation may also extract features of each rendered scene, potentially combining details from multiple frames, to construct a high-quality final image.

In deep learning implementations, parallel matrix multiplication work may be scheduled for execution on the tensor cores 1540. The training of neural networks, in particular, requires a significant number matrix dot product operations. In order to process an inner-product formulation of an $N \times N \times N$ matrix multiply, the tensor cores 1540 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1540 to ensure that the most efficient precision is used for different workloads (e.g., such as inferencing workloads which can tolerate quantization to bytes and half-bytes).

The ray tracing cores 1550 may be used to accelerate ray tracing operations for both real-time ray tracing and non-real-time ray tracing implementations. In particular, the ray tracing cores 1550 may include ray traversal/intersection circuitry for performing ray traversal using bounding volume hierarchies (BVHs) and identifying intersections between rays and primitives enclosed within the BVH volumes. The ray tracing cores 1550 may also include circuitry for performing depth testing and culling (e.g., using a Z buffer or similar arrangement). In one implementation, the ray tracing cores 1550 perform traversal and intersection operations in concert with the image denoising techniques described herein, at least a portion of which may be executed on the tensor cores 1540. For example, the tensor cores 1540 may implement a deep learning neural network to perform denoising of frames generated by the ray tracing cores 1550. However, the CPU(s) 1599, graphics cores 1530, and/or ray tracing cores 1550 may also implement all or a portion of the denoising and/or deep learning algorithms.

In addition, as described above, a distributed approach to denoising may be employed in which the GPU 1505 is in a computing device coupled to other computing devices over a network or high speed interconnect. The interconnected computing devices may additionally share neural network learning/training data to improve the speed with which the overall system learns to perform denoising for different types of image frames and/or different graphics applications.

The ray tracing cores 1550 may process all BVH traversal and ray-primitive intersections, saving the graphics cores 1530 from being overloaded with thousands of instructions per ray. Each ray tracing core 1550 may include a first set of specialized circuitry for performing bounding box tests (e.g., for traversal operations) and a second set of specialized circuitry for performing the ray-triangle intersection tests (e.g., intersecting rays which have been traversed). Thus, the multi-core group 1500A can simply launch a ray probe, and the ray tracing cores 1550 independently perform ray traversal and intersection and return hit data (e.g., a hit, no hit, multiple hits, etc) to the thread context. The other cores 1530, 1540 may be freed to perform other graphics or compute work while the ray tracing cores 1550 perform the traversal and intersection operations.

Each ray tracing core 1550 may include a traversal unit to perform BVH testing operations and an intersection unit which performs ray-primitive intersection tests. The intersection unit may then generate a "hit", "no hit", or "multiple hit" response, which it provides to the appropriate thread. During the traversal and intersection operations, the execution resources of the other cores (e.g., graphics cores 1530 and tensor cores 1540) may be freed to perform other forms of graphics work.

A hybrid rasterization/ray tracing approach may also be used in which work is distributed between the graphics cores 1530 and ray tracing cores 1550.

The ray tracing cores 1550 (and/or other cores 1530, 1540) may include hardware support for a ray tracing instruction set such as Microsoft's DirectX Ray Tracing (DXR) which includes a DispatchRays command, as well as raygeneration, closest-hit, any-hit, and miss shaders, which enable the assignment of unique sets of shaders and textures for each object. Another ray tracing platform which may be supported by the ray tracing cores 1550, graphics cores 1530 and tensor cores 1540 is Vulkan 1.1.85. Note, however, that the underlying principles of the invention are not limited to any particular ray tracing ISA.

In general, the various cores 1550, 1540, 1530 may support a ray tracing instruction set that includes instructions/functions for ray generation, closest hit, any hit, ray-primitive intersection, per-primitive and hierarchical bounding box construction, miss, visit, and exceptions. More specifically, ray tracing instructions can be included to perform the following functions:

Ray Generation - Ray generation instructions may be executed for each pixel, sample, or other user-defined work assignment.

Closest Hit - A closest hit instruction may be executed to locate the closest intersection point of a ray with primitives within a scene.

Any Hit - An any hit instruction identifies multiple intersections between a ray and primitives within a scene, potentially to identify a new closest intersection point.

Intersection - An intersection instruction performs a ray-primitive intersection test and outputs a result.

Per-primitive Bounding box Construction - This instruction builds a bounding box around a given primitive or group of primitives (e.g., when building a new BVH or other acceleration data structure).

Miss - Indicates that a ray misses all geometry within a scene, or specified region of a scene.

Visit - Indicates the children volumes a ray will traverse.

Exceptions - Includes various types of exception handlers (e.g., invoked for various error conditions).

LOSSY AND LOSSLESS PACKET COMPRESSION IN A DISTRIBUTED RAY TRACING SYSTEM

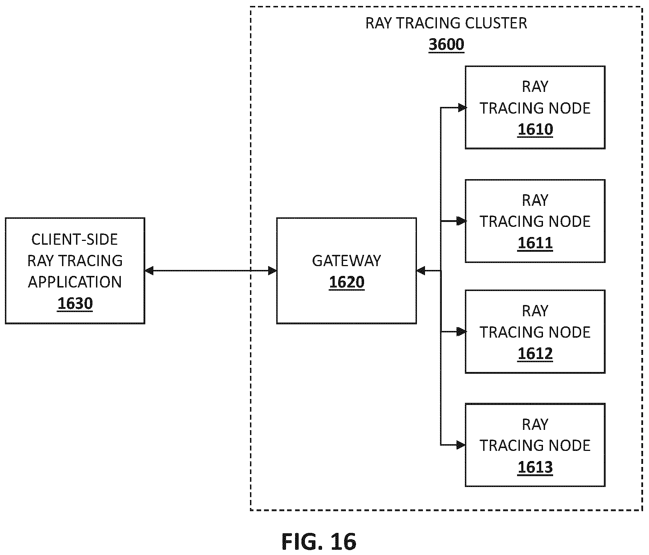

Ray tracing operations may be distributed across a plurality of compute nodes coupled together over a network. **Figure 16,** for example, illustrates a ray tracing cluster 1600 comprising a plurality of ray tracing nodes 1610-1613 perform ray tracing operations in parallel, potentially combining the results on one of the nodes. In the illustrated architecture, the ray tracing nodes 1610-1613 are communicatively coupled to a clientside ray tracing application 1630 via a gateway.

One of the difficulties with a distributed architecture is the large amount of packetized data that must be transmitted between each of the ray tracing nodes 1610-1613. Both lossless compression techniques and lossy compression techniques may be used to reduce the data transmitted between the ray tracing nodes 1610-1613.

To implement lossless compression, rather than sending packets filled with the results of certain types of operations, data or commands are sent which allow the receiving node to reconstruct the results. For example, stochastically sampled area lights and ambient occlusion (AO) operations do not necessarily need directions. Consequently, a transmitting node can simply send a random seed which is then used by the receiving node to perform random sampling. For example, if a scene is distributed across nodes 1610-1612, to sample light 1 at points p1-p3, only the light ID and origins need to be sent to nodes 1610-1612. Each of the nodes may then stochastically sample the light independently. The random seed may be generated by the receiving node. Similarly, for primary ray hit points, ambient occlusion (AO) and soft shadow sampling can be computed on nodes 1610-1612 without waiting for the original points for successive frames. Additionally, if it is known that a set of rays will go to the same point light source, instructions may be sent identifying the light source to the receiving node which will apply it to the set of rays. As another example, if there are N ambient occlusion rays transmitted a single point, a command may be sent to generate N samples from this point.

Various additional techniques may be applied for lossy compression. For example, a quantization factor may be employed to quantize all coordinate values associated with the BVH, primitives, and rays. In addition, 32-bit floating point values used for data such as BVH nodes and primitives may be converted into 8-bit integer values. In an exemplary implementation, the bounds of ray packets are stored in in full precision but individual ray points P1-P3 are transmitted as indexed offsets to the bounds. Similarly, a plurality of local coordinate systems may be generated which use 8-bit integer values as local coordinates. The location of the origin of each of these local coordinate systems may be encoded using the full precision (e.g., 32-bit floating point) values, effectively connecting the global and local coordinate systems.

The following is an example of lossless compression. An example of a Ray data format used internally in a ray tracing program is as follows:

```
struct Ray
{uint32 pixId;
 uint32 materialID;
 uint32 instanceID;
 uint64 primitiveID;
 uint32 geometryID;
 uint32 lightID;
 float origin[3];
 float direction[3];
 float t0;
 float t;
 float time;
 float normal[3]; //used for geometry intersections
 float u;
 float v;
 float wavelength;
 float phase; //Interferometry
 float refracted Offset; //Schlieren-esque
 float amplitude;
 float weight;
};
```

Instead of sending the raw data for each and every node generated, this data can be compressed by grouping values and by creating implicit rays using applicable metadata where possible.

### Bundling and Grouping Ray Data

Flags may be used for common data or masks with modifiers.

```
struct RayPacket
{
 uint32 size;
 uint32 flags;
 list<Ray> rays; }
```

For example:

```
RayPacket.rays = ray_1 to ray_256
```

### Origins are all Shared

All ray data is packed, except only a single origin is stored across all rays. RayPacket.flags is set for RAYPACKET_COMMON_ORIGIN. When RayPacket is unpacked when recieved, origins are filled in from the single origin value.

**Origins are Shared only Among Some Rays**

All ray data is packed, except for rays that share origins. For each group of unique shared origins, an operator is packed on that identifies the operation (shared origins), stores the origin, and masks which rays share the information. Such an operation can be done on any shared values among nodes such as material IDs, primitive IDs, origin, direction, normals, etc.

```
struct RayOperation
{
 uint8 operationID;
 void* value;
 uint64 mask; }
```

**Sending Implicit Rays**

Often times, ray data can be derived on the receiving end with minimal meta information used to generate it. A very common example is generating multiple secondary rays to stochastically sample an area. Instead of the sender generating a secondary ray, sending it, and the receiver operating on it, the sender can send a command that a ray needs to be generated with any dependent information, and the ray is generated on the receiving end. In the case where the ray needs to be first generated by the sender to determine which receiver to send it to, the ray is generated and the random seed can be sent to regenerate the exact same ray.

For example, to sample a hit point with 64 shadow rays sampling an area light source, all 64 rays intersect with regions from the same compute N4. A RayPacket with common origin and normal is created. More data could be sent if one wished the receiver to shade the resulting pixel contribution, but for this example let us assume we wish to only return whether a ray hits another nodes data. A RayOperation is created for a generate shadow ray operation, and is assigned the value of the lightID to be sampled and the random number seed. When N4 receives the ray packet, it generates the fully filled Ray data by filling in the shared origin data to all rays and setting the direction based on the lightID stochastically sampled with the random number seed to generate the same rays that the original sender generated. When the results are returned, only binary results for every ray need be returned, which can be handed by a mask over the rays.

Sending the original 64 rays in this example would have used 104 Bytes * 64 rays = 6656 Bytes. If the returning rays were sent in their raw form as well, than this is also doubled to 13312 Bytes. Using lossless compression with only sending the common ray origin, normal, and ray generation operation with seed and ID, only 29 Bytes are sent with 8 Bytes returned for the was intersected mask. This results in a data compression rate that needs to be sent over the network of ~360:1. This does not include overhead to process the message itself, which would need to be identified in some way, but that is left up to the implementation. Other operations may be done for recomputing ray origin and directions from the pixelD for primary rays, recalculating pixelIDs based on the ranges in the raypacket, and many other possible implementations for recomputation of values. Similar operations can be used for any single or group of rays sent, including shadows, reflections, refraction, ambient occlusion, intersections, volume intersections, shading, bounced reflections in path tracing, etc.

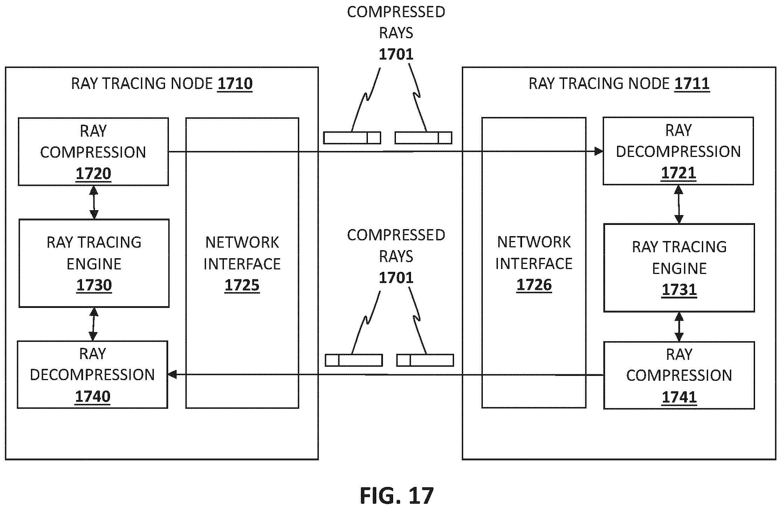

**Figure 17** illustrates additional details for two ray tracing nodes 1710-1711 which perform compression and decompression of ray tracing packets. In particular, when a first ray tracing engine 1730 is ready to transmit data to a second ray tracing engine 1731, ray compression circuitry 1720 performs lossy and/or lossless compression of the ray tracing data as described herein (e.g., converting 32-bit values to 8-bit values, substituting raw data for instructions to reconstruct the data, etc). The compressed ray packets 1701 are transmitted from network interface 1725 to network interface 1726 over a local network (e.g., a 10Gb/s, 100Gb/s Ethernet network). Ray decompression circuitry then decompresses the ray packets when appropriate. For example, it may execute commands to reconstruct the ray tracing data (e.g., using a random seed to perform random sampling for lighting operations). Ray tracing engine 1731 then uses the received data to perform ray tracing operations.

In the reverse direction, ray compression circuitry 1741 compresses ray data, network interface 1726 transmits the compressed ray data over the network (e.g., using the techniques described herein), ray decompression circuitry 1740 decompresses the ray data when necessary and ray tracing engine 1730 uses the data in ray tracing operations. Although illustrated as a separate unit in **Figure 17,** ray decompression circuitry 1740-1741 may be integrated within ray tracing engines 1730-1731, respectively. For example, to the extent the compressed ray data comprises commands to reconstruct the ray data, these commands may be executed by each respective ray tracing engine 1730-1731.

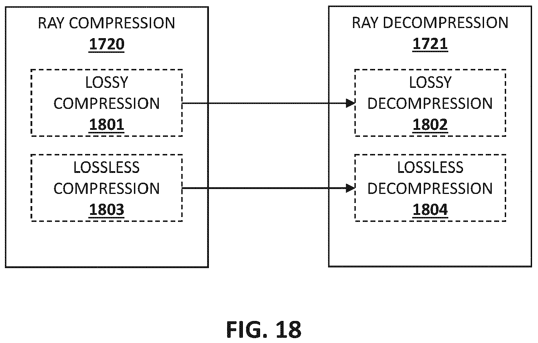

As illustrated in **Figure 18,** ray compression circuitry 1720 may include lossy compression circuitry 1801 for performing the lossy compression techniques described herein (e.g., converting 32-bit floating point coordinates to 8-bit integer coordinates) and lossless compression circuitry 3803 for performing the lossless compression techniques (e.g., transmitting commands and data to allow ray recompression circuitry 3821 to reconstruct the data). Ray decompression circuitry 1721 includes lossy decompression circuitry 3802 and lossless decompression circuitry 3804 for performing lossless decompression.

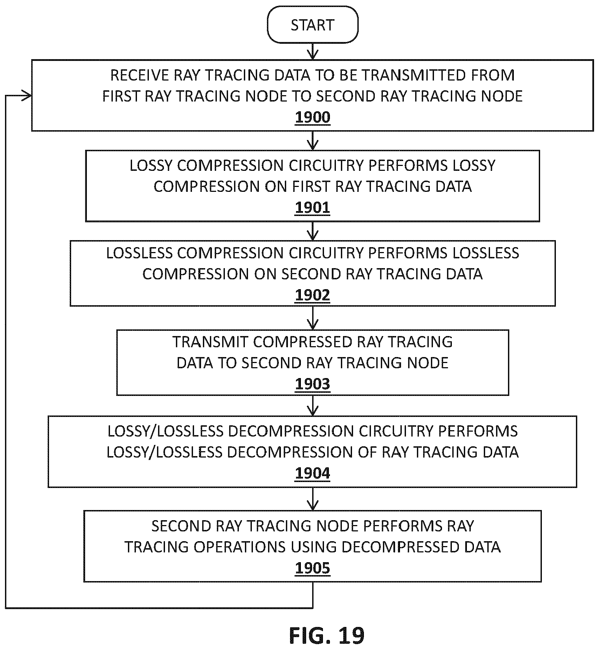

Another exemplary method is illustrated in **Figure 19.** The method may be implemented on the ray tracing architectures or other architectures described herein but is not limited to any particular architecture.

At 1900, ray data is received which will be transmitted from a first ray tracing node to a second ray tracing node. At 1901, lossy compression circuitry performs lossy compression on first ray tracing data and, at 1902, lossless compression circuitry performs lossless compression on second ray tracing data. At 1903, the compressed ray racing data is transmitted to a second ray tracing node. At 1904, lossy/lossless decompression circuitry performs lossy/lossless decompression of the ray tracing data and, at 1905, the second ray tracing node performs ray tracing operations sing the decompressed data.

GRAPHICS PROCESSOR WITH HARDWARE

ACCELERATED HYBRID RAY TRACING

A hybrid rendering pipeline which performs rasterization on graphics cores 1530 and ray tracing operations on the ray tracing cores 1550, graphics cores 1530, and/or CPU 1599 cores, is presented next. For example, rasterization and depth testing may be performed on the graphics cores 1530 in place of the primary ray casting stage. The ray tracing cores 1550 may then generate secondary rays for ray reflections, refractions, and shadows. In addition, certain regions of a scene in which the ray tracing cores 1550 will perform ray tracing operations (e.g., based on material property thresholds such as high reflectivity levels) will be selected while other regions of the scene will be rendered with rasterization on the graphics cores 1530. This hybrid implementation may be used for real-time ray tracing applications - where latency is a critical issue.

The ray traversal architecture described below may, for example, perform programmable shading and control of ray traversal using existing single instruction multiple data (SIMD) and/or single instruction multiple thread (SIMT) graphics processors while accelerating critical functions, such as BVH traversal and/or intersections, using dedicated hardware. SIMD occupancy for incoherent paths may be improved by regrouping spawned shaders at specific points during traversal and before shading. This is achieved using dedicated hardware that sorts shaders dynamically, on-chip. Recursion is managed by splitting a function into continuations that execute upon returning and regrouping continuations before execution for improved SIMD occupancy.

Programmable control of ray traversal/intersection is achieved by decomposing traversal functionality into an inner traversal that can be implemented as fixed function hardware and an outer traversal that executes on GPU processors and enables programmable control through user defined traversal shaders. The cost of transferring the traversal context between hardware and software is reduced by conservatively truncating the inner traversal state during the transition between inner and outer traversal.

Programmable control of ray tracing can be expressed through the different shader types listed in Table A below. There can be multiple shaders for each type. For example each material can have a different hit shader.

**TABLE A**

| Shader Type | Functionality |
| --- | --- |
| Primary | Launching primary rays |
| Hit | Bidirectional reflectance distribution function (BRDF) sampling, launching secondary rays |
| Any Hit | Computing transmittance for alpha textured geometry |
| Miss | Computing radiance from a light source |
| Intersection | Intersecting custom shapes |
| Traversal | Instance selection and transformation |
| Callable | A general-purpose function |

Recursive ray tracing may be initiated by an API function that commands the graphics processor to launch a set of primary shaders or intersection circuitry which can spawn ray-scene intersections for primary rays. This in turn spawns other shaders such as traversal, hit shaders, or miss shaders. A shader that spawns a child shader can also receive a return value from that child shader. Callable shaders are general-purpose functions that can be directly spawned by another shader and can also return values to the calling shader.

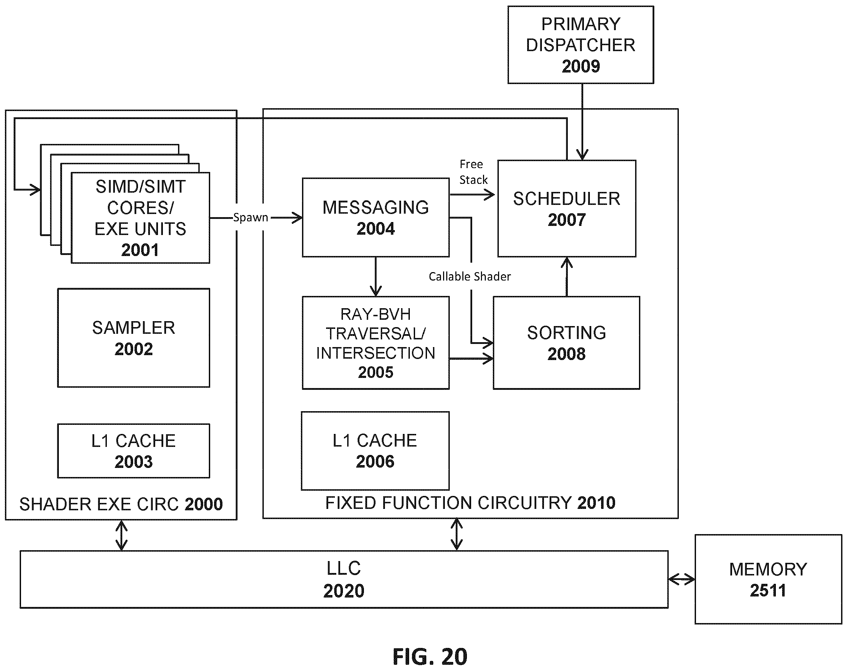

**Figure 20** illustrates a graphics processing architecture which includes shader execution circuitry 2000 and fixed function circuitry 2010. The general purpose execution hardware subsystem includes a plurality of single instruction multiple data (SIMD) and/or single instructions multiple threads (SIMT) cores/execution units (EUs) 2001 (i.e., each core may comprise a plurality of execution units), one or more samplers 2002, and a Level 1 (L1) cache 2003 or other form of local memory. The fixed function hardware subsystem 2010 includes message unit 2004, a scheduler 2007, ray-BVH traversal/intersection circuitry 2005, sorting circuitry 2008, and a local L1 cache 2006.

In operation, primary dispatcher 2009 dispatches a set of primary rays to the scheduler 2007, which schedules work to shaders executed on the SIMD/SIMT cores/EUs 2001. The SIMD cores/EUs 2001 may be ray tracing cores 1550 and/or graphics cores 1530 described above. Execution of the primary shaders spawns additional work to be performed (e.g., to be executed by one or more child shaders and/or fixed function hardware). The message unit 2004 distributes work spawned by the SIMD cores/EUs 2001 to the scheduler 2007, accessing the free stack pool as needed, the sorting circuitry 2008, or the ray-BVH intersection circuitry 2005. If the additional work is sent to the scheduler 2007, it is scheduled for processing on the SIMD/SIMT cores/EUs 2001. Prior to scheduling, the sorting circuitry 2008 may sort the rays into groups or bins as described herein (e.g., grouping rays with similar characteristics). The ray-BVH intersection circuitry 2005 performs intersection testing of rays using BVH volumes. For example, the ray-BVH intersection circuitry 2005 may compare ray coordinates with each level of the BVH to identify volumes which are intersected by the ray.

Shaders can be referenced using a shader record, a user-allocated structure that includes a pointer to the entry function, vendor-specific metadata, and global arguments to the shader executed by the SIMD cores/EUs 2001. Each executing instance of a shader is associated with a call stack which may be used to store arguments passed between a parent shader and child shader. Call stacks may also store references to the continuation functions that are executed when a call returns.

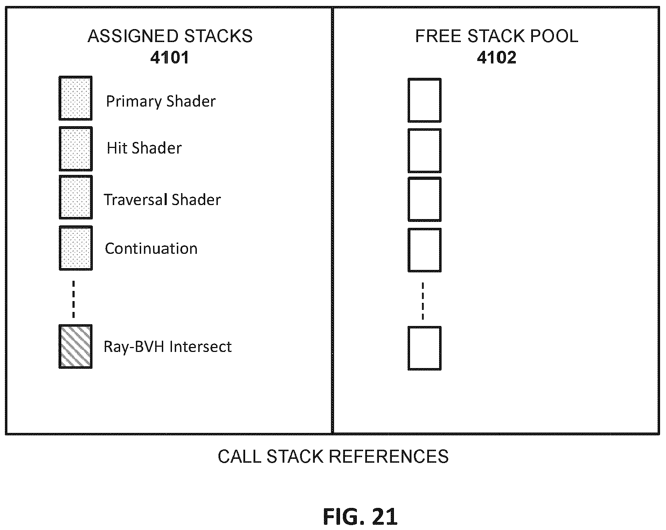

**Figure 21** illustrates an example set of assigned stacks 2101 which includes a primary shader stack, a hit shader stack, a traversal shader stack, a continuation function stack, and a ray-BVH intersection stack (which, as described, may be executed by fixed function hardware 2010). New shader invocations may implement new stacks from a free stack pool 2102. The call stacks, e.g. stacks comprised by the set of assigned stacks, may be cached in a local L1 cache 2003, 2006 to reduce the latency of accesses.

There may be a finite number of call stacks, each with a fixed maximum size "Sstack" allocated in a contiguous region of memory. Therefore the base address of a stack can be directly computed from a stack index (SID) as base address = SID * Sstack. Stack IDs may be allocated and deallocated by the scheduler 2007 when scheduling work to the SIMD cores/EUs 2001.

The primary dispatcher 2009 may comprise a graphics processor command processor which dispatches primary shaders in response to a dispatch command from the host (e.g., a CPU). The scheduler 2007 may receive these dispatch requests and launches a primary shader on a SIMD processor thread if it can allocate a stack ID for each SIMD lane. Stack IDs may be allocated from the free stack pool 2102 that is initialized at the beginning of the dispatch command.

An executing shader can spawn a child shader by sending a spawn message to the messaging unit 2004. This command includes the stack IDs associated with the shader and also includes a pointer to the child shader record for each active SIMD lane. A parent shader can only issue this message once for an active lane. After sending spawn messages for all relevant lanes, the parent shader may terminate.

A shader executed on the SIMD cores/EUs 2001 can also spawn fixed-function tasks such as ray-BVH intersections using a spawn message with a shader record pointer reserved for the fixed-function hardware. As mentioned, the messaging unit 2004 sends spawned ray-BVH intersection work to the fixed-function ray-BVH intersection circuitry 2005 and callable shaders directly to the sorting circuitry 2008. The sorting circuitry may group the shaders by shader record pointer to derive a SIMD batch with similar characteristics. Accordingly, stack IDs from different parent shaders can be grouped by the sorting circuitry 2008 in the same batch. The sorting circuitry 2008 sends grouped batches to the scheduler 2007 which accesses the shader record from graphics memory 2511 or the last level cache (LLC) 2020 and launches the shader on a processor thread.

Continuations may be treated as callable shaders and may also be referenced through shader records. When a child shader is spawned and returns values to the parent shader, a pointer to the continuation shader record may be pushed on the call stack 2101. When a child shader returns, the continuation shader record may then be popped from the call stack 2101 and a continuation shader may be spawned. Optionally, spawned continuations may go through the sorting unit similar to callable shaders and get launched on a processor thread.

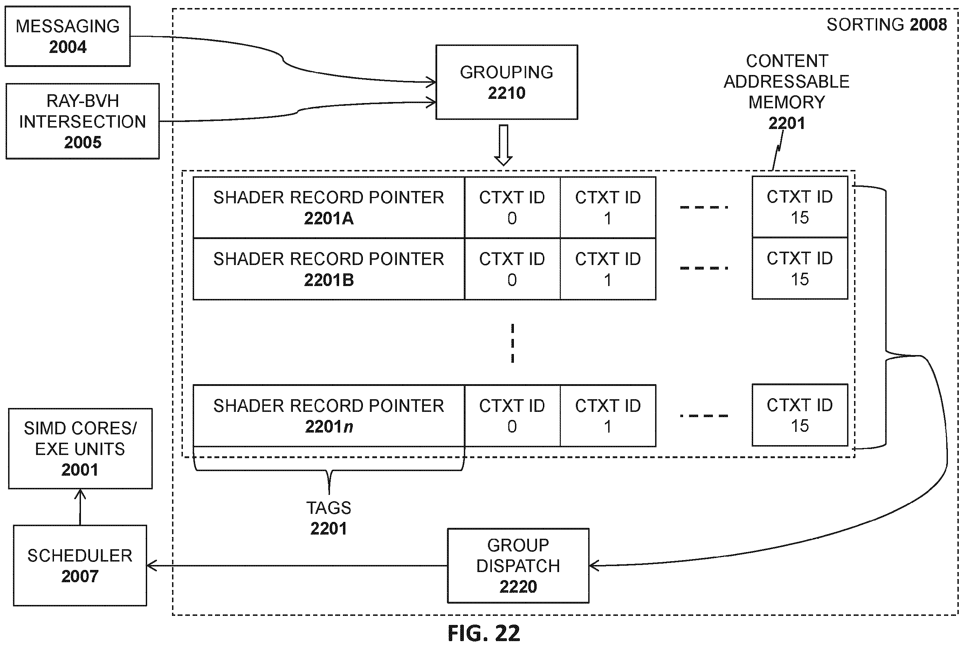

As illustrated in **Figure 22,** the sorting circuitry 2008 groups spawned tasks by shader record pointers 2201A, 2201B, 2201n to create SIMD batches for shading. The stack IDs or context IDs in a sorted batch can be grouped from different dispatches and different input SIMD lanes. A grouping circuitry 2210 may perform the sorting using a content addressable memory (CAM) structure 2201 comprising a plurality of entries with each entry identified with a tag 2201.

As mentioned, the tag 2201 may be a corresponding shader record pointer 2201A, 2201B, 2201*n*. The CAM structure 2201 may store a limited number of tags (e.g. 32, 64, 128, etc) each associated with an incomplete SIMD batch corresponding to a shader record pointer.

For an incoming spawn command, each SIMD lane has a corresponding stack ID (shown as 16 context IDs 0-15 in each CAM entry) and a shader record pointer 2201A-B,...*n* (acting as a tag value). The grouping circuitry 2210 may compare the shader record pointer for each lane against the tags 2201 in the CAM structure 2201 to find a matching batch. If a matching batch is found, the stack ID/context ID may be added to the batch. Otherwise a new entry with a new shader record pointer tag may be created, possibly evicting an older entry with an incomplete batch.

An executing shader can deallocate the call stack when it is empty by sending a deallocate message to the message unit. The deallocate message is relayed to the scheduler which returns stack IDs/context IDs for active SIMD lanes to the free pool.

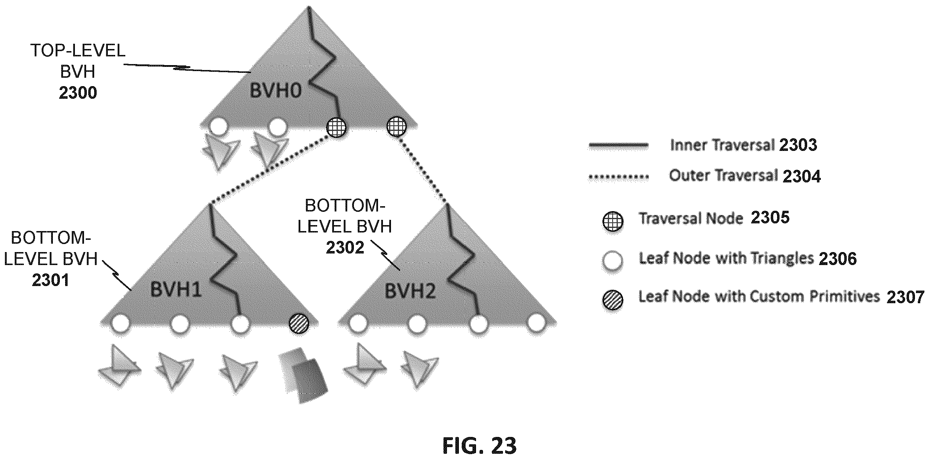

A hybrid approach for ray traversal operations, using a combination of fixed-function ray traversal and software ray traversal, is presented. Consequently, it provides the flexibility of software traversal while maintaining the efficiency of fixed-function traversal. **Figure 23** shows an acceleration structure which may be used for hybrid traversal, which is a two-level tree with a single top level BVH 2300 and several bottom level BVHs 2301 and 2302. Graphical elements are shown to the right to indicate inner traversal paths 2303, outer traversal paths 2304, traversal nodes 2305, leaf nodes with triangles 2306, and leaf nodes with custom primitives 2307.

The leaf nodes with triangles 2306 in the top level BVH 2300 can reference triangles, intersection shader records for custom primitives or traversal shader records. The leaf nodes with triangles 2306 of the bottom level BVHs 2301-2302 can only reference triangles and intersection shader records for custom primitives. The type of reference is encoded within the leaf node 2306. Inner traversal 2303 refers to traversal within each BVH 2300-2302. Inner traversal operations comprise computation of ray-BVH intersections and traversal across the BVH structures 2300-2302 is known as outer traversal. Inner traversal operations can be implemented efficiently in fixed function hardware while outer traversal operations can be performed with acceptable performance with programmable shaders. Consequently, inner traversal operations may be performed using fixed-function circuitry 2010 and outer traversal operations may be performed using the shader execution circuitry 2000 including SIMD/SIMT cores/EUs 2001 for executing programmable shaders.

Note that the SIMD/SIMT cores/EUs 2001 are sometimes simply referred to herein as "cores," "SIMD cores," "EUs," or "SIMD processors" for simplicity. Similarly, the ray-BVH traversal/intersection circuitry 2005 is sometimes simply referred to as a "traversal unit," "traversal/intersection unit" or "traversal/intersection circuitry." When an alternate term is used, the particular name used to designate the respective circuitry/logic does not alter the underlying functions which the circuitry/logic performs, as described herein.

Moreover, while illustrated as a single component in **Figure 20** for purposes of explanation, the traversal/intersection unit 2005 may comprise a distinct traversal unit and a separate intersection unit, each of which may be implemented in circuitry and/or logic as described herein.

When a ray intersects a traversal node during an inner traversal, a traversal shader may be spawned. The sorting circuitry 2008 may group these shaders by shader record pointers 2201A-B, *n* to create a SIMD batch which is launched by the scheduler 2007 for SIMD execution on the graphics SIMD cores/EUs 2001. Traversal shaders can modify traversal in several ways, enabling a wide range of applications. For example, the traversal shader can select a BVH at a coarser level of detail (LOD) or transform the ray to enable rigid body transformations. The traversal shader may then spawn inner traversal for the selected BVH.

Inner traversal computes ray-BVH intersections by traversing the BVH and computing ray-box and ray-triangle intersections. Inner traversal is spawned in the same manner as shaders by sending a message to the messaging circuitry 2004 which relays the corresponding spawn message to the ray-BVH intersection circuitry 2005 which computes ray-BVH intersections.

The stack for inner traversal may be stored locally in the fixed-function circuitry 2010 (e.g., within the L1 cache 2006). When a ray intersects a leaf node corresponding to a traversal shader or an intersection shader, inner traversal may be terminated and the inner stack truncated. The truncated stack along with a pointer to the ray and BVH may be written to memory at a location specified by the calling shader and then the corresponding traversal shader or intersection shader may be spawned. If the ray intersects any triangles during inner traversal, the corresponding hit information may be provided as input arguments to these shaders as shown in the below code. These spawned shaders may be grouped by the sorting circuitry 2008 to create SIMD batches for execution.

```
struct HitInfo {
  float barycentrics[2];
  float tmax;
  bool innerTravComplete;
  uint primID;
```

```
uint geomID;
ShaderRecord* leafShaderRecord; }
```

Truncating the inner traversal stack reduces the cost of spilling it to memory. The approach described in Restart Trail for Stackless BVH Traversal, High Performance Graphics (2010), pp. 107-111, to truncate the stack to a small number of entries at the top of the stack, a 42-bit restart trail and a 6-bit depth value may be applied. The restart trail indicates branches that have already been taken inside the BVH and the depth value indicates the depth of traversal corresponding to the last stack entry. This is sufficient information to resume inner traversal at a later time.

Inner traversal is complete when the inner stack is empty and there no more BVH nodes to test. In this case an outer stack handler is spawned that pops the top of the outer stack and resumes traversal if the outer stack is not empty.

Outer traversal may execute the main traversal state machine and may be implemented in program code executed by the shader execution circuitry 2000. It may spawn an inner traversal query under the following conditions: (1) when a new ray is spawned by a hit shader or a primary shader; (2) when a traversal shader selects a BVH for traversal; and (3) when an outer stack handler resumes inner traversal for a BVH.

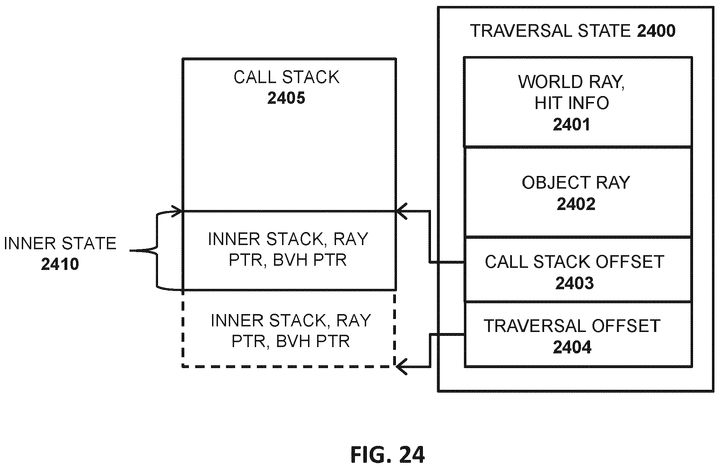

As illustrated in **Figure 24,** before inner traversal is spawned, space is allocated on the call stack 2405 for the fixed-function circuitry 2010 to store the truncated inner stack 2410. Offsets 2403-2404 to the top of the call stack and the inner stack are maintained in the traversal state 2400 which is also stored in memory 2511. The traversal state 2400 also includes the ray in world space 2401 and object space 2402 as well as hit information for the closest intersecting primitive.

The traversal shader, intersection shader and outer stack handler are all spawned by the ray-BVH intersection circuitry 2005. The traversal shader allocates on the call stack 2405 before initiating a new inner traversal for the second level BVH. The outer stack handler is a shader that is responsible for updating the hit information and resuming any pending inner traversal tasks. The outer stack handler is also responsible for spawning hit or miss shaders when traversal is complete. Traversal is complete when there are no pending inner traversal queries to spawn. When traversal is complete and an intersection is found, a hit shader is spawned; otherwise a miss shader is spawned.

While the hybrid traversal scheme described above uses a two-level BVH hierarchy, an arbitrary number of BVH levels with a corresponding change in the outer traversal implementation may also be implemented.

In addition, while fixed function circuitry 2010 is described above for performing ray-BVH intersections, other system components may also be implemented in fixed function circuitry. For example, the outer stack handler described above may be an internal (not user visible) shader that could potentially be implemented in the fixed function BVH traversal/intersection circuitry 2005. This implementation may be used to reduce the number of dispatched shader stages and round trips between the fixed function intersection hardware 2005 and the processor.

The examples described herein enable programmable shading and ray traversal control using user-defined functions that can execute with greater SIMD efficiency on existing and future GPU processors. Programmable control of ray traversal enables several important features such as procedural instancing, stochastic level-of-detail selection, custom primitive intersection and lazy BVH updates.

A programmable, multiple instruction multiple data (MIMD) ray tracing architecture which supports speculative execution of hit and intersection shaders is also provided. In particular, the architecture focuses on reducing the scheduling and communication overhead between the programmable SIMD/SIMT cores/execution units 2001 described above with respect to **Figure 20** and fixed-function MIMD traversal/intersection units 2005 in a hybrid ray tracing architecture. Multiple speculative execution schemes of hit and intersection shaders are described below that can be dispatched in a single batch from the traversal hardware, avoiding several traversal and shading round trips. A dedicated circuitry to implement these techniques may be used.

The embodiments of the invention are particularly beneficial in use-cases where the execution of multiple hit or intersection shaders is desired from a ray traversal query that would impose significant overhead when implemented without dedicated hardware support. These include, but are not limited to nearest k-hit query (launch a hit shader for the k closest intersections) and multiple programmable intersection shaders.

The techniques described here may be implemented as extensions to the architecture illustrated in **Figure 20** (and described with respect to **Figures 20-24).** In particular, the present embodiments of the invention build on this architecture with enhancements to improve the performance of the above-mentioned use-cases.

A performance limitation of hybrid ray tracing traversal architectures is the overhead of launching traversal queries from the execution units and the overhead of invoking programmable shaders from the ray tracing hardware. When multiple hit or intersection shaders are invoked during the traversal of the same ray, this overhead generates "execution roundtrips" between the programmable cores 2001 and traversal/intersection unit 2005. This also places additional pressure to the sorting unit 2008 which needs to extract SIMD/SIMT coherence from the individual shader invocations.

Several aspects of ray tracing require programmable control which can be expressed through the different shader types listed in TABLE A above (i.e., Primary, Hit, Any Hit, Miss, Intersection, Traversal, and Callable). There can be multiple shaders for each type. For example each material can have a different hit shader. Some of these shader types are defined in the current Microsoft® Ray Tracing API.

As a brief review, recursive ray tracing is initiated by an API function that commands the GPU to launch a set of primary shaders which can spawn ray-scene intersections (implemented in hardware and/or software) for primary rays. This in turn can spawn other shaders such as traversal, hit or miss shaders. A shader that spawns a child shader can also receive a return value from that shader. Callable shaders are general-purpose functions that can be directly spawned by another shader and can also return values to the calling shader.

Ray traversal computes ray-scene intersections by traversing and intersecting nodes in a bounding volume hierarchy (BVH). Recent research has shown that the efficiency of computing ray-scene intersections can be improved by over an order of magnitude using techniques that are better suited to fixed-function hardware such as reduced-precision arithmetic, BVH compression, per-ray state machines, dedicated intersection pipelines and custom caches.

The architecture shown in **Figure 20** comprises such a system where an array of SIMD/SIMT cores/execution units 2001 interact with a fixed function ray tracing/intersection unit 2005 to perform programmable ray tracing. Programmable shaders are mapped to SIMD/SIMT threads on the execution units/cores 2001, where SIMD/SIMT utilization, execution, and data coherence are critical for optimal performance. Ray queries often break up coherence for various reasons such as:

- Traversal divergence: The duration of the BVH traversal varies highly

- among rays favoring asynchronous ray processing.

- Execution divergence: Rays spawned from different lanes of the same SIMD/SIMT thread may result in different shader invocations.

- Data access divergence: Rays hitting different surfaces sample different BVH nodes and primitives and shaders access different textures, for example. A variety of other scenarios may cause data access divergence.

The SIMD/SIMT cores/execution units 2001 may be variants of cores/execution units described herein including graphics core(s) 415A-415B, shader cores 1355A-*N*, graphics cores 1530, graphics execution unit 608, execution units 852A-B, or any other cores/execution units described herein. The SIMD/SIMT cores/execution units 2001 may be used in place of the graphics core(s) 415A-415B, shader cores 1355A-*N*, graphics cores 1530, graphics execution unit 608, execution units 852A-B, or any other cores/execution units described herein. Therefore, the disclosure of any features in combination with the graphics core(s) 415A-415B, shader cores 1355A-*N*, graphics cores 1530, graphics execution unit 608, execution units 852A-B, or any other cores/execution units described herein also discloses a corresponding combination with the SIMD/SIMT cores/execution units 2001 of FIG. 20, but is not limited to such.

The fixed-function ray tracing/intersection unit 2005 may overcome the first two challenges by processing each ray individually and out-of-order. That, however, breaks up SIMD/SIMT groups. The sorting unit 2008 is hence responsible for forming new, coherent SIMD/SIMT groups of shader invocations to be dispatched to the execution units again.

It is easy to see the benefits of such an architecture compared to a pure software-based ray tracing implementation directly on the SIMD/SIMT processors. However, there is an overhead associated with the messaging between the SIMD/SIMT cores/execution units 2001 (sometimes simply referred to herein as SIMD/SIMT processors or cores/EUs) and the MIMD traversal/intersection unit 2005. Furthermore, the sorting unit 2008 may not extract perfect SIMD/SIMT utilization from incoherent shader calls.

Use-cases can be identified where shader invocations can be particularly frequent during traversal. Enhancements are described for hybrid MIMD ray tracing processors to significantly reduce the overhead of communication between the cores/EUs 2001 and traversal/intersection units 2005. This may be particularly beneficial when finding the k-closest intersections and implementation of programmable intersection shaders. Note, however, that the techniques described here are not limited to any particular processing scenario.

A summary of the high-level costs of the ray tracing context switch between the cores/EUs 2001 and fixed function traversal/intersection unit 2005 is provided below. Most of the performance overhead is caused by these two context switches every time when the shader invocation is necessary during single-ray traversal.

Each SIMD/SIMT lane that launches a ray generates a spawn message to the traversal/intersection unit 2005 associated with a BVH to traverse. The data (ray traversal context) is relayed to the traversal/intersection unit 2005 via the spawn message and (cached) memory. When the traversal/intersection unit 2005 is ready to assign a new hardware thread to the spawn message it loads the traversal state and performs traversal on the BVH. There is also a setup cost that needs to be performed before first traversal step on the BVH.

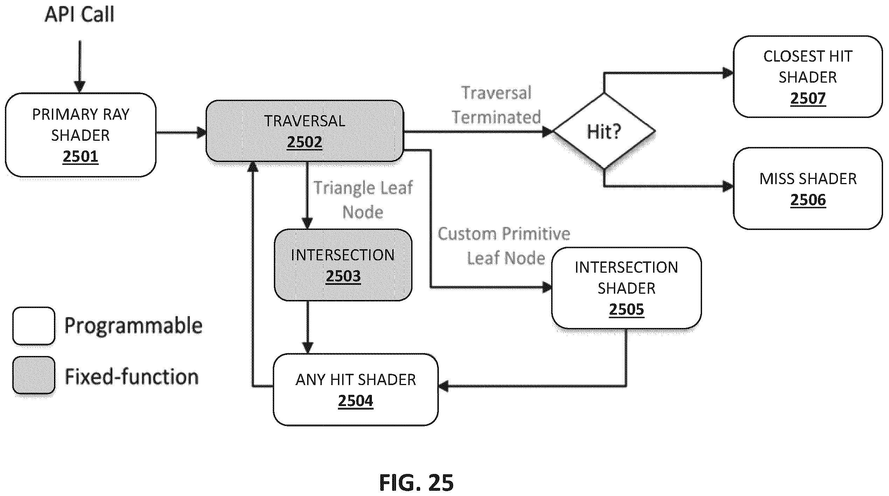

**Figure 25** illustrates an operational flow of a programmable ray tracing pipeline. The shaded elements including traversal 2502 and intersection 2503 may be implemented in fixed function circuitry while the remaining elements may be implemented with programmable cores/execution units.

A primary ray shader 2501 sends work to the traversal circuitry at 2502 which traverses the current ray(s) through the BVH (or other acceleration structure). When a leaf node is reached, the traversal circuitry calls the intersection circuitry at 2503 which, upon identifying a ray-triangle intersection, invokes an any hit shader at 2504 (which may provide results back to the traversal circuitry as indicated).

Alternatively, the traversal may be terminated prior to reaching a leaf node and a closest hit shader invoked at 2507 (if a hit was recorded) or a miss shader at 2506 (in the event of a miss).

As indicated at 2505, an intersection shader may be invoked if the traversal circuitry reaches a custom primitive leaf node. A custom primitive may be any non-triangle primitive such as a polygon or a polyhedra (e.g., tetrahedrons, voxels, hexahedrons, wedges, pyramids, or other "unstructured" volume). The intersection shader 2505 identifies any intersections between the ray and custom primitive to the any hit shader 2504 which implements any hit processing.

When hardware traversal 2502 reaches a programmable stage, the traversal/intersection unit 2005 may generate a shader dispatch message to a relevant shader 2505-2507, which corresponds to a single SIMD lane of the execution unit(s) used to execute the shader. Since dispatches occur in an arbitrary order of rays, and they are divergent in the programs called, the sorting unit 2008 may accumulate multiple dispatch calls to extract coherent SIMD batches. The updated traversal state and the optional shader arguments may be written into memory 2511 by the traversal/intersection unit 2005.

In the k-nearest intersection problem, a closest hit shader 2507 is executed for the first k intersections. In the conventional way this would mean ending ray traversal upon finding the closest intersection, invoking a hit-shader, and spawning a new ray from the hit shader to find the next closest intersection (with the ray origin offset, so the same intersection will not occur again). It is easy to see that this implementation would require k ray spawns for a single ray. Another implementation operates with any-hit shaders 2504, invoked for all intersections and maintaining a global list of nearest intersections, using an insertion sort operation. The main problem with this approach is that there is no upper bound of any-hit shader invocations.

As mentioned, an intersection shader 2505 may be invoked on non-triangle (custom) primitives. Depending on the result of the intersection test and the traversal state (pending node and primitive intersections), the traversal of the same ray may continue after the execution of the intersection shader 2505. Therefore finding the closest hit may require several roundtrips to the execution unit.

A focus can also be put on the reduction of SIMD-MIMD context switches for intersection shaders 2505 and hit shaders 2504, 2507 through changes to the traversal hardware and the shader scheduling model. First, the ray traversal circuitry 2005 defers shader invocations by accumulating multiple potential invocations and dispatching them in a larger batch. In addition, certain invocations that turn out to be unnecessary may be culled at this stage. Furthermore, the shader scheduler 2007 may aggregate multiple shader invocations from the same traversal context into a single SIMD batch, which results in a single ray spawn message. In one exemplary implementation, the traversal hardware 2005 suspends the traversal thread and waits for the results of multiple shader invocations. This mode of operation is referred to herein as "speculative" shader execution because it allows the dispatch of multiple shaders, some of which may not be called when using sequential invocations.

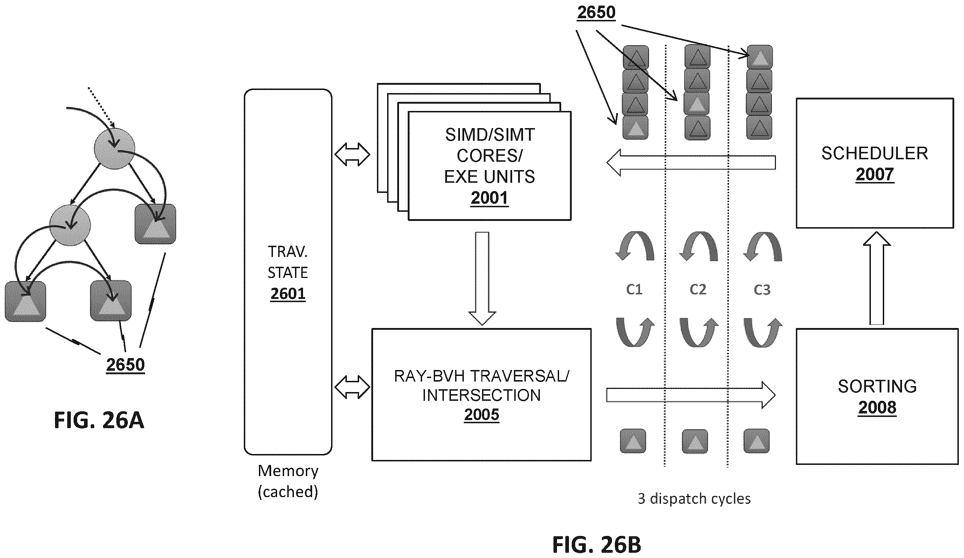

**Figure 26A** illustrates an example in which the traversal operation encounters multiple custom primitives 2650 in a subtree and **Figure 26B** illustrates how this can be resolved with three intersection dispatch cycles C1-C3. In particular, the scheduler 2007 may require three cycles to submit the work to the SIMD processor 2001 and the traversal circuitry 2005 requires three cycles to provide the results to the sorting unit 2008. The traversal state 2601 required by the traversal circuitry 2005 may be stored in a memory such as a local cache (e.g., an L1 cache and/or L2 cache).

A. Deferred Ray Tracing Shader Invocations

The manner in which the hardware traversal state 2601 is managed to allow the accumulation of multiple potential intersection or hit invocations in a list can also be modified. At a given time during traversal each entry in the list may be used to generate a shader invocation. For example, the k-nearest intersection points can be accumulated on the traversal hardware 2005 and/or in the traversal state 2601 in memory, and hit shaders can be invoked for each element if the traversal is complete. For hit shaders, multiple potential intersections may be accumulated for a subtree in the BVH.

For the nearest-k use case the benefit of this approach is that instead of k-1 roundtrips to the SIMD core/EU 2001 and k-1 new ray spawn messages, all hit shaders are invoked from the same traversal thread during a single traversal operation on the traversal circuitry 2005. A challenge for potential implementations is that it is not trivial to guarantee the execution order of hit shaders (the standard "roundtrip" approach guarantees that the hit shader of the closest intersection is executed first, etc.). This may be addressed by either the synchronization of the hit shaders or the relaxation of the ordering.

For the intersection shader use case the traversal circuitry 2005 does not know in advance whether a given shader would return a positive intersection test. However, it is possible to speculatively execute multiple intersection shaders and if at least one returns a positive hit result, it is merged into the global nearest hit. Specific implementations need to find an optimal number of deferred intersection tests to reduce the number of dispatch calls but avoid calling too many redundant intersection shaders.

B. Aggregate Shader Invocations from the Traversal Circuitry

When dispatching multiple shaders from the same ray spawn on the traversal circuitry 2005, branches in the flow of the ray traversal algorithm may be created. This may be problematic for intersection shaders because the rest of the BVH traversal depend on the result of all dispatched intersection tests. This means that a synchronization operation is necessary to wait for the result of the shader invocations, which can be challenging on asynchronous hardware.

Two points of merging the results of the shader calls may be: the SIMD processor 2001, and the traversal circuitry 2005. With respect to the SIMD processor 2001, multiple shaders can synchronize and aggregate their results using standard programming models. One relatively simple way to do this is to use global atomics and aggregate results in a shared data structure in memory, where intersection results of multiple shaders could be stored. Then the last shader can resolve the data structure and call back the traversal circuitry 2005 to continue the traversal.

A more efficient approach may also be implemented which limits the execution of multiple shader invocations to lanes of the same SIMD thread on the SIMD processor 2001. The intersection tests are then locally reduced using SIMD/SIMT reduction operations (rather than relying on global atomics). This implementation may rely on new circuitry within the sorting unit 2008 to let a small batch of shader invocations stay in the same SIMD batch.

The execution of the traversal thread may further be suspended on the traversal circuitry 2005. Using the conventional execution model, when a shader is dispatched during traversal, the traversal thread is terminated and the ray traversal state is saved to memory to allow the execution of other ray spawn commands while the execution units 2001 process the shaders. If the traversal thread is merely suspended, the traversal state does not need to be stored and can wait for each shader result separately. This implementation may include circuitry to avoid deadlocks and provide sufficient hardware utilization.

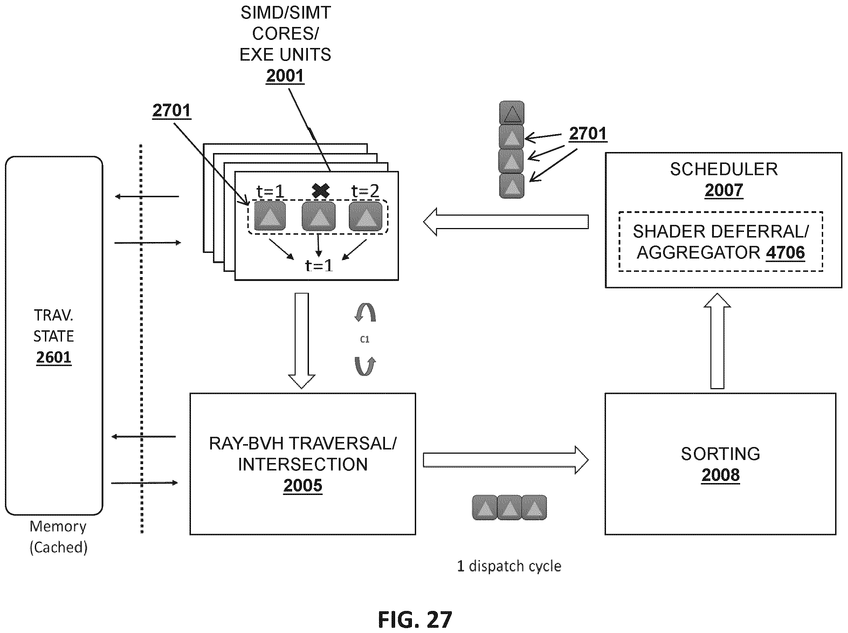

**Figures 27-28** illustrate examples of a deferred model which invokes a single shader invocation on the SIMD cores/execution units 2001 with three shaders 2701. When preserved, all intersection tests are evaluated within the same SIMD/SIMT group. Consequently, the nearest intersection can also be computed on the programmable cores/execution units 2001.

As mentioned, all or a portion of the shader aggregation and/or deferral may be performed by the traversal/intersection circuitry 2005 and/or the core/EU scheduler 2007. **Figure 27** illustrates how shader deferral/aggregator circuitry 2706 within the scheduler 2007 can defer scheduling of shaders associated with a particular SIMD/SIMT thread/lane until a specified triggering event has occurred. Upon detecting the triggering event, the scheduler 2007 dispatches the multiple aggregated shaders in a single SIMD/SIMT batch to the cores/EUs 2001.

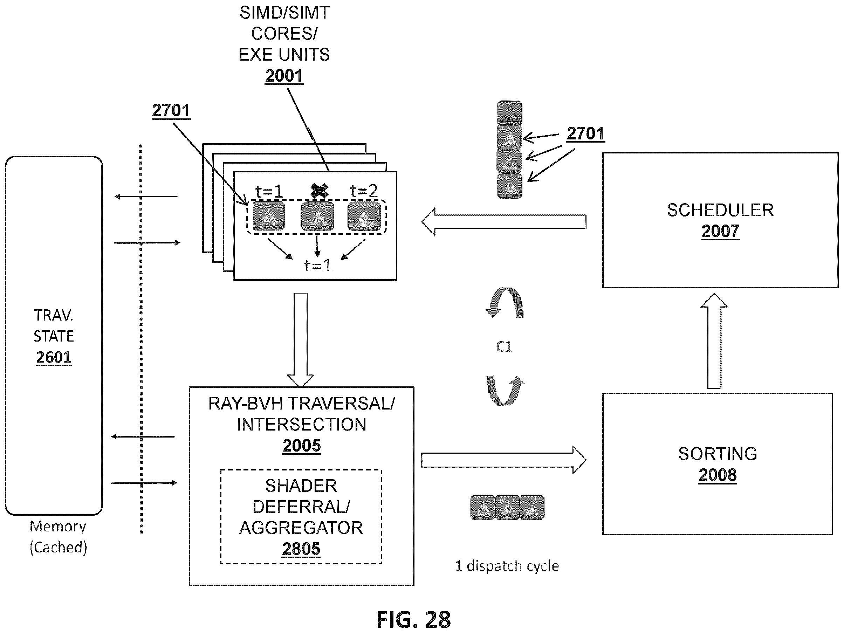

**Figure 28** illustrates how shader deferral/aggregator circuitry 2805 within the traversal/intersection circuitry 2005 can defer scheduling of shaders associated with a particular SIMD thread/lane until a specified triggering event has occurred. Upon detecting the triggering event, the traversal/intersection circuitry 2005 submits the aggregated shaders to the sorting unit 2008 in a single SIMD/SIMT batch.

Note, however, that the shader deferral and aggregation techniques may be implemented within various other components such as the sorting unit 2008 or may be distributed across multiple components. For example, the traversal/intersection circuitry 2005 may perform a first set of shader aggregation operations and the scheduler 2007 may perform a second set of shader aggregation operations to ensure that shaders for a SIMD thread are scheduled efficiently on the cores/EUs 2001.

The "triggering event" to cause the aggregated shaders to be dispatched to the cores/EUs may be a processing event such as a particular number of accumulated shaders or a minimum latency associated with a particular thread. Alternatively, or in addition, the triggering event may be a temporal event such as a certain duration from the deferral of the first shader or a particular number of processor cycles. Other variables such as the current workload on the cores/EUs 2001 and the traversal/intersection unit 2005 may also be evaluated by the scheduler 2007 to determine when to dispatch the SIMD/SIMT batch of shaders.

Different embodiments of the invention may be implemented using different combinations of the above approaches, based on the particular system architecture being used and the requirements of the application.

RAY TRACING INSTRUCTIONS

The ray tracing instructions described below are included in an instruction set architecture (ISA) supported the CPU 1599 and/or GPU 1505. If executed by the CPU, the single instruction multiple data (SIMD) instructions may utilize vector/packed source and destination registers to perform the described operations and may be decoded and executed by a CPU core. If executed by a GPU 1505, the instructions may be executed by graphics cores 1530. For example, any of the execution units (EUs) 2001 described above may execute the instructions. Alternatively, or in addition, the instructions may be executed by execution circuitry on the ray tracing cores 1550 and/or tensor cores tensor cores 1540.

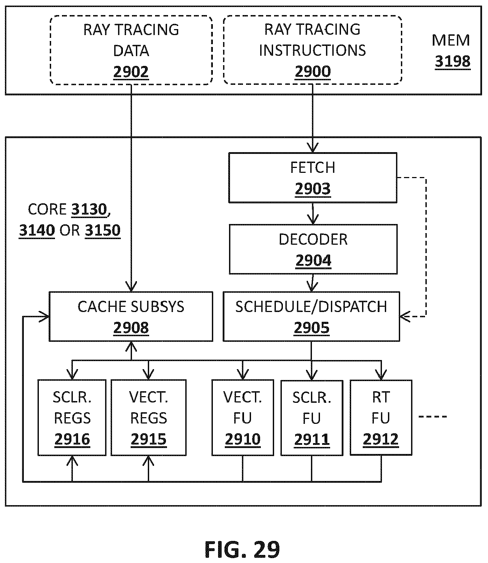

**Figure 29** illustrates an architecture for executing the ray tracing instructions described below. The illustrated architecture may be integrated within one or more of the cores 1530, 1540, 1550 described above (see, e.g., **Figure 15** and associated text) of may be included in a different processor architecture.

In operation, an instruction fetch unit 2903 fetches ray tracing instructions 2900 from memory 1598 and a decoder 2995 decodes the instructions. In one implementation the decoder 2995 decodes instructions to generate executable operations (e.g., microoperations or uops in a microcoded core). Alternatively, some or all of the ray tracing instructions 2900 may be executed without decoding and, as such a decoder 2904 is not required.

In either implementation, a scheduler/dispatcher 2905 schedules and dispatches the instructions (or operations) across a set of functional units (FUs) 2910-2912. The illustrated implementation includes a vector FU 2910 for executing single instruction multiple data (SIMD) instructions which operate concurrently on multiple packed data elements stored in vector registers 2915 and a scalar FU 2911 for operating on scalar values stored in one or more scalar registers 2916. An optional ray tracing FU 2912 may operate on packed data values stored in the vector registers 2915 and/or scalar values stored in the scalar registers 2916. In an implementation without a dedicated FU 2912, the vector FU 2910 and possibly the scalar FU 2911 may perform the ray tracing instructions described below.

The various FUs 2910-2912 access ray tracing data 2902 (e.g., traversal/intersection data) needed to execute the ray tracing instructions 2900 from the vector registers 2915, scalar register 2916 and/or the local cache subsystem 2908 (e.g., a L1 cache). The FUs 2910-2912 may also perform accesses to memory 1598 via load and store operations, and the cache subsystem 2908 may operate independently to cache the data locally.

While the ray tracing instructions may be used to increase performance for ray traversal/intersection and BVH builds, they may also be applicable to other areas such as high performance computing (HPC) and general purpose GPU (GPGPU) implementations.

In the below descriptions, the term double word is sometimes abbreviated *dw* and unsigned byte is abbreviated *ub*. In addition, the source and destination registers referred to below (e.g., src0, src1, dest, etc) may refer to vector registers 2915 or in some cases a combination of vector registers 2915 and scalar registers 2916. Typically, if a source or destination value used by an instruction includes packed data elements (e.g., where a source or destination stores N data elements), vector registers 2915 are used. Other values may use scalar registers 2916 or vector registers 2915.

**Dequantize**

One example of the Dequantize instruction "dequantizes" previously quantized values. By way of example, in a ray tracing implementation, certain BVH subtrees may be quantized to reduce storage and bandwidth requirements. The dequantize instruction may take the form dequantize dest src0 src1 src2 where source register src0 stores N unsigned bytes, source register src1 stores 1 unsigned byte, source register src2 stores 1 floating point value, and destination register dest stores N floating point values. All of these registers may be vector registers 2915. Alternatively, src0 and dest may be vector registers 2915 and src 1 and src2 may be scalar registers 2916.

The following code sequence defines one particular implementation of the dequantize instruction:

```
for (int i = 0; i < SIMD_WIDTH) {

    if (execMask[i]) {

        dst[i] = src2[i] + ldexp(convert_to_float(src0[i]),src1);

    }

}
```

In this example, ldexp multiplies a double precision floating point value by a specified integral power of two (i.e., ldexp(x, exp) = $x * 2^{exp}$). In the above code, if the execution mask value associated with the current SIMD data element (exec-Mask[i])) is set to 1, then the SIMD data element at location i in src0 is converted to a floating point value and multiplied by the integral power of the value in src1 ($2^{src1\ value}$) and this value is added to the corresponding SIMD data element in src2.

## Selective Min or Max

A selective min or max instruction may perform either a min or a max operation per lane (i.e., returning the minimum or maximum of a set of values), as indicated by a bit in a bitmask. The bitmask may utilize the vector registers 2915, scalar registers 2916, or a separate set of mask registers (not shown). The following code sequence defines one particular implementation of the min/max instruction: sel_min_max dest src0 src1 src2, where src0 stores N doublewords, src1 stores N doublewords, src2 stores one doubleword, and the destination register stores N doublewords.

The following code sequence defines one particular implementation of the selective min/max instruction:

```
for (int i = 0; i < SIMD_WIDTH) {

    if (execMask[i]) {

        dst[i] = (1 << i) & src2 ? min(src0[i],src1[i]) :
        max(src0[i],src1[i]);

    }

}
```

In this example, the value of (1 < < i) & src2 (a 1 left-shifted by i ANDed with src2) is used to select either the minimum of the $i^{th}$ data element in src0 and src1 or the maximum of the $i^{th}$ data element in src0 and src1. The operation is performed for the $i^{th}$ data element only if the execution mask value associated with the current SIMD data element (execMask[i])) is set to 1.

## Shuffle Index Instruction

A shuffle index instruction can copy any set of input lanes to the output lanes. For a SIMD width of 32, this instruction can be executed at a lower throughput. This instruction takes the form: shuffle_index dest src0 src1 <optional flag>, where src0 stores N doublewords, src1 stores N unsigned bytes (i.e., the index value), and dest stores N doublewords.

The following code sequence defines one particular implementation of the shuffle index instruction:

```
for (int i = 0; i < SIMD_WIDTH) {
    uint8_t srcLane = src1.index[i];

    if (execMask[i]) {
        bool invalidLane = srcLane < 0 || srcLane >= SIMD_WIDTH ||
        !execMask[srcLaneMod];

        if (FLAG) {
            invalidLane |= flag[srcLaneMod];
        }

        if (invalidLane) {
```

```
        dst[i] = src0[i];

      }

      else {

        dst[i] = src0[srcLane];

      }

    }

  }
```

In the above code, the index in src1 identifies the current lane. If the $i^{th}$ value in the execution mask is set to 1, then a check is performed to ensure that the source lane is within the range of 0 to the SIMD width. If so, then flag is set (srcLaneMod) and data element i of the destination is set equal to data element i of src0. If the lane is within range (i.e., is valid), then the index value from src1 (srcLane0) is used as an index into src0 (dst[i] = src0[srcLane]).

**Immediate Shuffle Up/Dn/XOR Instruction**

An immediate shuffle instruction may shuffle input data elements/lanes based on an immediate of the instruction. The immediate may specify shifting the input lanes by 1, 2, 4, 8, or 16 positions, based on the value of the immediate. Optionally, an additional scalar source register can be specified as a fill value. When the source lane index is invalid, the fill value (if provided) is stored to the data element location in the destination. If no fill value is provided, the data element location is set to all 0.

A flag register may be used as a source mask. If the flag bit for a source lane is set to 1, the source lane may be marked as invalid and the instruction may proceed.

The following are examples of different implementations of the immediate shuffle instruction:

```
shuffle_<up/dn/xor>_<1/2/4/8/16> dest src0 <optional src1>
<optional flag>
shuffle_<up/dn/xor>_<1/2/4/8/16> dest src0 <optional src1>
<optional flag>
```

In this implementation, src0 stores N doublewords, src1 stores one doubleword for the fill value (if present), and dest stores N doublewords comprising the result.

The following code sequence defines one particular implementation of the immediate shuffle instruction:

```
for (int i = 0; i < SIMD_WIDTH) {
  int8_t srcLane;
  switch(SHUFFLE_TYPE) {
  case UP:
    srcLane = i - SHIFT;
  case DN:
    srcLane = i + SHIFT;
  case XOR:
    srcLane = i ^ SHIFT;
  }

  if (execMask[i]) {
    bool invalidLane = srcLane < 0 || srcLane >= SIMD_WIDTH ||
!execMask[srcLane];

    if (FLAG) {
      invalidLane |= flag[srcLane];
    }

    if (invalidLane) {
      if (SRC1)
        dst[i] = src1;
      else
        dst[i] = 0;
    }

                  else {
                    dst[i] = src0[srcLane];
                  }
                }
              }
```

Here the input data elements/lanes are shifted by 1, 2, 4, 8, or 16 positions, based on the value of the immediate. The register src1 is an additional scalar source register which is used as a fill value which is stored to the data element location in the destination when the source lane index is invalid. If no fill value is provided and the source lane index is invalid, the data element location in the destination is set to 0s. The flag register (FLAG) is used as a source mask. If the flag bit for a source lane is set to 1, the source lane is marked as invalid and the instruction proceeds as described above.

**Indirect Shuffle Up/Dn/XOR Instruction**

The indirect shuffle instruction has a source operand (src1) that controls the mapping from source lanes to destination lanes. The indirect shuffle instruction may take the form:
shuffle_<up/dn/xor> dest src0 src1 <optional flag> where src0 stores N doublewords, src1 stores 1 doubleword, and dest stores N doublewords.

The following code sequence defines one particular implementation of the immediate shuffle instruction:

```
for (int i = 0; i < SIMD_WIDTH) {
  int8_t srcLane;
  switch(SHUFFLE_TYPE) {
  case UP:
    srcLane = i - src1;
  case DN:
    srcLane = i + src1;
```

```
  case XOR:
    srcLane = i ^ src1;
  }


  if (execMask[i]) {
    bool invalidLane = srcLane < 0 || srcLane >= SIMD_WIDTH ||
  !execMask[srcLane];


    if (FLAG) {
      invalidLane |= flag[srcLane];
    }


    if (invalidLane) {
      dst[i] = 0;
    }
    else {
      dst[i] = src0[srcLane];
    }
  }
}
```

Thus, the indirect shuffle instruction operates in a similar manner to the immediate shuffle instruction described above, but the mapping of source lanes to destination lanes is controlled by the source register src1 rather than the immediate.

**Cross Lane Min/Max Instruction**

A cross lane minimum/maximum instruction may be supported for float and integer data types. The cross lane minimum instruction may take the form lane_min dest src0 and the cross lane maximum instruction may take the form lane_max dest src0, where src0 stores N doublewords and dest stores 1 doubleword.

By way of example, the following code sequence defines one particular implementation of the cross lane minimum:

```
dst = src[0];
for (int i = 1; i < SIMD_WIDTH) {
 if (execMask[i]) {
  dst = min(dst, src[i]); } }
```

In this example, the doubleword value in data element position i of the source register is compared with the data element in the destination register and the minimum of the two values is copied to the destination register. The cross lane maximum instruction operates in substantially the same manner, the only difference being that the maximum of the data element in position i and the destination value is selected.

**Cross Lane Min/Max Index Instruction**

A cross lane minimum index instruction may take the form lane_min_index dest src0 and the cross lane maximum index instruction may take the form lane_max_index dest src0, where src0 stores N doublewords and dest stores 1 doubleword.

By way of example, the following code sequence defines one particular implementation of the cross lane minimum index instruction:

```
dst_index = 0;
tmp = src[0]

for (int i = 1; i < SIMD_WIDTH) {

  if (src[i] < tmp && execMask[i])
  {
    tmp = src[i];
    dst_index = i;

                          }
                        }
```

In this example, the destination index is incremented from 0 to SIMD width, spanning the destination register. If the execution mask bit is set, then the data element at position i in the source register is copied to a temporary storage location (tmp) and the destination index is set to data element position i.

**Cross Lane Sorting Network Instruction**

A cross-lane sorting network instruction may sort all N input elements using an N-wide (stable) sorting network, either in ascending order (sortnet_min) or in descending order (sortnet_max). The min/max versions of the instruction may take the forms sortnet_min dest src0 and sortnet_max dest src0, respectivey. In one implementation, src0 and dest store N doublewords. The min/max sorting is performed on the N doublewords of src0, and the ascending ordered elements (for min) or descending ordered elements (for max) are stored in dest in their respective sorted orders. One example of a code sequence defining the instruction is: dst = apply_N wide_sorting_network_min/max(src0).

**Cross Lane Sorting Network Index Instruction**

A cross-lane sorting network index instruction may sort all N input elements using an N-wide (stable) sorting network but returns the permute index, either in ascending order (sortnet_min) or in descending order (sortnet_max). The min/max versions of the instruction may take the forms sortnet_min_index dest src0 and sortnet_max_index dest src0 where src0 and dest each store N doublewords. One example of a code sequence defining the instruction is dst = apply_N wide_sorting_network_min/max_index(src0).

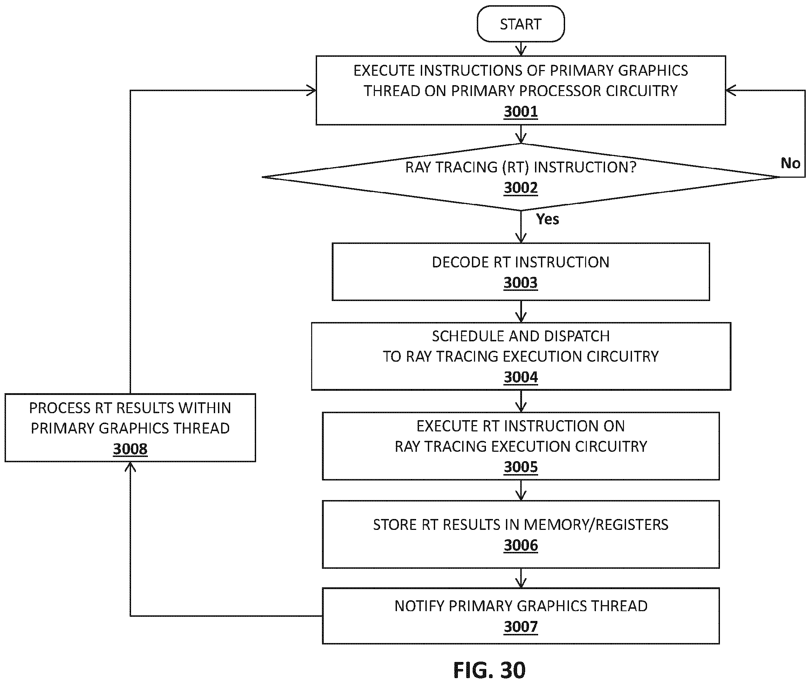

A method for executing any of the above instructions is illustrated in **Figure 30.** The method may be implemented on the specific processor architectures described above, but is not limited to any particular processor or system architecture.

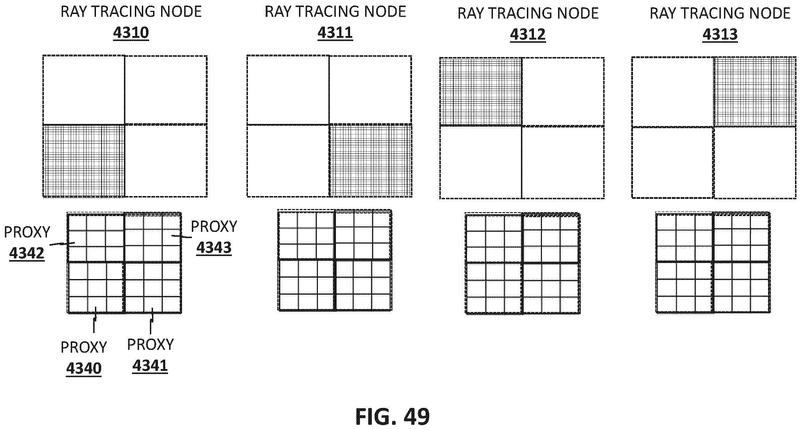

At 3001 instructions of a primary graphics thread are executed on processor cores. This may include, for example, any of the cores described above (e.g., graphics cores 1530). When ray tracing work is reached within the primary graphics thread, determined at 3002, the ray tracing instructions are offloaded to the ray tracing execution circuitry which may be in the form of a functional unit (FU) such as described above with respect to **Figure 49** or which may be in a dedicated ray tracing core 1550 as described with respect to **Figure 15.**

At 3003, the ray tracing instructions are decoded are fetched from memory and, at 3005, the instructions are decoded into executable operations (e.g., in an embodiment which requires a decoder). At 3004 the ray tracing instructions are scheduled and dispatched for execution by ray tracing circuitry. At 3005 the ray tracing instructions are executed by the ray tracing circuitry. For example, the instructions may be dispatched and executed on the FUs described above (e.g., vector FU 4910, ray tracing FU4912, etc) and/or the graphics cores 1530 or ray tracing cores 1550.

When execution is complete for a ray tracing instruction, the results are stored at 3006 (e.g., stored back to the memory 1598) and at 3007 the primary graphics thread is notified. At 3008, the ray tracing results are processed within the context of the primary thread (e.g., read from memory and integrated into graphics rendering results).

In embodiments, the term "engine" or "module" or "logic" may refer to, be part of, or include an application specific integrated circuit (ASIC), an electronic circuit, a processor (shared, dedicated, or group), and/or memory (shared, dedicated, or group) that execute one or more software or firmware programs, a combinational logic circuit, and/or other suitable components that provide the described functionality. In embodiments, an engine, module, or logic may be implemented in firmware, hardware, software, or any combination of firmware, hardware, and software.

APPARATUS AND METHOD FOR ASYNCHRONOUS RAY TRACING

Embodiments of the invention include a combination of fixed function acceleration circuitry and general purpose processing circuitry to perform ray tracing. For example, certain operations related to ray traversal of a bounding volume hierarchy (BVH) and intersection testing may be performed by the fixed function acceleration circuitry, while a plurality of execution circuits execute various forms of ray tracing shaders (e.g., any hit shaders, intersection shaders, miss shaders, etc). One embodiment includes dual high-bandwidth storage banks comprising a plurality of entries for storing rays and corresponding dual stacks for storing BVH nodes. In this embodiment, the traversal circuitry alternates between the dual ray banks and stacks to process a ray on each clock cycle. In addition, one embodiment includes priority selection circuitry/logic which distinguishes between internal nodes, non-internal nodes, and primitives and uses this information to intelligently prioritize processing of the BVH nodes and the primitives bounded by the BVH nodes.

One particular embodiment reduces the high speed memory required for traversal using a short stack to store a limited number of BVH nodes during traversal operations. This embodiment includes stack management circuitry/logic to efficiently push and pop entries to and from the short stack to ensure that the required BVH nodes are available. In addition, traversal operations are tracked by performing updates to a tracking data structure. When the traversal circuitry/logic is paused, it can consult the tracking data structure to begin traversal operations at the same location within the BVH where it left off. and the tracking data maintained in a data structure tracking is performed so that the traversal circuitry/logic can restart.

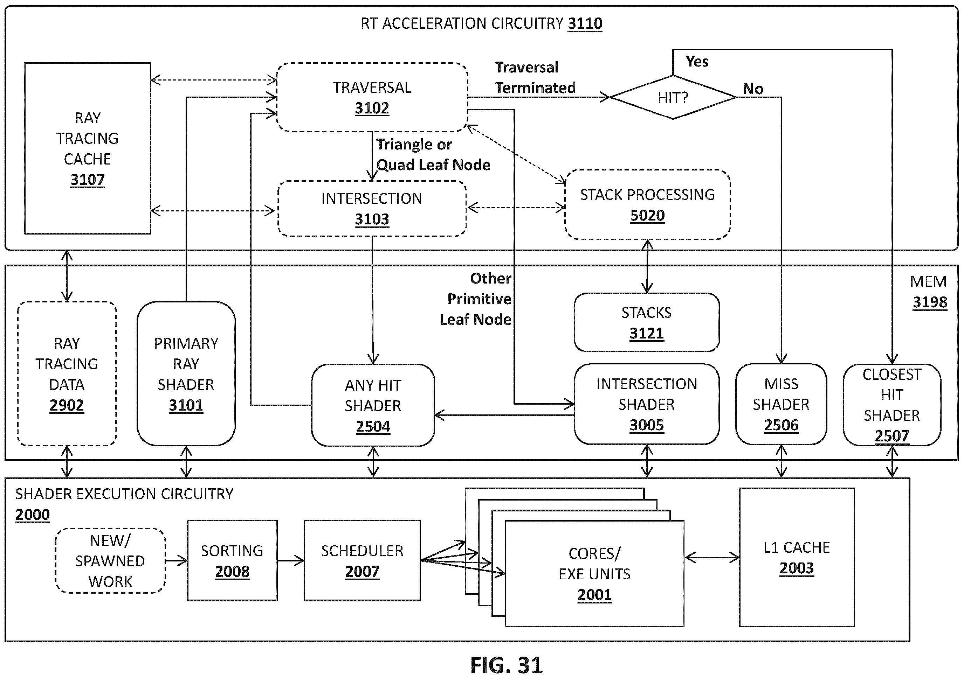

**Figure 31** illustrates one embodiment comprising shader execution circuitry 2000 for executing shader program code and processing associated ray tracing data 2902 (e.g., BVH node data and ray data), ray tracing acceleration circuitry 3110 for performing traversal and intersection operations, and a memory 1598 for storing program code and associated data processed by the RT acceleration circuitry 3110 and shader execution circuitry 2000.

In one embodiment, the shader execution circuitry 2000 includes a plurality of cores/execution units 2001 which execute shader program code to perform various forms of data-parallel operations. For example, in one embodiment, the cores/execution units 2001 can execute a single instruction across multiple lanes, where each instance of the instruction operates on data stored in a different lane. In a SIMT implementation, for example, each instance of the instruction is associated with a different thread. During execution, an L1 cache stores certain ray tracing data for efficient access (e.g., recently or frequently accessed data).

A set of primary rays may be dispatched to the scheduler 2007, which schedules work to shaders executed by the cores/EUs 2001. The cores/EUs 2001 may be ray tracing cores 1550, graphics cores 1530, CPU cores 1599 or other types of circuitry capable of executing shader program code. One or more primary ray shaders 3101 process the primary rays and spawn additional work to be performed by ray tracing acceleration circuitry 3110 and/or the cores/EUs 2001 (e.g., to be executed by one or more child shaders). New work spawned by the primary ray shader 3101 or other shaders executed by the cores/EUs 2001 may be distributed to sorting circuitry 2008 which sorts the rays into groups or bins as described herein (e.g., grouping rays with similar characteristics). The scheduler 2007 then schedules the new work on the cores/EUs 2001.

Other shaders which may be executed include any hit shaders 2514 and closest hit shaders 2507 which process hit results as described above (e.g., identifying any hit or the closest hit for a given ray, respectively). A miss shader 2506 processes ray misses (e.g., where a ray does not intersect the node/primitive). As mentioned, the various shaders can be referenced using a shader record which may include one or more pointers, vendor-specific metadata, and global arguments. In one embodiment, shader records are identified by shader record identifiers (SRI). In one embodiment, each executing instance of a shader is associated with a call stack 5203 which stores arguments passed between a parent shader and child shader. Call stacks 3121 may also store references to continuation functions that are executed when a call returns.

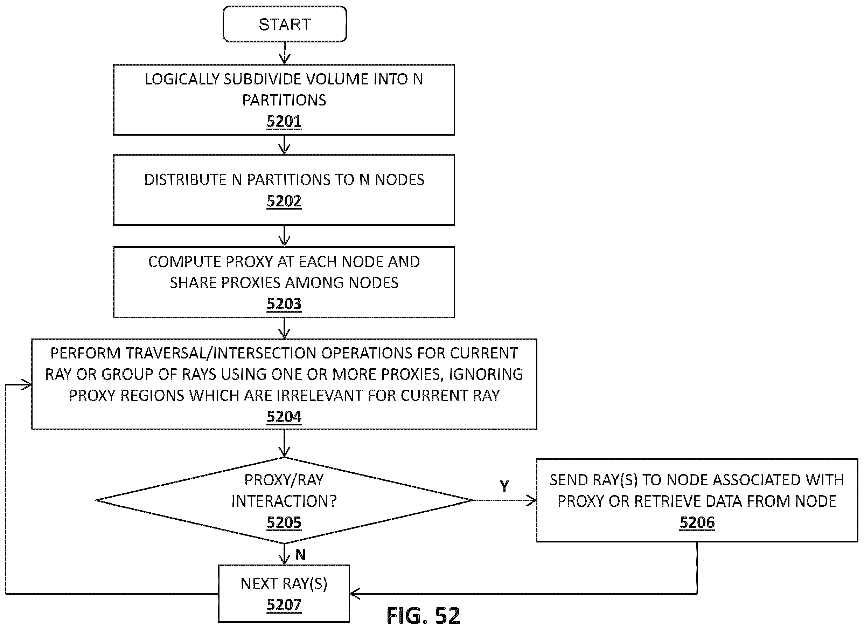

Ray traversal circuitry 3102 traverses each ray through nodes of a BVH, working down the hierarchy of the BVH (e.g., through parent nodes, child nodes, and leaf nodes) to identify nodes/primitives traversed by the ray. Ray-BVH intersection circuitry 3103 performs intersection testing of rays, determining hit points on primitives, and generates results in response to the hits. The traversal circuitry 3102 and intersection circuitry 3103 may retrieve work from the one or more call stacks 3121. Within the ray tracing acceleration circuitry 3110, call stacks 3121 and associated ray tracing data 2902 may be stored within a local ray tracing cache (RTC) 3107 or other local storage device for efficient access by the traversal circuitry 3102 and intersection circuitry 3103. One particular embodiment described below includes high-bandwidth ray banks (see, e.g., Figure 52A).

The ray tracing acceleration circuitry 3110 may be a variant of the various traversal/intersection circuits described herein including ray-BVH traversal/intersection circuit 2005, traversal circuit 2502 and intersection circuit 2503, and ray tracing cores 1550. The ray tracing acceleration circuitry 3110 may be used in place of the ray-BVH traversal/intersection circuit 2005, traversal circuit 2502 and intersection circuit 2503, and ray tracing cores 1550 or any other circuitry/logic for processing BVH stacks and/or performing traversal/intersection. Therefore, the disclosure of any features in combination with the ray-BVH traversal/intersection circuit 2005, traversal circuit 2502 and intersection circuit 2503, and ray tracing cores 1550 described herein also discloses a corresponding combination with the ray tracing acceleration circuitry 3110, but is not limited to such.

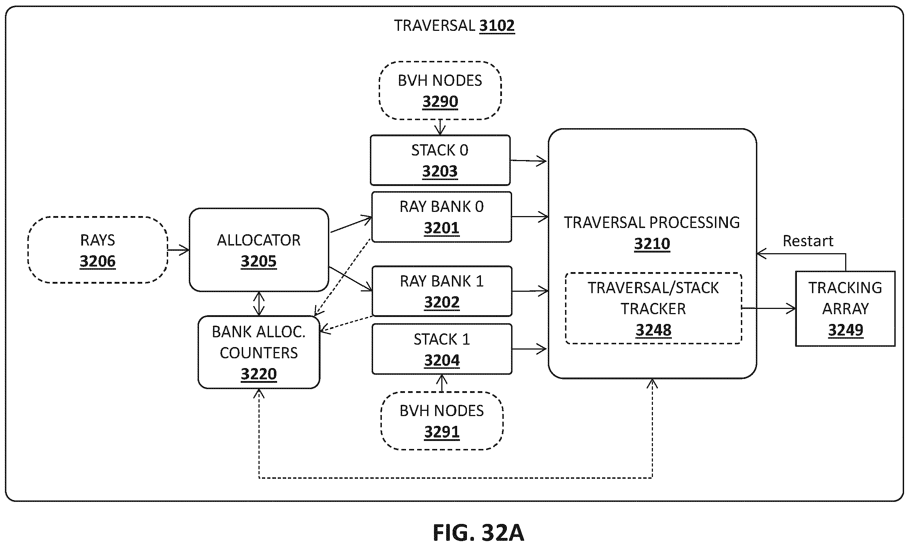

Referring to **Figure 32A,** one embodiment of the ray traversal circuitry 3102 includes first and second ray storage banks, 3201 and 3202, respectively, where each bank comprises a plurality of entries for storing a corresponding plurality of incoming rays 3206 loaded from memory. Corresponding first and second stacks, 3203 and 3204, respectively, comprise selected BVH node data 3290-3291 read from memory and stored locally for processing. As described herein, in one embodiment, the stacks 3203-3204 are "short" stacks comprising a limited number of entries for storing BVH node data (e.g., six entries in one embodiment). While illustrated separately from the ray banks 3201-3202, the stacks 3203-3204 may also be maintained within the corresponding ray banks 3201-3202. Alternatively, the stacks 3203-3204 may be stored in a separate local memory or cache.

One embodiment of the traversal processing circuitry 3210 alternates between the two banks 3201-3202 and stacks 3203-3204 when selecting the next ray and node to process (e.g., in a ping-pong manner). For example, the traversal processing circuitry 3210 may select a new ray/BVH node from an alternate ray bank/stack on each clock cycle, thereby ensuring highly efficient operation. It should be noted, however, this specific arrangement is not necessary for complying with the underlying principles of the invention.

In one embodiment, a ray allocator 3205 balances the entry of incoming rays 3206 into the first and second memory banks 3201-3202, respectively, based on current relative values of a set of bank allocation counters 3220. In one embodiment, the bank allocation counters 3220 maintain a count of the number of untraversed rays in each of the first and second memory banks 3201-3202. For example, a first bank allocation counter may be incremented when the ray allocator 3205 adds a new ray to the first bank 3201 and decremented when a ray is processed from the first bank 3201. Similarly, the second bank allocation counter may be incremented when the ray allocator 3205 adds a new ray to the second bank 3201 and decremented when a ray is processed from the second bank 3201.

In one embodiment, the ray allocator 3205 allocates the current ray to a bank associated with the smaller counter value. If the two counters are equal, the ray allocator 3205 may select either bank or may select a different bank from the one selected the last time the counters were equal. In one embodiment, each ray is stored in one entry of one of the banks 3201-3202 and each bank comprises 32 entries for storing up to 32 rays. However, the underlying principles of the invention are not limited to these details.

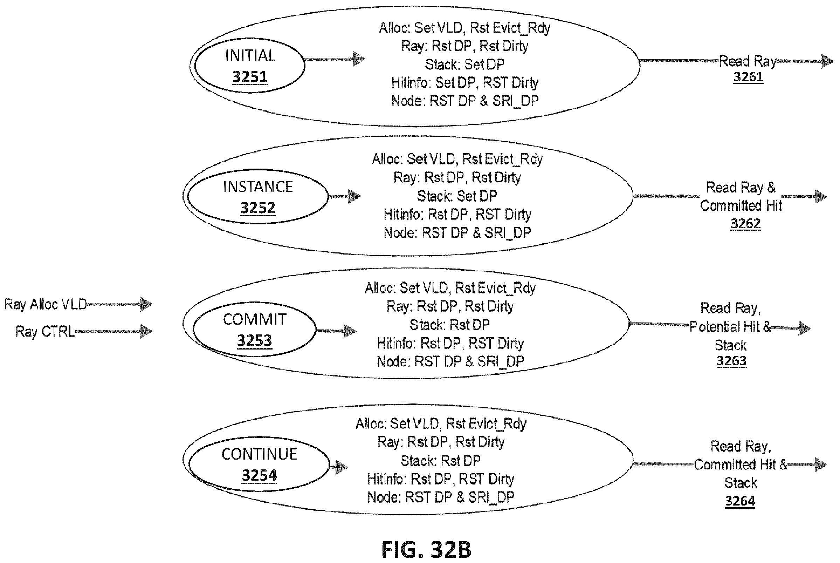

**Figure 32B** illustrates four processes 3251-3254 executed in one embodiment to manage the ray storage banks 3201-3202 and stacks 3203-3204. In one embodiment, the four processes 3251-3254 are different implementations or configurations of a common set of program code (sometimes referred to herein as "TraceRay"). The Initial process 3251 may be executed to read the ray 3261 and perform a new top-down traversal of a BVH, starting from the root node. The Alloc function modifies control bits and launches corresponding read requests to the ray tracing stack. In particular, to allocate the new entry, Alloc sets the valid (VLD) bit and resets the evict ready (Evict_Rdy) bit. In the bank entry for the ray, the data present (DP) bit and the dirty bit are reset. The DP bit in the corresponding stack entry is set. For the corresponding Hitinfo, the DP bit is set and the dirty bit is reset. The DP bit and the shader record identifier (SRI) DP bit associated with the node data are reset.

The instance process 3252 performs traversal within one of the nodes of the BVH (other than the root node) and reads the ray and prior committed hit 3262. In one embodiment, when one of the hit shaders identifies a hit between the ray and a primitive, then the commit process 3253 is executed to commit results, reading the ray, the potential hit, and the stack 3263. Alternatively, the continue process 3254 is executed to continue traversal of the ray, reading the ray, the committed hit, and the stack 3264.

In various circumstances, the traversal circuitry 3102 must pause traversal operations and save the current ray and associated BVH nodes, such as when a shader is required to perform a sequence of operations. For example, if a non-opaque object is hit or a procedural texture, the traversal circuitry 3102 saves the stack 3203-3204 to memory and executes the required shader. Once the shader has completed processing the hit (or other data), the traversal circuitry 3102 restores the state of the ray banks 3201-3202 and stacks 3203-3204 from memory.

In one embodiment, a traversal/stack tracker 3248 continually monitors traversal and stack operations and stores restart data in a tracking array 3249. For example, if the traversal circuitry 3102 has already traversed nodes N, N0, N1, N2, and N00, and generated results, then the traversal/stack tracker 3248 will update the tracking array to indicate that traversal of these nodes has completed and/or to indicate the next node to be processed from the stack. When the traversal circuitry 3102 is restarted, it reads the restart data from the tracking array 3249 so that it may restart traversal at the correct stage, without re-traversing any of the BVH nodes (and wasting cycles). The restart data stored in the tracking array 3249 is sometimes referred to as the "restart trail" or "RST."

As indicated in **Figure 32B,** the various TraceRay processes 3251-3254 manage allocation into and out of the ray storage banks 3201-3202 via one or more functions. As illustrated for the initial process 3251, an Alloc function sets the valid bit (VLD) in a storage bank entry (indicating that the entry now contains a valid ray) and resets (Rst) the eviction ready flag (indicating that the ray data should not be evicted). The Ray function stores the ray in the selected entry and resets the data present (DP) bit (indicating that ray data is stored in the entry) and the dirty bit (indicating that the data has not been modified). Upon reading the ray from the storage bank, the Stack function sets the DP bit and retrieves the relevant BVH node from the stack (e.g., the root node in the case of the initial process 3251 and another node in the case of the instance process 3252). The HitInfo function resets the dirty bit and sets the DP bit for the initial function 3251 or resets it for all other functions. In one embodiment, Hitinfo produces data reflecting a ray hit. The Node function resets the DP bit and the SRI (shader record identifier) DP which is the DP for Shader Record Identifier. One embodiment performs a Kernel Start Pointer (KSP) lookup to ensure that KSP is not equal to zero. If it is, then different handling is implemented for non-opaque Quads.

In one embodiment, once a ray entry has been allocated in one of the storage banks 3201-3202 a fetch is performed to retrieve the node data (and potentially other data) from the stack associated with the ray. In one embodiment, a stack is maintained for each ray, comprising the working set of data for the current node through which the ray is traversed.

When moving to the next level in the BVH (e.g., upon determining that the ray intersects a parent node), the child nodes are sorted and pushed on the stack 3203-3204. The child nodes are popped off the stack sequentially and processed individually to identify child nodes which the ray traverses (traversal "hits"). In one embodiment, the stack is stored out to memory or a local cache/storage whenever there is a handoff between the RT acceleration circuitry 3110 and the shaders 2504, 2506, 2507, 3101, 3105.

When a leaf node comprising a quad or triangle (or other primitive type) is identified by the traversal circuitry 3102, it passes this information to the intersection circuitry 3103 which performs an intersection test on the quad or triangle, respectively. If the primitive is not a quad or triangle then, in one implementation, the traversal circuitry terminates traversal and passes control back to the closest hit shader 2507 (if a hit is detected) or the miss shader 2506 (if no hit is detected). In an implementation in which the intersection circuitry 3103 is designed to perform intersections for a variety of primitives in addition to quads and triangles (e.g., lines, arcs, circles, etc), then the traversal circuitry 3102 will forward leaf nodes for these primitives to the intersection circuitry 3103.

In one embodiment, when a hardware or software component generates a read request to memory 1598 or cache, a 16-bit tag is used to provide information about the data type and requestor. For example, a two-bit code may specify whether the request is for a ray, stack data, hit data, node data from the BVH, or any other type of data. When the ray, stack, and Hitinfo has been returned from memory, the ray is traversed through one or more BVH nodes and intersection testing is performed as described above.

One or more stacks 3203-3204 and rays 3206 are loaded from memory at different processing stages. For example, the initial process 3251 and/or instance process 3252 may require a new BVH to be loaded for traversal. In these circumstances, the stack 3203-3204 may be initialized to the top node (or "root" node) of the BVH. For a ray continuation 3254 within a BVH, the stack 3203-3204 may be loaded from memory and expanded. Once the stack 3203-3204 has been prepared, node data is fetched from the stack (an operation sometimes referred to below as Proc_Node_Fetch).

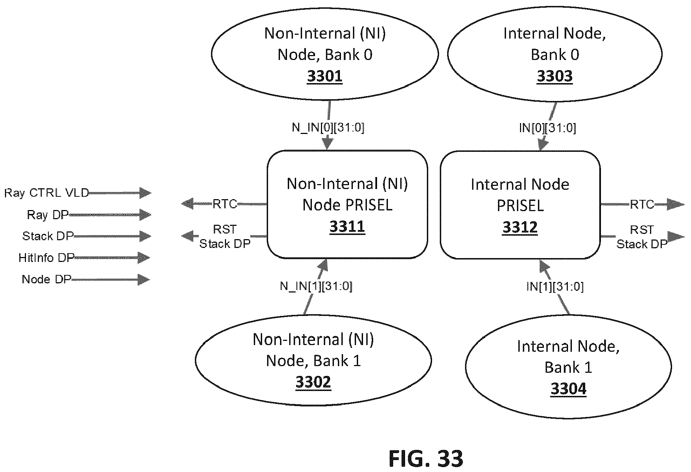

In one embodiment, node data is fetched by launching parallel requests for two non-internal (NI) nodes and two internal nodes. **Figure 33** illustrates one such embodiment in which NI node priority selection logic (PRISEL) 3311 requests dual NI nodes: a first NI node 3301 from Bank 0 and a second NI node 3302 from Bank 1. Concurrently, Internal Node PRISEL logic 3312 requests dual internal nodes: a first node 3303 from Bank 0 and a second node 3304 from Bank 1.

In one embodiment, NI node priority selection logic (PRISEL) 3311 prioritizes one of the first NI node 3301 and second NI node 3302, storing the prioritized result in the ray tracing cache (RTC). Similarly, Internal Node PRISEL logic 3312 requests dual internal nodes, and selects a prioritized result from a first internal node 3303 and a second internal node 3304.

Each instance of the priority selection logic 3311-3312 prioritizes one of the non-internal BVH nodes 3301-3302 and one of the internal BVH nodes 3303-3304 from a different bank if possible. In one embodiment, only one request is selected from each bank (e.g., one of requests 3302 and 3304 and one of requests 3301 and 3303). The launch of these requests may also reset the stack data present (DP) bit, as indicated, so that this entry is not retrieved in response to a node fetch operation. In one embodiment, for the instance fetch operation, the ray's data present (DP) bit is reset when the instance request is sent, and finally set when the ray is transformed after the node fetch.

In one embodiment, node_info is written at the launch of reads and the address/tag is calculated as follows for the reads requests:

i. rtt_rtc_rd_addr[47:6] = rt_ray.rt_ray_ctrl.root_node_ptr[47:6] + curr_stack.child_offset; (Note: The Child offset on the node is always with respect to Current BVH Root Node)
ii. rtt_rtc_rd_tag[6:0] = {RTT_INST, rtt_alloc_entry[5:0]};
iii. node.node_info = curr_stack.node_info.

In one embodiment, the node data returned will set the DP bit for the node and the stack.

The following cases can be distinguished based on the read tag:

A. <u>Internal Node</u>: This will write to the node

B. <u>Instance</u>: This will update the rt_ray.rt_ray_ctrl for next level BVH (1) and write the Node Structure.

i. root_node_ptr = node_return.StartNodePtr
ii. hitgrp_srbase_ptr = rt_ray_ctrl.hitgrp_srbase_ptr + rt_ray_ctrl.srstride*node_return.instancecontributiontohitgrpindex
iii. hitgrp_sr_stride = rt_ray_ctrl.srstride* rt_ray_ctrl.shade_indx_mult
iv. inst_leaf_ptr = rt_ray.rt_ray_ctrl.root_node_ptr + stack.current_node.child_offset → Just Logical view, grab and store the node fetch address during Instance Node fetch request itself
v. {miss_sr_ptr, shader_indx_mult, mask} = {rt_ray[0].rt_ray_ctrl.miss_sr_ptr, rt_ray[0].rt_ray_ctrl.shader_indx_mult, rt_ray[0].rt_ray_ctrl.mask} □ Preserve BVH[0]
vi. flag[0] = rt_ray[0].rt_ray_ctrl.flag[0] | (~rt_ray[0].rt_ray_ctrl.flag[1] & Node_Return.flag[2]); → Either Preserve Opaque via Ray or Via Instance Flag (only if Ray Flag is not Force Non-Opaque)
vii. flag[1] = (rt_ray[0].rt_ray_ctrl.flag[1]) | (~rt_ray[0].rt_ray_ctrl.flag[0] & Node_Return.flag[3]); → Either Preserve Non Opaque via Ray or Via Instance Flag (only if Ray Flag is not Force Opaque)
viii. flag[3:2] = rt_ray[0].rt_ray_ctrl.flag[3:2]; → (Accept FIRST HIT and end Search or Skip Closest Hit Shader) Preserve BVH[0]
ix. flag[5:4] = Node_Return.flag[0] ? 2'd0: rt_ray[0].rt_ray_ctrl.flag[5:4]; → Triangle Culling is disabled VIA Instance
x. flag[8:6] = rt_ray[0].rt_ray_ctrl.flag[8:6]; → (Disable intersection shader, Cull Opaque or Cull Non-Opaque ) Preserve BVH[0]
xi. node.node_ctrl = Not Needed for instance
xii. node.node_data = {'0, node_rtn.obj2world_p, world2obj_vzyx};

C. <u>Quad</u>: This will update the node as follows

i. node.node_ctrl = {node_rtn.leafDesc.last, node_rtn.leafDesc.PrimIndex1Delta[15:0], node_rtn.leafDesc.PrimIndex0[31:0], node_rtn.shader_indx};
ii. node.node_data = {'0, Quad_mode, J[2:0], V[3:0]}; → Quad_mode = node_rtn.leafDesc.PrimIndexlDelta[15:0] != '0;

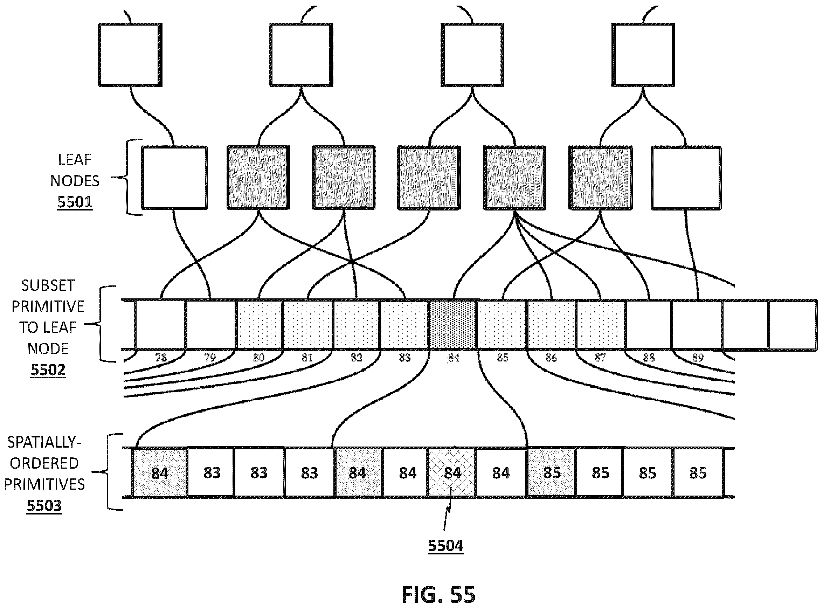

Based on the ray flag, instance flag, and the geometry flag, the opaque/non-opaque handling table shown in **Figure 55A** indicates the resulting flag to be used when the node data is fetched (opaque or non-opaque). As indicated in the table, ray flags always take precedence. Additionally, some of the states are mutually exclusive. In one embodiment, these are handled in hardware with the priority of exclusive bits. In one implementation, if cull_opaque and force_opaque are both set, the associated geometry will automatically be culled.
opaque = rt_ray.rt_ray_ctrl.flag[0] | quad.flag[0]; (Note the Ray Stored per BVH Level is already accounting for the instance Flags) nopaque = rt_ray.rt_ray_ctrl.flag[1] | ~ quad.flag[0].

APPARATUS AND METHOD FOR HIGH QUALITY

RAY-TRACED LEVEL OF DETAIL TRANSITIONS

On graphics processing architectures, the "level-of-detail" (LOD) can refer to the selection of mesh resolutions based on variables such as distance from the camera. LOD techniques are used to reduce memory consumption and improve graphics processing functions such as geometric aliasing in games. For example, the details of a high resolution mesh may not be required when the mesh is far away from the current perspective of the user.

In rasterization-based implementations, smooth transitions between LODs are enabled using "stochastic LOD" techniques such as described in Lloyd et al, Implementing Stochastic Levels of Detail with Microsoft DirectX Raytracing (June 15, 2020). Without these stochastic techniques, the transition between LODs can result in distracting artifacts where objects suddenly change in appearance when a new LOD is selected. Using stochastic LODs, a cross-dissolve between LOD levels is performed through a random assignment of pixels to one of the LODs involved in the transition (e.g., either the higher resolution or lower resolution LOD).

The above solution uses a binary mask and a binary comparison value to achieve eight transitional steps for stochastic LOD transitions when fading from a first LOD ("LOD0") to a second LOD ("LOD1"). In this implementation, an 8-bit ray mask and an 8-bit instance mask are logically ANDed to determine if an instance needs to be traversed. These 8-bit masks and the associated bit-wise logic operations result in limited LOD transition capabilities. For example, when transitioning between LODO and LOD1 of an object, where LODO has a fractional value of 0.25 and LOD1 has a fractional value of 0.75 (based on camera distance), the mask for the instance would be set to LODO to enable only 2 random bits (0.25 of 8 bits). The instance mask for LOD1 would be set to the binary complement of the mask of LODO, with 6 bits enabled. For any given ray, one random bit is selected in the ray-mask to achieve a random selection of either LODO (with a probability of 0.25) and LOD1 (with a probability of 0.75). However, because only one of eight bits is selected, there are only 8 intermediate steps for transitioning between LODO and LOD1.

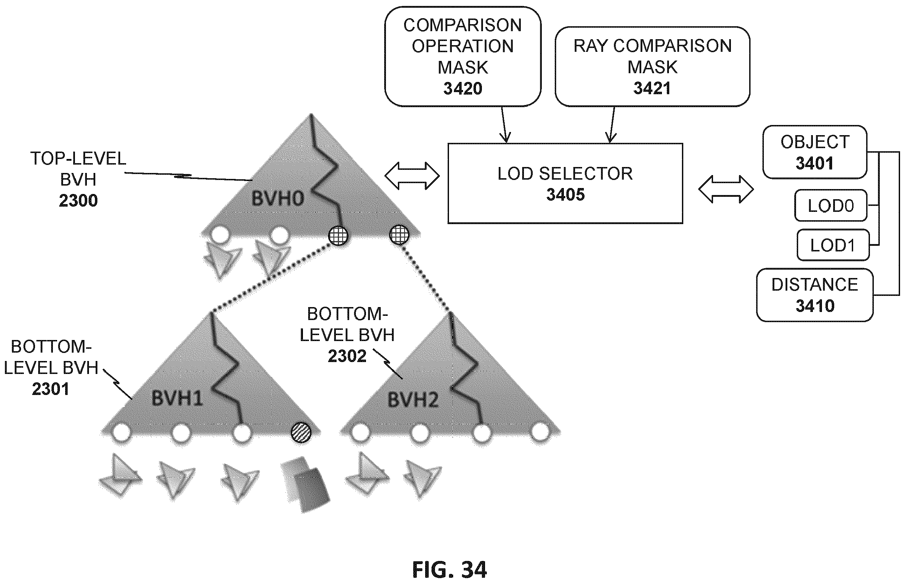

As shown in **Figure 34,** in one embodiment of the invention, an LOD selector 3405 is provided with an N-bit comparison operation mask 3420 which is treated as a binary value to determine a comparison operation to be performed. The selected comparison operation is used to compare against the reference to allow for more transitional LOD steps. In one embodiment, the comparison operation is selected from less-than-or-equal-to (less_equal) and greater-than (greater), although the underlying principles of the invention are not limited to these specific comparison operations. In one implementation, 8-bits are used (N=8) where 7 of the bits define an unsigned integer value in the range of [0..127], enabling 128 transitional steps for LOD cross-fading and 1 bit indicates the comparison operation (e.g., if set to 0, then a less_equal operation is performed and if set to 1, the greater operation is performed). In one embodiment, a ray comparison mask 3421 may also be provided to the LOD selector 3405 in the range [0..127] as an additional ray parameter.

The following code sequence highlights how ray traversal reacts to this new comparison mask, in one embodiment:

```
if( ray.InstanceMask & instance.InstanceMask )
{if(
    ( instance.ComparisonMode == less_equal &&
    instance.ComparisonMask <= ray.ComparisonMask ) ||
    ( instance.ComparisonMode == greater && instance.ComparisonMask
    > ray.ComparisonMask )
    )
    {
    traverseInstance(Instance); }
}
```

In the above code sequence, the first IF statement tests whether the binary masks allow traversal into the current instance. If so, the second IF statement then tests the comparison mode setting in view of the values for the instance comparison mask (e.g., comparison operation mask 3420) and ray comparison mask 3421.

Returning to the above LOD transition example, for the instance of LODO with a fractional value of 0.25, the first 7 bits are set to a value of 31 (=int(0.25*127)), and the last bit is set to 0 (indicating the less_equal operation). For the instance of LOD1 with a fractional value of 0.75, the first 7 bits are set to value of 31 (=int((1.0-0.75)*127)), and the last bit is set to 1 (indicating the greater operation). Thus, for this implementation, if a uniformly distributed random number is generated in the range [0 .. 127] as a ray comparison mask, there are up to 127 transitional steps which may be selected by LOD selector 3405 for transitioning between LODO and LOD1.

While the specific details set forth above are used for the purpose of explanation, the underlying principles of the invention may be implemented with other details. For example, other comparison operators may be used in place of, or in addition to less_equal and greater. For example, comparison operators such as not_equal, equal, less and greater_equal (greater than or equal to) may also be used. One implementation includes a ray flag and an instance flag that disables ANDed ray masks and enables the use of these bits as comparison masks.

Embodiments of the invention include a combination of fixed function acceleration circuitry and general purpose processing circuitry to perform ray tracing. For example, certain operations related to ray traversal of a bounding volume hierarchy (BVH) and intersection testing may be performed by the fixed function acceleration circuitry, while a plurality of execution circuits execute various forms of ray tracing shaders (e.g., any hit shaders, intersection shaders, miss shaders, etc). One embodiment includes dual high-bandwidth storage banks comprising a plurality of entries for storing rays and corresponding dual stacks for storing BVH nodes. In this embodiment, the traversal circuitry alternates between the dual ray banks and stacks to process a ray on each clock cycle. In addition, one embodiment includes priority selection circuitry/logic which distinguishes between internal nodes, non-internal nodes, and primitives and uses this information to intelligently prioritize processing of the BVH nodes and the primitives bounded by the BVH nodes.

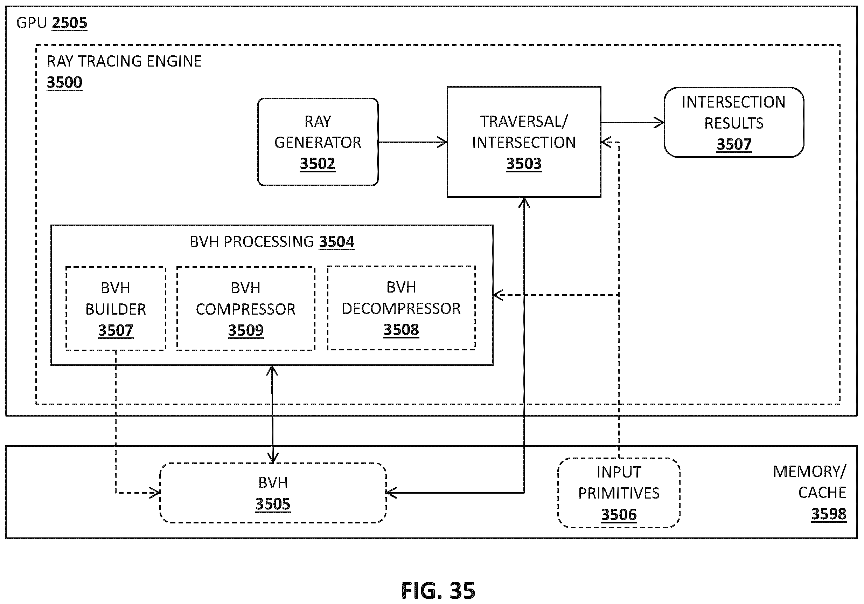

**Figure 35** illustrates an exemplary ray tracing engine 3500 which performs the leaf node compression and decompression operations described herein. In one embodiment, the ray tracing engine 3500 comprises circuitry of one or more of the ray tracing cores described above. Alternatively, the ray tracing engine 3500 may be implemented on the cores of the CPU or on other types of graphics cores (e.g., Gfx cores, tensor cores, etc).

In one embodiment, a ray generator 3502 generates rays which a traversal/intersection unit 3503 traces through a scene comprising a plurality of input primitives 3506. For example, an app such as a virtual reality game may generate streams of commands from which the input primitives 3506 are generated. The traversal/intersection unit 3503 traverses the rays through a BVH 3505 generated by a BVH builder 3507 and identifies hit points where the rays intersect one or more of the primitives 3506. Although illustrated as a single unit, the traversal/intersection unit 3503 may comprise a traversal unit coupled to a distinct intersection unit. These units may be implemented in circuitry, software/commands executed by the GPU or CPU, or any combination thereof.

In one embodiment, BVH processing circuitry/logic 3504 includes a BVH builder 3507 which generates the BVH 3505 as described herein, based on the spatial relationships between primitives 3506 in the scene. In addition, the BVH processing circuitry/logic 3504 includes BVH compressor 3509 and a BVH decompressor 3509 for compressing and decompressing the leaf nodes, respectively, as described herein. The following description will focus on 8-wide BVHs (BVH8) for the purpose of illustration.

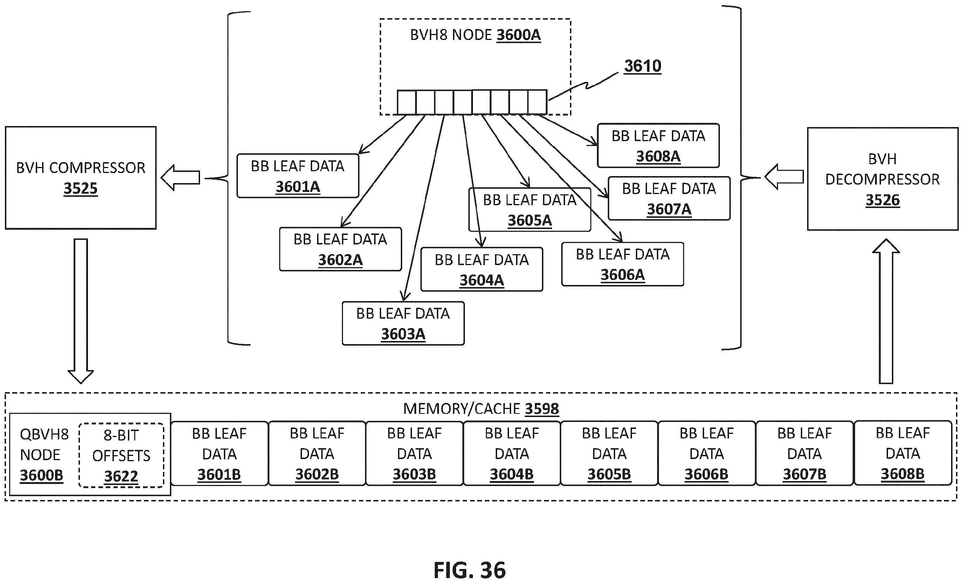

As illustrated in **Figure 36,** one embodiment of a single 8-wide BVH node 3600A contains 8 bounding boxes 3601-3608 and 8 (64bit) child pointers/references 3610 pointing to the bounding boxes/leaf data 3601-3608. In one embodiment, BVH compressor 3525 performs an encoding in which the 8 child bounding boxes 3601A-3608A are expressed relative to the parent bounding box 3600A, and quantized to 8-bit uniform values, shown as bounding box leaf data 3601B-3608B. The quantized 8-wide BVH, QBVH8 node 3600B, is encoded by BVH compression 3625 using a start and extent value, stored as two 3-dimensional single precision vectors ($2 \times 12$ bytes). The eight quantized child bounding boxes 3601B-3608B are stored as 2 times 8 bytes for the bounding boxes' lower and upper bounds per dimension (48 bytes total). Note this layout differs from existing implementations as the extent is stored in full precision, which in general provides tighter bounds but requires more space.

In one embodiment, BVH decompressor 3526 decompresses the QBVH8 node 3600B as follows. The decompressed lower bounds in dimension $i$ can be computed by $QBVH8.start_i + (\text{byte-to-float}) QBVH8.lower_i * QBVH8.extend_i$, which on the CPU 2099 requires five instructions per dimension and box: 2 loads (start,extend), byte-to-int load + upconversion, int-to-float conversion, and one multiply-add. In one embodiment, the decompression is done for all 8 quantized child bounding boxes 3601B-3608B in parallel using SIMD instructions, which adds an overhead of around 10 instructions to the ray-node intersection test, making it at least more than twice as expensive than in the standard uncompressed node case. In one embodiment, these instructions are executed on the cores of the CPU 2099. Alternatively, the a comparable set of instructions are executed by the ray tracing cores 2050.

Without pointers, a QBVH8 node requires 72 bytes while an uncompressed BVH8 node requires 192 bytes, which results in reduction factor of 2.66x. With 8 (64bit) pointers the reduction factor reduces to 1.88x, which makes it necessary to address the storage costs for handling leaf pointers.

In one embodiment, when compressing only the leaf layer of the BVH8 nodes into QBVH8 nodes, all children pointers of the 8 children 3601-3608 will only refer to leaf primitive data. In one implementation, this fact is exploited by storing all referenced primitive data directly after the QBVH8 node 3600B itself, as illustrated in **Figure 36.** This allows for reducing the QBVH8's full 64bit child pointers 3610 to just 8-bit offsets 3622. In one embodiment, if the primitive data is a fixed sized, the offsets 3622 are skipped completely as they can be directly computed from the index of the intersected bounding box and the pointer to the QBVH8 node 3600B itself.

When using a top-down BVH8 builder, compressing just the BVH8 leaf-level requires only slight modifications to the build process. In one embodiment these build modifications are implemented in the BVH builder 3507. During the recursive build phase the BVH builder 3507 tracks whether the current number of primitives is below a certain threshold. In one implementation $N \times M$ is the threshold where N refers to the width of the BVH, and M is the number of primitives within a BVH leaf. For a BVH8 node and, for example, four triangles per leaf, the threshold is 32. Hence for all sub-trees with less than 32 primitives, the BVH processing circuitry/logic 3504 will enter a special code path, where it will continue the surface area heuristic (SAH)-based splitting process but creates a single QBVH8 node 3600B. When the QBVH8 node 3600B is finally created, the BVH compressor 3509 then gathers all referenced primitive data and copies it right behind the QBVH8 node.

The actual BVH8 traversal performed by the ray tracing core 3650 or CPU 3699 is only slightly affected by the leaf-level compression. Essentially the leaf-level QBVH8 node 3600B is treated as an extended leaf type (e.g., it is marked as a leaf). This means the regular BVH8 top-down traversal continues until a QBVH node 3600B is reached. At this point, a single ray-QBVH node intersection is executed and for all of its intersected children 3601B-3608B, the respective leaf pointer is reconstructed and regular ray-primitive intersections are executed. Interestingly, ordering of the QBVH's intersected children 3601B-3608B based on intersection distance may not provide any measurable benefit as in the majority of cases only a single child is intersected by the ray anyway.

One embodiment of the leaf-level compression scheme allows even for lossless compression of the actual primitive leaf data by extracting common features. For example, triangles within a compressed-leaf BVH (CLBVH) node are very likely to share vertices/vertex indices and properties like the same objectID. By storing these shared properties only once per CLBVH node and using small local byte-sized indices in the primitives the memory consumption is reduced further.

In one embodiment, the techniques for leveraging common spatially-coherent geometric features within a BVH leaf are used for other more complex primitive types as well. Primitives such as hair segments are likely to share a common direction per-BVH leaf. In one embodiment, the BVH compressor 3509 implements a compression-scheme which takes this common direction property into account to efficiently compress oriented bounding boxes (OBBs) which have been shown to be very useful for bounding long diagonal primitive types.

The leaf-level compressed BVHs described herein introduce BVH node quantization only at the lowest BVH level and therefore allow for additional memory reduction optimizations while preserving the traversal performance of an uncompressed BVH. As only BVH nodes at the lowest level are quantized, all of its children point to leaf data 3601B-3608B which may be stored contiguously in a block of memory or one or more cache line(s) 3598.

The idea can also be applied to hierarchies that use oriented bounding boxes (OBB) which are typically used to speed up rendering of hair primitives. In order to illustrate one particular embodiment, the memory reductions in a typical case of a standard 8-wide BVH over triangles will be evaluated.

The layout of an 8-wide BVH node 3600 is represented in the following core sequence:

```
struct BVH8Node {
    float lowerX[8], upperX[8];
    // 8 × lower and upper bounds in the X dimension
    float lowerY[8], upperY[8];
    // 8 × lower and upper bounds in the Y dimension
    float lowerZ[8], upperZ[8];
    // 8 × lower and upper bounds in the Z dimension
    void *ptr[8];
    // 8 × 64bit pointers to the 8 child nodes or leaf data };
```

and requires 276 bytes of memory. The layout of a standard 8-wide quantized Node may be defined as:

```
struct QBVH8Node {
    Vec3f start, scale;
    char lowerX[8], upperX[8];
    // 8 × byte quantized lower/upper bounds in the X dimension
    char lowerY[8], upperY[8];
    // 8 × byte quantized lower/upper bounds in the Y dimension
    char lowerZ[8], upperZ[8];
    // 8 × byte quantized lower/upper bounds in the Z dimension
    void *ptr[8];
    // 8 × 64bit pointers to the 8 child nodes or leaf data };
```

and requires 136 bytes.

Because only quantized BVH nodes are used at the leaf level, all children pointers will actually point to leaf data 3601A-3608A. In one embodiment, by storing the quantized node 3600B and all leaf data 3601B-3608B its children point to in a single continuous block of memory 3598, the 8 child pointers in the quantized BVH node 3600B are removed. Saving the child pointers reduces the quantized node layout to:

```
struct QBVH8NodeLeaf {
Vec3f start, scale;
    // start position, extend vector of the parent AABB
    char lowerX[8], upperX[8];
    // 8 X byte quantized lower and upper bounds in the X dimension
    char lowerY[8], upperY[8];
    // 8 X byte quantized lower and upper bounds in the Y dimension
    char lowerZ[8], upperZ[8];
    // 8 X byte quantized lower and upper bounds in the Z dimension };
```

which requires just 72 bytes. Due to the continuous layout in the memory/cache 3598, the child pointer of the i-th child can now be simply computed by: childPtr(i) = addr(QBVH8NodeLeaf) + sizeof(QBVH8NodeLeaf) + i * sizeof(LeafDataType).

As the nodes at lowest level of the BVH makes up for more than half of the entire size of the BVH, the leaf-level only compression described herein provide a reduction to 0.5 + 0.5 * 72/256 = .64x of the original size.

In addition, the overhead of having coarser bounds and the cost of decompressing quantized BVH nodes itself only occurs at the BVH leaf level (in contrast to all levels when the entire BVH is quantized). Thus, the often quite significant traversal and intersection overhead due to coarser bounds (introduced by quantization) is largely avoided.

Another benefit of the embodiments of the invention is improved hardware and software prefetching efficiency. This results from the fact that all leaf data is stored in a relatively small continuous block of memory or cache line(s).

Because the geometry at the BVH leaf level is spatially coherent, it is very likely that all primitives which are referenced by a QBVH8NodeLeaf node share common properties/features such as objectID, one or more vertices, etc. Consequently, one embodiment of the invention further reduces storage by removing primitive data duplication. For example, a primitive and associated data may be stored only once per QBVH8NodeLeaf node, thereby reducing memory consumption for leaf data further.

The effective bounding of hair primitives is described below as one example of significant memory reductions realized by exploiting common geometry properties at the BVH leaf level. To accurately bound a hair primitive, which is a long but thin structure oriented in space, a well-known approach is to calculate an oriented bounding box to tightly bound the geometry. First a coordinate space is calculated which is aligned to the hair direction. For example, the z-axis may be determined to point into the hair direction, while the x and y axes are perpendicular to the z-axis. Using this oriented space a standard AABB can now be used to tightly bound the hair primitive. Intersecting a ray with such an oriented bound requires first transforming the ray into the oriented space and then performing a standard ray/box intersection test.

A problem with this approach is its memory usage. The transformation into the oriented space requires 9 floating point values, while storing the bounding box requires an additional 6 floating point values, yielding 60 bytes in total.

In one embodiment of the invention, the BVH compressor 3525 compresses this oriented space and bounding box for multiple hair primitives that are spatially close together. These compressed bounds can then be stored inside the compressed leaf level to tightly bound the hair primitives stored inside the leaf. The following approach is used in one embodiment to compress the oriented bounds. The oriented space can be expressed by thee normalized vectors $v_x, v_y$, and $v_z$ that are orthogonal to each other. Transforming a point $p$ into that space works by projecting it onto these axes:

$$p_x = dot(v_x, p)$$

$$p_y = dot(v_y, p)$$

$$p_z = dot(v_z, p)$$

As the vectors $v_x$, $v_y$, and $v_z$ are normalized, their components are in the range [-1,1]. These vectors are thus quantized using 8-bit signed fixed point numbers rather than using 8-bit signed integers and a constant scale. This way quantized $v_x'$, $v_y'$, and $v_y'$ are generated. This approach reduces the memory required to encode the oriented space from 36 bytes (9 floating point values) to only 9 bytes (9 fixed point numbers with 1 byte each).

In one embodiment, memory consumption of the oriented space is reduced further by taking advantage of the fact that all vectors are orthogonal to each other. Thus one only has to store two vectors (e.g., $p_y'$ and $p_z'$) and can calculate $p_x' = cross(p_y', p_z')$, further reducing the required storage to only six bytes.

What remains is quantizing the AABB inside the quantized oriented space. A problem here is that projecting a point p onto a compressed coordinate axis of that space (e.g., by calculating $dot(v_x', p)$) yields values of a potentially large range (as values p are typically encoded as floating point numbers). For that reason one would need to use floating point numbers to encode the bounds, reducing potential savings.

To solve this problem, one embodiment of the invention first transforms the multiple hair primitive into a space, where its coordinates are in the range [0, 1/√3]. This may be done by determining the world space axis aligned bounding box $b$ of the multiple hair primitives, and using a transformation T that first translates by Slower to the left, and then scales by 1/$max(b.size.x, b.size.y.b.size.z)$ in each coordinate:

$$T(p) = \frac{1}{\sqrt{3}}(p - b.\,lower)/\max(b.\,size.\,x, b.\,size.\,y, b.\,size.\,z)$$

One embodiment ensures that the geometry after this transformation stays in the range [0, 1/√3] as then a projection of a transformed point onto a quantized vector $p_x'$, $p_y'$, or $p_z'$ stays inside the range [-1,1]. This means the AABB of the curve geometry can be quantized when transformed using T and then transformed into the quantized oriented space. In one embodiment, 8-bit signed fixed point arithmetic is used. However, for precision reasons 16-bit signed fixed point numbers may be used (e.g., encoded using 16 bit signed integers and a constant scale). This reduces the memory requirements to encode the axis-aligned bounding box from 24 bytes (6 floating point values) to only 12 bytes (6 words) plus the offset Slower (3 floats) and scale (1 float) which are shared for multiple hair primitives.

For example, having 8 hair primitives to bound, this embodiment reduces memory consumption from 8*60 bytes = 480 bytes to only 8*(6+12)+3*4+4 = 160 bytes, which is a reduction by 3x. Intersecting a ray with these quantized oriented bounds works by first transforming the ray using the transformation T, then projecting the ray using quantized $v_x'$, $v_y'$, and $v_z'$. Finally, the ray is intersected with the quantized AABB.

APPARATUS AND METHOD FOR GRAPHICS

PROCESSOR-MANAGED TILED RESOURCES

One embodiment of the invention improves the efficiency with which a user-written GPU program can cache and reuse data stored in a buffer or texture. This embodiment also provides for a logical representation of large, procedurally-computed resources that may or may not physically fit into the GPU memory at the same time.

In one embodiment of the invention, a new tiled resource is defined and managed by the GPU, referred to herein as a GPU managed tiled resource or a GPU managed buffer. In one implementation, the buffer or other tiled storage resource contains up to N fixed sized blocks of memory. Different GPU architectures may support a different maximum number of blocks (N).

In one embodiment, the GPU-managed tiled resource is used to efficiently share data between shaders - i.e., where one shader acts as a "producer" for one or more "consumer" shaders. For example, the producer shader may generate procedurally-updated content which the consumer shader may use without involving interaction with the CPU. As another example, in ray tracing implementations, various forms of skinning animation may need to be updated on traversal. One shader may skin a small portion of the mesh, storing results in the tiled resource, without CPU intervention. As other rays trace the same portion, they can access the data locally from the tiled resource, without accessing main memory.

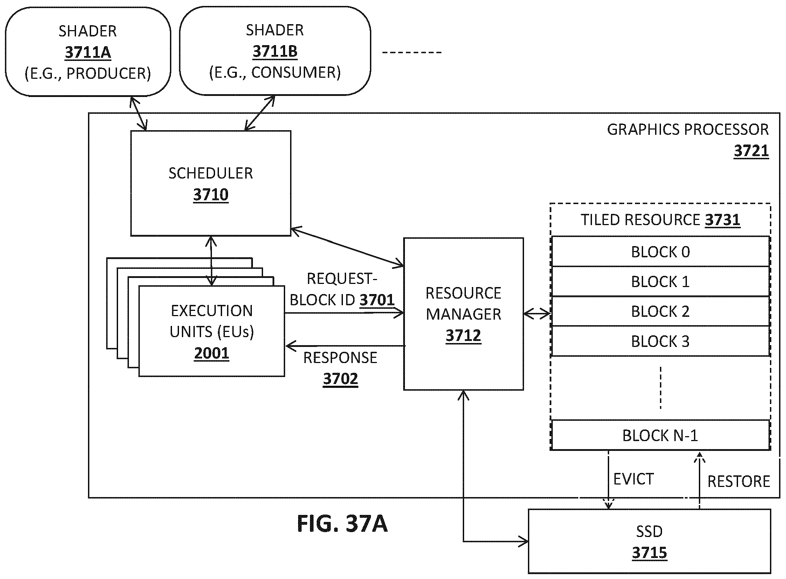

**Figure 37A** illustrates one embodiment of an architecture for implementing GPU-managed tiled resources 3731. A graphics processor 3721 includes a scheduler 3710 for scheduling shaders 3711A-B on the set of execution units 2001. Execution of the shaders requires access to tiled resources 3731 which are managed by a resource manager 3712. In the example provided below, one shader 3711A is designated as a "producer", storing its results in the tiled resource 3731, and the other shader 3711B is a "consumer," using the results generated by the producer shader 3711A. Consequently, the producer shader 3711A needs access to write to the tiled resource 3721 and the consumer shader 3711B needs read access to the tiled resource 3731. It should be noted, however, that a producer/consumer architecture is not required for complying with the underlying principles of the invention.

In one implementation, the tiled resource 3731 comprises an on-chip tile memory or tile buffer, which stores tile-sized blocks 0-(N-1) of data. The "tile" size may be variable based on the architecture of the graphics processor 3721 and the configuration of the graphics processing pipeline. In one embodiment, the graphics processing pipeline is configured to perform tile-based deferred rendering, tile-based immediate mode rendering, and/or other form of tile-based graphics processing, using the tiled resource 3731.

In one embodiment, an execution unit (EU) 2001 or other processing unit, requests a block using a hash value or other form of ID 3701 (e.g., a 64-bit hash in one embodiment). A resource manager 3712 determines whether the block exists within the tiled resource 3731 comprising N fixed sized blocks. If no such block is found, the buffer manager 3710 evicts the least recently used (LRU) block or selects an unused block if one exists. The response 3702 identifies the allocated block which the buffer manager 3710 marks as "used" with the given hash value. In one implementation, a flag is also returned indicating that the block is new. A least recently used block which is replaced loses the old content which it stored. If the block is already there, a flag is returned that indicates the block already exists and it is returned nevertheless.

While illustrated as a component within the graphics processor 3721, the tiled resource 3731 may be implemented within a memory external to the graphics processor 3721 such as a system memory or system-level cache.

Certain classes of shaders 3711A-B which execute on the EUs 2001 of a GPU are a priori known to require a block of memory. For example, these shaders may always execute in the lanes of a wave. In one embodiment, the scheduler 3710 which schedules the execution of these shaders 3711A-B constructs a 64bit ID/Hash from system-generated values. For example, one embodiment, in the context of raytracing, uses the InstanceID and the GeometryID to construct a unique 64-bit hash. However, a variety of other system generated variables may be used.

In this embodiment, the scheduler 3710 checks via the resource manager 3712 whether there is already a block of the tiled resource 3731 allocated for the 64bit hash. If so, the shader 3711A-B is executed under the assumption that the block already contains cached data and that this can be consumed by the shader and the shader is scheduled on the EUs 2001. The resource manager 3712 locks the block of memory from being reused as long as the shader that uses the data cached lockin that block is executing. As the shader is executed by one or more EUs 2001, it updates the block in the tiled resource 3731 using the block ID 3701 and, for certain operations, receives responses 3702 from the resource manager 3712.

In one embodiment, if the scheduler 3710 initially finds that there is no block with the given 64-bit hash, the resource manager 3712 locates an unused block or uses the least recently used block (or other block) that has already allocated and isn't currently in use. If it cannot locate such a block, it may postpone execution of the shader until such a block becomes available. When one is available, the tiled resource manager 3712 locks the tiled resource block from being reused as long as the shader is executing and schedules the shader. A flag may be passed to the shader to indicate that the block is empty and that the shader can use it to generate and store data. After writing data to the tiled resource block, the shader may continue execution as if the tiled resource block with its data had already been available.

Returning to the consumer/producer example above, a producer shader 3711A may be scheduled to generate a novel block or tile of the procedural resource 3731 if the requested hash is not valid in the pool. Such a requested hash may be generated by one or more consumer shaders 3711B, which the resource manager 3712 would block until their request is filled.

In one embodiment, tiled resource blocks are evicted to a solid-state device 3715 or other high speed storage medium. The SSD 3715 or other storage device may be integrated locally on the same substrate and/or card as the graphics processor 3721 and may be configured to save tiled resource blocks and other data during internal graphics processor 3721 context switches.

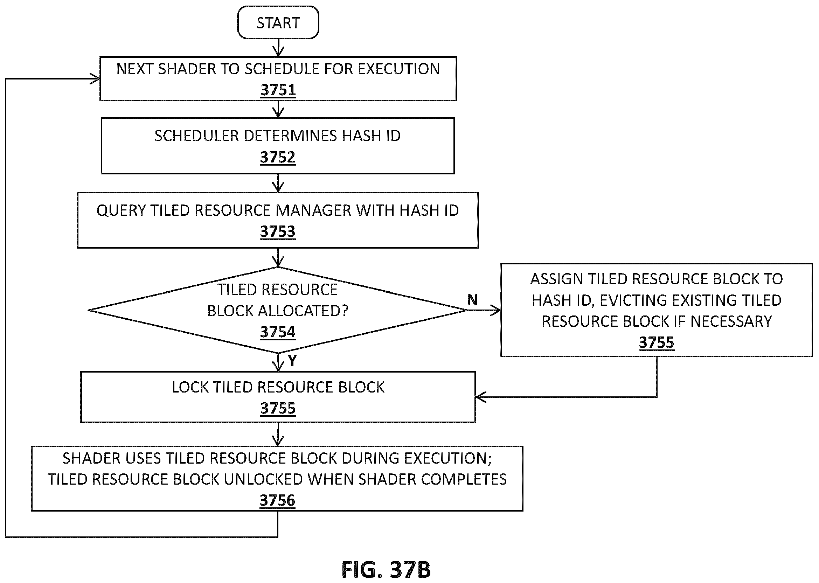

A method in accordance with one embodiment is illustrated in **Figure 37B.** The method may be implemented within the context of the architectures described above, but is not limited to any particular architecture.

At 3751 the scheduler evaluates the next shader to be scheduled for execution and, at 3752, determines a hash ID to be used to identify the tiled resource block (e.g., using one or more of the techniques described herein). At 3753, the scheduler queries the tiled resource manager with the hash ID.

If a block is already allocated for this hash ID, determined at 3754, then the tiled resource manager locks the tiled resource block at 3755 and the shader uses the tiled resource block during execution at 3756. The tiled resource block may subsequently be unlocked when the shader completes, unless it is locked with a hash ID of a consumer shader that will require the data after the current (producer) shader completes. In any case, the process returns to 3751 for scheduling of the next shader.

If, at 3754, no tiled resource block is identified with the hash ID, then the tiled resource manager assigns a tiled resource block to the hash ID and may allocate a flag to the shader indicating that it may use this tiled resource block. As mentioned, the tiled resource manager may evict existing data from a tiled resource block to assign the tiled resource block to the current shader. The tiled resource block is locked at 375 and the shader uses the tiled resource block during execution at 3756.

The GPU-managed tiled buffer 3731 may be used in a variety of ways. For example, a SIMD wave of lanes want to enter the same intersection shader box bundled by bindless tread dispatcher (described below). Before the intersection shader is run, the hardware requests a block from the buffer manager 3710.

The 64-bit hash may be generated in different ways. For example, in one embodiment, the 64-bit hash is the InstanceID of the current ray traversal instance combined with the frame counter. If the block is new, the hardware may launch a user compute shader running within the lanes of the wave that then fills the block (e.g., with skinned triangles). If the block is old, then the shader may not be launched. An intersection shader is then executed and is provided with the pointer to the block. The intersection shader may then perform ray/triangle intersections and/or support may be provided for a hardware instruction for the ray/triangle intersections (as described herein). Alternatively, the block may be designed to only contain triangles. In this case, the hardware iterates over these triangles (without building a BVH over them) and may, for example, update closest hit shaders or call into any-hit shaders. Various other use cases may take advantage of the GPU-managed tiled resource 3731 as described above.

APPARATUS AND METHOD FOR EFFICIENT LAZY BVH BUILD

Complex dynamic scenes are challenging for real-time ray tracing implementations. Procedural surfaces, skinning animations, etc., require updates of triangulation and accelerating structures in each frame, even before the first ray is launched.

Lazy builds evaluate scene elements "on-demand", as driven by ray traversal. The rendering of a frame starts with a coarse acceleration structure like a scene-graph or hierarchies of the previous frame, then progressively builds the newly required acceleration structures for the objects that are hit by rays during traversal. Invisible objects can be effectively excluded from the construction process. However, these techniques are not easily implemented with current systems and APIs, because the higher-level (i.e., per-object) programmability essential for computing the instance visibility is not supported.

One embodiment of the invention supports a multi-pass lazy build (MPLB) for real-time ray tracing that resolves these problems with an extended programming model. It allows the instance-level traversal to be tracked during each ray dispatch and selectively builds bottom level acceleration structures (BLASs) for only the potentially visible geometry at render time. Akin to some adaptive sampling techniques, MPLB as described herein may require multiple ray dispatches over the same set of pixels to relaunch rays to previously unbuilt parts of the scene, but certain embodiments of the invention include techniques to minimize this overhead, such as the assumption of frame-to-frame coherence and rasterized primary visibility. These techniques can provide a significant reduction in build complexity compared to one-time builders with only a marginal increase in traversal cost on average.

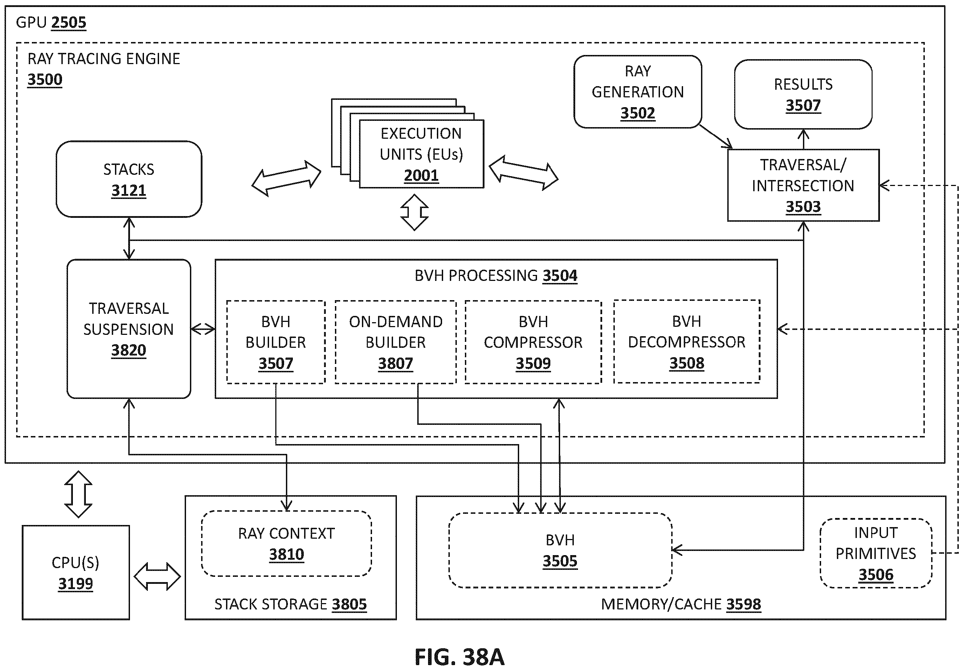

**Figure 38A** illustrates one embodiment of an on-demand (or "lazy") builder 3807 for performing lazy build operations as described herein. In addition, this embodiment includes traversal suspension circuitry/logic 3820 for suspending ray traversal. The ray traversal suspension circuitry/logic 3820 may be implemented in hardware, software, or any combination thereof. Ray stack storage 3805 stores suspended ray stacks 3810 when traversal is suspended (as described in greater detail herein). In addition, GPU-side command scheduling launches lazy build tasks and ray continuations on execution units 2001 without supervision by the CPU. Traversal atomics are also used to reduce shader overhead.

Traversal Suspension upon Missing Bottom

Level Acceleration Structure (BLAS) Encounter

In one implementation, using a programming model with a traversal shader extension, missing instances (e.g., missing bottom level acceleration structures of the BVH 8005) are programmatically marked, so that they can be identified and updated in a separate pass. Then either an incomplete traversal is performed or traversal is aborted.

To render the final pixels, the primary shader of the corresponding pixel may need to be relaunched, leading to several repeated traversal and shader execution operations. In one embodiment, traversal suspension logic 3820 backs up the entire ray context 3810 (ray stack, continuations, etc.) into off-chip memory 3805 when traversal is suspended. In one embodiment, this traversal suspension an intrinsic function which is managed by the driver (e.g., SuspendTraversal()); however, the underlying principles of the invention are not limited to this implementation. In addition, a new DispatchRay() variant in the host side - executed by the CPU 3199 - re-schedules the suspended ray stacks from the ray context 3810 to continue traversal shader execution.

GPU-side Command Scheduling for Build and Dispatch

Another significant overhead of current lazy build implementations is the continuous requirement of CPU 3199 readback and conditional scheduling of the BVH builder 8007 and ray dispatching on the GPU 2505. To improve efficiency, in one implementation, the BVH processing circuitry/logic 8004 runs the BVH build asynchronously with the ray traversal 3503. Upon the completion of the build tasks, the ray tracing engine 8000 executes the ray dispatch to continue the suspended ray stacks from the ray context 3810.

Traversal Atomics to Reduce Traversal Shader Overhead

One problem with current implementations is that if an instance is missing (unbuilt), several rays may traverse it, and mark it for the lazy builder 3807 to update it. A simple task that could be done by just one traversal shader invocation is repeated by hundreds or more invocations. The traversal shader is not resource-intensive, but it has a significant overhead to launch, perform input/output functions, and store results.

In one embodiment of the invention, unbuilt instance leaves can be marked as "atomic" nodes. Atomic nodes can be traversed by only one ray at once. An atomic node is locked once a ray traverses it, and unlocked at the end of the traversal shader execution. In one embodiment, the traversal shader sets the status of a node to "invalid", which prevents rays entering it even after the lock is released. This allows the traversal hardware to either skip the node, or suspend the traversal of the ray, without executing a new traversal shader.

In one embodiment, for atomics nodes, instead of regular atomic semantics, certain mutex/condition semantics are used. For example, if the traversal circuitry/logic 3503 traverses a ray to a proxy node, it attempts to lock the node. If this fails as the node is already locked, it automatically executes "suspendRay" without returning to the EU 2001. If the locking is executed successfully, the traversal circuitry/logic 3503 processes the proxy node.

Lazy Build of Acceleration Structures with a Traversal Shader

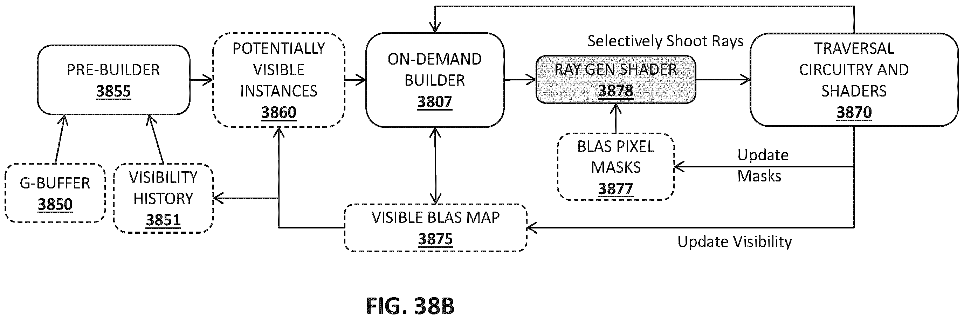

One embodiment of the invention operates in accordance with the processing flow shown in **Figure 38B.** By way of an overview, the on-demand builder 3807 builds acceleration structures over geometry instances 3860 determined to be potentially visible. The potentially visible instances 3860 are generated by a pre-builder 3855 based on primary visibility data from the G-buffer 3850 and visibility history data 3851 indicating visibility in the previous frame. The potentially visible instances 3860 may also be determined based on a visible bottom level acceleration structure (BLAS) map 3875 which indicates the bottom level nodes of the acceleration structure that include visible primitives. In one embodiment, the visible BLAS map 3875 is continually updated in response to traversal operations performed by the traversal logic 3870, which may include dedicated traversal circuitry and/or traversal shaders executed on the execution units of the graphics processor.

The on-demand builder 3807 generates those portions of the acceleration structure which are associated with the potentially visible instances 3860. A ray generation shader 3878 selectively generates rays based on these portions of the acceleration structure which the traversal unit 3870 traverses through the acceleration structure portions. The traversal unit 3870 notifies the on-demand builder 3870 of additional acceleration structure nodes which it requires for traversal and updates the BLAS pixel masks 3877 used by the ray generation shader 3878 (e.g., which only generates rays for unmasked pixels) and visible BLAS map 3875.

Thus, the on-demand builder 8706 selectively builds bottom level acceleration structures over the potentially visible instances 3860 and the instance visibility is updated during ray traversal 3870. Unlike the previous implementations, the embodiments of the invention operate in multiple passes in order to avoid complicated ray scheduling. The idea is analogous to recent texture-space shading approaches where visibility-driven marking of texels is used to avoid redundant shading before the final rendering.

In operation, the BLASes for empty instances that were marked as potentially visible in the previous pass are first built. In the second pass, the ray generation shader 3878 selectively reshoots the rays to the unfinished pixels, where a traversal shader is used to either record more potentially visible empty instances or complete the pixel. The number of incomplete pixels decreases after each iteration until there are no rays left that traversed an empty instance.

One embodiment of the invention performs a hybrid rendering using the GPU rasterizer and ray tracing hardware together. This is because when creating the G-buffer 3850, the primary visibility of all instances in the scene is easily obtained. Hence, the pre-builder 3855 in these embodiments takes advantage of hybrid rendering by efficiently constructing the initial acceleration structure using this data. Before the first iteration, potentially visible instances 3860 are marked in this pre-build heuristic (as discussed below).

The code sequence below is an abstracted high level shader language (HLSL) describing one embodiment of the traversal shader described with some intrinsic- and user-functions:

```
RWStructuredBuffer<vblas> visibleBlasMap[] : register(u0, space0);
RWStructuredBuffer<pmask> pixelMasks[] : register(u0, space1);

[shader("traversal")]
void myVisibilityShader(in RayPayload rp) {
  uint2 index = DispatchRaysIndex();
  uint2 size = DispatchRaysDimensions();

  UpdateVisibility(visibleBlasMap, InstanceID(), true);

  // Control BLAS traversal with updating pixel mask
  RaytracingAccelerationStructure myAccStructure;
  bool isInstanceEmpty = IsEmptyInstance();
  if (isInstanceEmpty) {
    UpdateMask(pixelMasks, index.y*size.x + index.x, false);
    rp.trav_valid = false;
    skipTraversal();
  }
  else if (!isInstanceEmpty && !rp.trav_valid)
    skipTraversal();
  else {
    myAccStructure = FetchBLAS(InstanceID());
    RayDesc transformedRay = {...};
    // Set the next level instance and hit shader table offset
    SetInstance(myAccStructure, transformedRay, hitShaderOffset);
  }
}
```

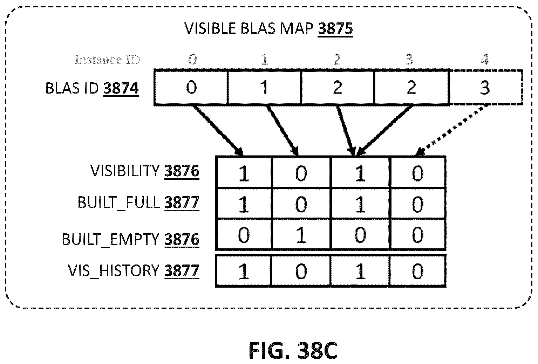

The SkipTraversal() intrinsic is defined to ignore the current instance and continue traversal in the higher-level acceleration structure. As mentioned, the visible bottom-level acceleration structure (BLAS) map 3875 is used to record instance visibility commonly used in acceleration structure builders and traversal shaders. As shown in **Figure 38C,** one embodiment of the visible BLAS map 3875 contains a flag 3876 associated with each BLAS ID 3874 indicating the BLAS visibility to which the instance refers and two flags, Built_Full and Built_Empty, indicating whether the BLAS has already been built. In addition, a boolean flag, trav_valid, is added to the ray payload to keep track of traversal status, which can be used for checking whether the ray has encountered an empty instance thus far.

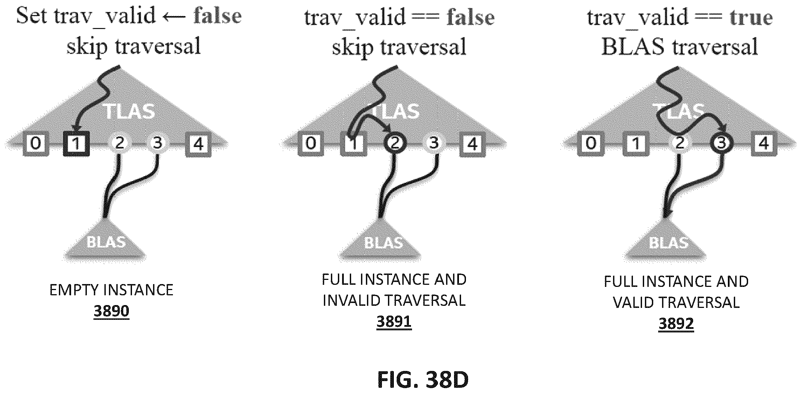

In one embodiment, the visibility in the traversal shader is conservatively updated because all traversed instances are potentially visible to the current ray. Hence, the first task is to set the visibility flag as True for the corresponding BLAS of the current instance. It also sets the visibility history (vis_history) flag as True to reuse it in the next frame (line 9 of the above code sequence). Next, the traversal destination is determined based on the status of the current instance (empty or full) and the ray status (i.e., the trav_valid value). This is classified into three states 3890-3892 as shown in **Figure 38D.**

For an empty instance 3890, the corresponding pixel mask is reset (line 15) for reshooting rays in the next pass. The current traversal is then invalidated by setting the trav_valid flag in the ray payload (line 16). Finally, TLAS traversal continues by invoking SkipTraversal().

For the full instance and invalid traversal case 3891, the current instance has a built BLAS, but the ray has encountered an empty instance so far (i.e., trav_valid is False). Because the ray will be eventually shot again to the current pixel, the BLAS traversal can be skipped (line 20).

For a full instance and valid traversal 3892, since the ray normally traversed the acceleration structure without empty instances, the traversal shader fetches the BLAS of the current instance and continues the traversal. If the ray maintains validity until the end of the traversal, the ray will normally invoke and execute the closest-hit or miss shader.

Otherwise, those shaders return control without executing their code and finish the current pass, which prevents the overheads of hardware ray traversal and shader launching for secondary rays. In the next pass, the rays are shot again only to the pixel having the "False" mask, and a valid traversal for those pixels is attempted.

For the acceleration structure building operation, the BLASes of the instances are built or empty instances are created, depending on the visibility flag of the visibility bit mask. The potentially visible instance normally constructs the BLAS (BUILD_FULL), and the invisible instance computes only the bounding box of the geometry and packs it in the leaf node of TLAS (BUILD_EMPTY). The other two flags are also referred to, indicating whether a BUILD_FULL or BUILD_EMPTY action was already performed for the current object in the previous pass. By checking these flags, duplicate actions can be avoided for the same object in the different iterations of the Build-Traverse loop.

Once the BLAS build process for the objects is finished, the final acceleration structure is constructed by building the TLAS over these BLASes. The TLAS is rebuilt only in the first pass and refitted in the rest of the passes because the bounding boxes of all objects could be already set up in the first pass.

As described above, one embodiment of the invention performs multiple passes, which makes it sometimes redundantly shoot rays for the same pixel. This is because the current pass should make up for the invalid traversal in the previous pass. This can lead to redundant hardware ray traversal and shader invocations. However, one embodiment limits this overhead of the traversal costs only to the pixels corresponding to invalid traversal by applying a pixel mask.

Moreover, different techniques are used to identify potentially visible BLASes (and build them), even before the first ray is traversed (e.g., by the pre-builder 3855). Using the G-buffer 3850, directly visible instances that are likely to be traversed by primary rays can be marked. Furthermore, there is assumed to be a significant amount of frame-to-frame coherence; thus, the BLASes of instances traversed in the previous frame are also pre-built. The combination of these two techniques greatly reduces the number of Build-Traverse iterations.

APPARATUS AND METHOD FOR A MATERIAL CULLING MASK

Existing ray tracing APIs use an 8-bit cull mask to skip ray traversal for certain geometry instances. This is used, for example, to prevent specific objects from casting shadows, or to hide objects from reflections. This feature allows different subsets of geometry to be represented within a single acceleration structure as opposed to building separate acceleration structures for each subset. The bit settings in the 8-bit mask can be used to balance traversal performance and the resource overhead for maintaining multiple acceleration structures. For example, if a bit in the mask is set to 0, the corresponding instance may be ignored.

Rendering engines can associate multiple geometry instances with an asset and each geometry instance can contain multiple materials. However, current ray tracing APIs only allow specification of the culling mask at the granularity of an instance. This means that assets which have different culling masks on different materials cannot use standard culling. As a workaround, current implementations use any-hit shaders to ignore intersections, which is expensive and complicated.

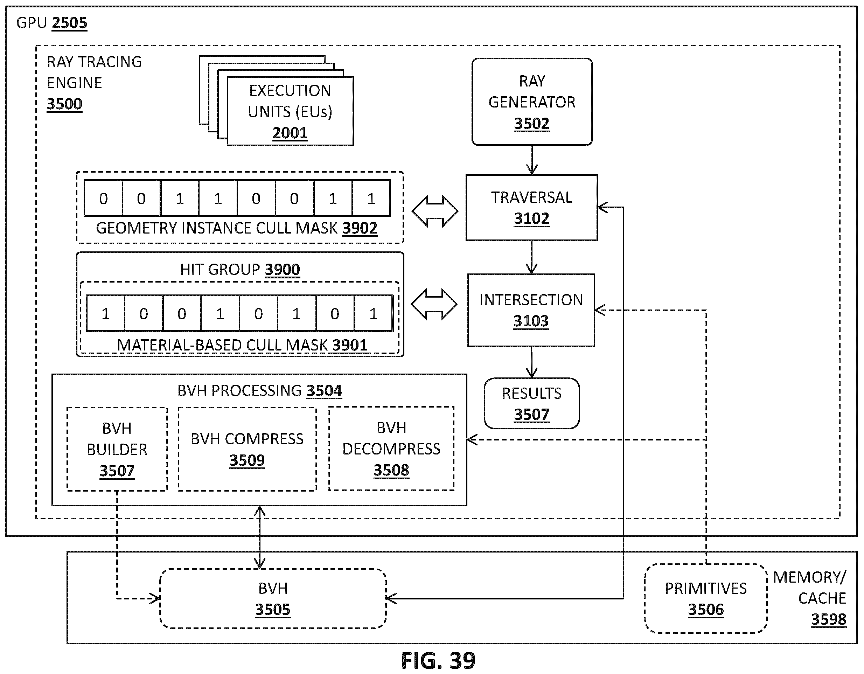

As illustrated in **Figure 39,** one embodiment of the invention exposes these masking controls on a per-material basis. In particular, one implementation includes an N-bit material-based cull mask 3901 to skip ray traversal for portions of geometry instances associated with certain materials. In one embodiment, an 8-bit material-based cull mask is used, but the underlying principles of the invention are not limited to this implementation. In contrast to existing implementations, the material-based cull mask 3901 is exposed and can be utilized by the traversal circuitry/logic 3503 for instance culling on a per-material basis as well as a per-instance basis.

In one specific implementation, the N-bit cull mask 3901 is stored inside of a hit group 3900, providing fixed-function per-material culling and alleviating the need for expensive any-hit shader workarounds. A "hit group" 3900 as used herein is an API object that contains a set of shaders used to process rays hitting a given object in the scene. The set of shaders may include, for example, a closest-hit shader, an any-hit shader, and (for procedural geometry) an intersection shader. In one implementation, the material-based cull mask 3901 is associated with the hit group 3900, as an additional piece of data.

To associate the cull mask 3901 with the hit group 3900, the cull mask 3901 may be stored within the 32-byte shader record that the API provides for the implementation to use (e.g., identified via a record ID as described herein). Note, however, that the underlying principles of the invention are not limited to any particular technique for associating a cull mask with a hit group.

In one embodiment, the traversal/intersection circuitry 3503 directly culls potential hits based on the material-based cull mask 3901. For example, a mask value of 0 may indicate that instances with a corresponding material should be culled. Alternatively, or in addition, this behavior can be emulated by injecting any-hit shaders inside the driver.

APPARATUS AND METHOD FOR Box-Box TESTING AND ACCELERATED COLLISION DETECTION FOR RAY TRACING

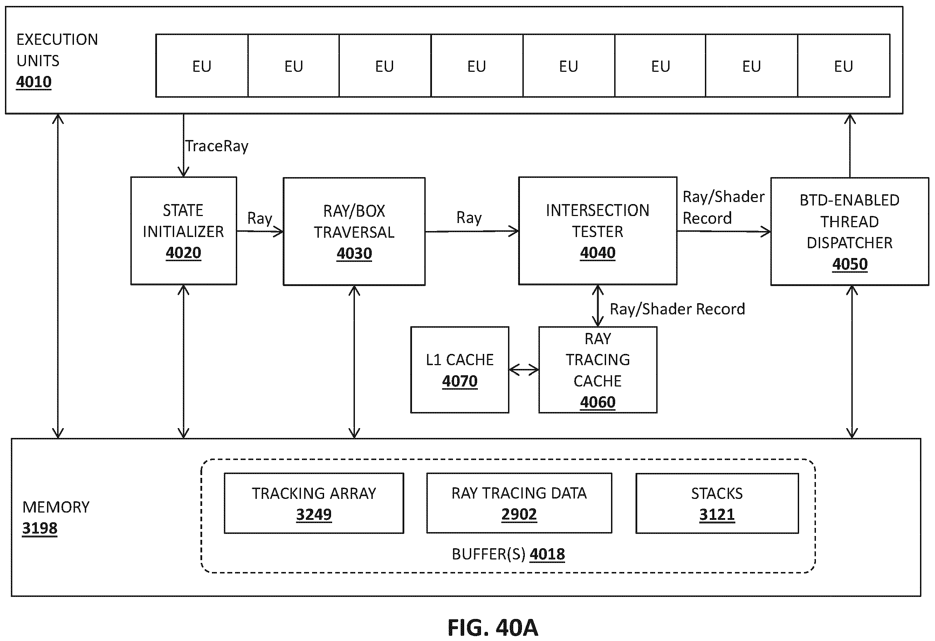

Figure 40A-B illustrate a ray tracing architecture in accordance with one embodiment of the invention. A plurality of execution units 4010 execute shaders and other program code related to ray tracing operations. A "Traceray" function executed on one of the execution units (EUs) 4010 triggers a ray state initializer 4020 to initialize the state required to trace a current ray (identified via a ray ID/descriptor) through a bounding volume hierarchy (BVH) (e.g., stored in a in a stack 3121 in a memory buffer 4018 or other data structure in local or system memory 3198).

In one embodiment, if the Traceray function identifies a ray for which a prior traversal operation was partially completed, then the state initializer 4020 uses the unique ray ID to load the associated ray tracing data 2902 and/or stacks 3121 from one or more buffers 4018 in memory 3198. As mentioned, the memory 3198 may be an on-chip/local memory or cache and/or a system-level memory device.

As discussed with respect to other embodiments, a tracking array 3249 may be maintained to store the traversal progress for each ray. If the current ray has partially traversed a BVH, then the state initializer 4020 may use the tracking array 3249 to determine the BVH level/node at which to restart.

A traversal and raybox testing unit 4030 traverses the ray through the BVH. When a primitive has been identified within a leaf node of the BVH, instance/quad intersection tester 4040 tests the ray for intersection with the primitive (e.g., one or more primitive quads), retrieving an associated ray/shader record from a ray tracing cache 4060 integrated within the cache hierarchy of the graphics processor (shown here coupled to an L1 cache 4070). The instance/quad intersection tester 4040 is sometimes referred to herein simply as an intersection unit (e.g., intersection unit 3103 in **Figure 31**).

The ray/shader record is provided to a thread dispatcher 4050, which dispatches new threads to the execution units 4010 using, at least in part, the bindless thread dispatching techniques described herein. In one embodiment, the ray/box traversal unit 4030 includes the traversal/stack tracking logic 3248 described above, which tracks and stores traversal progress for each ray within the tracking array 3249.

A class of problems in rendering can be mapped to test box collisions with other bounding volumes or boxes (e.g., due to overlap). Such box queries can be used to enumerate geometry inside a query bounding box for various applications. For example, box queries can be used to collect photons during photon mapping, enumerate all light sources that may influence a query point (or query region), and/or to search for the closest surface point to some query point. In one embodiment, the box queries operate on the same BVH structure as the ray queries; thus the user can trace rays through some scene, and perform box queries on the same scene.

In one embodiment of the invention, box queries are treated similarly to ray queries with respect to ray tracing hardware/software, with the ray/box traversal unit 4030 performing traversal using box/box operations rather than ray/box operations. In one embodiment, the traversal unit 4030 can use the same set of features for box/box operations as used for ray/box operations including, but not limited to, motion blur, masks, flags, closest hit shaders, any hit shaders, miss shaders, and traversal shaders. One embodiment of the invention adds a bit to each ray tracing message or instruction (e.g., TraceRay as described herein) to indicate that the message/instruction is associated with a BoxQuery operation. In one implementation, BoxQuery is enabled in both synchronous and asynchronous ray tracing modes (e.g., using standard dispatch and bindless thread dispatch operations, respectively).

In one embodiment, once set to the BoxQuery mode via the bit, the ray tracing hardware/software (e.g., traversal unit 4030, instance/quad intersection tester 4040, etc) interprets the data associated with the ray tracing message/instruction as box data (e.g., min/max values in three dimensions). In one embodiment, traversal acceleration structures are generated and maintained as previously described, but a Box is initialized in place of a Ray for each primary StackID.

In one embodiment, hardware instancing is not performed for box queries. However, instancing may be emulated in software using traversal shaders. Thus, when an instance node is reached during a box query, the hardware may process the instance node as a procedural node. As the header of both structures is the same, this means that the hardware will invoke the shader stored in the header of the instance node, which can then continue the point query inside the instance.

In one embodiment, a ray flag is set to indicate that the instance/quad intersection tester 4040 will accept the first hit and end the search (e.g., ACCEPT_FIRST_HIT_AND_END_SEARCH flag). When this ray flag is not set, the intersected children are entered front to back according to their distance to the query box, similar to ray queries. When searching for the closest geometry to some point, this traversal order significantly improves performance, as is the case with ray queries.

One embodiment of the invention filters out false positive hits using any hit shaders. For example, while hardware may not perform an accurate box/triangle test at the leaf level, it will conservatively report all triangles of a hit leaf node. Further, when the search box is shrunken by an any hit shader, hardware may return primitives of a popped leaf node as a hit, even though the leaf node box may no longer overlap the shrunken query box.

As indicated in **Figure 40A,** a box query may be issued by the execution unit (EU) 4010 sending a message/command to the hardware (i.e., Traceray). Processing then proceeds as described above - i.e., through the state initializer 4020, the ray/box traversal logic 4030, the instance/quad intersection tester 4040, and the bindless thread dispatcher 4050.

In one embodiment, the box query re-uses the MemRay data layout as used for ray queries, by storing the lower bounds of the query box in the same position as the ray origin, the upper bounds in the same position as the ray direction, and a query radius into the far value.

```
struct MemBox
{
    // 32 Bytes (semantics changed)
    Vec3f lower;        // the lower bounds of the query box
    Vec3f upper;        // the upper bounds of the query box
    float unused;
    float radius;       // additional extension of the query box (L0 norm)


    // 32 Bytes (identical to standard MemRay)
};
```

Using this MemBox layout, the hardware uses the box [lower-radius, upper+radius] to perform the query. Therefore, the stored bounds are extended in each dimension by some radius in L0 norm. This query radius can be useful to easily shrink the search area, e.g. for closest point searches.

As the MemBox layout just reuses the ray origin, ray direction, and $T_{far}$ members of the MemRay layout, data management in hardware does not need to be altered for ray queries. Rather, the data is stored in the internal storage (e.g., the ray tracing cache 4060 and L1 cache 4070) like the ray data, and will just be interpreted differently for box/box tests.

In one embodiment, the following operations are performed by the ray/state initialization unit 4020 and ray/box traversal unit 4030. The additional bit "BoxQueryEnable" from the TraceRay Message is pipelined in the state initializer 4020 (affecting its compaction across messages), providing an indication of the BoxQueryEnable setting to each ray/box traversal unit 4030.

The ray/box traversal unit 4030 stores "BoxQueryEnable" with each ray, sending this bit as a tag with the initial Ray load request. When the requested Ray data is returned from the memory interface, with BoxQueryEnable set, reciprocal computation is bypassed and instead a different configuration is loaded for all components in the RayStore (i.e., in accordance with a box rather than a ray).

The ray/box traversal unit 4030 pipelines the BoxQueryEnable bit to the underlying testing logic. In one embodiment, the raybox data path is modified in accordance with the following configuration settings. If BoxQueryEnable == 1, the box's plane is not changed as it is change based on the sign of the x, y and z components of the ray's direction. Checks performed for the ray which are unnecessary for the raybox are bypassed. For example, it is assumed that the querying box has no INF or NANs so these checks are bypassed in the data path.

In one embodiment, before processing by the hit-determination logic, another add operation is performed to determine the value lower + radius (basically the t-value from the hit) and upper - radius. In addition, upon hitting an "Instance Node" (in a hardware instancing implementation), it does not compute any transformation but instead launches an intersection shader using a shader ID in the instance node.

In one embodiment, when BoxQueryEnable is set, the ray/box traversal unit 4030 does not perform the NULL shader lookup for any hit shader. In addition, when BoxQueryEnable is set, when a valid node is of the QUAD, MESHLET type, the ray/box traversal unit 4030 invokes an intersection shader just as it would invoke an ANY HIT SHADER after updating the potential hit information in memory.

In one embodiment, a separate set of the various components illustrated in **Figure 40A** are provided in each multi-core group 3100A (e.g., within the ray tracing cores 3150). In this implementation, each multi-core group 3100A can operate in parallel on a different set of ray data and/or box data to perform traversal and intersection operations as described herein.

APPARATUS AND METHOD FOR MESHLET COMPRESSION AND DECOMPRESSION FOR RAY TRACING

As described above, a "meshlet"" is a subset of a mesh created through geometry partitioning which includes some number of vertices (e.g., 16, 32, 64, 256, etc) based on the number of associated attributes. Meshlets may be designed to share as many vertices as possible to allow for vertex re-use during rendering. This partitioning may be pre-computed to avoid runtime processing or may be performed dynamically at runtime each time a mesh is drawn.

One embodiment of the invention performs meshlet compression to reduce the storage requirements for the bottom level acceleration structures (BLASs). This embodiment takes advantage of the fact that a meshet represents a small piece of a larger mesh with similar vertices, to allow efficient compression within a 128B block of data. Note, however, that the underlying principles of the invention are not limited to any particular block size.

Meshlet compression may be performed at the time the corresponding bounding volume hierarchy (BVH) is built and decompressed at the BVH consumption point (e.g., by the ray tracing hardware block). In certain embodiments described below, meshlet decompression is performed between the L1 cache (sometimes "LSC Unit") and the ray tracing cache (sometimes "RTC Unit"). As described herein, the ray tracing cache is a high speed local cache used by the ray traversal/intersection hardware.

In one embodiment, meshlet compression is accelerated in hardware. For example, if the execution unit (EU) path supports decompression (e.g., potentially to support traversal shader execution), meshlet decompression may be integrated in the common path out of the L1 cache.

In one embodiment, a message is used to initiate meshlet compression to 128B blocks in memory. For example, a 4 X 64B message input may be compressed to a 128B block output to the shader. In this implementation, an additional node type is added in the BVH to indicate association with a compressed meshlet.

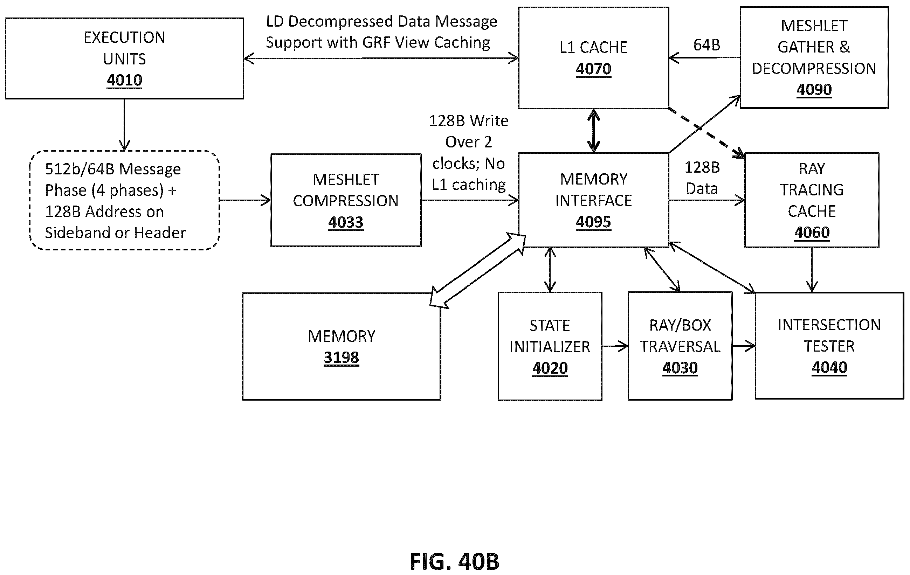

**Figure 40B** illustrates one particular implementation for meshlet compression including a meshlet compression block (RTMC) 4030 and a meshlet decompression block (RTMD) 4090 integrated within the ray tracing cluster. Meshlet compression 4033 is invoked when a new message is transmitted from an execution unit 4010 executing a shader to the ray tracing cluster (e.g., within a ray tracing core 3150). In one embodiment, the message includes four 64B phases and a 128B write address. The message from the EU 4010 instructs the meshlet compression block 4030 where to locate the vertices and related meshet data in local memory 3198 (and/or system memory depending on the implementation). The meshlet compression block 4030 then performs meshlet compression as described herein. The compressed meshlet data may then be stored in the local memory 3198 and/or ray tracing cache 4060 via the memory interface 9095 and accessed by the instance/quad intersection tester 4040 and/or a traversal/intersection shader.

In **Figure 40B,** meshlet gather and decompression block 4090 may gather the compressed data for a meshlet and decompress the data into multiple 64B blocks. In one implementation, only decompressed meshlet data is stored within the L1 cache 4070. In one embodiment, meshlet decompression is activated while fetching the BVH node data based on the node-type (e.g., leaf node, compressed) and primitive-ID. The traversal shader can also access the compressed meshlet using the same semantics as the rest of the ray tracing implementation.

In one embodiment, the meshlet compression block 4030 accepts an array of input triangles from an EU 4010 and produces a compressed 128B meshlet leaf structure. A pair of consecutive triangles in this structure form a quad. In one implementation, the EU message includes up to 14 vertices and triangles as indicated in the code sequence below. The compressed meshlet is written to memory via memory interface 9095 at the address provided in the message.

In one embodiment, the shader computes the bit-budget for the set of meshlets and therefore the address is provided such that footprint compression is possible. These messages are initiated only for compressible meshlets.

```
struct CompressMeshletMsg {
    uint64_t   address;        // Header: 128B aligned destination
address for the meshlet


    float      vert_x[14];     // up to 14 vertex coordinates
    uint32_t   vert_x_bits;    // max vertex bits
    uint32_t   numPrims;       // Number of triangles (always even for
quads)
    float      vert_y[14];
    uint32_t   vert_y_bits;    // max vertex bits
    uint32_t   numIdx;         // Number of indices


    float      vert_z[14];
    uint32_t   vert_z_bits;    // max vertex bits
    uint32_t   numPrimIDBits;


    int32_t    primID[14];     // primIDs
    PrimLeafDesc primLeafDesc;


    struct {
      int8_t idx_x;
      int8_t idx_y;
      int8_t idx_z;
      int8_t last;             // 1 if triangle is last in leaf, 0 otherwise
    } index[14];               // vertex indices


            int32_t pad0;
            int32_t pad1;
        }
```

In one embodiment, the meshlet decompression block 4090 decompresses two consecutive quads (128B) from a 128B meshlet and stores the decompressed data in the L1 cache 4070. The tags in the L1 cache 4070 track the index of each decompressed quad (including the triangle index) and the meshlet address. The ray tracing cache 4060 as well as an EU 4010 can fetch a 64B decompressed quad from the L1 cache 4070. In one embodiment, an EU 4010 fetches a decompressed quad by issuing a MeshletQuadFetch message to the L1 cache 4060 as shown below. Separate messages may be issued for fetching the first 32 bytes and the last 32 bytes of the quad.

Shaders can access triangle vertices from the quad structure as shown below. In one embodiment, the "if" statements are replaced by "sei" instructions.

```
// Assuming vertex i is a constant determined by the compiler
float3 getVertexi(Quad& q, int triID, int vertexID) {
    if (triID == 0)
        return quad.vi;
    else if (i == j0)
        return quad.v0;
    else if (i == j1)
        return quad.v1;
    else if (i == j2)
        return quad.v2;
}
```

In one embodiment, The ray tracing cache 4060 can fetch a decompressed quad directly from the L1 cache 4070 bank by providing the meshlet address and quad index.

```
GetQuadData {
    uint1_t  msb; // MS 32B or LS 32B

    uint4_t  triangle_idx; // index of the triangle inside the meshlet.
    always even for quads.
    uint64_t meshlet_addr;
}
```

Meshlet Compression Process

After allocating bits for a fixed overhead such as geometric properties (e.g., flags and masks), data of the meshlet is added to the compressed block while computing the remaining bit-budget based on deltas on (*pos.x, pos.y, pos.z*) compared to (*base.x, base.y, base.z*) where the base values comprise the position of the first vertex in the list. Similarly prim-ID deltas may be computed as well. Since the delta is compared to the first vertex, it is cheaper to decompress with low latency. The base position and primIDs are part of the constant overhead in the data structure along with the width of the delta bits. For remaining vertices of an even number triangles, position deltas and prim-ID deltas are stored on different 64B blocks in order to pack them in parallel.

Using these techniques, the BVH build operation consumes lower bandwidth to memory upon writing out the compressed data via the memory interface 9095. In addition, in one embodiment, storing the compressed meshlet in the L3 cache allows for storage of more BVH data with the same L3 cache size. In one working implementation, more than 50% meshlets are compressed 2:1. While using a BVH with compressed meshlets, bandwidth savings at the memory results in power savings.

APPARATUS AND METHOD FOR BINDLESS THREAD DISPATCHING AND WORKGROUP/THREAD PREEMPTION IN A COMPUTE AND RAY TRACING PIPELINE

As described above, bindless thread dispatch (BTD) is a way of solving the SIMD divergence issue for Ray Tracing in implementations which do not support shared local memory (SLM) or memory barriers. Embodiments of the invention include support for generalized BTD which can be used to address SIMD divergence for various compute models. In one embodiment, any compute dispatch with a thread group barrier and SLM can spawn a bindless child thread and all of the threads can be regrouped and dispatched via BTD to improve efficiency. In one implementation, one bindless child thread is permitted at a time per parent and the originating threads are permitted to share their SLM space with the bindless child threads. Both SLM and barriers are released only when finally converged parents terminate (i.e., perform EOTs). One particular embodiment allows for amplification within callable mode allowing tree traversal cases with more than one child being spawned.

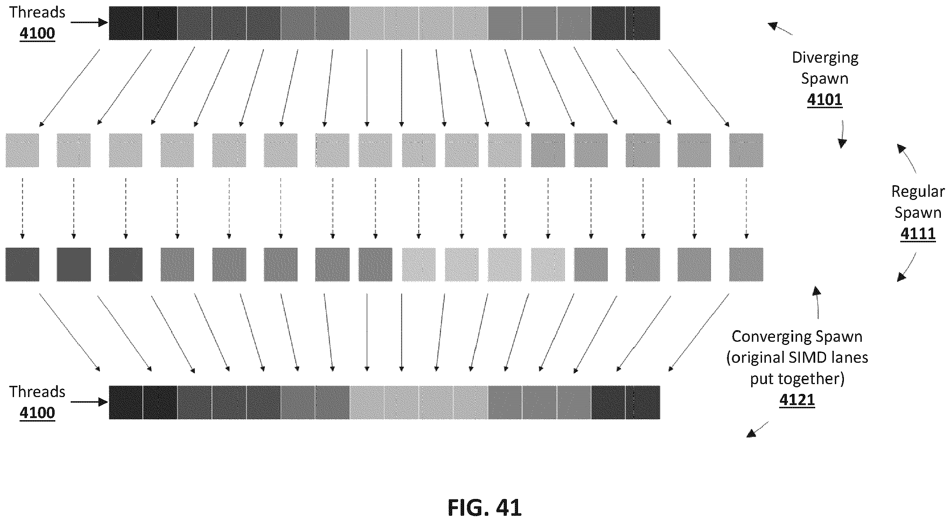

**Figure 41** graphically illustrates an initial set of threads 4100 which may be processed synchronously by the SIMD pipeline. For example, the threads 4100 may be dispatched an executed synchronously as a workgroup. In this embodiment, however, the initial set of synchronous threads 4100 may generate a plurality of diverging spawn threads 4101 which may produce other spawn threads 4111 within the asynchronous ray tracing architectures described herein. Eventually, converging spawn threads 4121 return to the original set of threads 4100 which may then continue synchronous execution, restoring the context as needed in accordance with the tracking array 3249.

In one embodiment, a bindless thread dispatch (BTD) function supports SIMD16 and SIMD32 modes, variable general purpose register (GPR) usage, shared local memory (SLM), and BTD barriers by persisting through the resumption of the parent thread following execution and completion (post-diverging and then converging spawn). One embodiment of the invention includes a hardware-managed implementation to resume the parent threads and a software-managed dereference of the SLM and barrier resources.

In one embodiment of the invention, the following terms have the following meanings:

Callable Mode: Threads that are spawned by bindless thread dispatch are in "Callable Mode." These threads can access the inherited shared local memory space and can optionally spawn a thread per thread in the callable mode. In this mode, threads do not have access to the workgroup-level barrier.

Workgroup (WG) Mode: When threads are executing in the same manner with constituent SIMD lanes as dispatched by the standard thread dispatch, they are defined to be in the workgroup mode. In this mode, threads have access to workgroup-level barriers as well as shared local memory. In one embodiment, the thread dispatch is initiated in response to a "compute walker" command, which initiates a compute-only context.

Ordinary Spawn: Also referred to as regular spawn threads 4111 (**Figure 41**), ordinary spawn are initiated whenever one callable invokes another. Such spawned threads are considered in the callable mode.

Diverging Spawn: As shown in **Figure 41,** diverging spawn threads 4101 are triggered when a thread transitions from workgroup mode to callable mode. A divergent spawn's arguments are the SIMD width and fixed function thread ID (FFTID), which are subgroup-uniform.

Converging Spawn: Converging spawn threads 4121 are executed when a thread transitions from callable mode back to workgroup mode. A converging spawn's arguments are a per-lane FFTID, and a mask indicating whether or not the lane's stack is empty. This mask must be computed dynamically by checking the value of the per-lane stack pointer at the return site. The compiler must compute this mask because these callable threads may invoke each other recursively. Lanes in a converging spawn which do not have the convergence bit set will behave like ordinary spawns.

Bindless thread dispatch solves the SIMD divergence issue for ray tracing in some implementations which do not allow shared local memory or barrier operations. In addition, in one embodiment of the invention, BTD is used to address SIMD divergence using a variety of compute models. In particular, any compute dispatch with a thread group barrier and shared local memory can spawn bindless child threads (e.g., one child thread at a time per parent) and all the same threads can be regrouped and dispatched by BTD for better efficiency. This embodiment allows the originating threads to share their shared local memory space with their child threads. The shared local memory allocations and barriers are released only when finally converged parents terminate as indicated by end of thread (EOT) indicators). One embodiment of the invention also provides for amplification within callable mode, allowing tree traversal cases with more than one child being spawned.

Although not so limited, one embodiment of the invention is implemented on a system where no support for amplification is provided by any SIMD lane (i.e., allowing only a single outstanding SIMD lane in the form of diverged or converged spawn thread). In addition, in one implementation, the 32b of (FFTID, BARRIER_ID, SLM_ID) is sent to the BTD-enabled dispatcher 4050 upon dispatching a thread. In one embodiment, all these spaces are freed up prior to launching the threads and sending this information to the bindless thread dispatcher 4050. Only a single context is active at a time in one implementation. Therefore, a rogue kernel even after tempering FFTID cannot access the address space of the other context.

In one embodiment, if StackID allocation is enabled, shared local memory and barriers will no longer be dereferenced when a thread terminates. Instead, they are only dereferenced if all associated StackIDs have been released when the thread terminates. One embodiment prevents fixed-function thread ID (FFTID) leaks by ensuring that StackIDs are released properly.

In one embodiment, barrier messages are specified to take a barrier ID explicitly from the sending thread. This is necessary to enable barrier/SLM usage after a bindless thread dispatch call.

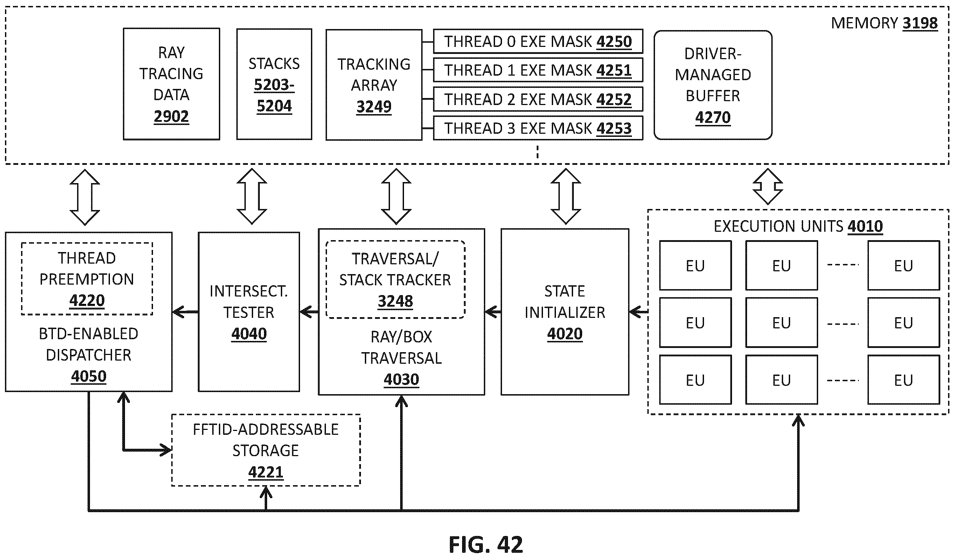

**Figure 42** illustrates one embodiment of an architecture for performing bindless thread dispatching and thread/workgroup preemption as described herein. The execution units (EU) 4010 of this embodiment support direct manipulation of the thread execution mask 4250-4253 and each BTD spawn message supports FFTID reference counting for re-spawning of a parent thread following completion of converging spawn 4121. Thus, the ray tracing circuitry described herein supports additional message variants for BTD spawn and TraceRay messages. In one embodiment, the BTD-enabled dispatcher 4050 maintains a per-FFTID (as assigned by thread dispatch) count of original SIMD lanes on diverging spawn threads 4101 and counts down for converging spawn threads 4121 to launch the resumption of the parent threads 4100.

Various events may be counted during execution including, but not limited to, regular spawn 4111 executions; diverging spawn executions 4101; converging spawn events 4121; a FFTID counter reaching a minimum threshold (e.g., 0); and loads performed for (FFTID, BARRIER_ID, SLM_ID).

In one embodiment, shared local memory (SLM) and barrier allocation are allowed with BTD-enabled threads (i.e., to honor ThreadGroup semantics). The BTD-enabled thread dispatcher 4050 decouples the FFTID release and the barrier ID release from the end of thread (EOT) indications (e.g., via specific messages).

In one embodiment, in order to support callable shaders from compute threads, a driver-managed buffer 4270 is used to store workgroup information across the bindless thread dispatches. In one particular implementation, the driver-managed buffer 4270 includes a plurality of entries, with each entry associated with a different FFTID.

In one embodiment, within the state initializer 4020, two bits are allocated to indicate the pipeline spawn type which is factored in for message compaction. For diverging messages, the state initializer 4020 also factors in the FFTID from the message and pipelines with each SIMD lane to the ray/box traversal block 4030 or bindless thread dispatcher 4050. For converging spawn 4121, there is an FFTID for each SIMD lane in the message and pipeline FFTID with each SIMD lane for the ray/box traversal unit 4030 or bindless thread dispatcher 4050. In one embodiment, the ray/box traversal unit 4030 also pipelines the spawn type, including converging spawn 4121. In particular, in one embodiment, the ray/box traversal unit 4030 pipelines and stores the FFTID with every ray converging spawn 4121 for TraceRay messages.

In one embodiment, the thread dispatcher 4050 has a dedicated interface to provide the following data structure in preparation for dispatching a new thread with the bindless thread dispatch enable bit set:

```
Struct tsl_sts_inf { // non-stallable interface
    Logic[8] FFTID;
    Logic[8] BARRIER_ID;
    Logic[8] SLM_ID;
    Logic[8] count_valid_simd_lanes;
}
```

The bindless thread dispatcher 4050 also processes the end of thread (EOT) message with three additional bits : Release_FFTID, Release_BARRIER_ID, Release_SLM_ID. As mentioned, the end of thread (EOT) message does not necessarily release/dereference all the allocations associated with the IDs, but only the ones with a release bit set. A typical use-case is when a diverging spawn 4101 is initiated, the spawning thread produces an EOT message but the release bit is not set. Its continuation after the converging spawn 4121 will produce another EOT message, but this time with the release bit set. Only at this stage will all the per-thread resources be recycled.

In one embodiment, the bindless thread dispatcher 4050 implements a new interface to load the FFTID, BARRIER_ID, SLM_ID and the lane count. It stores all of this information in an FFTID-addressable storage 4221 that is a certain number of entries deep (max_fftid, 144 entries deep in one embodiment). In one implementation, the BTD-enabled dispatcher 4050, in response to any regular spawn 4111 or diverging spawn 4101, uses this identifying information for each SIMD lane, performs queries to the FFTID-addressable storage 4221 on a per-FFTID basis, and stores the thread data in the sorting buffer as described above (see, e.g., content addressable memory 4201 in Figure 42). This results in storing an additional amount of data (e.g., 24bits) in the sorting buffer 4201 per SIMD lane.

Upon receiving a converging spawn message, for every SIMD lane from the state initializer 4020 or ray/box traversal block 4030 to the bindless thread dispatcher 4050, the per-FFTID count is decremented. When a given parent's FFTID counter becomes zero, the entire thread is scheduled with original execution masks 4250-4253 with a continuation shader record 4201 provided by the converging spawn message in the sorting circuitry 4008.

Different embodiments of the invention may operate in accordance with different configurations. For example, in one embodiment, all diverging spawns 4101 performed by a thread must have matching SIMD widths. In addition, in one embodiment, a SIMD lane must not perform a converging spawn 4121 with the ConvergenceMask bit set within the relevant execution mask 4250-4253 unless some earlier thread performed a diverging spawn with the same FFTID. If a diverging spawn 4101 is performed with a given StackID, a converging spawn 4121 must occur before the next diverging spawn.

If any SIMD lane in a thread performs a diverging spawn, then all lanes must eventually perform a diverging spawn. A thread which has performed a diverging spawn may not execute a barrier, or deadlock will occur. This restriction is necessary to enable spawns within divergent control flow. The parent subgroup cannot not be respawned until all lanes have diverged and reconverged.

A thread must eventually terminate after performing any spawn to guarantee forward progress. If multiple spawns are performed prior to thread termination, deadlock may occur. In one particular embodiment, the following invariants are followed, although the underlying principles of the invention are not so limited:

• All diverging spawns performed by a thread must have matching SIMD widths.

• A SIMD lane must not perform a converging spawn with the ConvergenceMask bit set within the relevant execution mask 4250-4253 unless some earlier thread performed a diverging spawn with the same FFTID.

• If a diverging spawn is performed with a given stackID, a converging spawn must occur before the next diverging spawn.

• If any SIMD lane in a thread performs a diverging spawn, then all lanes must eventually perform a diverging spawn. A thread which has performed a diverging spawn may not execute a barrier, or deadlock will occur. This restriction enables spawns within divergent control flow. The parent subgroup cannot not be respawned until all lanes have diverged and reconverged.

• A thread must eventually terminate after executing any spawn to guarantee forward progress. If multiple spawns are performed prior to thread termination, deadlock may occur.

In one embodiment, the BTD-enabled dispatcher 4050 includes thread preemption logic 4220 to preempt the execution of certain types of workloads/threads to free resources for executing other types of workloads/threads. For example, the various embodiments described herein may execute both compute workloads and graphics workloads (including ray tracing workloads) which may run at different priorities and/or have different latency requirements. To address the requirements of each workload/thread, one embodiment of the invention suspends ray traversal operations to free execution resources for a higher priority workload/thread or a workload/thread which will otherwise fail to meet specified latency requirements.

As described above with respect to **Figures 52A-B**, one embodiment reduces the storage requirements for traversal using a short stack 5203-5204 to store a limited number of BVH nodes during traversal operations. These techniques may be used by the embodiment in **Figure 42,** where the ray/box traversal unit 4030 efficiently pushes and pops entries to and from the short stack 5203-5204 to ensure that the required BVH nodes 5290-5291 are available. In addition, as traversal operations are performed, traversal/stack tracker 3248 updates the tracking data structure, referred to herein as the tracking array 3249, as well as the relevant stacks 5203-5204 and ray tracing data 2902. Using these techniques, when traversal of a ray is paused and restarted, the traversal circuitry/logic 4030 can consult the tracking data structure 3249 and access the relevant stacks 5203-5204 and ray tracing data 2902 to begin traversal operations for that ray at the same location within the BVH where it left off.

In one embodiment, the thread preemption logic 4220 determines when a set of traversal threads (or other thread types) are to be preempted as described herein (e.g., to free resources for a higher priority workload/thread) and notifies the ray/box traversal unit 4030 so that it can pause processing one of the current threads to free resources for processing the higher priority thread. In one embodiment, the "notification" is simply performed by dispatching instructions for a new thread before traversal is complete on an old thread.

Thus, one embodiment of the invention includes hardware support for both synchronous ray tracing, operating in workgroup mode (i.e., where all threads of a workgroup are executed synchronously), and asynchronous ray tracing, using bindless thread dispatch as described herein. These techniques dramatically improve performance compared to current systems which require all threads in a workgroup to complete prior to performing preemption. In contrast, the embodiments described herein can perform stack-level and thread-level preemption by closely tracking traversal operation, storing only the data required to restart, and using short stacks when appropriate. These techniques are possible, at least in part, because the ray tracing acceleration hardware and execution units 4010 communicate via a persistent memory structure 3198 which is managed at the per-ray level and per-BVH level.

When a Traceray message is generated as described above and there is a preemption request, the ray traversal operation may be preempted at various stages, including (1) not yet started, (2) partially completed and preempted, (3) traversal complete with no bindless thread dispatch, and (4) traversal complete but with a bindless thread dispatch. If the traversal is not yet started, then no additional data is required from the tracking array 3249 when the raytrace message is resumed. If the traversal was partially completed, then the traversal/stack tracker 3248 will read the tracking array 3249 to determine where to resume traversal, using the ray tracing data 2902 and stacks 3121 as required. It may query the tracking array 3249 using the unique ID assigned to each ray.

If the traversal was complete, and there was no bindless thread dispatch, then a bindless thread dispatch may be scheduled using any hit information stored in the tracking array 5229 (and/or other data structures 2902, 3121). If traversal completed and there was a bindless thread dispatch, then the bindless thread is restored and execution is resumed until complete.

In one embodiment, the tracking array 3249 includes an entry for each unique ray ID for rays in flight and each entry may include one of the execution masks 4250-4253 for a corresponding thread. Alternatively, the execution masks 4250-4253 may be stored in a separate data structure. In either implementation, each entry in the tracking array 3249 may include or be associated with a 1-bit value to indicate whether the corresponding ray needs to be resubmitted when the ray/box traversal unit 4030 resumes operation following a preemption. In one implementation, this 1-bit value is managed within a thread group (i.e., a workgroup). This bit may be set to 1 at the start of ray traversal and may be reset back to 0 when ray traversal is complete.

The techniques described herein allow traversal threads associated with ray traversal to be preempted by other threads (e.g., compute threads) without waiting for the traversal thread and/or the entire workgroup to complete, thereby improving performance associated with high priority and/or low latency threads. Moreover, because of the techniques described herein for tracking traversal progress, the traversal thread can be restarted where it left off, conserving a significant processing cycles and resource usage. In addition, the above-described embodiments allow a workgroup thread to spawn a bindless thread and provides mechanisms for reconvergence to arrive back to the original SIMD architecture state. These techniques effectively improve performance for ray tracing and compute threads by an order of magnitude.

APPARATUS AND METHOD FOR DATA-PARALLEL RAY TRACING

In scientific visualization (but also in movies and other domains) data sets are increasingly growing to sizes that cannot be processed by a single node. For off-line algorithms (mostly in movies) this is often handled through paging, caching, and out-of-core techniques; but when an interactive setting is required (e.g., visualization for oil-and-gas, scientific visualization in a large-data/HPC environment, interactive movie content previews, etc) this is no longer possible. In this case, it is absolutely necessary to use some form of data parallel rendering, in which the data is partitioned across multiple different nodes--such that the entirety of the data can be stored across all nodes--and where these nodes collaborate in rendering the required image.

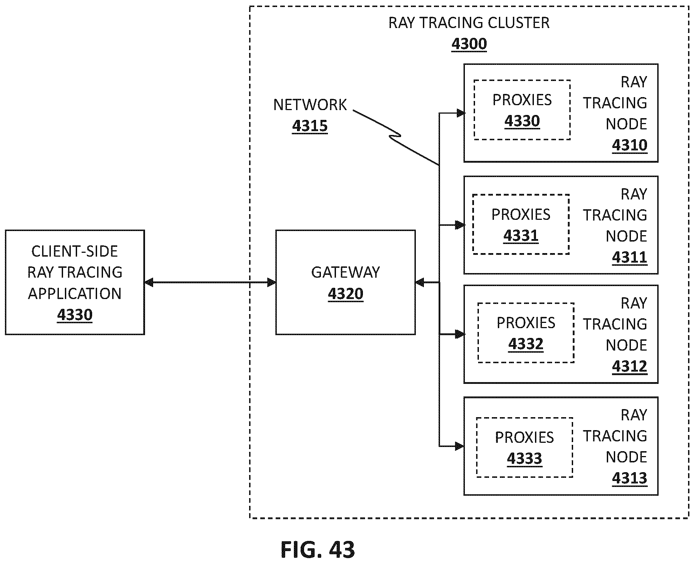

The embodiments of the invention include an apparatus and method for reducing the bandwidth for transferring rays and/or volume blocks in the context of data-distributed ray tracing across multiple compute nodes. **Figure 43,** for example, illustrates a ray tracing cluster 4300 comprising a plurality of ray tracing nodes 4310-4313 which perform ray tracing operations in parallel, potentially combining the results on one of the nodes. In the illustrated architecture, the ray tracing nodes 4310-4313 are communicatively coupled to a client-side ray tracing application 4330 via a gateway 4320.

It will be assumed in the description below that multiple nodes 4310-4313 jointly hold the ray tracing data. Each such node 4310-4313 may contain one or more CPUs, GPUs, FPGAs, etc, and the computations may be performed on either individual ones or a combination of these resources. In one embodiment, the compute nodes 4310-4313 communicate with one another through some form of network 4315 such as Infiniband, OmniPath, or NVLink, to name a few. The data may be portioned across the memories of these nodes 4310-4313, either because the application using the renderer has itself partitioned the data (as is the case for many in situ algorithms or parallel middlewares such as ParaView, Visit, etc), or because the renderer has created this partitioning.

To do parallel rendering in such an environment, there are a variety of algorithmic choices: Compositing based approaches have each node renders an image of its local data, and combine these partial results using depth- and/or alpha compositing. Data Forwarding (or caching) approaches compute a given ray's (or pixel's, path's, etc) operations on a given node, detect whenever this ray/pixel/path needs data that lives on another node, and fetches this data on demand. Ray Forwarding based approaches do not forward data to the rays that need it, and instead send the rays to where the data is: when a node detects that a ray needs processing with another node's data it sends that ray to the node owning that data.

Among these choices, compositing is the simplest, and most widely used; however, it is only applicable for relatively simple rendering effects, and cannot easily be used for effects such as shadows, reflections, ambient occlusion, global illumination, volumetric scattering, volumetric shadows, etc. Such effects, which are being required more frequently by users, require some sort of ray tracing in which case data parallel rendering either fetches data to the rays or sends the rays to the data. Both approaches have been used before and their limitations are well understood. In particular, both approaches suffer from high bandwidth requirements, either by sending up to billions of rays around (for ray forwarding), or by having each node 4310-4313 fetch up to many gigabytes of data (for data forwarding), or both (when a combination of both is used).

Though network bandwidth is rising dramatically, data size and/or ray count are rising, too, meaning that this bandwidth is, in practice, very quickly the limiting factor for performance. In fact, it often is the sole reason that interactive performance cannot be achieved, except in very simplistic settings (such as primary-ray only rendering, in which case one could also have used compositing).

One embodiment of the invention focuses on the core idea that, in practice, very large parts of the data often do not actually matter for a given frame. For example, in volume rendering the user often uses a "transfer function" to highlight certain regions of the data, with less interesting data set to fully transparent. Clearly, a ray that would only traverse "un-interesting" data would not need to fetch this data (or be sent to this data), and the respective bandwidth may be saved. Similarly, for surface-based ray tracing, if a ray passes through a region of space owned by another node, but does not actually intersect any triangles there, then it does not actually need to interact with this other node's triangles.

One embodiment extends the concepts of "empty space skipping" and "bounding volumes" from individual nodes to data parallel rendering, in the form of using what are referred to herein as "proxies" 4330-4333 for a node's data. In particular, each node computes a very low memory footprint proxy 4330-4333 of its own data such that this proxy provides the ability to either approximate or conservatively bound this data. All nodes 4310-4313 then exchange their proxies 4330-4333 such that each node has every other node's proxies. For example, the proxies 4330 stored on node 4310 will include proxy data from nodes 4311-4313. When a node needs to trace a ray through a spatial region owned by another node it first traces this ray through its own copy of this node's proxy. If that proxy guarantees that no meaningful interaction will occur, it can skip sending that ray/fetching that data, thereby saving the bandwidth required for doing so.

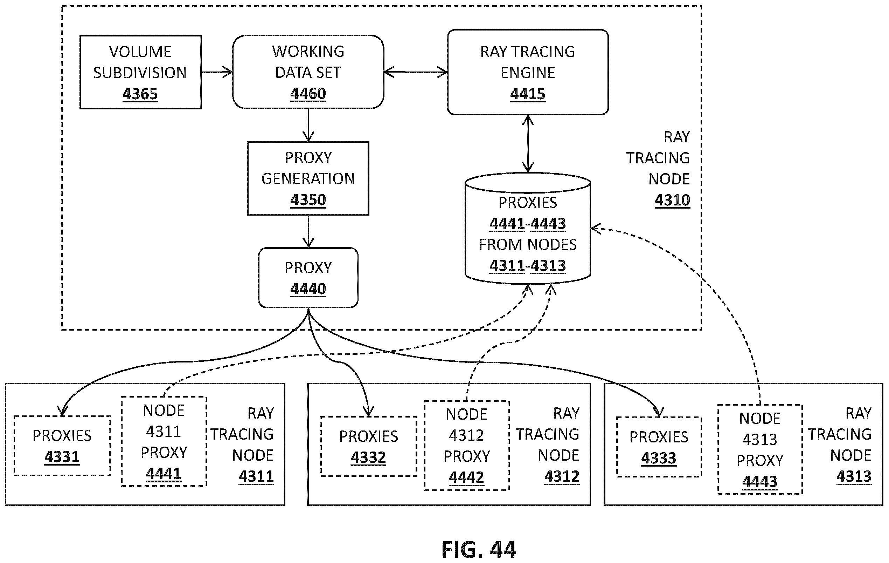

**Figure 44** illustrates additional details of a ray tracing node 4310 in accordance with one embodiment of the invention. A volume subdivision module 4365 subdivides a volume into a plurality of partitions each of which is processed by a different node. Working data set 4460 comprises the data for the partition to be processed by node 4310. A proxy generation module 4350 generates a proxy 4440 based on the working data set 4460. The proxy 4440 is transmitted to each of the other ray tracing nodes 4311-4313 which use the proxy to cull unneeded data as described herein. Similarly, proxies 4441-4443 generated on nodes 4311-4313, respectively, are transmitted to node 4310. Ray tracing engine 4415 performs ray tracing operations using both the working data set 4460 stored locally and the proxies 4441-4443 provided by each of the interconnected nodes 4311-4313.

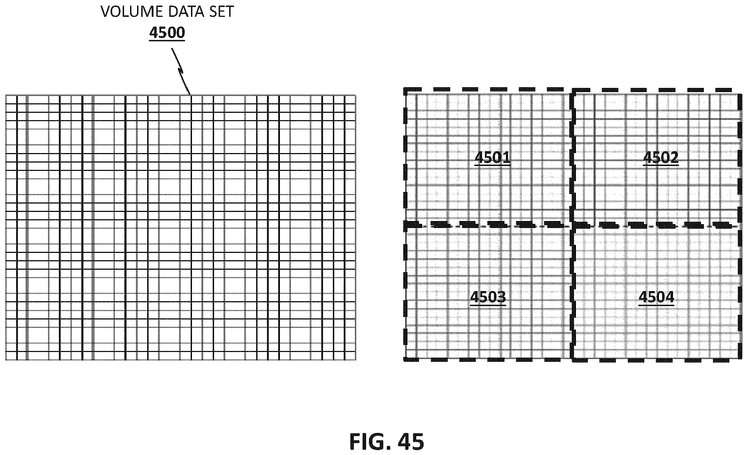

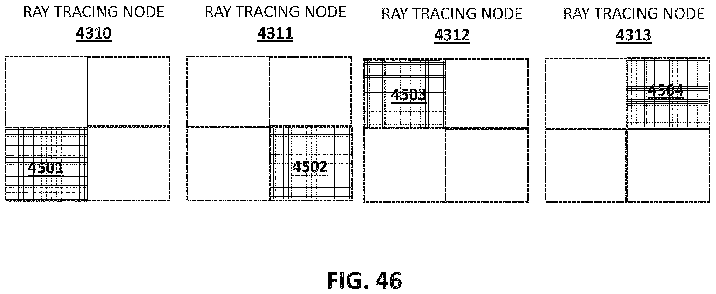

**Figure 45** illustrates an example in which, in the context of volume rendering, a given volume data set 4500 is too large to be rendered on one node, so it gets partitioned into multiple blocks 4501-4504 (in this case, a 2x2 set). As illustrated in **Figure 46,** this logically partitioned volume may then be distributed across different nodes 4310-4313, each one retaining part of the volume.

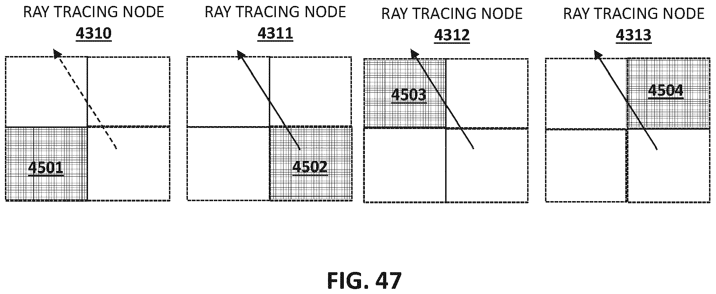

Traditionally, every time a node wants to send a ray that passes through other nodes' spatial regions, it has to either send this ray to those nodes, or fetch those nodes' data. In **Figure 47,** for example, node 4310 traces a ray that passes through space owned by nodes 4311-4313.

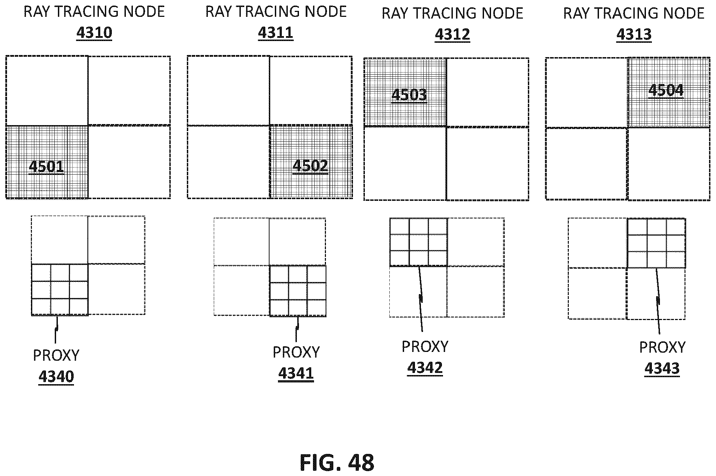

As illustrated in **Figure 48,** in one embodiment, each node 4310-4313 computes a local proxy 4340-4343 for its part of the data 4501-4504, respectively, where the proxy is any sort of object that is (significantly) smaller in size, but allows for approximating or conservatively bounding that node's data. For example, in one embodiment, each node computes what is commonly known as a "macrocell grid"; a lower resolution grid where each cell corresponds to a region of cells in the input volume, and where each such cell stores, for example, the minimum and maximum scalar value in that region (in the context of single-node rendering, this is commonly used for "space skipping"). In the illustrated example, each node 4310-4313 computes one such proxy 4340-4343 for its part of the data. In one embodiment, all nodes then exchange their respective proxies until each node has all proxies for every node, as illustrated in **Figure 49.**

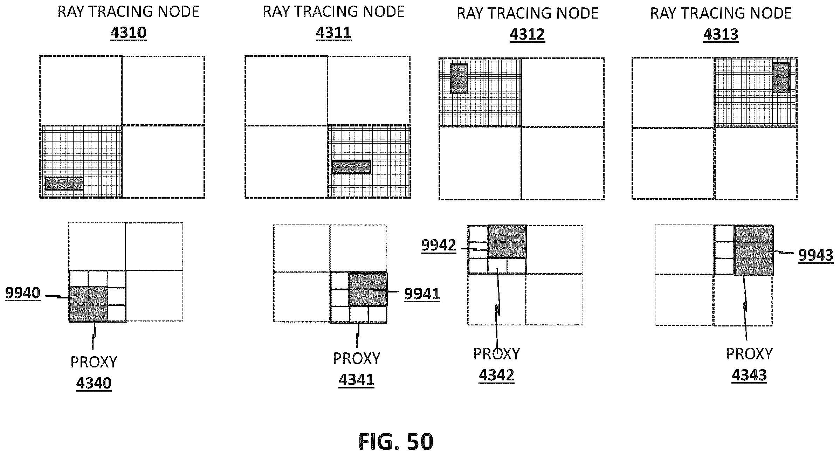

If, for a given transfer function setting, only some of the data values are actually interesting (in the sense that they are not completely transparent), then this can be conservatively detected in the proxy (just as traditional, single-node space skipping does). This is illustrated as regions 9940-9943 in **Figure 50.**

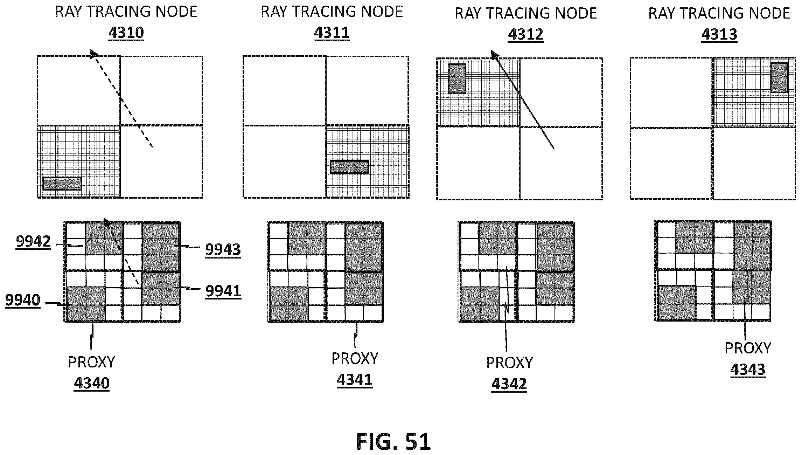

In addition, since every node has every other nodes' proxies each node can also conservatively bound which other nodes' regions are interesting based on the proxies it has for these nodes. If node 4310 has to trace a ray that straddles node's 4311-4313's data regions then the ray may be projected onto the proxy and traversed there, as indicated by the dotted arrow. This indicates that though the ray does pass through space owned by nodes 4310-4312, only node 4312 actually contains any interesting regions, so this ray can be forwarded to node 4312, as indicated in **Figure 51** by the solid arrow, without processing on nodes 4310 or sending to node 4311 (or, in a caching context, data may be fetched only from node 4310 rather than from both 4311 and 4312).

A method in accordance with one embodiment of the invention is illustrated in **Figure 52.** The method may be implemented within the context of the architectures described above, but is not limited to any particular processing or system architecture.

At 5201, a volume is logically subdivided into a plurality of partitions (N) and, at 5202, data associated with the N partitions is distributed to N different nodes (e.g., one partition per node in one embodiment). At 5203, each node computes a proxy for its respective partition and sends the proxy to the other nodes. At 5204, traversal/intersection operations are performed for a current ray or group of rays (e.g., a beam) using the proxies, potentially ignoring certain regions within the proxies which are not relevant to the operations. As mentioned, for a given transfer function setting, only some of the data values are actually interesting (e.g., because they are not completely transparent). This may be conservatively detected in the proxy as done with single-node space skipping. If the ray interacts with the proxy, determined at 5205, then at 5206, the ray(s) are sent to the node associated with the proxy or data is retrieved from the node. The next ray or group of rays are then selected at 5207.

APPARATUS AND METHOD FOR BVH

CONSTRUCTION WITH STOCHASTIC PROCESSING

Top-down construction of bounding volume hierarchies (BVHs) (e.g., using binned surface area heuristic (SAH) operations) requires repeated memory transactions to access all primitives (at least once per constructed level), which incurs a high bandwidth and computational overhead. This typically leaves the construction of the first levels of the hierarchy to be bandwidth-bound due to the sheer number of primitives that are processed. Limiting or reducing the number of such primitives translates directly in a performance improvement for these types of BVH builders.

Approaches other than top-down construction trade build time with quality (ray tracing performance) of the hierarchy. Previous work has found that top-down approaches which minimize SAH exhibit better ray tracing performance than other approaches.

Embodiments of the invention described below provide an extension to top-down construction which improves its performance while retaining acceptable quality (e.g., reduced by 5%-10%).

Some embodiments of the invention perform the following sequence of operations:

1. Pre-processing: The primitives are ordered spatially (Morton ordering). This ordering is needed for the subset and insertion phases.

2. Subset sampling: To ensure robustness, a stratified subset is sampled over the spatially ordered primitives. This ensures that no region is underrepresented in the subset. Additionally, the selection probabilities of each primitive are proportional to a measure, such as their bounding box diagonals over the area. This ensures that large primitives are more likely to be in the subset. Under stratification, large primitives are guaranteed to be sampled. For efficiency, the sampling probabilities may be clamped to the size of a sampling stratum. Otherwise, large primitives could be sampled many times, resulting in compute inefficiencies to reach the right subset size or a smaller effective subset size.

3. Subset BVH construction: With a BVH builder, referred to as the "interior constructor", a BVH is constructed from the subset data.

4. Insertion: The remaining primitives are inserted into the leaves of the subset BVH. For each primitive, a search is performed for the best leaf according to the smallest increase in SAH cost. For efficiency, not all leaves are considered, but only the spatially ordered neighborhood.

5. Cluster BVH construction: For each cluster, BVH construction is continued using the interior constructor. In this instance, however, a direct application is not optimal, since the construction needs to be efficiently parallelized over all clusters. A specific implementation is therefore suggested to get the best performance.

Some embodiments do not require the data to be spatially ordered, thus alleviating the potentially expensive sorting step. This for example also helps in cases where data-streaming is more important, or the full data cannot fit in memory. One such embodiment operates as follows:

1. Subset sampling: Because preprocessing is not performed in this sequence, the subset is sampled directly from the input data (instead of from the spatially ordered data.

2. Subset BVH construction: As described above, a BVH is constructed from the subset data.

3. Insertion: Primitives are inserted by performing a top-down search in the tree, minimizing a cost metric like the increase in SAH cost. The increase can be used as a bound to prune entire subtrees (e.g., if a leaf with lower cost has already been found). For optimization, each subtree may contain the smallest of its leaf surface area, so that some search branches can be cut due to higher overall SAH cost.

4. Cluster BVH construction: As described above for the first sequence of operations. For each cluster, BVH construction is continued using the interior constructor. In this instance, however, a direct application is not optimal, since the construction needs to be efficiently parallelized over all clusters. A specific implementation is therefore suggested to get the best performance.

Initial results demonstrate that embodiments of the invention outperform the binned SAH builder in terms of performance by up to two times on large scenes (sanmiguel, 10M primitives) while retaining the same build quality. On the other hand, smaller scenes (such as crytek sponza, 300K primitives) do not benefit from these embodiments, likely due to the overhead from the additional processing phases. Some embodiments reduce this overhead with further optimizations and/or hardware with lower dispatch overhead.

Being able to fully rebuild the BVH more often instead of refitting, lowering the amount of data that needs to be processed on the GPU, or allowing for lazy builds can be beneficial and open new possibilities. These embodiments leverage the fact that a carefully selected subset of the data can give a good approximation of the final BVH, especially concerning the upper topology that is the most expensive to process in full.

This approach allows representative geometry to be selected that describes the data distribution spatially and cost-wise. After the approximated tree is built from this subset, the rest of the geometry is inserted by carefully selecting the leaves to provide an optimal result. The leaves are further processed to obtain a full BVH. This, in conjunction with data streaming, compression and quantization can drastically improve performance.

The sheer amount of memory and bandwidth requirements to construct a BVH can easily become a bottleneck both for real-time and interactive applications where dynamic geometry or out-of-core data are involved. To offset the building cost, which can represent a substantial fraction of the frame time, the tree is often refitted (e.g., via bottom-up updates of bounding boxes) for a long time during animation before being rebuilt. This has the effect of lowering its quality and increasing the traversal cost. Reducing the cost of high-quality BVH construction is thus a useful goal, as it would allow higher quality BVHs to be maintained under real-time dynamic conditions, improving at the same time the ray traversal efficiency and the level of dynamic content that can be handled.

As mentioned, these embodiments leverage the fact that a carefully selected subset of the data can give a good approximation of the final BVH, especially concerning the upper topology that is the most expensive to process in full. These embodiments can be used to improve hardware BVH builders, which can struggle to build the first BVH levels due to the memory footprint, and reach parallel build for sub-trees substantially earlier. These embodiments can also enable real-time rendering to build a better quality BVH more often to avoid refitting which heavily degrades traversal performance and allow for construction of huge scenes not possible before on normal hardware and/or to allow for more detail in the resulting images.

A Survey on Bounding Volume Hierarchies for Ray Tracing. Computer Graphics Forum 40, 2 (2021), 683-712 describes a full overview of BVHs while Monte Carlo and QMC methods are described in Monte Carlo and Quasi-Monte Carlo Methods (Springer 1st ed.). Concerning stochastic methods applied to BVH construction, the only known approach is a randomized plane splitting decision as described in Kelvin Ng and Borislav Trifonov, Automatic bounding volume hierarchy generation using stochastic search methods (mini-workshop) (2003). Space partitioning has been exploited in the form of grid based as described in Grid-based SAH BVH construction on a GPU, The Visual Computer 27, 6 (2011), 697-706 and Ingo Wald, On fast construction of SAH-based bounding volume hierarchies (2007). Morton-sorted approaches can be used for faster build times and/or two-stages builds as described in J. Pantaleoni and D. Luebke. 2010. HLBVH: Hierarchical LBVH Construction for on High Performance Graphics, Eurographics Association, 87-95. Some embodiments rely on Morton code sorting, from which a representative subset of the primitives can be importance sampled, creating the top hierarchy.

Encoding extra information into the Morton code bits to help with construction, like triangle size, has shown improvements over classic LBVH-like builders as described in Extended Morton codes for high performance bounding volume hierarchy construction, Proceedings of high performance graphics (2017), 1-8. The insertion stage can also be seen as an agglomerative approach, where the leaves of the stochastic BVH represent clusters of interest. Ploc is a bottom-up approach that aggregates pairs of triangles until the full hierarchy is built [Parallel Locally-Ordered Clustering for Bounding Volume Hierarchy Construction. IEEE Trans. Vis. Comput. Graph. 24, 3 (2018), 1345-1353], while k-means algorithms have been tested for fixed values of k [Parallel BVH construction using k-means clustering. The Visual Computer 32, 6 (2016), 977-987]. In contrast, embodiments of the invention avoid expensive data-sweeps to build from the bottom-up and are not limited to a fixed number of k nodes/clusters: these embodiments instead adapt dynamically to the input geometry. There are refining techniques that take a full BVH and optimize it in a second pass: a LBVH is used as a base and further refined [Parallel BVH construction using progressive hierarchical refinement, Computer Graphics Forum, Vol. 36 (2017), 487-494] or its nodes are shuffled to optimize its SAH cost[Fast insertion-based optimization of bounding volume hierarchies. In Computer Graphics Forum, Vol. 32 (2013), 85-100 and Parallel Reinsertion for Bounding Volume Hierarchy Optimization, Computer Graphics Forum 37, 2 (2018), 463-473]. It is also possible to build the tree incrementally by inserting one node at a time [Incremental BVH construction for ray tracing. Computers & Graphics 47 (2015), 135-144 and Automatic creation of object hierarchies for ray tracing. IEEE Computer Graphics and Applications 7, 5 (1987), 14-20].

Different approaches to BVH construction provide specific tradeoffs between algorithmic complexity and final tree quality. Fast Morton builders usually come with a *nk* complexity from their radix sort, where *k* is the key length and *n* the number of primitives, but suffer from lower SAH quality. Top-down builders, instead, have a more expensive *n* log *n/m* complexity, but give better SAH quality and thus faster intersection tests. This section focuses on the latter case.

Embodiments of the invention subdivide BVH build complexity into three main components: the subset BVH creation (1), the cluster BVHs construction (2) and the extra steps required for the full process (3). In (1) only a subset *M* of the data are used, bringing the complexity to $O(m \log m)$; after the upper part is built, the cluster BVHs construction (2) needs to iterate over *n* primitives and each tree has on average *n/m* elements: this can be expressed as $O(n \log n/m)$. Finally, the overhead (3) of these embodiments touches *n* primitives if the spatial sorting is enabled, *m* during the sampling and *n-m* in the insertion step; in this case $\alpha \in [0, 1]$ is used as a factor relative to the construction time for overhead and conservatively bound (3) to $O(\alpha n \log n)$.

By considering the construction time alone, an upper bound on the speedup increase can be evaluated by the ratio between a normal top-down builder and the sum of the two construction steps (1,2) as

$$\frac{n \log n}{m \log m + n \log(n/m)}.$$

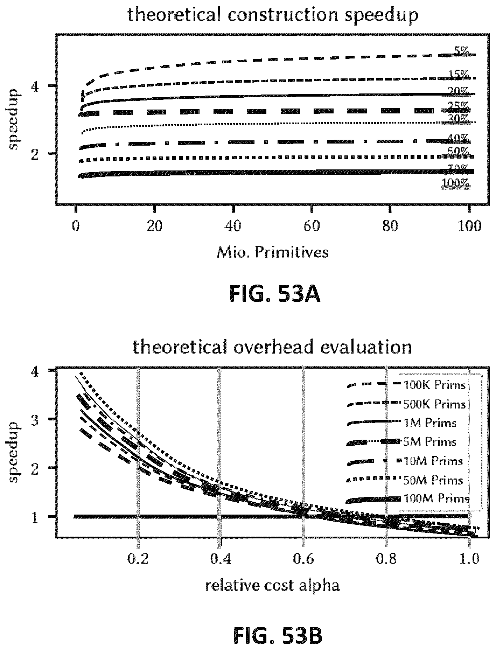

As shown in **Figures 53A-B**, depending on the amount of primitives used for the subset *M*, there is a wide theoretical speedup ranging from 1x to 5x: while the trend is somewhat similar, almost plateauing after a few hundred thousand primitives, there is a slow but steady increase inversely proportional to the amount of data used. Since this amount also affects the final quality of the BVH, in the next experiment a reasonable size of 20% primitives is considered, that already provides a theoretical 3.5x speedup.

When adding also the overhead (3) for bounding the theoretical gain, the relative cost introduced compared to the pure building time is considered: this results in the speedup ratio

$$\frac{n \log n}{m \log m + n \log(n/m) + \alpha n \log n}.$$

To this end, it can be seen that $\alpha \in [0, 1]$ behaves with different numbers of primitives ranging from tens of thousands to tens of millions (**Figures 53A-B**). As it is apparent, the overhead needs to be at most 60% of the build time of a standard top-down builder; after that, any theoretical gain is lost. Another insight from this experiment suggests that the techniques described here are largely independent from the number of primitives involved.

To summarize, there is a theoretical gain of up to 3x by using the embodiments described herein compared to a standard top-down builder. This result holds true as long as the builders have similar performances. Given different hardware and software implementations, however, there might be other factors to consider.

Figures 53A-B show a theoretical analysis of construction time speed-up relative to a top-down builder: the upper bound gain by different sized subsets in the construction time without overhead (a) is readily reached after a few hundred thousand primitives, and increases very slowly afterwards. With overhead and a 20% subset size (b), the theoretical upper bound gain decreases and breaks even when the extra compute reaches 60% of the construction time, without much variation with increasing number of primitives (colored lines, from 1e5 to 1e8).

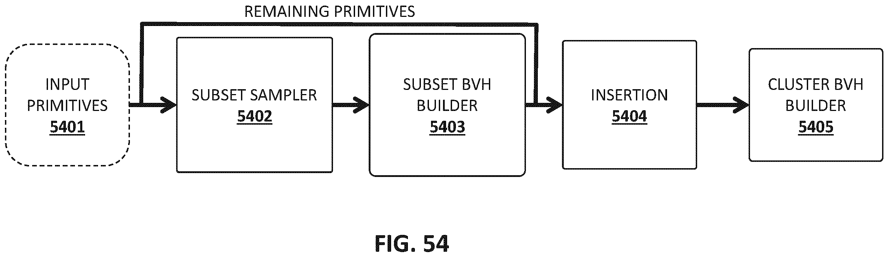

Some embodiments include sequential stages as illustrated in **Figure 54.** A subset sampler 5402 generates a small representative subset of the input primitives 5401 through stochastic importance sampling (e.g., Subset Sampling, described below). From this subset, a subset BVH builder 5403 constructs an initial BVH (e.g., Subset BVH, described below). For this, pre-existing BVH construction techniques can be used, referred to as the interior builder.

Insertion hardware logic 5404, the remaining primitives are inserted into the leaves of the subset BVH that effectively operate as clusters. A cluster BVH builder 5405 continues the BVH construction in parallel from each of these clusters (e.g., cluster BVHs, described below). It is important to note that any builder can be used in this framework, but in particular top-down builders like binned SAH will benefit the most. This is due to the higher bandwidth and compute demand from the upper part of the tree construction, that is mitigated from a smaller subset use. During the first step, some embodiments can also include an optional spatial reordering for the primitives according to a space filling curve (i.e. Morton).

The various components illustrated in Figure 54 may be implemented in hardware, software, or any combination thereof. For example, the hardware components may include dedicated fixed-function hardware components and general purpose instruction processing hardware components to execute program code to implement the techniques described herein.

1. <u>Subset Sampling</u>

For the subset selection, embodiments identify a representative selection of the primitives, leveraging an optional spatial ordering as well as stratified and weighted sampling. Stratification and spatial ordering ensure a stratified selection of the primitives in space. Weighted sampling allows steering of the selection towards more important (larger) primitives, since it is beneficial to have them higher up in the tree to allow for more efficient early ray termination. If those would be inserted only later in the insertion phase, they would end up in a lower level of the tree, resulting in bigger bounding boxes overlaps and increased intersection costs.

The bounding box diagonal is used as the sampling weight to construct a Cumulative Density Function (CDF), from which we then sample M unique primitives. Some primitives might have a very large weight relative to the others, which would result in a very inefficient sampling by being selected multiple times. Weights clamping is used to ensure that important primitives will still be selected but only once. Intuitively the normalization factor will redistribute the mass among the unclamped primitives, creating an iterative cycle. A conservative binned approach is used that splits the data and selects the best clamp available.

The unknown spatial distribution of the primitives can result in densely tessellated tiny regions that are under-sampled and thus create uneven sized leaves in the tree. To alleviate this issue, some uniformity in the weights distribution can be re-introduced.

The Subset Sampling step can be divided in four phases: an optional sorting of the primitives, importance sampling of the primitives, weights clamping, and some re-weighting to a more uniform distribution. The two latter phases happen before the sampling and are meant as an algorithmic optimization rather than a theoretical improvement.

To ensure guaranteed selection of large primitives, importance sampling of primitives is combined with stratified sampling. The sampling is guided by the size of the primitive. In particular one embodiment uses the length of its bounding box diagonal.

When selecting which primitives to use to create the approximate BVH, the primitives that have a higher influence are importance sampled. In this context, selection is biased towards larger primitives which bounding boxes would span considerably over space, instead of simply sampling uniformly over the data. To this end, some embodiments use a Cumulative Density Function (CDF) over a properly chosen measure and sample the primitives from it: appropriate measures would be Area and the Diagonal of the bounding box enclosing the primitive. This approach not only helps later on in the insertion stage, but guarantees that large bounding boxes stay at the top of the tree, where they can be evaluated early on. This not only gives an earlier ray termination, but diminishes the overall traversal costs by avoiding large nodes containing such primitives deeper in the tree.

The resulting selection will favor primitives that have a higher weight, without neglecting others that are still important to properly represent the full data distribution.

Since distribution in 3D space is also relevant, a way to reach all regions covered by the geometry is needed. This ensures that the extent of the approximated BVH resembles the correct one. A possible approach is to divide the space into strata and guarantee that we draw a sample from each of those by means of stratified sampling.

Primitives with probabilities larger than the stratum size are guaranteed to be sampled. However, large primitives can also cover multiple or even many strata, resulting in many duplicate samples. This reduces the efficiency of the sampling procedure. Prior to sampling the primitives, their weights are clamped, such that the resulting sampling probabilities are not (much) larger than the stratum size.

The quality and efficiency of the sampling procedure is greatly affected by large primitives. Their sampling probabilities might be so large that they would be sampled many times, resulting in a smaller actual subset size. This is completely implementation dependent and connected with the M' and rng. New samples could be drawn until the target subset size is reached, but the running time would be completely data-dependent (instead of only dependent on the size). To solve this issue, weights of primitives are clamped just enough so that very large primitives are still guaranteed to be sampled at least once under stratified sampling. The clamped sampling probability of a primitive is defined as

$$p_i = \frac{\min(w_i, c)}{\sum_j \min(w_j, c)},$$

, where $w_i$ is the sampling weight of a primitive and $c$ is the clamping weight. Since the focus is the sampling guarantee of large primitives, only the clamped sampling probability is considered

$$p^c = \frac{c}{\sum_j \min(w_j, c)}$$

---

**Algorithm 1:** Sweep-based weight clamping

---

**input** : Array $W$ filled with weights to clamp
         Stratum size $s$

**output**: Clamping weight

$S \leftarrow \text{sortAscending}(W);$

$\text{uSum} \leftarrow 0;$                     // unclamped sum

$\text{cSum} \leftarrow |W|;$                   // clamped sum

**for** $w \in S$ **do**

  **if** $w \geq s\,(\text{uSum} + w \cdot \text{cSum})$ **then**

    $\quad$ **return** $\text{uSum}/(1/s - \text{cSum});$

  $\text{uSum} \leftarrow \text{uSum} + w;$

  $\text{cSum} \leftarrow \text{cSum} - 1;$

**return** $\infty;$

---

To guarantee sampling of large primitives, the clamped sampling probability only needs to be equal to or larger than the stratum size $s$ (e.g. $s = 1/M$), resulting in the following condition:

$$c \geq s \sum_j \min(w_j, c)$$

Successful evaluation for a given clamping weight means that large primitives are still guaranteed to be sampled at least once under stratified sampling with a given stratum size $s$. Generally, the goal is to find the smallest (optimal) c to ensure that as few duplicate samples occur as possible. Obviously, directly computing the optimal clamping weight is difficult, given that the sum is dependent on it. The sum may therefore be split into a sum of clamped and unclamped weights:

$$c \geq s \left( \sum_{j,w_j < c} w_j + c \sum_{j,w_j \geq c} 1 \right)$$

A sweep-based algorithm (Algorithm 1) is defined which evaluates each weight as a possible clamping weight in ascending order. To do so, both sums are incrementally updated during the sweep. Once a weight satisfies the clamping condition, the exact clamping weight must lie between the current and previous weight. Since the sums do not change in this range, we can compute the exact clamping weight by rearranging the split sum:

$$c' = \frac{\sum_{j,w_j < c} w_j}{1/s - \sum_{j,w_j \geq c} 1}$$

While this algorithm allows to compute the exact clamping weight, it is also relatively expensive, since it requires a sorting of the weights. Similar to binned BVH construction, binning can be used for weights and primitive counts, to avoid the sorting step (Algorithm 2). The clamping condition can then be evaluated on all bin boundaries and the smallest valid boundary used as the clamping weight. We are primarily interested in clamping large outlier weights, therefore we use exponentially growing bins of base $b$ to efficiently cover varying scales of weights. The resulting

---

**Algorithm 2:** Binned weight clamping

**input** : Array $W$ filled with weights to clamp
            Stratum size $s$ and bin base $b$, count $c$ and offset $o$
**output**: Clamping term
binCounts $\leftarrow [0|i \in [0,c)]$;
binSums $\leftarrow [0|i \in [0,c)]$;
**for** $w \in W$ **do**             // binning of weights
      bin $\leftarrow \min(\max(o + \lfloor \log_b w \rfloor, 0), c - 1)$;
      binCounts[bin] $\leftarrow$ binCounts[bin] $+ 1$;
      binSums[bin] $\leftarrow$ binSums[bin] $+ w$;

uSum $\leftarrow 0$;            // unclamped sum
cSum $\leftarrow |W|$;          // clamped sum
**for** $i \leftarrow 0$ **to** $c - 1$ **do**       // bin search
      clamp $\leftarrow b^{i-o+1}$;
      **if** clamp $\geq s \cdot ($uSum $+$ clamp $\cdot$ cSum$)$ **then**
            **return** clamp;
      uSum $\leftarrow$ uSum $+$ binSums[$i$];
      cSum $\leftarrow$ cSum $-$ binCounts[$i$];

**return** $\infty$;

---

clamping weight will in general be larger than the optimal clamping weight $c$, but it is bounded by a factor of $b$ (excluding cases where $c$ is in the first or last bin). This is obvious if we consider the case where $c$ is just marginally above a bin boundary. Since this boundary does not satisfy the clamping condition, the next boundary has to be selected, which is $b$-times larger than the previous boundary.

2. <u>Iterative & Binned weight clamping</u>

An issue with the sampling procedure can be seen when approaching a subset fraction of 100% or when many primitives have a relative large area. The problem is that some elements with a huge weight in the CDF are constantly sampled, hindering the process of selecting M unique primitives, or that the ones left to reach M have a very low sampling probability. Some embodiments resolve this issue by clamping the weights of the primitives in such a way that they would still have the same probability to be part of the subset (given stratified sampling), without skewing the sample distribution.

Given M stratified samples, the clamped probability that a primitive $x \in X$ with a corresponding weight $w_x \in W$ is selected exactly once is:

$$P_s(x) = \min\left(\frac{w_x}{\sum_i^{|W|} w_i}, \frac{1}{M}\right)$$

since we want to have M unique primitives, it follows that all normalized weights are bigger than $1/M$ can be safely clamped. Let's define the sets $A$ and $B$ to divide the primitives that do not need clamping from the others that do or are exactly equal to it.

$$A = \left\{x \in X \,\middle|\, \frac{w_x}{\sum_{i \in X} w_i} < \frac{1}{M}\right\}$$

$$B = \{x \in X \,|\, x \notin A\}$$

The total sum weight $S$ can be rewritten as

$$S = \sum_{x \in X} w_x = \sum_{a \in A} w_a + \sum_{b \in B} w_b$$

to obtain the new clamped sum $S'$ as

$$1 = \frac{\sum_{a \in A} w_a}{S'} + |B|\frac{1}{M}$$

$$S' = \sum_{a \in A} w_a + |B|\frac{S'}{M}$$

$$S'\left(1 - \frac{|B|}{M}\right) = \sum_{a \in A} w_a$$

$$S' = \frac{\sum_{a \in A} w_a}{1 - \frac{|B|}{M}}$$

It is easy to see that *S'* is always non-negative since either the number of elements in *B* is less than M or the set *A* must be empty. In the latter case, the are *M* elements with exactly the same weight and we don't need to clamp. Conversely if *B* = ∅ then *S'* = *S*.

Intuitively we have re-scaled the weight of the primitives in *A* to account for the excess weight of the ones in

$$\frac{W_a}{S'} \geq \frac{1}{M}$$

*B*. While this solved the previous issue, now it is possible that some elements in *A* should be clamped as well if . This leads to an iterative approach.

If $S'_i$ is the clamped sum at iteration i of the algorithm, it is sufficient to reach a fixed point where $S'_i = S'_{i+1}$ .

The number of iteration scales with the size of M and the distribution of the weights: if the latter ones are very different in value, many iterations may be needed as more and more of the bigger weights in *A* will reach the clamping condition. Similarly, selecting a subset close to the whole set will converge towards a uniform distribution in many steps. To avoid the need of iterating multiple times, a binning approach may be used that can give a good conservative result in just one iteration.

Assuming to know *S*, let $B_i^c$ and $B_i^s$ be number and total weight sum of the elements in the *ith* of *k* bins respectively, plus $B_i^{min}$ and $B_i^{max}$ the minimum and maximum weight assigned to it, *s.t.*

$B_i^{min} \leq B_i^{max} < B_{i+1}^{min} \; \forall w_x \in B_j$. Then, if either $B_i^{min} \geq \frac{S}{M}$ or $B_i^{max} \geq \frac{S}{M}$ (the clamping condition):

$$S_A = \sum_{j=0}^{i-1} B_j^s$$

$$C_B = \sum_{j=i}^{k} B_j^c$$

$$S' = \frac{S_A}{1 - \frac{C_B}{M}}$$

In general, *S* is not known from the start and thus we can't construct *A* and *B*. A possible approach consists on binning all the primitives while constructing the Morton codes or building the CDF. Since the span of the weights are not known, a power histogram is used to bin the weights. After a prefix sum over the bins giving the value of *S'* for each binned interval, the first bin that satisfies the clamping condition can be identified and a conservative approximation of *S'* computed (see Algorithm 2).

To ensure that densely tessellated regions are not underrepresented, the clamped sampling probabilities are mixed with uniform probabilities. Uniform sampling effectively importance samples dense regions. To retain the sampling guarantee of large primitives, slight modifications to the weight clamping procedure are performed.

The mixture probability is

$$p_i^* = u \cdot \frac{1}{N} + (1 - u) \cdot \frac{\min(w_i, c)}{\sum_j \min(w_j, c)},$$

where *u* is the uniform fraction. Using this mixture directly with the clamped probabilities would destroy the guarantee of sampling large primitives. In the same fashion as in the previous section, the clamped sampling probability needs to be larger than the stratum size *s*. Solving for c leaves us with:

$$c \geq \frac{s - u/N}{1 - u} \sum_j \min\left(w_j, c\right)$$

This equation differs from only in the factor before the sum. It can be extracted as an updated stratum size s':

$$s' = \frac{s - u/N}{1 - u}$$

*s'* can be used in place of *s* in the previous section when a uniform mixture is used when sampling. Intuitively, the stratum size is increased such that the resulting clamping weight reserves additional weight to large primitives. After applying the uniform mixture, this additional weight is then redistributed among all primitives, leaving large primitives with just enough weight to fully cover the actual stratum size *s* (therefore still being guaranteed to be sampled). Obviously, some large primitives lose the guarantee of being sampled, namely the ones whose weight is between the previous and new clamping weight.

3. Subset BVH Construction

The upper topology is constructed using the representative subset. One key point in this process is recognizing that each of these primitives represents a larger amount, so it has to be treated in a statistical sense. We scale the bbox and cost of each selected primitive by the inverse of its selection probability $\left(\max\left(\frac{1}{P(x)M}, 1\right)\right)$, and modify the SAH cost metric to account for it. This way smaller primitives that are part of a finer mesh better approximate their surroundings, while large triangles that cover huge portions of the CDF (and, consequently, geometry) do not skew the overall topology.

4. Insertion

After the subset BVH has been constructed using the interior BVH constructor, the remaining primitives now need to be inserted into the leaves of the subset BVH in order to continue the construction process. The leaves of the subset BVH are referred to as clusters. The problem definition of this phase is to associate each of the remaining primitives with a cluster. The insertion decisions are guided by a cost model as detailed below. This cost model is minimized by evaluating multiple candidate leaves for insertion and selecting the one with the lowest cost. The algorithm is detailed below.

The SAH cost of an existing BVH can be minimized by performing topological rearrangements. Instead of computing the SAH directly for a possible rearrangement, only its absolute change can be computed by subtracting the previous bounding box surface areas from the updated ones. Minimizing the change obviously gives the same result as minimizing the SAH directly. But it has the added advantage in that only the affected nodes have to be considered (the change is zero for all other nodes). This can lead to a more efficient algorithm and further potential for optimizations. We apply this approach to the insertion decision in the same way. Contrary to them, we are not performing rearrangements to the topology, but we insert new primitives into the leaves of the topology instead.

Given a primitive with bounding box *B*, we define the cost of inserting this primitive into a leaf node *L* as

$$c_B(L) = \mathrm{SA}(L \cup B)(|L| + 1) - \mathrm{SA}(L)|L| + \sum_{N \in \tau(L)} \mathrm{SA}(N \cup B) - \mathrm{SA}(N),$$

where $\tau(L)$ is the trail of nodes that lead from the root node to the leaf node *L*. The cost model captures the increase of the bounding box areas along the trail and the leaf itself. We also incorporate the addition of the primitive to the leaf. This proved to be crucial, otherwise primitives are attracted to large leaves which cover them entirely.

**Figure 55** illustrates an example of window construction of the pruning Morton window search. Each primitive 5503 possesses an index into a compacted array of subset primitives 5502. This array contains references to the leaf node 5501 each subset primitive 5502 belongs to. For a primitive 5504 this can be used to generate a window around its previous subset primitive in the compacted array (elements 80-87 of the subset primitives 5502). Each leaf node pointed to in the window is considered for insertion (highlighted leaf nodes 5501).

The flattened SAH metric expresses the cost of a (sub)tree with root node $N$ as

$$C(N) = \frac{1}{\mathrm{SA}(N)} \left[ C_T \sum_{N_i} \mathrm{SA}(N_i) + C_I \sum_{N_l} \mathrm{SA}(N_l)|N_l| \right]$$

where SA is the surface area of internal ($N_i$) or leaf ($N_i$) nodes, and $C_T$, $C_1$ the traversal and primitive intersection costs respectively. The cost increase of inserting a new primitive $p$ in the tree can be formulated by the individual increases at a leaf ($I_l$) and internal node ($I_i$) level:

$$I(p,N) = I_i(p,N) + I_l(p,N)$$

where

$$I_l(p,N) = C_I(\mathrm{SA}(N_l')|N_l + 1| - \mathrm{SA}(N_l)|N_l|)$$
$$= C_I(\mathrm{SA}(N_l' - N_l)|N_l| + \mathrm{SA}(N_l'))$$

similarly, the trail of parent nodes $Np$ would increase their cost accordingly as

$$I_i(p,N) = C_T \sum_{N_p} \mathrm{SA}(N_p' - N_p)$$

Evaluating the cost function for each leaf node for each primitive would be too expensive in practice. Spatial ordering of primitives is leveraged in order to perform a localized search for insertion candidates (Figure 55). The algorithm considers a fixed number of subset primitives and their leaf nodes around a primitive. Since subset primitives are sparsely represented in the original array, the leaf pointers are stored into a separate compacted array. A prefix sum is used to perform this compaction, which is also used to later index into this compacted array.

---

**Algorithm 3:** Pruning morton window search

**input** : Primitive index $i$, bounding box $bBox^p$ and window size $w$

**output** : Leaf node to insert primitive into

$m \leftarrow \text{closestSubsetPrimitive}[i]$;

$\text{minCost} \leftarrow \infty$;

**for** $j \in [m - w, m + w]$ **do**

    $\text{leaf} \leftarrow \text{subsetPrimitiveCluster}[j]$;

    $\text{bBox} \leftarrow \text{getBBox (node)}$;

    $\text{bBox}^* \leftarrow \text{merge}\left(\text{bBox}, \text{bBox}^p\right)$;

    $c \leftarrow \text{getPrimCount (leaf)}$;

    $\text{cost} \leftarrow \text{area}\left(\text{bBox}^*\right) \cdot (c + 1) - \text{area (bBox)} \cdot c$;

    $\text{node} \leftarrow \text{getParent (leaf)}$;

    $\text{diffCost} \leftarrow 1$;

    **while** $\text{node} \neq \bot \wedge \text{cost} < \text{minCost} \wedge \text{diffCost} > 0$ **do**

        $\text{bBox} \leftarrow \text{getBBox (node)}$;

        $\text{bBox}^* \leftarrow \text{merge}\left(\text{bBox}, \text{bBox}^p\right)$;

        $\text{diffCost} \leftarrow \text{area}\left(\text{bBox}^*\right) - \text{area (bBox)}$;

        $\text{cost} \leftarrow \text{cost} + \text{diffCost}$;

        $\text{node} \leftarrow \text{getParent (node)}$;

    **if** $\text{cost} < \text{minCost}$ **then**

        $\text{minCost} \leftarrow \text{cost}$;

        $\text{minNode} \leftarrow \text{leaf}$;

**return** minNode;

---

One embodiment of a search is detailed in algorithm 3. The leaf with the smallest cost is tracked and an iteration performed over the window. For each candidate, the cost is computed by traversing the tree upwards towards the parent. The cost is simply the sum of surface area changes of the traversed inner nodes. The fact that all cost terms are positive is exploited, i.e., while traversing towards the parent, the cost can only increase. When a leaf has already been found with a smaller cost than the cost we have computed so far for the candidate leaf, the traversal can be aborted early and this node not considered any further.

*Terminology.* In the following, the terminology from OpenCL is used to refer to the GPU programming model. A work group (CUDA: Thread block) is a set of threads that can directly synchronize with each other and also exchange data through fast but limited shared memory. Work groups are further subdivided into sub groups (CUDA: Warp). Threads inside a sub group are executed in lockstep and can directly exchange data through register permutations.

*Framework.* In some embodiments, the algorithm is implemented both as a CPU-builder in pbrt and as a GPU-builder based on one API DPC++. The CPU builder was used to test various approaches that lead to the final design. The GPU-builder implements a subset of the functionality present in the CPU-builder and is used for performance testing and comparison to other build algorithms. Unless explicitly stated, the following paragraphs refer to the GPU implementation.

*Subset Sampling.* A direct implementation of the binned weight clamping procedure (Algorithm 2) posed to be one order of magnitude slower than expected. To solve this issue, the algorithm is further simplified in some embodiments, by only tracking primitive counts per bin, instead of also the sum of their weights. The sum is bounded by the maximum range in the bin times the primitive count. The error of this approximation is a factor of $b$, where $b$ is the bin base. Together with the error of evaluating the clamping condition on bin boundaries only, the combined error bound for the resulting clamped sampling probability increases to $b2$. A smaller base $b' = \sqrt{b}$ can be used to get the same error bound $b$ again. This approach resulted in the expected performance.

In some embodiments, to sample the actual subset primitives, inverse CDF sampling is employed. After the weights have been computed, a prefix sum over them is computed, which is later used for a binary search with a given random number. Single precision floating point numbers are used for the CDF. While for large scenes, the available precision is not enough to faithfully represent regions with low probability, it does not affect the results much. However, rounding errors in the CDF do have an effect. The prefix scan routine employed performs the scan across an implicit hierarchy with three levels. First, a scan per sub group is performed, then a scan per work group and finally a scan over all work groups. This approach exhibits good error properties, since it is comparable to a pairwise summation (but wider).

In one embodiment, for random numbers, a Sobol random number builder and/or a binned SAH builder as the interior build algorithm. For constructing the subset BVH a three-staged approach can be employed to efficiently exploit the available parallelism. In the first stage, single nodes are processed by multiple work groups by distributing their primitives among them. After a fixed number of iterations, enough nodes become available to be independently processed by individual work groups (second stage). After a few more iterations, even more nodes become available such that they can be independently processed by individual sub groups (third stage). The third stage is executed as a single pass, where a sub group constructs the entire remaining subtree of a node.

While most construction algorithms can readily be used for constructing the subset BVH (as long as the resulting BVH is not refined down to one primitive per node), the same does not hold true for the cluster BVH construction, where having to construct many small trees may become an issue. The naive approach of reusing the algorithm from the subset BVH construction would be heavily inefficient. Instead, the fact that the number of clusters is typically already far higher than the number of concurrently executing sub groups is exploited. Consequently, a slightly modified version of the third stage of the subset BVH construction algorithm above is used. Each sub group is therefore responsible to construct the entire subtree of a cluster. This is also the reason why uniformity needs to be added to the subset sampling. Otherwise, large clusters of highly tessellated geometry would overwhelm the processing capabilities of individual sub groups, resulting in load imbalance problems.

*Clustering.* Slight modifications to the pruning Morton window search (Algorithm 3) can be performed to better exploit the parallelism in the hardware. Instead of having each thread traverse their own window, the windows of a sub group are unified (by taking the min of the lower and the max of the upper range). This results in perfectly coherent memory access and lead to an improvement of roughly 20%, even though the actual window has increased for each thread. Additionally, it seems to be beneficial to first evaluate the center of the window for each thread independently.

While the memory access is relatively inefficient in that case, the found node is oftentimes already the optimum. As such, pruning may be triggered earlier when the window is traversed. Re-checking nodes is avoided, since they can (and often are) referenced multiple times in the same window. In can be sufficient to check if the node to be checked is the same as the minimum found so far. This case in particular cannot be pruned by the cost bound. The run time with all of these optimizations is reduced down to a third of the original run time.

Comparative Evaluation

In this section the embodiments of the invention are comparatively evaluated against existing build algorithms targeted for GPUs. We compare against LBVH, ATRBVH, PLOC and binned SAH construction. The implementation of the latter is identical to the interior builder used in some embodiments of the invention. Binary hierarchies are built. Ray tracing performance is measured by converting the binary hierarchy to a hardware-dependent format first. The hardware format expects a maximum of eight leaves per primitive. For top-down builders, the construction process is stopped early. Since the other builders construct hierarchies that are refined down to one primitive per leaf, the conversion prunes the tree accordingly.

The LBVH implementation can be used to generate an initial topology. The optimization step is a port from the publicly available CUDA implementation into the SYCL-Framework. The implementation which allocates the distance matrix to local memory is ported. The CUDA implementation makes heavy use of shuffle intrinsics to perform reductions inside sub groups. In some cases, these can be replaced by higher-level primitives provided by SYCL (e. g. sub_group_reduce_max). A recommended treelet size of 9 is used in some embodiments and two iterations are performed. A sub group size of 16 (instead of 32 on CUDA) is used in some embodiments.

Morton ordering of primitives has been shown to not significantly affect the quality of the subset (inferred from a similar quality of the final BVH). This makes the leaf nodes relatively stable, since they are essentially averages over multiple subset primitives. While the sorting does not seem to be relevant for the subset generation, it is very relevant for the following insertion step. The pruning Morton window search has proven to be most efficient compared to the other approaches we tested.

Embodiments were evaluated using the binned top-down builder as an interior builder. We experimented with using the PLOC algorithm as an interior builder, too, but without success. When ignoring the sorting step, PLOC is essentially a linear-time algorithm. This is due to the decreasing set size after each iteration. As a result, the higher levels of the tree are already fast to compute. We therefore cannot expect any speedup when using these embodiments. This means that the algorithm is only really applicable to algorithms that have roughly the same time complexity for each level, typically $O(n\ logn)$. Some embodiments effectively linearize the construction steps (although the entire algorithm still remains in $O(n\ logn)$). [

In order to differentiate primitives in the Morton code, the number of symbols in the Morton code needs to follow a roughly logarithmic relationship on the number of primitives. When the hierarchy on a subset is first constructed, shorter Morton codes may be used resulting in fewer sorting iterations. After insertion, each cluster would need to be sorted too. But since the clusters are typically very small, even shorter Morton codes can be used.

On a high level, the subset sampling phase selects a subset of M unique primitives out of $N$ input primitives ($M \ll N$). The subset is then given to the interior BVH constructor for higher construction speed of the first levels of the hierarchy. During experiments two constraints were noted which need to be upheld by the sampling procedure: (1) Large primitives (relative to the other primitives) must be part of the subset. (2) Dense regions must not be underrepresented in the subset. As for the first constraint, it is assumed that large primitives have a high impact on the overall topology and their exclusion results in inferior BVH quality. The second constraint is only due to efficiency. When densely tessellated regions with many small primitives are underrepresented in the subset, clusters with very large primitive counts were observed in those regions. While this does not affect the quality of the final BVH, it creates load imbalance problems for the cluster BVH construction phase. Both constraints are opposite with regards to each other (including small primitives means that less larger primitives can be included) and therefore need to be balanced.

## APPARATUS AND METHOD FOR DENSITY-AWARE STOCHASTIC SUBSETS FOR IMPROVED IMPORTANCE SAMPLING

Efficiently determining which primitive a ray intersects is a key factor for ray tracing performance. To this end, data structures such as Boundary Volume Hierarchies (BVH) have been extensively researched and improved. These are built by aggregating spatial information in a tree structure. Traversing the tree structure to its leaves results in the minimum possible number of tests.

Top-down BVH builders have a O(nlogn) complexity due to their multiple passes over the data; the result is a balanced tree where the overlap and the surface-area of its axis-aligned bounding boxes (AABB) tends to be minimal compared to other methods.

Several methods exist which attempt to alleviate the algorithmic complexity and thus improve BVH build times. HLBVH for example, in its mixed LBVH and top-down BVH variant, attempts to extract the geometric density using Morton codes by pre-building clusters at a fixed grid-size. See J. Pantaleoni and D. Luebke, HLBVH: Hierarchical LBVH Construction for Real-Time Ray Tracing of Dynamic Geometry, Proceedings of the Conference on High Performance Graphics (2010), 87-95. These clusters are then used as primitives to build the top part of the tree by means of a top-down BVH constructor, while the clusters themselves are expanded in the same way as the LBVH is built. The reason for this is that the top part of the tree is usually the one being tested against rays all the time and thus benefits from higher quality. On the other hand, the lower part still suffers from imbalancing, as the fixed spatial size of the grid cells will create clusters with a very high variance in the number of primitives, thus obtaining a deeper tree and more tests needed to reach its leaves.

Parallel BVH Construction Using Locally Density Clustering uses different techniques, as described in Hu, Yingsong, Weijian Wang, Dan Li, Qingzhi Zeng and Yunfei Hu., Parallel BVH Construction Using Locally Density Clustering", IEEE Access 7 (2019), 105827-105839. Morton codes are used to observe a fixed window around each primitive and the distance is calculated to obtain the relative density. Then, a predetermined number, K, of primitives are selected with the highest density and used to create K clusters by combining with the remaining primitives. Then on the K clusters the previous passages are repeated until a K-ary tree is reached. After that, the tree is reshaped as a binary one. This method is both expensive to compute and takes into consideration only the local density of centroids, not the size of the primitive itself.

Stochastic operations can be used for BVH construction, as described above (see, e.g., Figure 54 and associated text). Complexity is lowered by dividing the tree into two partitions. The first partition includes only of a subset of the primitives, which are importance sampled by their bounding-box diagonal, and built by a top-down BVH constructor. The second partition clusters the remaining primitives around the leaves of the top tree and expands them using again with the top-down BVH constructor. This method is adaptive to the data distribution and favors bigger triangles to appear in the top of the tree. That is, the later the subtree would branch off a big primitive, the more tests against huge bounding boxes containing it would be performed instead of skipped.

To overcome the potential primitive imbalances in the clusters due to the importance sampling, a further factor called "uniformity" was introduced in the initial primitives' selection, alleviating the issue without directly addressing the density/volume distribution. In fact, these embodiments increase selection chances for all primitives, lowering the efficacy of the importance sampling and clamping factors

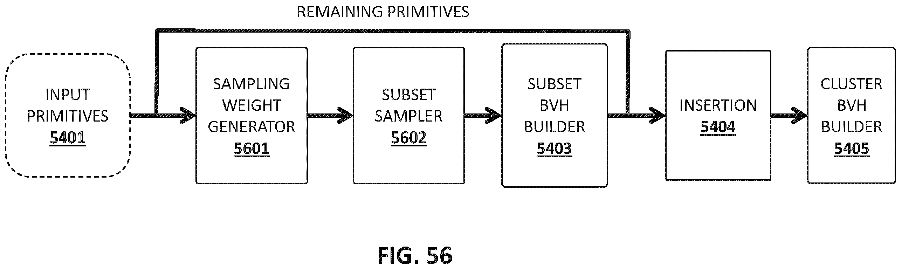

As illustrated in Figure 56, in one embodiment of the invention, a sampling weight generator 5601 is included in the sequential pipeline to generate the sampling weight for each input primitive based on both the bounding box surface or diagonal and the distance of neighboring primitives by evaluating a spatial partition around them. The sampling weight generator 5601 can determine this partition in different ways including, but not limited to, reliance on a Morton window and/or by calculating the nearby Morton codes of the cells.

By using an appropriate or adaptive Morton precision, the sampling weight generator 5601 efficiently locates and determines the distance of the neighboring primitives, weighting them based on the distance and a fitting measure. As an additional optimization, a precision is determined by precomputing the density of the primitives at different Morton levels, such that each lookup will search only a reasonable number of primitives (fixed or adaptive). Once this list is generated, the distance can be weighted using a gaussian drop-off with the surface area of the primitive involved. As a result, the probability of selecting smaller primitives that populate dense regions is increased and important larger primitives that are further away are not neglected. In one embodiment, the weight is determined based on the following formula:

$$Weight(Primitive1, Primitive2) = \frac{Measure(Primitive2)}{Distance(Primitive1, Primitive2)}$$

where the Measure function is either the bounding box's surface area or diagonal. The distance function can be either a linear ratio, the Euclidean distance of the centroids of primitives 1 and 2, or its exponential for a nonlinear drop-off ($e^{(Euclidean\_Distance(...))}$). The selection weight then becomes the sum of such weights. Given the set of indices P' of the selected primitives:

$$SelectionWeight(Primitive) = \sum_{i \in P\prime} Weight(Primitive, Primitive_i)$$

One embodiment uses a tradeoff between speed and precision by precomputing the sum of the measure function in all cells at the start, and then only computing the distance between the primitive and the centroid of the cell. If the resolution of the cell is very high, it naturally reverts to the previous case.

The subset sampler 5602 can use the new selections weights generated by the sampling weight generator 5601 or can use them in combination with the computed weight of the stochastic BVH (described above with respect to **Figure 54**). In this way, the subset sampler 5602 can importance-sample dense regions of space transparently, improving the selection criteria and avoiding the need to artificially increase uniformly in the weights. The number of neighbors, the fixed or adaptive Morton resolution, the windowed or spatial approach and the precomputed summed weights all provide configurable tradeoffs between compute and memory requirements.

The remaining stages shown in **Figure 56** operate as described in **Figure 54.** For example, from the selected subset provided by the subset sampler 5602, a subset BVH builder 5403 constructs an initial BVH (e.g., such as the Subset BVH, described below). Insertion hardware logic 5404 inserts the remaining primitives into the leaves of the subset BVH that effectively operate as clusters. A cluster BVH builder 5405 continues the BVH construction in parallel from each of these clusters (e.g., cluster BVHs, described below). As previously described, some embodiments can also include an optional spatial reordering for the primitives according to a space filling curve (i.e., Morton).

The various components illustrated in **Figure 56** may be implemented in hardware, software, or any combination thereof. For example, the hardware components may include dedicated fixed-function hardware components and general purpose instruction processing hardware components to execute program code to implement the techniques described herein.

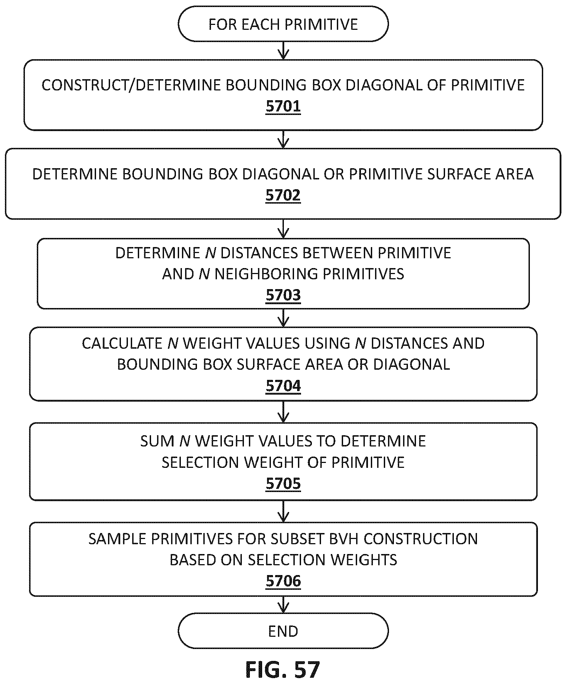

**Figure 57** illustrates a method in accordance with one embodiment of the invention. As indicated, multiple iterations of the method may be implemented at least partially in parallel (e.g., one iteration for each input primitive). At 5701, a bounding box is constructed/determined for the primitive. At 5702, the surface area of the primitive or the diagonal of its bounding box is determined and, at 5703, N distance values are determined corresponding to distances between the primitive and N neighboring primitives. At 5704, N weight values are calculated using the N distance values and bounding box diagonal or primitive surface area and, at 5705, the N weight values are summed to determine the selection weight of the primitive.

At 5706, the selection weights determined for all primitives are used for sampling in accordance with the embodiments of the invention. In one embodiment, the sampling is used to select primitives for a subset BVH construction (e.g., as described with respect to Figure 54).

## CONSTRUCTING AN ACCELERATION STRUCTURE USING A STOCHASTIC SUBSET OF GRAPHICS DATA

To process data in a CPU or GPU, it is necessary to first retrieve it on a source that can be either a hard drive or a network stream and store it to memory. Latency plays an important role in the time required to start any operation. Because BVH construction typically requires all the data to be available before any process can be started, sorting is a key step for bottom up, top-down, or implicit approaches. This is also true for agglomerative techniques that need to access neighbors (e.g., k-means clustering).

In one embodiment of the invention, a stochastic subset BVH (SSBVH) is split into two main phases: the first phase selects a small representative subset of the graphics data which it uses to construct the top part of the BVH. When this first stage is complete, its leaves are filled with all the remaining graphics data and further processed into the final BVH. The key observation here is that only a portion of the graphics data is needed to start the process, so the first phase can start selecting a representative subset of graphics data while the remaining data is streamed from memory/storage or a network.

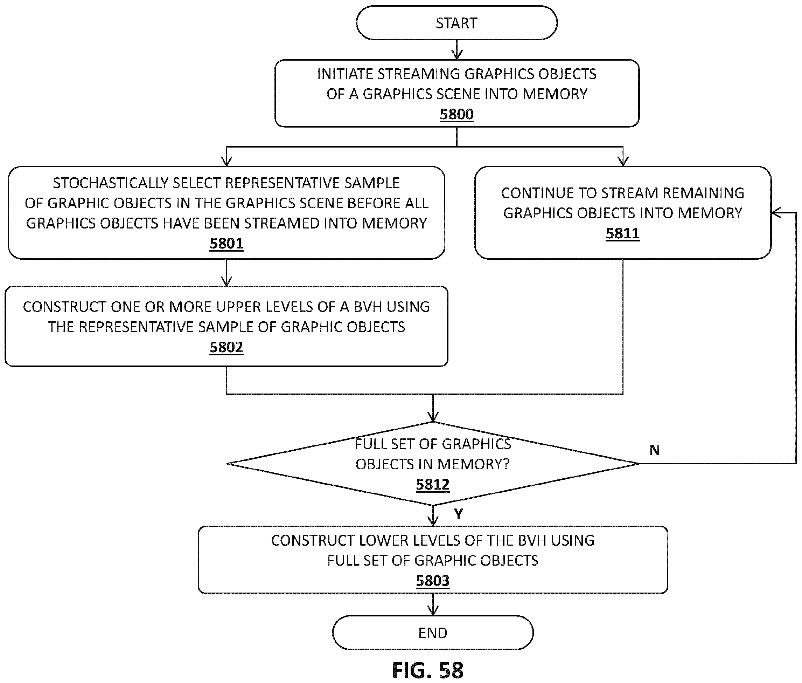

**Figure 58** illustrates a method in accordance with embodiments of the invention. The method may be implemented on the various architectures described herein but is not limited to any particular data processing architecture.

At 5800, streaming of graphics objects of a graphics scene into memory is initiated. For example, the streaming of graphics objects may be initiated by reading graphics objects from a local storage device or over a network interface and loading to memory. The memory can be any type of memory accessible to the graphics processor including external memories (e.g., DDR DRAM, HBM memory, etc.) and/or internal/on-chip memories (e.g., L1/L2/L3 caches, local data share memories, global data share memories, etc). In current systems, the graphics data is accessed sequentially or in accordance with the standard system I/O mechanisms. In contrast, some embodiments of the invention specify a different order in which to stream the graphics objects (e.g., so that a reasonable representative sample can be used).

At 5801, a representative sample of graphics objects in a graphics scene are stochastically selected. As mentioned, in one embodiment, the sampling is initiated before all of the required graphics objects have been streamed into memory, thereby improving the latency associated with BVH construction. Thus, as the representative sample is selected, the remaining graphics objects continue to stream into memory at 5811.

At 5802, one or more upper levels of a BVH are constructed using the representative sample of graphics objects. During the construction, any remaining graphics object may continue to be streamed into memory at 5811.

Once the full set of graphics objects have been streamed into memory, determined at 5812, then at 5803, the lower levels of the BVH are constructed using the full set of graphics objects. For example, the leaves of the existing BVH levels may be filled with all the remaining graphics objects to finish construction of the BVH.

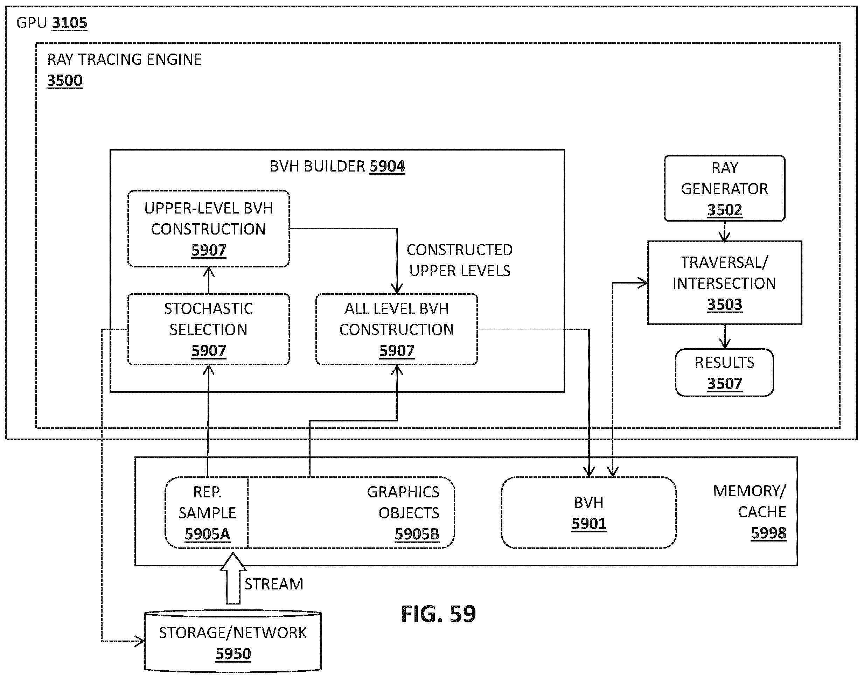

**Figure 59** illustrates an example BVH builder 5904 of a ray tracing engine 5904 for generating a BVH using a stochastic subset of graphics data. In particular, as graphics objects 5905A-B are streamed into the memory/cache subsystem 5998 from storage or a network 5950, stochastic selection logic 5907 selects a representative sample of graphic objects 5905A which have been successfully loaded. In one embodiment, the stochastic selection logic 5907 controls the specific representative sample 5905A which is streamed first from storage/network 5950. In existing implementations, the graphics data is accessed sequentially or in accordance with the standard system I/O mechanisms. In contrast, in some embodiments of the invention, the stochastic selection logic 5907 specifies a different order in which to stream the graphics objects 5905A-B.

Upper-level BVH construction logic 5907 generates one or more upper BVH levels based on the selected graphics objects from the representative sample 5905A. Once all graphics objects 5905 have been loaded into the memory/cache subsystem 5998, all-level BVH construction logic 5907 constructs the remaining levels of the BVH 5901, which may then be utilized by the traversal/intersection hardware logic 3503 for performing ray traversal and intersection operations.

In contrast to existing implementations, these embodiments improve BVH construction latency by initiating BVH construction with a representative sample of graphics data before all of the required graphics data has been streamed into memory. The first phase of construction is initiated, for example, while the remaining graphics data is being streamed from storage, remote/slow memory, or a network.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

EXAMPLES

The following are example implementations of different embodiments of the invention.

Example 1. An apparatus comprising: a sampling weight generator to determine a plurality of sampling weights associated with a corresponding plurality of input primitives, the sampling weight generator to determine each sampling weight based on a surface area or diagonal of a bounding box of the corresponding input primitive and a plurality of distance values corresponding to distances between the input primitive and a corresponding plurality of neighboring input primitives; a sampler to identify a representative subset of the input primitives based, at least in part, on the plurality of sampling weights; bounding volume hierarchy (BVH) builder hardware logic to construct an approximate BVH based on the representative subset of input primitives; hardware logic to insert input primitives not in the representative subset into leaves of the approximate BVH; and the BVH builder or a different BVH builder to construct a final BVH based on the primitives inserted into the leaves of the approximate BVH.

Example 2. The apparatus of example 1 wherein the representative subset is selected from a portion of graphics data loaded into memory, the portion of graphics data comprising a smaller portion than desired to fully construct the BVH.

Example 3. The apparatus of examples 1 or 2 wherein the primitive sampler comprises an importance sampler to perform stochastic importance sampling to identify the representative subset of input primitives and wherein the BVH builder or the different BVH builder is to operate in parallel on the leaves after the primitives are inserted to construct the final BVH.

Example 4. The apparatus of any of examples 1-3 further comprising: compression hardware logic to perform compression and/or quantization on nodes of the final BVH to generate a compressed final BVH.

Example 5. The apparatus of any of examples 1-4 wherein the importance sampler is to bias selection of the subset of input primitives to primitives that have a greater influence on the approximate BVH.

Example 6. The apparatus of any of examples 1-5 wherein the importance sampler is to bias selection of relatively larger primitives over relatively smaller primitives.

Example 7. The apparatus of any of examples 1-6 wherein the importance sampler is to implement a Cumulative Density Function (CDF) to identify the subset of input primitives.

Example 8. The apparatus of any of examples 1-7 further comprising: traversal hardware logic to traverse a ray through the final BVH; and intersection hardware logic to identify intersections between the ray and one or more of the input primitives.

Example 9. A method comprising: determining each sampling weight of a plurality of sampling weights associated with a corresponding plurality of input primitives based on a surface area or diagonal of a bounding box of a corresponding input primitive and a plurality of distance values corresponding to distances between the input primitive and a corresponding plurality of neighboring input primitives; sampling input primitives to identify a representative subset of the input primitives based, at least in part, on the plurality of sampling weights; constructing an approximate bounding volume hierarchy (BVH) based on the representative subset of input primitives; inserting input primitives not in the representative subset into leaves of the approximate BVH; and constructing a final BVH based on the primitives inserted into the leaves of the approximate BVH.

Example 10. The method of example 9 wherein the representative subset is selected from a portion of graphics data loaded into memory, the portion of graphics data comprising a smaller portion than desired to fully construct the BVH.

Example 11. The method of any of examples 9 or 10 wherein sampling input primitives further comprises performing stochastic importance sampling to identify the representative subset of input primitives and wherein constructing the final BVH further comprises operating in parallel on the leaves after the primitives are inserted.

Example 12. The method of any of examples 9-11 further comprising: performing compression and/or quantization on nodes of the final BVH to generate a compressed final BVH.

Example 13. The method of any of examples 9-12 selection of the subset of input primitives is biased to primitives that have a greater influence on the approximate BVH.

Example 14. The method of any of examples 9-13 wherein relatively larger primitives are biased to be selected over relatively smaller primitives.

Example 15. The method of any of claim 9-14 wherein a Cumulative Density Function (CDF) is implemented to identify the subset of input primitives.

Example 16. The method of any of examples 9-15 further comprising: traversing a ray through the final BVH; and identifying intersections between the ray and one or more of the input primitives.

Example 17. A machine-readable medium having program code stored thereon which, when executed by a machine, causes the machine to perform the operations of: determining each sampling weight of a plurality of sampling weights associated with a corresponding plurality of input primitives based on a surface area or diagonal of a bounding box of a corresponding input primitive and a plurality of distance values corresponding to distances between the input primitive and a corresponding plurality of neighboring input primitives; sampling input primitives to identify a representative subset of the input primitives based, at least in part, on the plurality of sampling weights; constructing an approximate bounding volume hierarchy (BVH) based on the representative subset of input primitives; inserting input primitives not in the representative subset into leaves of the approximate BVH; and constructing a final BVH based on the primitives inserted into the leaves of the approximate BVH.

Example 18. The machine-readable medium of example 17 wherein the representative subset is selected from a portion of graphics data loaded into memory, the portion of graphics data comprising a smaller portion than desired to fully construct the BVH.

Example 19. The machine-readable medium of examples 17 or 18 wherein sampling input primitives further comprises performing stochastic importance sampling to identify the representative subset of input primitives and wherein constructing the final BVH further comprises operating in parallel on the leaves after the primitives are inserted.

Example 20. The machine-readable medium of any of examples 17-19 further comprising program code to cause the machine to perform the operations of: performing compression and/or quantization on nodes of the final BVH to generate a compressed final BVH.

Example 21. The machine-readable medium of any of examples 17-20 selection of the subset of input primitives is biased to primitives that have a greater influence on the approximate BVH.

Example 22. The machine-readable medium of any of examples 17-21 wherein relatively larger primitives are biased to be selected over relatively smaller primitives.

Example 23. The machine-readable medium of any of examples 17-22 wherein a Cumulative Density Function (CDF) is implemented to identify the subset of input primitives.

Example 24. The machine-readable medium of any of examples 17-23 further comprising program code to cause the machine to perform the operations of: traversing a ray through the final BVH; and identifying intersections between the ray and one or more of the input primitives.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.).

In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1. An apparatus comprising:

   a sampling weight generator to determine a plurality of sampling weights associated with a corresponding plurality of input primitives, the sampling weight generator to determine each sampling weight based on a surface area or diagonal of a bounding box of the corresponding input primitive and a plurality of distance values corresponding to distances between the input primitive and a corresponding plurality of neighboring input primitives;
   a sampler to identify a representative subset of the input primitives based, at least in part, on the plurality of sampling weights;
   bounding volume hierarchy (BVH) builder hardware logic to construct an approximate BVH based on the representative subset of input primitives;
   hardware logic to insert input primitives not in the representative subset into leaves of the approximate BVH; and
   the BVH builder or a different BVH builder to construct a final BVH based on the primitives inserted into the leaves of the approximate BVH.

2. The apparatus of claim 1 wherein the representative subset is selected from a portion of graphics data loaded into memory, the portion of graphics data comprising a smaller portion than desired to fully construct the BVH.

3. The apparatus of claims 1 or 2 wherein the primitive sampler comprises an importance sampler to perform stochastic importance sampling to identify the representative subset of input primitives and wherein the BVH builder or the different BVH builder is to operate in parallel on the leaves after the primitives are inserted to construct the final BVH.

4. The apparatus of any of claims 1 to 3 further comprising:
compression hardware logic to perform compression and/or quantization on nodes of the final BVH to generate a compressed final BVH.

5. The apparatus of claim 2 wherein the importance sampler is to bias selection of the subset of input primitives to primitives that have a greater influence on the approximate BVH.

6. The apparatus of claim 5 wherein the importance sampler is to bias selection of relatively larger primitives over relatively smaller primitives.

7. The apparatus of claim 6 wherein the importance sampler is to implement a Cumulative Density Function (CDF) to identify the subset of input primitives.

8. The apparatus of any of claims 1 to 7 further comprising:

traversal hardware logic to traverse a ray through the final BVH; and
intersection hardware logic to identify intersections between the ray and one or more of the input primitives.

9. A method comprising:

determining each sampling weight of a plurality of sampling weights associated with a corresponding plurality of input primitives based on a surface area or diagonal of a bounding box of a corresponding input primitive and a plurality of distance values corresponding to distances between the input primitive and a corresponding plurality of neighboring input primitives;
sampling input primitives to identify a representative subset of the input primitives based, at least in part, on the plurality of sampling weights;
constructing an approximate bounding volume hierarchy (BVH) based on the representative subset of input primitives;
inserting input primitives not in the representative subset into leaves of the approximate BVH; and
constructing a final BVH based on the primitives inserted into the leaves of the approximate BVH.

10. The method of claim 9 wherein the representative subset is selected from a portion of graphics data loaded into memory, the portion of graphics data comprising a smaller portion than desired to fully construct the BVH.

11. The method of claims 9 or 10 wherein sampling input primitives further comprises performing stochastic importance sampling to identify the representative subset of input primitives and wherein constructing the final BVH further comprises operating in parallel on the leaves after the primitives are inserted.

12. The method of any of claims 9 to 11 further comprising:
performing compression and/or quantization on nodes of the final BVH to generate a compressed final BVH.

13. The method of claim 10 selection of the subset of input primitives is biased to primitives that have a greater influence on the approximate BVH.

14. The method of claim 13 wherein relatively larger primitives are biased to be selected over relatively smaller primitives.

15. The method of claim 14 wherein a Cumulative Density Function (CDF) is implemented to identify the subset of input primitives.

FIG. 1

FIG. 2A

| GEOMETRY & FIXED FUNCTION PIPELINE  231 | GRAPHICS SOC INTERFACE 232 | GRAPHICS MICROCONTROLLER 233 | MEDIA PIPELINE 234 | PIXEL BACKENDS 235 | 230 |

**221A**

| Vector Engine 222A | Matrix 223A | Cache/ SLM 228A | Sampler 226A |
| Vector Engine 224A | Matrix 225A | | Ray Tracing 227A |

**221B**

| Vector Engine 222B | Matrix 223B | Cache/ SLM 228B | Sampler 226B |
| Vector Engine 224B | Matrix 225B | | Ray Tracing 227B |

**221C**

| Vector Engine 222C | Matrix 223C | Cache/ SLM 228C | Sampler 226C |
| Vector Engine 224C | Matrix 225C | | Ray Tracing 227C |

SHARED/ CACHE MEMORY 236

RASTERIZER 237

ADDITIONAL FIXED FUNCTION LOGIC 238

**221D**

| Vector Engine 222D | Matrix 223D | Cache/ SLM 228D | Sampler 226D |
| Vector Engine 224D | Matrix 225D | | Ray Tracing 227D |

**221E**

| Vector Engine 222E | Matrix 223E | Cache/ SLM 228E | Sampler 226E |
| Vector Engine 224E | Matrix 225E | | Ray Tracing 227E |

**221F**

| Vector Engine 222F | Matrix 223F | Cache/ SLM 228F | Sampler 226F |
| Vector Engine 224F | Matrix 225F | | Ray Tracing 227F |

*FIG. 2B*

**FIG. 2C**

**FIG. 2D**

GRAPHICS PROCESSOR
300

GRAPHICS PROCESSING
ENGINE
310

| DISPLAY CONTROLLER 302 | COPY ENGINE 304 | 3D PIPELINE 312 | 3D/MEDIA SUB-SYSTEM 315 | MEDIA PIPELINE 316 | VIDEO CODEC ENGINE 306 |

MEMORY INTERFACE - 314

DISPLAY DEVICE
318

*FIG. 3A*

GRAPHICS PROCESSOR
320

GRAPHICS PROCESSING
ENGINE CLUSTER
322

COPY ENGINE 304

DISPLAY CONTROLLER 302

VIDEO CODEC ENGINE 306

MEMORY 326A

GRAPHICS ENGINE TILE 310A

GRAPHICS ENGINE TILE 310B

MEMORY 326B

325A
323A
325C

323B
323D
323C

325B
325D

MEMORY 326C

GRAPHICS ENGINE TILE 310C

GRAPHICS ENGINE TILE 310D

MEMORY 326D

323E

323F

FABRIC INTERCONNECT - 324

HOST INTERFACE - 328

DISPLAY DEVICE 318

FIG. 3B

EP 4 439 472 A1

FIG. 3C

*FIG. 4*

**FIG. 5A**

EP 4 439 472 A1

**FIG. 5B**

*FIG. 5C*

**FIG. 6**

EP 4 439 472 A1

GRAPHICS PROCESSOR INSTRUCTION
FORMATS
700

128-BIT INSTRUCTION
710

| OPCODE 712 | CONTROL 714 | EXEC-SIZE 716 | DEST 718 | SRC0 720 | SRC1 722 | SRC2 724 | ACCESS/ADDRESS MODE 726 |
|---|---|---|---|---|---|---|---|

64-BIT COMPACT
INSTRUCTION
730

| OPCODE 712 | INDEX 713 | CONTROL 714 | DEST 718 | SRC0 720 | SRC1 722 |
|---|---|---|---|---|---|

OPCODE DECODE
740

| 7 | 6 | 5 | 4 | 3 | 2 | 1 | 0 |
|---|---|---|---|---|---|---|---|

opcode=000xxxxxb ◄——— Move/Logic - 742

opcode=0010xxxxb ◄——— Miscellaneous - 746

opcode=0011xxxxb ◄——— Flow Control - 744

opcode=0100xxxxb ◄——— Parallel Math - 748

opcode=0101xxxxb ◄——— Vector Math - 750

*FIG. 7*

GRAPHICS
PROCESSOR
800

**FIG. 8**

## FIG. 9A

GRAPHICS PROCESSOR COMMAND
FORMAT
900

| CLIENT 902 | OPCODE 904 | SUB-OPCODE 905 | DATA 906 | COMMAND SIZE 908 |
|---|---|---|---|---|

## FIG. 9B

GRAPHICS PROCESSOR COMMAND
SEQUENCE
910

PIPELINE FLUSH
912

PIPELINE SELECT
913

PIPELINE CONTROL
914

RETURN BUFFER STATE
916

922 — 3D          920          Media — 924

Pipeline?

| 3D PIPELINE STATE 930 | MEDIA PIPELINE STATE 940 |
|---|---|
| 3D PRIMITIVE 932 | MEDIA OBJECT 942 |
| EXECUTE 934 | EXECUTE 944 |

DATA PROCESSING SYSTEM - 1000

| 3D GRAPHICS APPLICATION |
| --- |
| 1010 |

| SHADER INSTRUCTIONS 1012 | EXECUTABLE INSTRUCTIONS 1014 |
| --- | --- |
| | GRAPHICS OBJECTS 1016 |

OPERATING SYSTEM (OS)
1020

| USER MODE GRAPHICS DRIVER 1026 |
| --- |
| SHADER COMPILER 1027 |

| SHADER COMPILER 1024 |
| --- |

| GRAPHICS API 1022 |
| --- |

| KERNEL MODE GRAPHICS DRIVER 1029 |
| --- |

| OS KERNEL MODE FUNCTIONS 1028 |
| --- |

MEMORY
1050

| GRAPHICS PROCESSOR 1032 | PROCESSOR 1030 | GENERAL PURPOSE CORE(s) 1034 |
| --- | --- | --- |

FIG. 10

IP CORE DEVELOPMENT - 1100

SIMULATION MODEL
1112

SOFTWARE
SIMULATION
1110

REGISTER
TRANSFER
LEVEL DESIGN
1115

HARDWARE MODEL
(HDL OR PHYSICAL
DESIGN DATA)
1120

DESIGN FACILITY 1130

NON-VOLATILE
MEMORY
1140

FABRICATION
FACILITY
1165

WIRED
CONNECTION
1150

WIRELESS
CONNECTION
1160

FIG. 11A

EP 4 439 472 A1

PACKAGE
ASSEMBLY
1170

| | INTERCONNECT | |
| LOGIC | STRUCTURE | LOGIC or I/O |
| 1172 | 1173 | 1174 |

BRIDGE
1182

SUBSTRATE
1180

PACKAGE
INTERCONNECT
1183

## FIG. 11B

FIG. 11C

PACKAGE ASSEMBLY 1190

INTERCONNECT STRUCTURE 1173

INTERCONNECT STRUCTURE 1173

MEMORY 1175

LOGIC 1193

LOGIC or I/O 1174

CACHE 1192

LOGIC 1172

I/O 1191

BRIDGE 1187

FABRIC 1185

SUBSTRATE 1180

INTERPOSER 1189

PACKAGE INTERCONNECT 1183

1194

Interchangeable Chiplets
1195

Base Chiplet
1196

Bridge
Interconnect
1197

Base Chiplet
1198

**FIG. 11D**

SOC
INTEGRATED CIRCUIT
1200

APPLICATION
PROCESSOR(s)
1205

GRAPHICS
PROCESSOR
1210

IMAGE
PROCESSOR
1215

VIDEO
PROCESSOR
1220

USB
1225

UART
1230

SPI/
SDIO
1235

$I^2S/I^2C$
1240

DISPLAY
1245

SECURITY
ENGINE
1270

MEMORY
1265

FLASH
1260

MIPI
1255

HDMI
1250

*FIG. 12*

GRAPHICS PROCESSOR
1310

VERTEX PROCESSOR
1305

| FRAGMENT PROCESSOR 1315A | FRAGMENT PROCESSOR 1315C | - - - | FRAGMENT PROCESSOR 1315N-1 |

| FRAGMENT PROCESSOR 1315B | FRAGMENT PROCESSOR 1315D | - - - | FRAGMENT PROCESSOR 1315N |

| MMU 1320A | MMU 1320B |

| CACHE 1325A | CACHE 1325B |

| INTERCONNECT 1330A | INTERCONNECT 1330B |

*FIG. 13*

GRAPHICS PROCESSOR
1340

INTER-CORE TASK-MANAGER
(e.g., THREAD DISPATCHER)
1345

| SHADER CORE 1355A | SHADER CORE 1355C | SHADER CORE 1355E | - - - | SHADER CORE 1355N-1 |
| SHADER CORE 1355B | SHADER CORE 1355D | SHADER CORE 1355F | - - - | SHADER CORE 1355N |

TILING UNIT
1358

| MMU 1320A | MMU 1320B |
| CACHE 1325A | CACHE 1325B |
| INTERCONNECT 1330A | INTERCONNECT 1330B |

FIG. 14

CPU(S) 1599

I/O DEVICES 1590

IOMMU 1570

IO 1595

MULTI-CORE GROUP 1500A

SCHEDULER/DISPATCHER 1510

REG. FILE(S) 1520

GFX CORES 1530

TENSOR CORES 1540

RAY TRACING CORES 1550

L1 CACHE AND TEXTURE UNITS 1560

MCG 1500B

MCG 1500C

MCG 1500N

MEM CRTL. 1570

L2 CACHE 1580

GPU 1505

MEM 1598

FIG. 15

RAY TRACING CLUSTER
3600

RAY TRACING NODE 1610

RAY TRACING NODE 1611

RAY TRACING NODE 1612

RAY TRACING NODE 1613

GATEWAY
1620

CLIENT-SIDE RAY TRACING APPLICATION
1630

FIG. 16

**RAY TRACING NODE 1711**

RAY DECOMPRESSION 1721 ↔ RAY TRACING ENGINE 1731 ↔ RAY COMPRESSION 1741

NETWORK INTERFACE 1726

COMPRESSED RAYS 1701

COMPRESSED RAYS 1701

**RAY TRACING NODE 1710**

NETWORK INTERFACE 1725

RAY COMPRESSION 1720 ↔ RAY TRACING ENGINE 1730 ↔ RAY DECOMPRESSION 1740

**FIG. 17**

```
┌─────────────────────────────┐        ┌─────────────────────────────┐
│   RAY COMPRESSION            │        │   RAY DECOMPRESSION         │
│   1720                       │        │   1721                      │
│  ┌─ ─ ─ ─ ─ ─ ─ ─ ─ ─ ─┐    │        │  ┌─ ─ ─ ─ ─ ─ ─ ─ ─ ─ ─┐   │
│  │      LOSSY          │    │        │  │      LOSSY          │   │
│  │   COMPRESSION       │───────────────▶│   DECOMPRESSION     │   │
│  │      1801           │    │        │  │      1802           │   │
│  └─ ─ ─ ─ ─ ─ ─ ─ ─ ─ ─┘    │        │  └─ ─ ─ ─ ─ ─ ─ ─ ─ ─ ─┘   │
│  ┌─ ─ ─ ─ ─ ─ ─ ─ ─ ─ ─┐    │        │  ┌─ ─ ─ ─ ─ ─ ─ ─ ─ ─ ─┐   │
│  │     LOSSLESS        │    │        │  │     LOSSLESS        │   │
│  │   COMPRESSION       │───────────────▶│   DECOMPRESSION     │   │
│  │      1803           │    │        │  │      1804           │   │
│  └─ ─ ─ ─ ─ ─ ─ ─ ─ ─ ─┘    │        │  └─ ─ ─ ─ ─ ─ ─ ─ ─ ─ ─┘   │
└─────────────────────────────┘        └─────────────────────────────┘
```

**FIG. 18**

```
                            ( START )
                                │
                                ▼
        ┌──────────────────────────────────────────────────┐
   ┌───▶│  RECEIVE RAY TRACING DATA TO BE TRANSMITTED FROM  │
   │    │  FIRST RAY TRACING NODE TO SECOND RAY TRACING NODE │
   │    │                      1900                          │
   │    └──────────────────────────────────────────────────┘
   │                            │
   │                            ▼
   │        ┌──────────────────────────────────────────┐
   │        │  LOSSY COMPRESSION CIRCUITRY PERFORMS LOSSY │
   │        │  COMPRESSION ON FIRST RAY TRACING DATA      │
   │        │                  1901                       │
   │        └──────────────────────────────────────────┘
   │                            │
   │                            ▼
   │        ┌──────────────────────────────────────────┐
   │        │  LOSSLESS COMPRESSION CIRCUITRY PERFORMS    │
   │        │  LOSSLESS COMPRESSION ON SECOND RAY         │
   │        │  TRACING DATA                               │
   │        │                  1902                       │
   │        └──────────────────────────────────────────┘
   │                            │
   │                            ▼
   │            ┌──────────────────────────────────┐
   │            │  TRANSMIT COMPRESSED RAY TRACING    │
   │            │  DATA TO SECOND RAY TRACING NODE    │
   │            │              1903                   │
   │            └──────────────────────────────────┘
   │                            │
   │                            ▼
   │        ┌──────────────────────────────────────────┐
   │        │  LOSSY/LOSSLESS DECOMPRESSION CIRCUITRY     │
   │        │  PERFORMS LOSSY/LOSSLESS DECOMPRESSION      │
   │        │  OF RAY TRACING DATA                        │
   │        │                  1904                       │
   │        └──────────────────────────────────────────┘
   │                            │
   │                            ▼
   │          ┌────────────────────────────────────┐
   │          │  SECOND RAY TRACING NODE PERFORMS RAY│
   │          │  TRACING OPERATIONS USING            │
   │          │  DECOMPRESSED DATA                   │
   │          │              1905                    │
   │          └────────────────────────────────────┘
   │                            │
   └────────────────────────────┘
```

**FIG. 19**

**FIG. 20**

ASSIGNED STACKS
**4101**

Primary Shader

Hit Shader

Traversal Shader

Continuation

Ray-BVH Intersect

FREE STACK POOL
**4102**

CALL STACK REFERENCES

**FIG. 21**

**FIG. 22**

FIG. 23

TOP-LEVEL BVH 2300

BVH0

BOTTOM-LEVEL BVH 2301

BVH1

BOTTOM-LEVEL BVH 2302

BVH2

Inner Traversal 2303

Outer Traversal 2304

Traversal Node 2305

Leaf Node with Triangles 2306

Leaf Node with Custom Primitives 2307

EP 4 439 472 A1

118

TRAVERSAL STATE **2400**

WORLD RAY,
HIT INFO
**2401**

OBJECT RAY
**2402**

CALL STACK OFFSET
**2403**

TRAVERSAL OFFSET
**2404**

CALL STACK
**2405**

INNER STATE
**2410**

INNER STACK, RAY
PTR, BVH PTR

INNER STACK, RAY
PTR, BVH PTR

**FIG. 24**

FIG. 25

EP 4 439 472 A1

**FIG. 26A**

TRAV.
STATE
2601

Memory
(cached)

SIMD/SIMT
CORES/
EXE UNITS
2001

RAY-BVH TRAVERSAL/
INTERSECTION
2005

2650

C1    C2    C3

3 dispatch cycles

SCHEDULER
2007

SORTING
2008

**FIG. 26B**

FIG. 27

EP 4 439 472 A1

FIG. 28

EP 4 439 472 A1

FIG. 29

START

EXECUTE INSTRUCTIONS OF PRIMARY GRAPHICS
THREAD ON PRIMARY PROCESSOR CIRCUITRY
**3001**

RAY TRACING (RT) INSTRUCTION?
**3002**

No

Yes

DECODE RT INSTRUCTION
**3003**

SCHEDULE AND DISPATCH
TO RAY TRACING EXECUTION CIRCUITRY
**3004**

PROCESS RT RESULTS WITHIN
PRIMARY GRAPHICS THREAD
**3008**

EXECUTE RT INSTRUCTION ON
RAY TRACING EXECUTION CIRCUITRY
**3005**

STORE RT RESULTS IN MEMORY/REGISTERS
**3006**

NOTIFY PRIMARY GRAPHICS THREAD
**3007**

FIG. 30

RT ACCELERATION CIRCUITRY 3110

MEM 3198

Yes / No

HIT?

Traversal Terminated

STACK PROCESSING 5020

STACKS 3121

TRAVERSAL 3102

Triangle or Quad Leaf Node

INTERSECTION 3103

Other Primitive Leaf Node

RAY TRACING CACHE 3107

CLOSEST HIT SHADER 2507

MISS SHADER 2506

INTERSECTION SHADER 3005

ANY HIT SHADER 2504

PRIMARY RAY SHADER 3101

RAY TRACING DATA 2902

SHADER EXECUTION CIRCUITRY 2000

L1 CACHE 2003

CORES/ EXE UNITS 2001

SCHEDULER 2007

SORTING 2008

NEW/ SPAWNED WORK

**FIG. 31**

FIG. 32A

EP 4 439 472 A1

**INITIAL 3251**

Alloc: Set VLD, Rst Evict_Rdy
Ray: Rst DP, Rst Dirty
Stack: Set DP
Hitinfo: Set DP, RST Dirty
Node: RST DP & SRI_DP

Read Ray 3261

**INSTANCE 3252**

Alloc: Set VLD, Rst Evict_Rdy
Ray: Rst DP, Rst Dirty
Stack: Set DP
Hitinfo: Rst DP, RST Dirty
Node: RST DP & SRI_DP

Read Ray & Committed Hit 3262

Ray Alloc VLD
Ray CTRL

**COMMIT 3253**

Alloc: Set VLD, Rst Evict_Rdy
Ray: Rst DP, Rst Dirty
Stack: Rst DP
Hitinfo: Rst DP, RST Dirty
Node: RST DP & SRI_DP

Read Ray, Potential Hit & Stack 3263

**CONTINUE 3254**

Alloc: Set VLD, Rst Evict_Rdy
Ray: Rst DP, Rst Dirty
Stack: Rst DP
Hitinfo: Rst DP, RST Dirty
Node: RST DP & SRI_DP

Read Ray, Committed Hit & Stack 3264

**FIG. 32B**

FIG. 33

**FIG. 34**

**FIG. 35**

**FIG. 36**

**FIG. 37A**

START

NEXT SHADER TO SCHEDULE FOR EXECUTION
3751

SCHEDULER DETERMINES HASH ID
3752

QUERY TILED RESOURCE MANAGER WITH HASH ID
3753

TILED RESOURCE
BLOCK ALLOCATED?
3754

N → ASSIGN TILED RESOURCE BLOCK TO HASH ID, EVICTING EXISTING TILED RESOURCE BLOCK IF NECESSARY
3755

Y

LOCK TILED RESOURCE BLOCK
3755

SHADER USES TILED RESOURCE BLOCK DURING EXECUTION;
TILED RESOURCE BLOCK UNLOCKED WHEN SHADER COMPLETES
3756

FIG. 37B

FIG. 38A

**FIG. 38B**

VISIBLE BLAS MAP **3875**

| Instance ID | 0 | 1 | 2 | 3 | 4 |
|---|---|---|---|---|---|
| BLAS ID **3874** | 0 | 1 | 2 | 2 | 3 |

| | | | | |
|---|---|---|---|---|
| VISIBILITY **3876** | 1 | 0 | 1 | 0 |
| BUILT_FULL **3877** | 1 | 0 | 1 | 0 |
| BUILT_EMPTY **3876** | 0 | 1 | 0 | 0 |
| VIS_HISTORY **3877** | 1 | 0 | 1 | 0 |

**FIG. 38C**

EP 4 439 472 A1

Set trav_valid ← **false**
skip traversal

TLAS

[0] [1] [2] [3] [4]

BLAS

EMPTY INSTANCE
**3890**

trav_valid == **false**
skip traversal

TLAS

[0] [1] (2) [3] [4]

BLAS

FULL INSTANCE AND
INVALID TRAVERSAL
**3891**

trav_valid == **true**
BLAS traversal

TLAS

[0] [1] [2] (3) [4]

BLAS

FULL INSTANCE AND
VALID TRAVERSAL
**3892**

**FIG. 38D**

**FIG. 39**

FIG. 40A

**FIG. 40B**

MESHLET GATHER & DECOMPRESSION **4090**

RAY TRACING CACHE **4060**

INTERSECTION TESTER **4040**

L1 CACHE **4070**

MEMORY INTERFACE **4095**

RAY/BOX TRAVERSAL **4030**

STATE INITIALIZER **4020**

MESHLET COMPRESSION **4033**

MEMORY **3198**

EXECUTION UNITS **4010**

64B

128B Data

LD Decompressed Data Message Support with GRF View Caching

128B Write Over 2 clocks; No L1 caching

512b/64B Message Phase (4 phases) + 128B Address on Sideband or Header

EP 4 439 472 A1

**FIG. 41**

**FIG. 42**

RAY TRACING CLUSTER 4300

RAY TRACING NODE 4310
PROXIES 4330

RAY TRACING NODE 4311
PROXIES 4331

RAY TRACING NODE 4312
PROXIES 4332

RAY TRACING NODE 4313
PROXIES 4333

NETWORK 4315

GATEWAY 4320

CLIENT-SIDE RAY TRACING APPLICATION 4330

FIG. 43

**FIG. 44**

RAY TRACING NODE **4310**

RAY TRACING ENGINE **4415**

PROXIES 4441-4443 FROM NODES 4311-4313

WORKING DATA SET **4460**

PROXY GENERATION **4350**

PROXY **4440**

VOLUME SUBDIVISION **4365**

RAY TRACING NODE **4313**

NODE 4313 PROXY **4443**

PROXIES **4333**

RAY TRACING NODE **4312**

NODE 4312 PROXY **4442**

PROXIES **4332**

RAY TRACING NODE **4311**

NODE 4311 PROXY **4441**

PROXIES **4331**

VOLUME DATA SET
4500

4502

4504

4501

4503

FIG. 45

RAY TRACING NODE
**4310**

RAY TRACING NODE
**4311**

RAY TRACING NODE
**4312**

RAY TRACING NODE
**4313**

**4501**

**4502**

**4503**

**4504**

**FIG. 46**

RAY TRACING NODE
**4310**

RAY TRACING NODE
**4311**

RAY TRACING NODE
**4312**

RAY TRACING NODE
**4313**

**4501**

**4502**

**4503**

**4504**

**FIG. 47**

RAY TRACING NODE **4310**

RAY TRACING NODE **4311**

RAY TRACING NODE **4312**

RAY TRACING NODE **4313**

4501 4502 4503 4504

PROXY **4340**

PROXY **4341**

PROXY **4342**

PROXY **4343**

FIG. 48

RAY TRACING NODE
**4310**

RAY TRACING NODE
**4311**

RAY TRACING NODE
**4312**

RAY TRACING NODE
**4313**

PROXY
**4342**

PROXY
**4343**

PROXY
**4340**

PROXY
**4341**

**FIG. 49**

RAY TRACING NODE
**4310**

RAY TRACING NODE
**4311**

RAY TRACING NODE
**4312**

RAY TRACING NODE
**4313**

**9942**

**9940**

**9941**

**9943**

PROXY
**4340**

PROXY
**4341**

PROXY
**4342**

PROXY
**4343**

FIG. 50

EP 4 439 472 A1

FIG. 51

```
                        ┌─────────────┐
                        │    START    │
                        └──────┬──────┘
                               │
                               ▼
        ┌──────────────────────────────────────────┐
        │   LOGICALLY SUBDIVIDE VOLUME INTO N        │
        │              PARTITIONS                    │
        │                 5201                       │
        └──────────────────┬─────────────────────────┘
                           │
                           ▼
        ┌──────────────────────────────────────────┐
        │     DISTRIBUTE N PARTITIONS TO N NODES     │
        │                 5202                       │
        └──────────────────┬─────────────────────────┘
                           │
                           ▼
        ┌──────────────────────────────────────────┐
        │    COMPUTE PROXY AT EACH NODE AND          │
        │     SHARE PROXIES AMONG NODES              │
        │                 5203                       │
        └──────────────────┬─────────────────────────┘
                           │
                           ▼
   ┌─────────────────────────────────────────────────────────┐
   │  PERFORM TRAVERSAL/INTERSECTION OPERATIONS FOR CURRENT   │
   │  RAY OR GROUP OF RAYS USING ONE OR MORE PROXIES, IGNORING│
   │  PROXY REGIONS WHICH ARE IRRELEVANT FOR CURRENT RAY      │
   │                      5204                                │
   └─────────────────────────┬───────────────────────────────┘
                             │
                             ▼
                    ◇────────────────◇        Y    ┌────────────────────────────────────┐
                   PROXY/RAY          ────────────▶│ SEND RAY(S) TO NODE ASSOCIATED WITH│
                   INTERACTION?                     │  PROXY OR RETRIEVE DATA FROM NODE   │
                      5205                          │               5206                 │
                    ◇────────────────◇             └────────────────┬───────────────────┘
                             │ N                                     │
                             ▼                                       │
                    ┌─────────────────┐                             │
                    │   NEXT RAY(S)   │◀────────────────────────────┘
                    │     5207        │
                    └─────────────────┘
```

FIG. 52

theoretical construction speedup

speedup

Mio. Primitives

5%
15%
20%
25%
30%
40%
50%
70%
100%

**FIG. 53A**

theoretical overhead evaluation

speedup

relative cost alpha

100K Prims
500K Prims
1M Prims
5M Prims
10M Prims
50M Prims
100M Prims

**FIG. 53B**

REMAINING PRIMITIVES

```
┌ ─ ─ ─ ─ ─ ┐
│   INPUT   │      ┌──────────────┐      ┌──────────────┐      ┌──────────────┐      ┌──────────────┐
│ PRIMITIVES│ ───▶ │SUBSET SAMPLER│ ───▶ │  SUBSET BVH  │ ───▶ │  INSERTION   │ ───▶ │ CLUSTER BVH  │
│   5401    │      │     5402     │      │   BUILDER    │      │     5404     │      │   BUILDER    │
└ ─ ─ ─ ─ ─ ┘      └──────────────┘      │     5403     │      └──────────────┘      │     5405     │
                                         └──────────────┘                            └──────────────┘
```

FIG. 54

EP 4 439 472 A1

LEAF
NODES
**5501**

SUBSET
PRIMITIVE
TO LEAF
NODE
**5502**

78  79  80  81  82  83  84  85  86  87  88  89

SPATIALLY-
ORDERED
PRIMITIVES
**5503**

| 84 | 83 | 83 | 83 | 84 | 84 | 84 | 84 | 85 | 85 | 85 | 85 |

**5504**

**FIG. 55**

REMAINING PRIMITIVES

```
┌──────────────┐    ┌──────────────┐    ┌──────────────┐    ┌──────────────┐    ┌──────────────┐    ┌──────────────┐
│              │    │  SAMPLING    │    │              │    │   SUBSET     │    │              │    │  CLUSTER     │
│   INPUT      │    │   WEIGHT     │    │   SUBSET     │    │    BVH       │    │  INSERTION   │    │    BVH       │
│ PRIMITIVES   │───▶│  GENERATOR   │───▶│  SAMPLER     │───▶│  BUILDER     │───▶│    5404      │───▶│  BUILDER     │
│   5401       │    │   5601       │    │   5602       │    │   5403       │    │              │    │   5405       │
│              │    │              │    │              │    │              │    │              │    │              │
└──────────────┘    └──────────────┘    └──────────────┘    └──────────────┘    └──────────────┘    └──────────────┘
```

FIG. 56

```
                    ┌─────────────────────────────┐
                    │      FOR EACH PRIMITIVE      │
                    └─────────────────────────────┘
                                  │
                                  ▼
      ┌──────────────────────────────────────────────────────────┐
      │  CONSTRUCT/DETERMINE BOUNDING BOX DIAGONAL OF PRIMITIVE    │
      │                         5701                               │
      └──────────────────────────────────────────────────────────┘
                                  │
                                  ▼
    ┌────────────────────────────────────────────────────────────────┐
    │  DETERMINE BOUNDING BOX DIAGONAL OR PRIMITIVE SURFACE AREA       │
    │                          5702                                    │
    └────────────────────────────────────────────────────────────────┘
                                  │
                                  ▼
        ┌──────────────────────────────────────────────────────┐
        │         DETERMINE N DISTANCES BETWEEN PRIMITIVE        │
        │           AND N NEIGHBORING PRIMITIVES                 │
        │                       5703                             │
        └──────────────────────────────────────────────────────┘
                                  │
                                  ▼
        ┌──────────────────────────────────────────────────────┐
        │      CALCULATE N WEIGHT VALUES USING N DISTANCES AND   │
        │        BOUNDING BOX SURFACE AREA OR DIAGONAL           │
        │                       5704                             │
        └──────────────────────────────────────────────────────┘
                                  │
                                  ▼
        ┌──────────────────────────────────────────────────────┐
        │           SUM N WEIGHT VALUES TO DETERMINE            │
        │           SELECTION WEIGHT OF PRIMITIVE              │
        │                       5705                             │
        └──────────────────────────────────────────────────────┘
                                  │
                                  ▼
        ┌──────────────────────────────────────────────────────┐
        │    SAMPLE PRIMITIVES FOR SUBSET BVH CONSTRUCTION       │
        │         BASED ON SELECTION WEIGHTS                     │
        │                       5706                             │
        └──────────────────────────────────────────────────────┘
                                  │
                                  ▼
                    ┌─────────────────────────────┐
                    │            END              │
                    └─────────────────────────────┘
```

**FIG. 57**

START

INITIATE STREAMING GRAPHICS OBJECTS
OF A GRAPHICS SCENE INTO MEMORY
**5800**

STOCHASTICALLY SELECT REPRESENTATIVE SAMPLE
OF GRAPHIC OBJECTS IN THE GRAPHICS SCENE BEFORE ALL
GRAPHICS OBJECTS HAVE BEEN STREAMED INTO MEMORY
**5801**

CONTINUE TO STREAM REMAINING
GRAPHICS OBJECTS INTO MEMORY
**5811**

CONSTRUCT ONE OR MORE UPPER LEVELS OF A BVH USING
THE REPRESENTATIVE SAMPLE OF GRAPHIC OBJECTS
**5802**

FULL SET OF GRAPHICS
OBJECTS IN MEMORY?
**5812**

N

Y

CONSTRUCT LOWER LEVELS OF THE BVH USING
FULL SET OF GRAPHIC OBJECTS
**5803**

END

**FIG. 58**

FIG. 59

Europäisches
Patentamt

European
Patent Office

Office européen
des brevets

## EUROPEAN SEARCH REPORT

Application Number

EP 23 21 1163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU YINGSONG ET AL: "Parallel BVH Construction Using Locally Density Clustering", IEEE ACCESS, vol. 7, 1 January 2019 (2019-01-01), pages 105827-105839, XP093049634, DOI: 10.1109/ACCESS.2019.2932151 * abstract * * page 4, column 1 – page 5, column 2, line 17; figures 2,5 * * B. Construction of BVH; page 8, column 1 – page 9, column 2; figures 11-13 * * page 10, column 2 * * page 12, column 2, paragraph 3 * ----- | 1-15 | INV. G06T15/00 G06T15/06 G06T17/00 |
| A | US 2021/133915 A1 (BENTHIN CARSTEN [DE] ET AL) 6 May 2021 (2021-05-06) * paragraph [0217] – paragraph [0224] * ----- | 1-15 | |
| T | TESSARI L. ET AL: "Stochastic Subsets for BVH Construction", COMPUTER GRAPHICS FORUM : JOURNAL OF THE EUROPEAN ASSOCIATION FOR COMPUTER GRAPHICS, vol. 42, no. 2, 23 May 2023 (2023-05-23), pages 255-267, XP093058097, Oxford ISSN: 0167-7055, DOI: 10.1111/cgf.14759 * abstract * ----- | 1-15 | **TECHNICAL FIELDS SEARCHED (IPC)** G06T |

The present search report has been drawn up for all claims

| Place of search | Date of completion of the search | Examiner |
|---|---|---|
| The Hague | 24 April 2024 | Martos Riaño, Demian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

EP 4 439 472 A1

**ANNEX TO THE EUROPEAN SEARCH REPORT
ON EUROPEAN PATENT APPLICATION NO.**

EP 23 21 1163

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | Publication date | Patent family member(s) | Publication date |
|---|---|---|---|
| US 2021133915 A1 | 06-05-2021 | DE 102019108046 A1 | 17-10-2019 |
| | | US 2021133915 A1 | 06-05-2021 |
| | | US 2022366525 A1 | 17-11-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Restart Trail for Stackless BVH Traversal. *High Performance Graphics,* 2010, 107-111
- **LLOYD et al.** *Implementing Stochastic Levels of Detail with Microsoft DirectX Raytracing,* 15 June 2020
- A Survey on Bounding Volume Hierarchies for Ray Tracing. *Computer Graphics Forum,* 2021, vol. 40 (2), 683-712
- BVHs while Monte Carlo and QMC. Quasi-Monte Carlo Methods. Springer
- Grid-based SAH BVH construction on a GPU. *The Visual Computer,* 2011, vol. 27 (6), 697-706
- **INGO WALD.** *On fast construction of SAH-based bounding volume hierarchies,* 2007
- HLBVH: Hierarchical LBVH Construction for. **J. PANTALEONI ; D. LUEBKE.** High Performance Graphics. Eurographics Association, 2010, 87-95
- Bounding Volume Hierarchy Construction. *IEEE Trans. Vis. Comput. Graph.,* 2018, vol. 24 (3), 1345-1353
- *The Visual Computer,* 2016, vol. 32 (6), 977-987

- *Computer Graphics Forum,* 2017, vol. 36, 487-494
- *Computer Graphics Forum,* 2013, vol. 32, 85-100
- Parallel Reinsertion for Bounding Volume Hierarchy Optimization. *Computer Graphics Forum,* 2018, vol. 37 (2), 463-473
- Incremental BVH construction for ray tracing. *Computers & Graphics,* 2015, vol. 47, 135-144
- Automatic creation of object hierarchies for ray tracing. *IEEE Computer Graphics and Applications,* 1987, vol. 7 (5), 14-20
- **J. PANTALEONI ; D. LUEBKE.** HLBVH: Hierarchical LBVH Construction for Real-Time Ray Tracing of Dynamic Geometry. *Proceedings of the Conference on High Performance Graphics,* 2010, 87-95
- **HU, YINGSONG ; WEIJIAN WANG ; DAN LI ; QINGZHI ZENG ; YUNFEI HU.** Parallel BVH Construction Using Locally Density Clustering uses different techniques. *Parallel BVH Construction Using Locally Density Clustering'', IEEE Access,* 2019, vol. 7, 105827-105839